(19) Europäisches Patentamt / European Patent Office / Office européen des brevets

(11) **EP 3 629 507 A1**

(12) **EUROPEAN PATENT APPLICATION**

(43) Date of publication:
**01.04.2020 Bulletin 2020/14**

(51) Int Cl.:
***H04L 1/18*** (2006.01)

(21) Application number: **18197566.5**

(22) Date of filing: **28.09.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
- **Intel IP Corporation**
  **Santa Clara, CA 95054 (US)**
- **INTEL Corporation**
  **Santa Clara, CA 95054 (US)**

(72) Inventors:
- **DREWES, Christian**
  **82110 Germering (DE)**
- **ELLENBECK, Jan**
  **82031 Grünwald (DE)**
- **BADIC, Biljana**
  **81825 München (DE)**

- **SCHALLER, Bernd**
  **90482 Nürnberg (DE)**
- **JAKOBSEN, Erik**
  **81 9440 Aabybro (DK)**
- **GORIS, Norman**
  **44319 Dortmund (DE)**
- **HOFMANN, Christian**
  **90419 Nürnberg (DE)**
- **WACHSMANN, Christian**
  **96465 Neustadt (DE)**
- **KOTABA, Radoslaw**
  **9000 Aalborg (DK)**
- **KIILERICH PRATAS, Nuno Manuel**
  **9260 Gistrup (DK)**

(74) Representative: **Viering, Jentschura & Partner
mbB
Patent- und Rechtsanwälte
Am Brauhaus 8
01099 Dresden (DE)**

(54) **METHODS AND DEVICES FOR DEVICE-TO-DEVICE COMMUNICATIONS**

(57) A wireless device including a buffer configured to buffer a received signal over a plurality of time slots of a retransmission frame window, a detector configured to identify a target slot of the plurality of time slots, identify an applicable candidate retransmission pattern based on the target slot, and identify one or more buffered time slots stored in the buffer based on the applicable candidate retransmission pattern, a combiner configured to combine the target slot with the one or more buffered time slots to obtain a combined transmission, and a decoder configured to decode the combined transmission to obtain payload data.

FIG 7

Transmission slot

Inactive slot

EP 3 629 507 A1

## Description

## Technical Field

Various embodiments relate generally to device-to-device communications and related methods and devices.

## Background

Various communication networks use device-to-device (D2D) communications to enable devices to communicate directly with each other. The devices may therefore establish direct communication links with each other and use these links to transfer data between each other.

## Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. **1** shows an exemplary radio communication network according to some aspects;
FIG. **2** shows an exemplary internal configuration of a terminal device according to some aspects;
FIG. **3** shows an exemplary D2D network according to some aspects;
FIG. **4** shows exemplary timing diagrams for sequential retransmissions according to some aspects;
FIG. **5** shows exemplary timing diagrams for randomized retransmissions according to some aspects;
FIG. **6** shows an exemplary diagram of retransmission frame windows in a slotted communication schedule according to some aspects;
FIG. **7** shows an exemplary overall set of retransmission patterns according to some aspects;
FIGs. **8A** and **8B** show exemplary candidate sets of retransmission patterns according to some aspects;
FIG. **9** shows an exemplary internal configuration of a transmitter according to some aspects;
FIG. **10** shows an exemplary method for transmitting a packet with randomized retransmissions according to some aspects;
FIG. **11** shows an exemplary internal configuration of a receiver according to some aspects;
FIG. **12** shows an exemplary method for receiving a packet with randomized retransmissions according to some aspects;
FIGs. **13A-13D** show an example procedure of decoding a packet in a retransmission frame window according to some aspects;
FIG. **14** shows an exemplary exchange of a request and grant for a communication session using randomized retransmissions according to some aspects;
FIG. **15** shows an exemplary discovery procedure using randomized retransmissions according to some aspects;
FIG. **16** shows an example of a logical retransmission frame window according to some aspects;
FIG. **17** shows an exemplary method of receiving transmissions at a wireless device according to some aspects;
FIG. **18** shows an exemplary method of performing transmissions at a wireless device according to some aspects;
FIG. **19** shows an exemplary D2D network for a one-to-many discovery procedure according to some aspects;
FIG. **20** shows an exemplary internal configuration of an initiating device according to some aspects;
FIG. **21** shows an exemplary internal configuration of a responding device according to some aspects;
FIG. **22** shows an exemplary message sequence chart for an authentication procedure according to some aspects;
FIG. **23** shows exemplary pseudocode version of the message sequence chart in FIG. **22** according to some aspects;
FIG. **24** shows an exemplary method of performing authentication of a wireless device according to some aspects;
FIG. **25** shows an exemplary method of performing authentication of a wireless device according to some aspects;
FIG. **26** shows an exemplary discovery procedure according to some aspects;
FIG. **27** shows an exemplary internal configuration of an initiating device according to some aspects;
FIG. **28** shows an exemplary internal configuration of a responding device according to some aspects;
FIG. **29** shows an exemplary message sequence chart of a discovery procedure using dedicated messaging and mute instructions according to some aspects;
FIG. **30** shows an exemplary message sequence chart of a discovery procedure using discovery confirmation messages according to some aspects;
FIG. **31** shows an exemplary chart depicting the false positive probability of discovery confirmation messages with different encoding schemes according to some aspects;

FIG. **32** shows an exemplary message sequence chart of a discovery procedure using response criteria according to some aspects;

FIG. **33** shows an exemplary message sequence chart of a discovery procedure using preconfigured probabilities according to some aspects;

FIG. **34** shows an exemplary message sequence chart of a discovery procedure using derived probabilities according to some aspects;

FIG. **35** shows an exemplary chart of traffic shaping of discovery messages according to some aspects;

FIG. **36** shows an exemplary internal configuration of a wireless device according to some aspects;

FIG. **37** shows an exemplary message sequence chart for centralized estimation of traffic load according to some aspects;

FIG. **38** shows an exemplary method of performing decentralized load estimation according to some aspects;

FIG. **39** shows an exemplary state diagram of load estimation and traffic shaping in discovery procedures according to some aspects;

FIG. **40** shows an exemplary method of performing discovery at a wireless device according to some aspects;

FIG. **41** shows an exemplary method of performing discovery at a wireless device according to some aspects;

FIG. **42** shows an exemplary method of performing discovery at a wireless device according to some aspects;

FIG. **43** shows an exemplary method of performing discovery at a wireless device according to some aspects;

FIG. **44** shows an exemplary method of performing discovery at a wireless device according to some aspects;

FIG. **45** shows an exemplary method of performing wireless communications at a wireless device according to some aspects;

FIG. **46** shows an exemplary method of performing wireless communications at a wireless device according to some aspects;

FIG. **47** shows an exemplary method of performing wireless communications at a wireless device according to some aspects;

FIG. **48** shows an exemplary method of performing wireless communications at a wireless device according to some aspects;

FIG. **49** shows an exemplary method of performing wireless communications at a wireless device according to some aspects;

FIG. **50** shows an exemplary method of performing wireless communications at a wireless device according to some aspects;

FIG. **51** shows an exemplary emergency message dissemination scheme according to some aspects;

FIG. **52** shows an exemplary internal configuration of a wireless device according to some aspects;

FIG. **53** shows an exemplary internal configuration of a wireless device according to some aspects;

FIG. **54** shows an exemplary message sequence chart for an emergency message dissemination scheme according to some aspects;

FIG. **55** shows an exemplary structure of an emergency message according to some aspects;

FIG. **56** shows an example of relaying in an emergency message dissemination scheme according to some aspects;

FIG. **57** shows an exemplary diagram illustrating register tokens according to some aspects;

FIG. **58** shows an exemplary method of performing wireless communications at a wireless device according to some aspects; and

FIG. **59** shows an exemplary method of performing wireless communications at a wireless device according to some aspects.

## Description

The following detailed description refers to the accompanying drawings that show, by way of illustration, specific details and aspects of embodiments in which the invention may be practiced.

The word "exemplary" is used herein to mean "serving as an example, instance, or illustration." The words "plurality" and "multiple" in the description and claims refer to a quantity greater than one. The terms "group," "set", "sequence," and the like refer to a quantity equal to or greater than one. Any term expressed in plural form that does not expressly state "plurality" or "multiple" similarly refers to a quantity equal to or greater than one. The term "lesser subset" refers to a subset of a set that contains less than all elements of the set. Any vector and/or matrix notation utilized herein is exemplary in nature and is employed for purposes of explanation. Aspects of this disclosure described with vector and/or matrix notation are not limited to being implemented with vectors and/or matrices and the associated processes and computations may be performed in an equivalent manner with sets or sequences of data or other information.

As used herein, "memory" are understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, among others, or any combination thereof. Registers, shift registers, processor registers, data buffers, among others, are also embraced herein by the term memory. The term "software" refers to any type of executable instruction, including firmware.

The term "terminal device" utilized herein refers to user-side devices (both portable and fixed) that can connect to a core network and/or external data networks via a radio access network. "Terminal device" can include any mobile or immobile wireless communication device, including User Equipments (UEs), Mobile Stations (MSs), Stations (STAs), cellular phones, tablets, laptops, personal computers, wearables, multimedia playback and other handheld or body-mounted electronic devices, consumer/home/office/commercial appliances, vehicles, and any other electronic device capable of user-side wireless communications.

The term "network access node" as utilized herein refers to a network-side device that provides a radio access network with which terminal devices can connect and exchange information with a core network and/or external data networks through the network access node. "Network access nodes" can include any type of base station or access point, including macro base stations, micro base stations, NodeBs, evolved NodeBs (eNBs), gNodeBs, Home base stations, Remote Radio Heads (RRHs), relay points, Wi-Fi/WLAN Access Points (APs), Bluetooth master devices, DSRC RSUs, terminal devices acting as network access nodes, and any other electronic device capable of network-side wireless communications, including both immobile and mobile devices (e.g., vehicular network access nodes, moving cells, and other movable network access nodes). As used herein, a "cell" in the context of telecommunications may be understood as a sector served by a network access node. Accordingly, a cell may be a set of geographically co-located antennas that correspond to a particular sectorization of a network access node. A network access node can thus serve one or more cells (or sectors), where the cells are characterized by distinct communication channels.

Various aspects of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax), 5G New Radio (NR), for example, and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations.

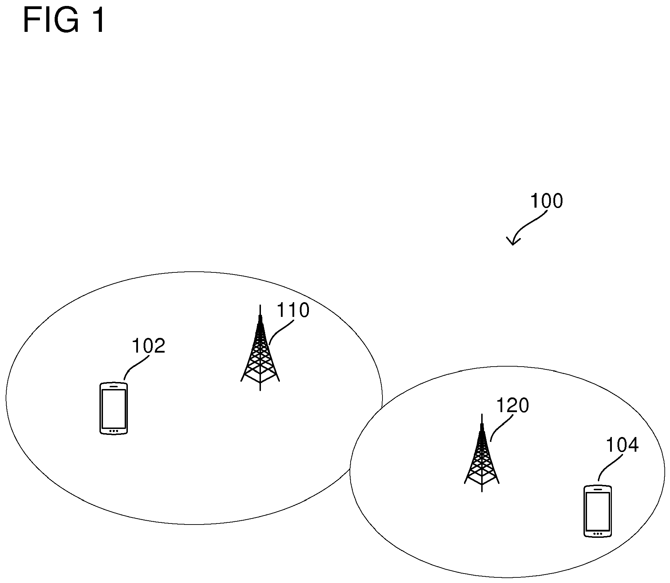

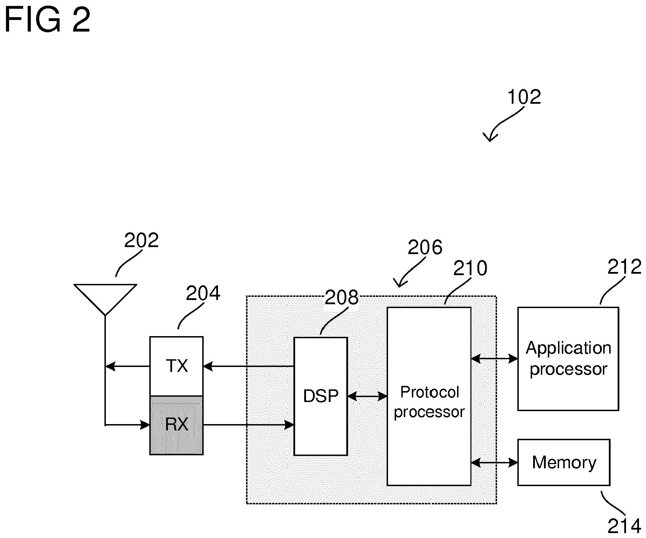

FIGs. **1** and **2** depict a general network and device architecture for wireless communications. In particular, FIG. **1** shows exemplary radio communication network 100 according to some aspects, which may include terminal devices **102** and **104** and network access nodes **110** and **120.** Radio communication network **100** may communicate with terminal devices **102** and **104** via network access nodes **110** and **120** over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network **100** is exemplary and is scalable to any amount.

In an exemplary cellular context, network access nodes **110** and **120** may be base stations (e.g., eNodeBs, NodeBs, Base Transceiver Stations (BTSs), or any other type of base station), while terminal devices **102** and **104** may be cellular terminal devices (e.g., Mobile Stations (MSs), User Equipments (UEs), or any type of cellular terminal device). Network access nodes **110** and **120** may therefore interface (e.g., via backhaul interfaces) with a cellular core network such as an Evolved Packet Core (EPC, for LTE), Core Network (CN, for UMTS), or other cellular core networks, which may also be considered part of radio communication network **100.** The cellular core network may interface with one or more external data networks. In an exemplary short-range context, network access node **110** and **120** may be access points (APs, e.g., WLAN or WiFi APs), while terminal device **102** and **104** may be short range terminal devices (e.g., stations (STAs)). Network access nodes **110** and **120** may interface (e.g., via an internal or external router) with one or more external data networks.

Network access nodes **110** and **120** (and, optionally, other network access nodes of radio communication network **100** not explicitly shown in FIG. 1) may accordingly provide a radio access network to terminal devices **102** and **104** (and, optionally, other terminal devices of radio communication network **100** not explicitly shown in FIG. 1). In an exemplary cellular context, the radio access network provided by network access nodes **110** and **120** may enable terminal devices **102** and **104** to wirelessly access the core network via radio communications. The core network may provide switching, routing, and transmission, for traffic data related to terminal devices **102** and **104,** and may further provide access to various internal data networks (e.g., control nodes, routing nodes that transfer information between other terminal devices on radio communication network **100,** etc.) and external data networks (e.g., data networks providing voice, text, multimedia (audio, video, image), and other Internet and application data). In an exemplary short-range context, the radio access network provided by network access nodes **110** and **120** may provide access to internal data networks (e.g., for transferring data between terminal devices connected to radio communication network **100**) and external data networks (e.g., data networks providing voice, text, multimedia (audio, video, image), and other Internet and application data).

The radio access network and core network (if applicable, such as for a cellular context) of radio communication network **100** may be governed by communication protocols that can vary depending on the specifics of radio communication network **100.** Such communication protocols may define the scheduling, formatting, and routing of both user and control data traffic through radio communication network **100,** which includes the transmission and reception of such data through both the radio access and core network domains of radio communication network **100.** Accordingly, terminal devices **102** and **104** and network access nodes **110** and **120** may follow the defined communication protocols to transmit and receive data over the radio access network domain of radio communication network **100,** while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network **100.**

FIG. **2** shows an internal configuration of terminal device **102** according to some aspects, which may include antenna system **202,** radio frequency (RF) transceiver **204,** baseband modem **206** (including digital signal processor **208** and protocol controller **210**), application processor **212,** and memory **214.** Although not explicitly shown in FIG. **2,** in some aspects terminal device **102** may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Terminal device **102** may transmit and receive radio signals on one or more radio access networks. Baseband modem **206** may direct such communication functionality of terminal device **102** according to the communication protocols associated with each radio access network, and may execute control over antenna system **202** and RF transceiver **204** to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of terminal device **102** shown in FIG. **2** depicts only a single instance of such components.

Terminal device **102** may transmit and receive wireless signals with antenna system **202,** which may be a single antenna or an antenna array that includes multiple antennas. In some aspects, antenna system **202** may additionally include analog antenna combination and/or beamforming circuitry. In the receive (RX) path, RF transceiver **204** may receive analog radio frequency signals from antenna system **202** and perform analog and digital RF front-end processing on the analog radio frequency signals to produce digital baseband samples (e.g., In-Phase/Quadrature (IQ) samples) to provide to baseband modem **206.** RF transceiver **204** may include analog and digital reception components including amplifiers (e.g., Low Noise Amplifiers (LNAs)), filters, RF demodulators (e.g., RF IQ demodulators)), and analog-to-digital converters (ADCs), which RF transceiver **204** may utilize to convert the received radio frequency signals to digital baseband samples. In the transmit (TX) path, RF transceiver **204** may receive digital baseband samples from baseband modem **206** and perform analog and digital RF front-end processing on the digital baseband samples to produce analog radio frequency signals to provide to antenna system **202** for wireless transmission. RF transceiver **204** may thus include analog and digital transmission components including amplifiers (e.g., Power Amplifiers (PAs), filters, RF modulators (e.g., RF IQ modulators), and digital-to-analog converters (DACs), which RF transceiver **204** may utilize to mix the digital baseband samples received from baseband modem **206** and produce the analog radio frequency signals for wireless transmission by antenna system **202**. In some aspects baseband modem **206** may control the radio transmission and reception of RF transceiver **204,** including specifying the transmit and receive radio frequencies for operation of RF transceiver **204.**

As shown in FIG. **2,** baseband modem **206** may include digital signal processor **208,** which may perform physical layer (PHY, Layer 1) transmission and reception processing to, in the transmit path, prepare outgoing transmit data provided by protocol controller **210** for transmission via RF transceiver **204,** and, in the receive path, prepare incoming received data provided by RF transceiver **204** for processing by protocol controller **210**. Digital signal processor **208** may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor **208** may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor **208** may include one or more processors configured to retrieve and execute program code that defines control and processing logic for physical layer processing operations. In some aspects, digital signal processor **208** may execute processing functions with software via the execution of executable instructions. In some aspects, digital signal processor **208** may include one or more dedicated hardware circuits (e.g., ASICs, FPGAs, and other hardware) that are digitally configured to specific execute processing functions, where the one or more processors of digital signal processor **208** may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor **208** may be realized as a coupled integrated circuit.

Terminal device **102** may be configured to operate according to one or more radio communication technologies. Digital signal processor **208** may be responsible for lower-layer processing functions (e.g., Layer 1/PHY) of the radio communication technologies, while protocol controller **210** may be responsible for upper-layer protocol stack functions (e.g., Data Link Layer/Layer 2 and/or Network Layer/Layer 3). Protocol controller **210** may thus be responsible for controlling the radio communication components of terminal device **102** (antenna system **202**, RF transceiver **204,** and digital signal processor **208**) in accordance with the communication protocols of each supported radio communication technology, and accordingly may represent the Access Stratum and Non-Access Stratum (NAS) (also encompassing Layer 2 and Layer 3) of each supported radio communication technology. Protocol controller **210** may be structurally embodied as a protocol processor configured to execute protocol stack software (retrieved from a controller memory) and subsequently control the radio communication components of terminal device **102** to transmit and receive communication signals in accordance with the corresponding protocol stack control logic defined in the protocol software. Protocol controller **210** may include one or more processors configured to retrieve and execute program code that defines the upper-layer protocol stack logic for one or more radio communication technologies, which can include Data Link Layer/Layer 2 and Network Layer/Layer 3 functions. Protocol controller **210** may be configured to perform both user-plane and control-plane functions to facilitate the transfer of application layer data to and from radio terminal device **102** according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller **210** may include executable instructions that define the logic of such functions.

Terminal device **102** may also include application processor **212** and memory **214**. Application processor **212** may be a CPU, and may be configured to handle the layers above the protocol stack, including the transport and application layers. Application processor **212** may be configured to execute various applications and/or programs of terminal device **102** at an application layer of terminal device **102,** such as an operating system (OS), a user interface (UI) for supporting user interaction with terminal device **102,** and/or various user applications. The application processor may interface with baseband modem **206** and act as a source (in the transmit path) and a sink (in the receive path) for user data, such as voice data, audio/video/image data, messaging data, application data, basic Internet/web access data, etc. In the transmit path, protocol controller **210** may therefore receive and process outgoing data provided by application processor **212** according to the layer-specific functions of the protocol stack, and provide the resulting data to digital signal processor **208**. Digital signal processor **208** may then perform physical layer processing on the received data to produce digital baseband samples, which digital signal processor may provide to RF transceiver **204.** RF transceiver **204** may then process the digital baseband samples to convert the digital baseband samples to analog RF signals, which RF transceiver **204** may wirelessly transmit via antenna system **202.** In the receive path, RF transceiver **204** may receive analog RF signals from antenna system **202** and process the analog RF signals to obtain digital baseband samples. RF transceiver **204** may provide the digital baseband samples to digital signal processor **208,** which may perform physical layer processing on the digital baseband samples. Digital signal processor **208** may then provide the resulting data to protocol controller **210,** which may process the resulting data according to the layer-specific functions of the protocol stack and provide the resulting incoming data to application processor **212.** Application processor **212** may then handle the incoming data at the application layer, which can include execution of one or more application programs with the data and/or presentation of the data to a user via a user interface.

Memory **214** may embody a memory component of terminal device **102,** such as a hard drive or another such permanent memory device. Although not explicitly depicted in FIG. **2,** the various other components of terminal device **102** shown in FIG. **2** may additionally each include integrated permanent and non-permanent memory components, such as for storing software program code, buffering data, etc.

In accordance with some radio communication networks, terminal devices **102** and **104** may execute mobility procedures to connect to, disconnect from, and switch between available network access nodes of the radio access network of radio communication network **100.** As each network access node of radio communication network **100** may have a specific coverage area, terminal devices **102** and **104** may be configured to select and re-select between the available network access nodes in order to maintain a strong radio access connection with the radio access network of radio communication network **100.** For example, terminal device **102** may establish a radio access connection with network access node **110** while terminal device **104** may establish a radio access connection with network access node **112.** In the event that the current radio access connection degrades, terminal devices **102** or **104** may seek a new radio access connection with another network access node of radio communication network **100;** for example, terminal device **104** may move from the coverage area of network access node **112** into the coverage area of network access node **110.** As a result, the radio access connection with network access node **112** may degrade, which terminal device **104** may detect via radio measurements such as signal strength or signal quality measurements of network access node **112.** Depending on the mobility procedures defined in the appropriate network protocols for radio communication network **100,** terminal device **104** may seek a new radio access connection (which may be, for example, triggered at terminal device **104** or by the radio access network), such as by performing radio measurements on neighboring network access nodes to determine whether any neighboring network access nodes can provide a suitable radio access connection. As terminal device **104** may have moved into the coverage area of network access node **110,** terminal device **104** may identify network access node **110** (which may be selected by terminal device **104** or selected by the radio access network) and transfer to a new radio access connection with network access node **110.** Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

Various wireless communication networks may use retransmissions to recover from reception errors and/or to extend the communication range of devices. Some wireless communication networks may use sequential retransmissions, such as where a transmitter performs retransmissions according to an evenly distributed schedule in time (e.g., every $X$ ms after the initial transmission). A receiver may then listen for retransmissions at each scheduled retransmission instance and subsequently combine the received retransmissions. The receiver may then decode the resulting combined transmission to recover the payload. As the receiver combined multiple transmissions together, receivers may enjoy combining gains and may as a result achieve improved decoding performance. This may help receivers in poor radio conditions, such as when there is high noise or interference, and when receivers are positioned at extended distances from the transmitter.

While this type of sequential retransmission may be effective in some cases, there are some scenarios where the receiver may still not be able to recover the payload in the packet. For example, some scenarios like dense coordinated networks or dense cellular networks may produce considerable interference between devices. This may limit the benefits of using sequential retransmissions. As many devices in these scenarios will perform sequential retransmissions at the same time, the interference between the retransmissions may be correlated. Accordingly, if a receiver cannot decode a particular transmission due to interference, it is likely that further retransmissions will experience a similar level of correlated interference. Combining the sequential retransmissions may therefore not effectively mitigate the interference. Moreover, the interferers may also be performing their own sequential retransmissions to try to cope with the surrounding interference. Consequently, the use of sequential retransmissions may end up leading to an overall, system-level degradation in performance. This can be further exacerbated in some cases where network devices are synchronized in time, as their synchronized transmissions and retransmissions may end up being tightly aligned in time and as a result may be more disruptive to receivers.

Accordingly, various aspects of this disclosure utilize randomized retransmissions instead of sequential retransmissions. As the retransmissions by different devices will therefore be less likely to overlap compared to sequential retransmissions, this can help with the performance degradation caused by correlated interference. As randomized retransmissions can make reception more complex for receivers, various aspects of this disclosure may also utilize predefined retransmission patterns that constrain the time slots in which retransmissions can occur. Receivers may therefore be able to limit their search for retransmissions to specific time slots, thus saving time and loosening the processing power requirements. Various aspects of this disclosure may therefore achieve the combining gains of retransmission in interference-heavy scenarios while still remaining computationally feasible.

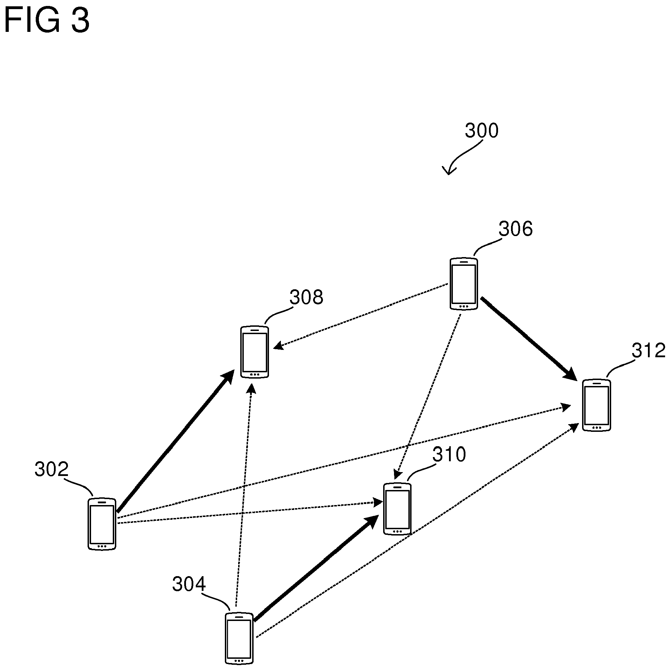

FIG. 3 shows exemplary device-to-device (D2D) network **300** according to some aspects. The term D2D refers generally to any type of network that uses direct communication between devices (e.g., without a cell or other intermediary point) and is not limited to any particular radio access technology. As shown in FIG. 3, various wireless devices **302-312** may communicate with each other in a series of transmissions, each of which may take up a single time slot. These time slots can be any length of time and are not limited to any particular standard. In some aspects, wireless devices **302-312** may communicate with each other according to a Time Division Multiple Access (TDMA) scheme, where wireless devices **302-312** may share one or more channels by taking turns accessing the channels. In the exemplary scenario of FIG. 3, wireless devices **302, 304,** and **306** may act as transmitters while wireless devices **308, 310,** and **312** act as receivers. As shown in FIG. 3, transmitters **302-306** may each transmit a packet using retransmissions to a target receiver, namely receivers **308, 310,** and **312,** respectively. These transmission links are denoted by the bold lines. These transmissions may appear as interference to the other receivers, where the interference links are denoted in FIG. **3** by dashed lines.

Transmitters **302-306** may each perform N transmissions of a given packet. Accordingly, transmitters **302-306** may each respectively transmit N replicas of the packet (e.g., one initial transmission followed by N - 1 retransmissions of the initial transmission). Receivers **308-312** may then be configured to combine the transmissions and subsequently attempt to decode the combined transmission to recover the payload of their respective packets (e.g., the packet from the target transceiver they are listening for). This type of combining may increase the signal-to-interference-plus-noise ratio (SINR) of the combined transmission, which can potentially improve decoder performance. Using chase combining as an exemplary combining technique, the effective SINR after combining N transmissions of a packet is given as

$$SINR_{eff}^{k} = \sum_{i=1}^{N} SINR_{i}^{k} \qquad (1)$$

where $SINR_i^k$ is the SINR of the $i$th transmission of the $k$th user.

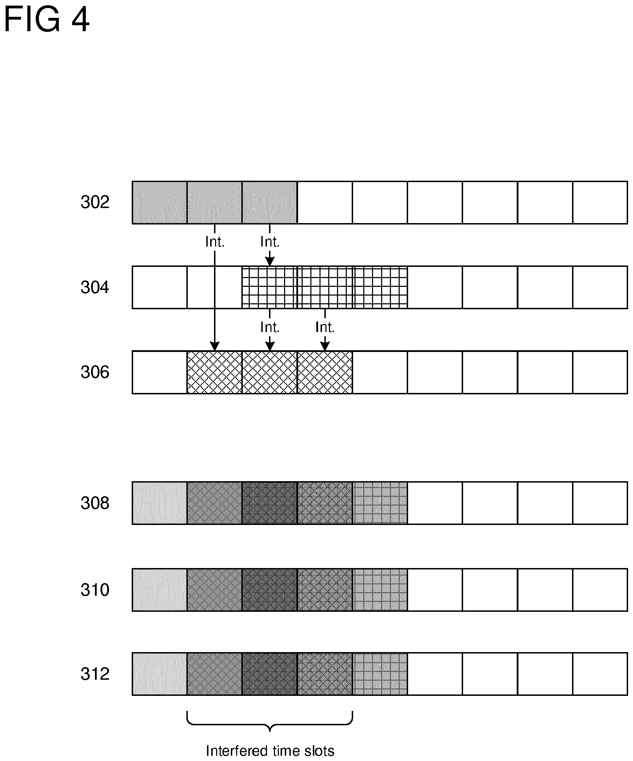

In an exemplary case where wireless network **300** uses sequential retransmissions, each of receivers **308-312** may know which time slots the N transmissions from their respective target transmitters occur in. Once these time slots have elapsed and the N transmissions have occurred, receivers **308-312** may combine the N transmissions from these time slots to obtain the combined transmission. FIG. **4** shows exemplary timing diagrams for wireless devices **302-312** according to some aspects. The timing diagrams of FIG. **4** show the transmissions by transmitters **302-306** at each of a sequence of time slots and the corresponding received signals at receivers **308-312.** In the example of FIG. **4,** transmitters **302-306** may perform their respective N = 3 transmissions in successive time slots. The number of transmissions N is exemplary and can be any value in various aspects. In some aspects, the time slots shown in FIG. **4** may be successive in time (e.g., immediately neighboring each other in time). In other aspects, the time slots may be logically successive but not successive in time. For example, certain time slots in a larger time sequence of time slots may be designated for retransmissions (e.g., according to a predefined schedule). Each retransmission time slot may therefore be logically successive to the closest neighboring retransmission time slot occurring before it and to the closest neighboring retransmission time slot occurring after it. The timing diagrams of FIG. **4** can therefore use either configuration of time slots.

As shown in FIG. **4,** the transmissions by transmitters **302-306** may be offset by one or more time slots. However, receivers **308-312** may still see interference in their received signals. As shown in FIG. **4,** the transmissions by transmitters **302-306** may overlap with each other and may therefore cause interference to receivers **308-312** at certain time slots. These time slots may therefore include the desired transmission (e.g., the transmission from transmitters **302-306** that receivers **308-312** are respectively listening to, which contains the packet) as well as the interfering transmissions from the other transmitters. Even though the transmissions from transmitters **302-306** each start at different times, the transmissions still overlap and combining gains at receivers **308-312** will still be limited.

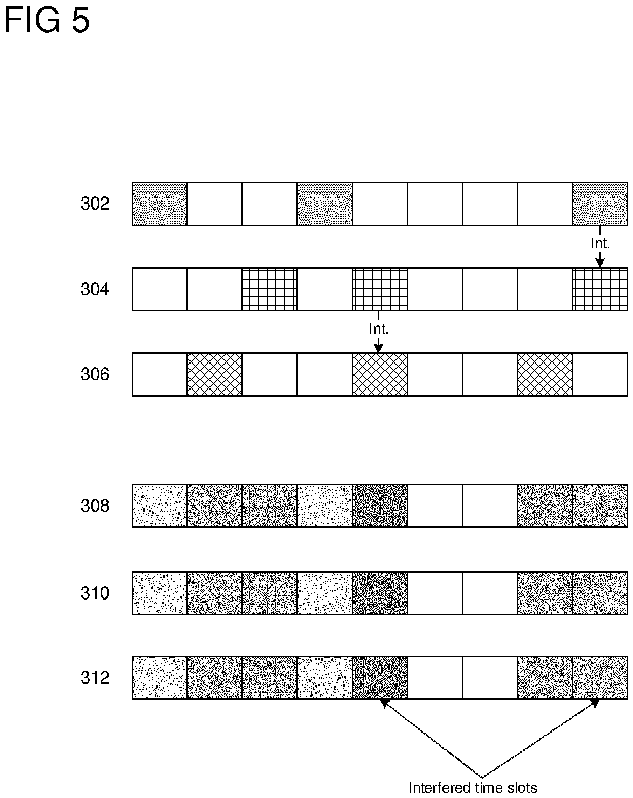

As introduced above, various aspects of this disclosure may use randomized retransmissions. Accordingly, transmitters may still perform N transmissions of a packet but may randomize the transmissions in time. FIG. **5** shows exemplary timing diagrams according to some aspects using randomized retransmissions. As shown in FIG. **5,** transmitters **302-306** may each randomly select N time slots to perform transmissions. Compared to the case of FIG. **4,** the transmissions in FIG. **5** may have considerably less overlap and, as a result, there may be less interference in the received signals at receivers **308-312.** The effective SINR at receivers **308-312** may thus be higher in the randomized transmission example of FIG. **5** compared to the sequential transmission example in FIG. **4.** This feature generally holds on average across all possible transmission configurations for sequential and randomized retransmissions; in other words, the average interference is lower for randomized retransmissions than for sequential retransmissions.

While randomized retransmissions may reduce interference in many cases, there may be drawbacks in the processing complexity of the combining at the receivers. As previously introduced, receivers may achieve increased SINR by combining the received transmissions and decoding the combined transmission. In the sequential retransmission case, a given receiver will know the time slots that contain the transmissions from the target transmitter and will therefore easily be able to identify the transmissions that will be combined. However, in the randomized retransmission case, the transmitters each independently and randomly select the time slots for the transmissions. Consequently, the receivers may not initially know which time slots contain the transmissions and may have to search across a large number of past time slots to the transmissions from the respective target transmitters. The receivers may therefore perform blind combining, such as where a given receiver searches through each possible combination of $N$ time slots out of $L$ past time slots to attempt to determine which time slots contained the transmissions from the target transmitter. However, particularly when $N$ and $L$ increase, there may be a significant number of different slot combinations that could potentially contain the $N$ transmissions. Accordingly, a receiver may have to search up to $\binom{L}{N}$ slot combinations to successfully combine and decode the payload of the transmissions. This may become exceedingly complex for the receiver to handle for each packet.

Various aspects of this disclosure may therefore provide wireless devices and associated methods that utilize randomized retransmissions with reduced complexity. As further described in detail below, various aspects may use retransmission frame windows and predefined retransmission patterns within the retransmission frame windows. Transmitters may therefore select from the predefined retransmission patterns and perform their transmissions in time slots according to the selected retransmission pattern. As the number of predefined retransmission patterns may be limited, receivers may only search for transmissions in certain time slots according to the predefined retransmission patterns. The receivers may therefore be able to limit the complexity of the search while still enjoying the increased SINR benefits of retransmissions.

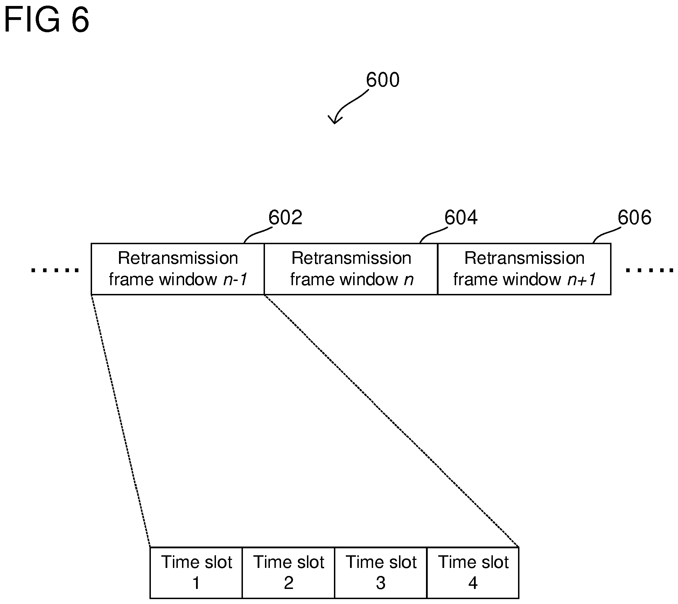

In various aspects of this disclosure using randomized retransmissions, both transmitters and receivers may be configured to use retransmission patterns arranged around retransmission frame windows. In particular, the time slots used by the transmitters and receivers may be logically partitioned into retransmission frame windows, such as where each retransmission frame window is composed of $L$ time slots. FIG. **6** shows an example according to some aspects where $L = 4$. Accordingly, the ongoing sequence of time slots may be logically divided into retransmission frame windows that each include $L = 4$ time slots. This configuration may be known *a priori* at the various transmitters and receivers, which may also be time-synchronized to each other. Accordingly, the transmitters and receivers may transmit and receive according to this time-aligned schedule of time slots.

In the example of FIG. **6,** the time slots in retransmission frame window **602** are shown as immediately neighboring each other. In some aspects, the time slots in a given retransmission frame window (or each retransmission frame window) may be immediate neighbors in time. In other aspects, the retransmission frame windows may be logical retransmission frame windows where their component time slots are not all immediate neighbors in time. For example, the time slots in retransmission frame window **602** may be separated in time but may be logically assigned (e.g., per the scheduled shared by the transmitters and receivers) to retransmission frame window **602.** Accordingly, while the time slots in retransmission frame window **602** are shown as neighboring each other, they may only be logical neighbors within retransmission frame window **602** and may actually be separated from each other in time. This use of logical retransmission frame windows is further detailed later regarding discovery time slots.

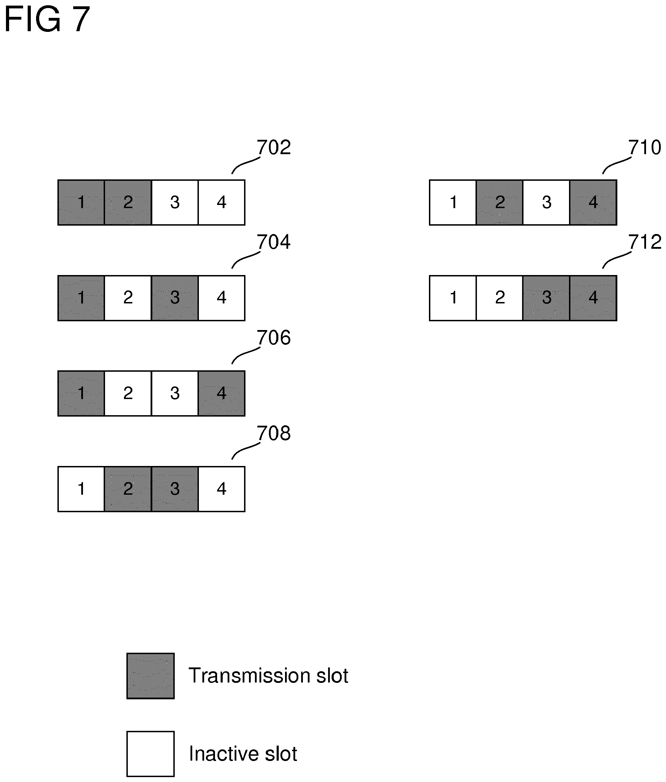

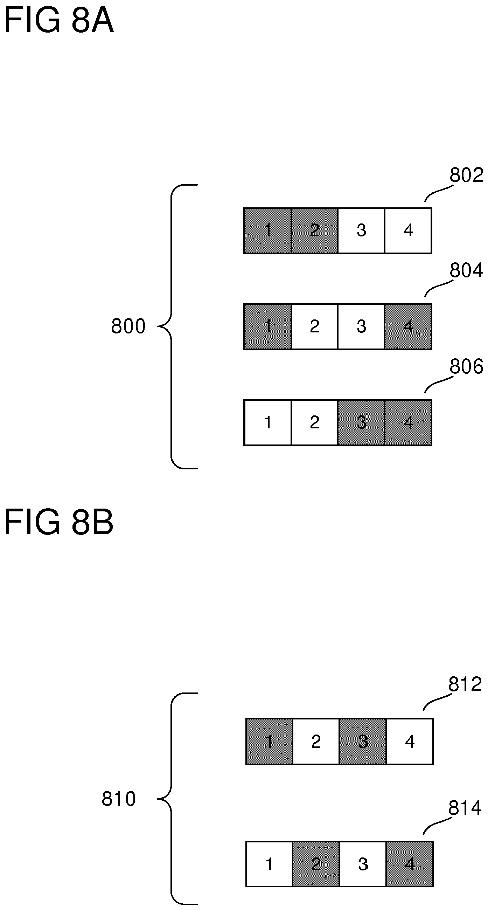

Various aspects of this disclosure may use the time slots of the retransmission frame windows to govern retransmission patterns, where a retransmission pattern may specify certain slots in a retransmission frame window that contain initial transmissions and retransmissions. FIGs. **7, 8A,** and **8B** show various exemplary retransmission patterns according to some aspects. While these aspects use the retransmission frame window size $L = 4$ (e.g., four time slots per retransmission frame window) and the transmission count $N = 2$ (e.g., two transmissions per retransmission frame window), these settings for $L$ and $N$ are used only for illustrative purposes and can be set at any integer value. As denoted by the legend, a predefined number of time slots (equal transmission count $N$) in each retransmission frame window are allocated as transmission slots where a transmitter can perform an initial transmission or a retransmission. The remaining time slots in the retransmission frame window are designated as inactive slots. The order and positioning of transmission and active slots in the retransmission frame window therefore define the retransmission pattern.

Starting first with FIG. **7,** FIG. **7** shows an overall set of retransmission patterns **702-712** according to some aspects. In particular, for any *L* and *N*, there are $\binom{L}{N}$ ("L choose N") total possibilities for retransmission patterns. In the exemplary case of *L* = 4 and *N* = 2, there are therefore six total possibilities that represent all possible ways of arranging two transmissions (transmission count *N*) within four possible time slots (retransmission frame window size *L*). Retransmission patterns **702-712** may therefore represent the overall set of retransmission frame patterns.

According to various aspects of this disclosure, transmitters and receivers may be configured to use a lesser subset of the overall set of transmission pattern. For example, instead of using any of the $\binom{L}{N}$ possible retransmission patterns, the transmitters and receivers may be configured to use a candidate set of *M* retransmission patterns where $M < \binom{L}{N}$. Accordingly, the number of possible retransmission patterns will be limited, since a given transmitter will be constrained to randomly selecting a retransmission pattern from the candidate set of retransmission patterns. Consequently, when a receiver is searching for transmissions in a retransmission frame window, the receiver may search based on the candidate set of retransmission patterns. Instead of having to search through all of the overall set of retransmission patterns to find transmissions, the receiver may thus limit its search to the smaller candidate set of retransmission patterns. This may reduce the computational complexity at the receiver.

FIGs. **8A** and **8B** show exemplary candidate sets of retransmission patterns according to some aspects. As shown in FIG. **8A,** candidate set **800** may include retransmission patterns **802, 804,** and **806,** which may be the same as retransmission patterns **702, 706,** and **710** from the overall set of retransmission patterns in FIG. **7.** Accordingly, in this case *M* = 3, or in other words, three retransmission patterns from the overall set of retransmission patterns are used for the candidate set of retransmission patterns. When a given transmitter makes a transmission, the transmitter may therefore randomly select one of the *M* = 3 candidate retransmission patterns. The transmitter may then perform an initial transmission of a packet in the first transmission slot (e.g., time slot 1 for candidate retransmission patterns **802** and **804** and time slot 2 for candidate retransmission pattern **806**) and perform one or more subsequent retransmissions of the packet in the remaining transmission slots (e.g., time slot 2 for candidate retransmission pattern **802** and time slot 4 for candidate retransmission patterns **804** and **806**). The transmitters and receivers may therefore be preconfigured with the candidate set of retransmission patterns prior to engaging in communications with each other. For example, in some aspects the transmitters and receivers may be preprogrammed with the candidate set of retransmission patterns, such as the time of manufacture or during period maintained. In some aspects, the transmitters and receivers may be configured with the candidate set of retransmission patterns by a central entity, such as a cell or other network-side wireless access node that sends control information to the transmitters and receivers. In some aspects, the transmitters and receivers may be configured with the candidate set of retransmission patterns via relaying, such as where one or more devices receive control information specifying the candidate set of retransmission patterns and relay the control information across a D2D network to devices. In any case, the transmitters and receivers may initially know the candidate set of retransmission patterns (e.g., may have *a priori* knowledge of the candidate set of retransmission patterns).

As there are only *M* options for candidate retransmission patterns, a receiver may be able to focus its search for transmissions exclusively on candidate retransmission patterns **802-806.** This may consequently reduce the complexity at the receiver compared to the case where all $\binom{L}{N}$ retransmission patterns of the overall set are available. However, lower values of *M* may also lead to higher average levels of interference. For example, if *M* = 3 and there are more than three transmitters in a dense area, multiple of the transmitters will randomly select the same retransmission pattern from the candidate set of retransmission patterns. Their transmissions will collide and receivers listening for these transmissions will experience interference. Selection of *M* may therefore be a tradeoff between average interference levels and receiver complexity.

FIG. **8B** shows another exemplary candidate set of retransmission patterns according to some aspects. As shown in FIG. **8B,** candidate set **810** may include retransmission patterns **812** and **814,** which may be the same as retransmission patterns **704** and **710** from the overall set of retransmission patterns in FIG. **7.** As can be seen in FIG. **8B,** retransmission patterns **812** and **814** are orthogonal to each other. In other words, the transmission slots in retransmission patterns **812** and **814** are mutually exclusive (e.g., do not overlap). Accordingly, if a first transmitter uses retransmission pattern **812** and a second transmitter uses retransmission pattern **814,** their respective transmission will not overlap. However, as there are only *M* = 2 candidate retransmission patterns, there may be interference issues when there is a large number of transmitters in a dense area. This type of orthogonal retransmission pattern configuration can be expanded to higher values of *M*, where the candidate retransmission patterns are selected to have transmission slots that do not overlap with any other candidate retransmission pattern.

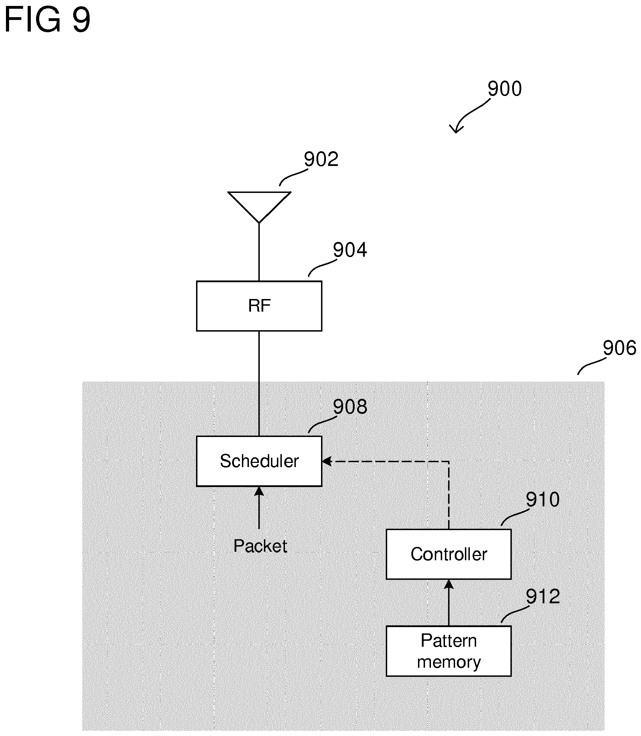

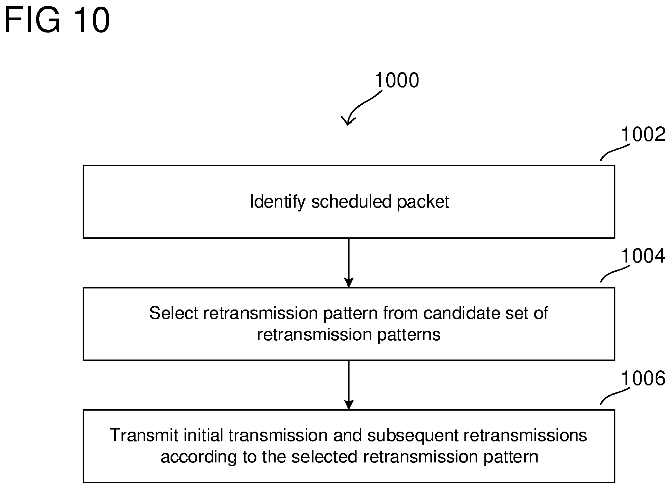

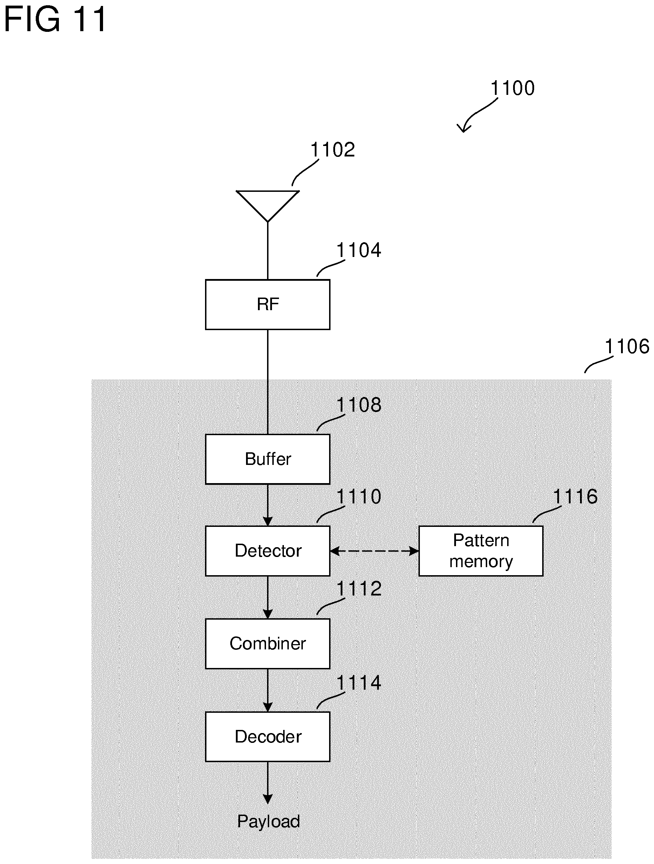

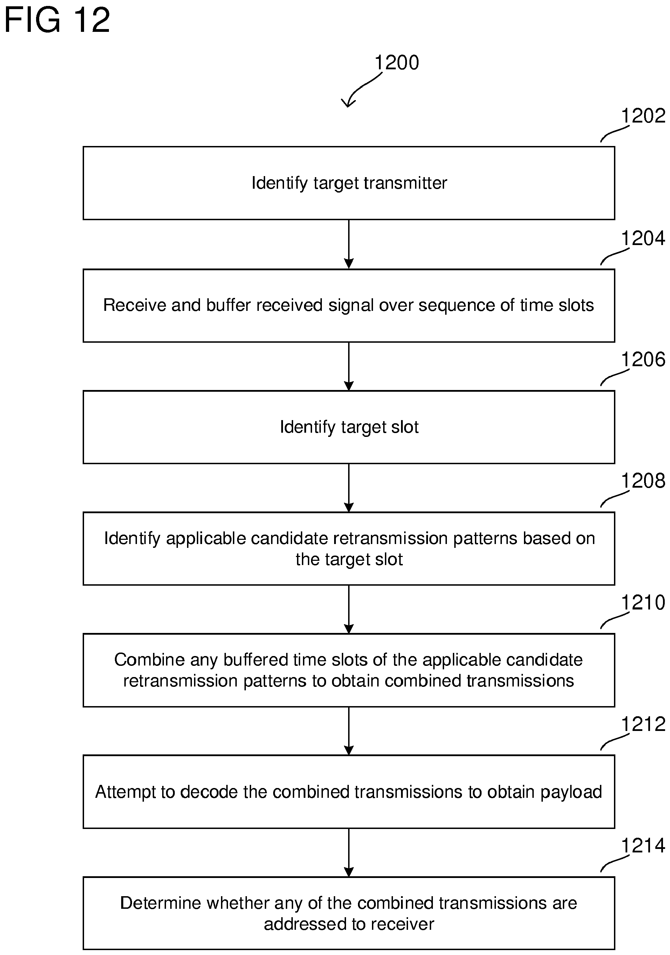

The configuration and operation of the transmitters will now be described with reference to FIGs. **9** and **10,** which is followed by a description of the configuration and operation of the receivers with reference to FIGs. **11** and **12.** Starting with FIG. **9,** FIG. **9** shows an exemplary internal configuration of transmitter **900** according to some aspects. In some aspects, transmitter **900** may be configured as a wireless device. For example, transmitter **900** may be configured as a terminal device, such as terminal device **102** in FIGs. **1** and **2.** In some aspects, transmitter **900** may operate as part of a D2D network, such as in the manner of transmitters **302-306** in FIG. **3.** In some aspects, transmitter **900** may also be configured to operate as a receiver and may therefore be configured with the same subcomponents and functionality of receiver **1100** as described in FIGs. **11** and **12.** The designation "transmitter" is therefore used for to refer to the transmitter functionality of randomized retransmission schemes and does not limit transmitter **900** to only performing transmission.

As shown in FIG. **9,** transmitter **900** may include antenna system **902,** RF transceiver **904,** and baseband modem **906.** The configuration depicted in FIG. **9** is primarily focused on the transmission features of randomized retransmission schemes and may not expressly depict other components of transmitter **900.** In some aspects, antenna system **902,** RF transceiver **904,** and baseband modem **906** may be configured in the manner described above for antenna system **202,** RF transceiver **204,** and baseband modem **206** of terminal device **102.** Accordingly, transmitter **900** may be configured to transmit and receive wireless signals via antenna system **902** and RF transceiver **904.** RF transceiver **904** may therefore modulate and transmit baseband samples (provided by baseband modem **906**) via antenna system **902** in the transmit direction. RF transceiver **904** may also receive and demodulate radio signals via antenna system **902** and provide the resulting baseband samples to baseband modem **906** in the receive direction.

FIG. **9** also depicts several internal components of baseband modem **906,** including scheduler **908,** controller **910,** and pattern memory **912.** As discussed above regarding FIG. **2** and baseband modem **206,** in some aspects baseband modem **906** may include a digital signal processor and a protocol controller. Accordingly, the various components of baseband modem **906** shown in FIG. **9** may in some aspects be subcomponents of the digital signal processor (e.g., physical layer components) and/or subcomponents of the protocol controller (e.g., protocol stack components). In one exemplary aspect, scheduler **908,** controller **910,** and pattern memory **912** may be protocol stack components, such as where scheduler **908** and controller **910** are part of a Media Access Control (MAC) entity responsible for scheduling transmissions. While not shown in FIG. **9,** this this exemplary aspect baseband modem **906** may also include physical layer components between scheduler **908** and RF transceiver **904** that may perform physical layer processing on transmissions before sending baseband samples to RF transceiver **904.**

In various aspects, scheduler **908,** controller **910,** and pattern memory **912** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect, scheduler **908** and controller **910** may be processors configured to execute control software for various operations of transmitter **900,** including retransmission scheduling. The operation of this software is described in full below in prose and by the associated figures. In this exemplary aspect, pattern memory **912** may be a memory device configured to store information about the candidate set of retransmission patterns. Various other aspects may include where scheduler **908,** controller **910,** and pattern memory **912** are different mixtures of hardware and/or software, and/or where one or more of scheduler **908,** controller **910,** and pattern memory **912** are combined into a single physical hardware or software component. The depiction in FIG. **9** therefore shows the logical distinction between these components but does not limit them to being physically separate.

FIG. **10** shows exemplary method **1000** according to some aspects, which transmitter 900 may execute to perform randomized retransmissions. As shown in FIG. **10,** transmitter **1000** may first identify a packet scheduled for transmission in stage **1002.** For example, scheduler **908** may identify a packet that transmitter **900** is scheduled to send to a target receiver. The term packet is used herein to generally refer to any data that is grouped together for transmission. In some aspects, the packet may be one of a sequence of packets scheduled for transmitter **900.** Controller **910** may then select a retransmission pattern from the candidate set of retransmission patterns in stage **1004.** For example, pattern memory **912** may store the candidate set of retransmission patterns (e.g., in the form of information that specifies transmission and inactive slots of the candidate retransmission patterns). Controller **910** may then be configured to randomly select a retransmission pattern from the candidate set of retransmission patterns, such as via random selection of a number between 1 and $M$ that identifies a retransmission pattern out of the candidate set of retransmission patterns. In some aspects, controller **910** may be configured to select the retransmissions pattern based on a device ID of the target receiver. For example, controller **910** may apply a modulo function or a hash function to the device ID of the target receiver or to the device ID of transmitter **900,** and use the output value to select the retransmission pattern. In some aspects, controller **910** may select a subset of the candidate set of retransmission patterns based on the output value, and then randomly select the retransmission pattern from this subset of the candidate set of retransmission patterns. The target receiver may be able to compute the same output value (using the same modulo function or hash function on its device ID or on the device ID of the target transmitter), and may therefore be able to identify the same subset of the candidate set of retransmission patterns. This may help the target receiver when it searches for the retransmissions.

After selecting the retransmission pattern, controller 910 may specify the retransmission pattern to scheduler 908. Scheduler 908 may then identify the transmission slots and the inactive slots in the retransmission pattern. Then, in stage 1006, scheduler 908 may transmit an initial transmission and subsequent retransmissions of the packet according to the retransmission pattern. For example, scheduler 908 may transmit the initial transmission of the packet in the earliest transmission slot in the retransmission pattern. This may include scheduler 908 transmitting the initial transmission as wireless signals via RF transceiver 904 and antenna system 902. After transmitting the initial transmission in the earliest transmission slot, scheduler 908 may transmit one or more subsequent retransmissions of the packet in the remaining transmission slots of the retransmission pattern. In some aspects, scheduler 908 may wait until the next upcoming retransmission frame window to begin the transmissions. In other words, as the retransmission frame windows should be synchronized between transmitters and receivers, scheduler 908 may not schedule initial transmissions for the middle of a retransmission frame window.

In some aspects, the target receiver may be able to decode the packet from the transmissions before receiving all of the scheduled retransmissions in the retransmission pattern. The target receiver may then be configured to transmit an acknowledgement (ACK) to transmitter 900, which scheduler 908 may identify in received signals at transmitter 900. If scheduler 908 receives this ACK before transmitting all of the scheduled retransmissions, scheduler 908 may terminate the retransmission procedure for the packet (e.g., without performing the maximum number of allowed retransmissions), and may then move to a next packet scheduled for transmission.

Transmitter 900 may complete method 1000 once it either receives an ACK or completes all of the scheduled retransmissions for the packet. In some aspects, transmitter 900 may have a maximum number of allowed transmissions $R$, and scheduler 908 may continue to perform retransmissions of the initial transmission until $R$ total transmissions have been reached. In some cases, $R$ may be greater than $N$, and scheduler 908 may perform the retransmissions across multiple retransmission frame windows (e.g., $\left\lceil \frac{R}{N} \right\rceil$ retransmission frame windows). In some aspects, scheduler 908 may use the same retransmission pattern over all $\left\lceil \frac{R}{N} \right\rceil$ retransmission frame windows, while in other aspects scheduler 908 may select a new retransmission pattern from the candidate set of retransmissions patterns to use in each retransmission frame window. In some aspects, once the transmission is complete transmitter 900 may then move on to a next scheduled packet (e.g., for the same target receiver or for another target receiver) and repeat method 1000 for this next scheduled packet.

Transmitter 900 may therefore randomize its transmissions according to the randomized retransmission scheme. This can be advantageous, for example, when there are multiple transmitters that are all performing a sequence of retransmissions in proximity to each other. Even when the transmitters are synchronized in time, some or all may select different retransmission patterns, which may in turn reduce the interference seen at receivers. The receivers may therefore enjoy combining gains and improved decoding performance. Furthermore, because the randomized retransmissions are limited to certain candidate set of randomized retransmissions, the receivers may be able to detect and combine retransmissions without prohibitively complex reception techniques.

The configuration and operation of a receiver will now be described according to some aspects. As previously indicated, receivers in randomized retransmission schemes may be configured to use the candidate set of retransmission patterns to search for and detect transmissions from a target transmitter. FIG. 11 shows an exemplary internal diagram of receiver 1100 according to some aspects. In some aspects, receiver 1100 may be configured as a wireless device. For example, receiver 1100 may be configured as a terminal device, such as in the case of terminal device 102 in FIGs. 1 and 2. In some aspects, receiver 1100 may operate as part of a D2D network, such as in the manner of receivers 308-312 in FIG. 3. In some aspects, receiver 1100 may also be configured to operate as a transmitter, and may therefore be configured with the same subcomponents and functionality of transmitter 900 as described in FIGs. 9 and 10. The designation "receiver" is therefore used for to refer to the receiver functionality of randomized retransmission schemes and does not limit receiver 1100 to only performing reception.

As shown in FIG. 11, receiver 1100 may include antenna system 1102, RF transceiver 1104, and baseband modem 1106. The configuration depicted in FIG. 11 is primarily focused on the reception features of randomized retransmission schemes and may not expressly depict other components of receiver 1100. In some aspects, antenna system 1102, RF transceiver 1104, and baseband modem 1106 may be configured as described above for antenna system 202, RF transceiver 204, and baseband modem 206 of terminal device 102. Accordingly, wireless device 1100 may be configured to transmit and receive wireless signals via antenna system 1102 and RF transceiver 1104. RF transceiver 1104 may therefore modulate and transmit baseband samples (provided by baseband modem 906) via antenna system 1102 in the transmit direction. RF transceiver 1104 may also receive and demodulate radio signals via antenna system **1102** and provide the resulting baseband samples to baseband modem **1106** in the receive direction.

FIG. **11** also depicts various internal components of baseband modem **1106,** including buffer **1108,** detector **1110,** combiner **1112,** decoder **1114,** and pattern memory **1116.** As discussed above regarding FIG. **2** and baseband modem **206,** in some aspects baseband modem **1106** may include a digital signal processor and a protocol controller. Accordingly, the various components of baseband modem **1106** shown in FIG. **11** may in some aspects be subcomponents of the digital signal processor (e.g., physical layer components) and/or subcomponents of the protocol controller (e.g., protocol stack components). In one exemplary aspect, buffer **1108,** detector **1110,** combiner **1112,** decoder **1114,** and pattern memory **1116** may be physical layer components of the digital signal processor and may provide decoded payload data to downstream components including the protocol controller. In some aspects, detector **1110** may additionally include MAC entity components related to scheduling of transmissions over time slots.

In various aspects, buffer **1108,** detector **1110,** combiner **1112,** decoder **1114,** and pattern memory **1116** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect of this disclosure, detector **1110** may include a processor configured to execute control software that controls the transmission detection operations of wireless device **1100.** The operation of this software is described in full below in prose and by the associated figures. Detector **1110** may also include one or more hardware circuits that are configured to perform detection operations on signals; alternatively, detector **1110** may perform this detection functionality by executing program code. In this exemplary aspect, buffer **1108** may be a memory device configured to store baseband samples from a plurality of previous time slots. Pattern memory **1118** may be a memory device configured to store information about the candidate set of retransmission patterns. Combiner **1112,** and decoder **1114** may be either hardware (e.g., hardware circuits configured with digital logic to perform signal combination and packet decoding, respectively) or software components (e.g., processors configured to execute instructions that define signal combination and packet decoding operations, respectively) configured to operate as described below in prose and by the associated figures. Various other aspects may include where buffer **1108,** detector **1110,** combiner **1112,** decoder **1114,** and pattern memory **1116** are different mixtures of hardware and/or software, and/or where one or more of buffer **1108,** detector **1110,** combiner **1112,** decoder **1114,** and pattern memory **1116** are combined into a single physical hardware or software component. The depiction in FIG. **11** therefore shows the logical distinction between these components but does not limit them to being physically separate.

Receiver **1100** may be configured to receive randomized retransmissions from transmitters and to combine and decode the randomized retransmission to recover a payload of a packet. FIG. **12** shows exemplary method **1200** according to some aspects, which receiver **1100** may execute as part of a randomized retransmission scheme. In the context of method **1200,** receiver **1100** may be expecting a packet from a particular target transmitter. The target transmitter may be configured in the manner of transmitter **900** as described above. Accordingly, as shown in FIG. **12,** detector **1110** may first identify the target transmitter in stage **1202.** In some aspects, receiver **1100** may be engaged in an active communication session with the target transmitter, and may therefore expect one or more packets from the target transmitter as part of the active communication session. The target transmitter may therefore stand in contrast to other transmitters, which may act as interfering transmitters from the perspective of receiver **1100.** As previously discussed, receivers and transmitters may operate with a time schedule composed of a sequence of time slots over time. In some aspects, the receivers and transmitters may be time synchronized with each other and may therefore operate on a common sequence of time slots (e.g., using an external synchronization signal provided by a cell or other entity, or with device-to-device synchronization). Accordingly, the time slots used by receiver **1100** may be aligned in time with the time slots used by the transmitters.

As described above for transmitter **900,** the target transmitter may transmit the packet by randomly selecting a retransmission pattern from the candidate set of retransmission patterns and then performing an initial transmission followed by subsequent retransmissions in the transmission slots of the retransmission pattern. Accordingly, buffer **1108** may receive and buffer received signals over a sequence of time slots in stage **1204.** For example, baseband modem **1106** may receive baseband samples (representing the received signal) via antenna system **1102** and RF transceiver **1104** and may provide the baseband samples to buffer **1108.** Buffer **1108** may store these baseband samples.

As the target transmitter is using a randomized retransmission scheme to transmit the packet, buffer **1108** may receive and buffer the received signal over a sequence of time slots in stage **1204.** In some aspects, buffer **1108** may be configured to buffer the received signal over the $L$ time slots of a given retransmission frame window. For example, in the $L = 4$ examples of FIGs. **7, 8A,** and **8B,** buffer **1108** may be configured to buffer the $L = 4$ time slots of retransmission frame windows (e.g., each retransmission frame window). Once a retransmission frame window is over, buffer **1108** may empty its memory and begin buffering the received signal over the time slots of the next retransmission frame window. Accordingly, at any given time buffer **1108** may store the baseband samples of the time slots that have occurred in the current retransmission frame window. Furthermore, as previously noted, in some aspects the retransmission frame windows may be logical retransmission frame windows where some of the time slots may not be immediate neighbors in time. Accordingly, buffer **1108** may buffer the time slots in stage **1204** by selectively buffering the time slots of a given logical retransmission frame window (e.g., by buffering the time slots in the logical retransmission frame window and optionally ignoring intervening time slots that are not logically allocated to the logical retransmission frame window). Accordingly, in either case buffer **1108** may store the received signal over the time slots of at least one retransmission frame window. The buffered time slots stored in buffer **1108** may therefore not necessarily be immediate neighbors in time.

Receiver **1100** may then use the buffered retransmission frame window to detect the transmissions from the target transmitter. As the target transmitter is using a randomized retransmission scheme, receiver **1100** may perform blind decoding to attempt to decode a packet transmitted by the target transmitter that is addressed to receiver **1100.** Assuming the target transmitter is using a randomized retransmission scheme based on a candidate set of retransmission patterns, detector **1110** may use the candidate set of retransmission patterns to focus the search for the transmissions on certain time slots. As previously indicated, both receiver **1100** and the target transmitter may be configured with the same candidate set of retransmission patterns. In some aspects, pattern memory **1118** may store the overall set of retransmission patterns, and detector **1110** may access the overall set of retransmission patterns to identify the candidate set of retransmission patterns. Detector **1110** may then use the candidate set of retransmission patterns to search for the transmissions from the target transmitter. In some aspects where the target transmitter selects a subset of the candidate set of retransmission patterns from which to select the retransmission pattern, detector **1110** may perform the same procedure as the target transmitter to identify the subset. For example, detector **1110** may apply a modulo function or a hash function to the device ID of the target receiver or to the device ID of the target transmitter, and use the output value to select the subset of the candidate set of retransmission patterns. This will therefore reduce the number of retransmission patterns that detector **1110** searches through. References below the candidate set of retransmission patterns may be either the full set of candidate retransmission patterns or the subset of the candidate set of retransmission patterns.

Accordingly, as shown in FIG. **11,** buffer **1108** may feed the buffered time slots to detector **1110.** As further described below, detector **1110** may be configured to identify time slots for combiner **1112** to combine in an attempt to decode a transmission from the target transmitter from the buffered time slots. In some aspects, detector **1110** may identify the time slots as part of an online decoding procedure, such as where decoder **1114** begins attempting to decode a transmission before buffer **1108** receives all of the time slots from RF transceiver **1104.** As shown in FIG. **12,** detector **1110** may identify a target slot from the buffered time slots in stage **1206.** For example, detector **1110** may identify the time slot most recently buffered by buffer **1108** as the target slot, and may sequentially progress through each of the buffered time slots by focusing on each as the target time slot as the time slots are buffered by buffer **1108.** Detector **1108** may attempt to decode transmissions using this target slot and specific earlier-occurring buffered time slots. In other words, detector **1110** may sequentially select each of the buffered time slots as the target slot (in order of their occurrence) and attempt to decode transmissions using the target slot and certain earlier-occurring buffered time slots.

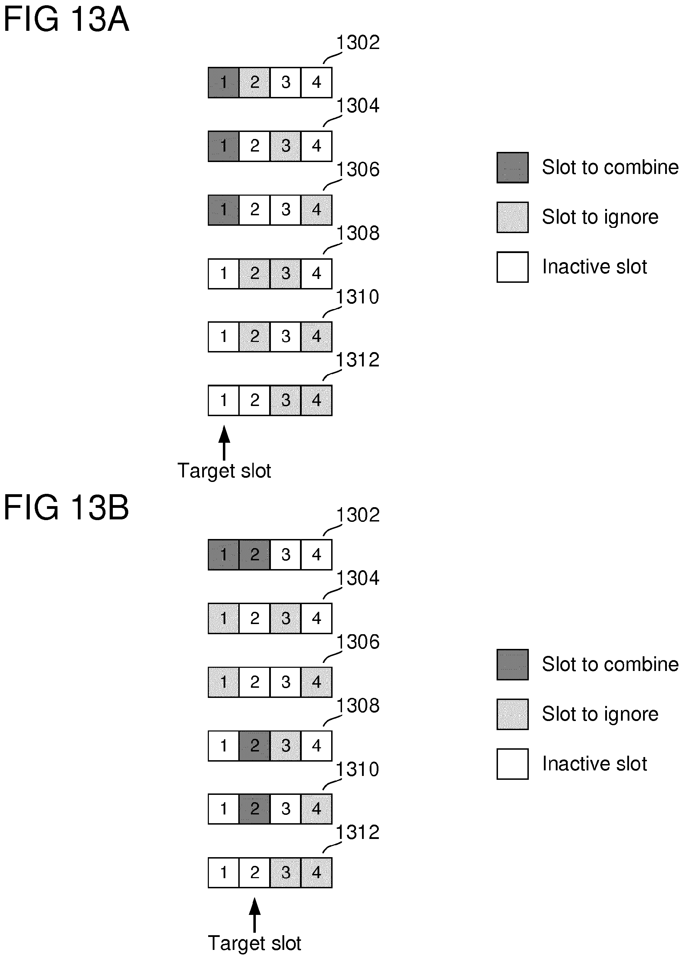

FIGs. **13A-13D** show an example of this using a candidate set of retransmission patterns. For purposes of explanation, the candidate set of retransmission patterns in the example of FIGs. **13A-13D** is equal to the overall set of retransmission patterns; however, the candidate set of retransmission patterns may in practice be a reduced subset of the overall set of retransmission patterns. As shown in FIG. **13A,** detector **1108** may initially select the first-occurring time slot of the current retransmission frame window as the target slot in stage **1206.** As this is the first-occurring time slot, there may not be any other earlier buffered time slots for combiner **1112** to combine with the first-occurring time slot. Accordingly, detector **1108** may not identify any applicable candidate retransmission patterns based on the target slot in stage **1208,** and may therefore provide the first-occurring time slot to combiner **1112.** As there are not any other buffered time slots to combine, combiner **1112** may not combine the first-occurring time slot with any other buffered time slots in stage **1210,** and may therefore provide the first-occurring time slot (in uncombined form) to decoder **1114.**

Decoder **1114** may then attempt to decode the first-occurring time slot in stage **1212** to obtain the payload of a transmission in the first-occurring time slot. For example, decoder **1114** may decode the first-occurring time slot by decoding it according to the applicable coding scheme. The type of coding scheme is not limited and can generally be any type of coding scheme. In some aspects, decoder **1114** may be configured to perform an error check to determine whether the decode was successful, such as using a cyclic redundancy check (CRC) or other type of error check that is encoded into the transmissions. If the decode is successful, decoder **1114** may then check the payload to determine whether the transmission in the first-occurring time slot is addressed to receiver **1100** (e.g., whether receiver **1100** is the target receiver of the transmission), such as by checking a destination address field in the payload to determine whether the device ID of receiver **1100** is specified. This is part of stage **1214,** where decoder determines whether any of the combined transmissions are addressed to receiver **1100** (where only the first-occurring time slot is evaluated during the stage of the current example). If the transmission in the first-occurring time slot is addressed to receiver **1100,** decoder **1114** may notify the protocol stack running at the protocol processor of receiver **1100,** which may then transmit an ACK to the target transmitter that signifies the transmission was successfully received. Receiver **1100** may then repeat the procedure of method **1200** for the next retransmission frame window following the current retransmission frame window, such as to detect another transmission addressed to receiver **1100**. Receiver **1100** may also then process and/or utilize the payload, which may include further physical layer processing at the digital signal processor and/or protocol stack processing at the protocol processor. Depending on whether the payload is control plane or user plane, receiver **1100** may utilize the payload for various communication control and/or user-related functions. As aspects of this disclosure are focused on the decoding of the transmissions and recovery of the payload, its contents and later uses at receiver **1100** are not limited to any specifics

If the decode is not successful, or if the decoded transmission does not identify receiver **1100** as the target receiver, detector **1110** may proceed to evaluate the second-occurring time slot after it is buffered by buffer **1108** and may repeat stages **1206-1214** using this second-occurring time slot as the target slot. Detector **1110** may therefore identify this second-occurring time slot as the target slot in stage **1206**. Detector **1110** may then identify applicable candidate retransmission patterns based on the target slot in stage **1208**. For example, detector **1110** may determine which of the candidate retransmission patterns have a transmission slot matching the target slot, such as by using the candidate set of retransmission patterns stored in pattern memory **1116**. FIG. **13B** shows an example of this using the candidate set of transmission patterns from FIG. **7**. In this example, detector **1110** may identify that candidate retransmission patterns **1302, 1308,** and **1310** have transmission slots that match the target slot (e.g., are aligned with the target slow within the current retransmission frame window). Detector **1110** may therefore identify candidate retransmission patterns **1302, 1308,** and **1310** as the applicable candidate retransmission patterns. In cases where the candidate set of retransmission patterns are mutually orthogonal (e.g., in the case of FIG. **8B**), there may only be one candidate retransmission pattern that has a transmission slot matching each target slot. Detector **1110** may therefore only identify a single applicable candidate retransmission pattern for each target slot in such mutually orthogonal cases.

Detector **1110** may then identify buffered time slots of the applicable candidate retransmission patterns, and provide these buffered time slots to combiner **1112**. As the target slot is the second-occurring time slot, only candidate retransmission pattern **1302** has a buffered time slot (the first-occurring time slot) in addition to the target slot in buffer **1108**. By contrast, candidate retransmission patterns **1308** and **1310** have transmission slots that occur after the target slot, and are therefore not yet buffered in buffer **1108**. The target slot may therefore not be combinable with any of the other transmission slots of candidate retransmission patterns **1308** and **1310**.

Combiner **1112** may then combine the buffered time slots of the applicable candidate retransmission patterns to obtain respective combined transmissions (e.g., one for each applicable candidate retransmission that has buffered time slots). In the instant case, only candidate retransmission patterns **1302** has multiple buffered time slots, namely the first-occurring and second-occurring time slots. Accordingly, combiner **1112** may combine the first-occurring and second-occurring time slots for candidate retransmission pattern **1302,** and provide this combined transmission to decoder **1114**.

Decoder **1114** may then attempt to decode the combined transmission in stage **1212** to obtain its payload. As described above, if the decode is successful decoder **1114** may determine whether the transmission is addressed to receiver **1100** as the target receiver. If so, decoder **1114** may inform the protocol stack, which may transmit an ACK to the transmitter. As a transmission has been decoded in the current retransmission frame window, receiver **1100** may then repeat this procedure for the next retransmission frame window to attempt to decode a subsequent transmission. Because the combined transmission is a combination of multiple time slots, it may have a higher change of being decoded if the combined time slots were actually used by the target transmitter to perform the initial transmission and a retransmission (due to combining gain). As this is blind decoding, decoder **1114** may not know whether or not the combined time slots actually contain an initial transmission and a retransmission prior to attempting to decode the combined transmission.

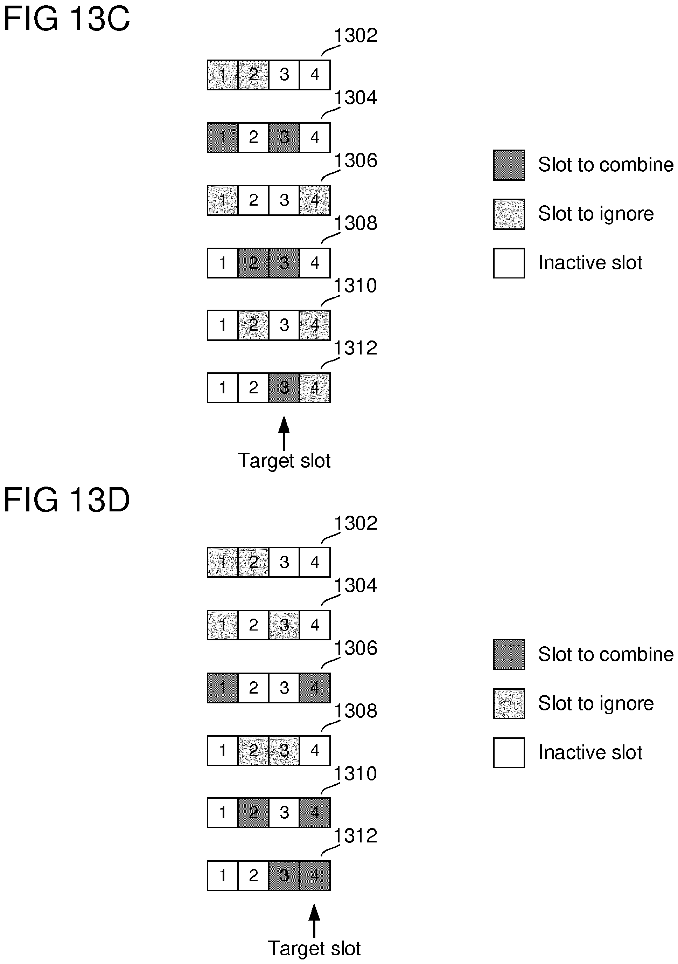

If the decode is not successful, or if the transmission was not addressed to receiver **1100,** detector **1110** may then move on the next time slot (as there are no other combined transmissions to attempt to decode), which may be buffered in buffer **1108**. As shown in FIG. **13C,** detector **1110** may select the third-occurring time slot of the current retransmission window as the target slot in stage **1206**. Detector **1110** may then identify the applicable candidate retransmission patterns based on the target slot in stage **1208**, namely by identifying candidate retransmission patterns that have transmission slots that match the target slot. As shown in FIG. **13C,** detector **1110** may identify candidate retransmission patterns **1304, 1308,** and **1318** as the applicable candidate retransmission patterns. Candidate retransmission patterns **1304** and **1308** may have multiple buffered time slots (including the target slot), while candidate retransmission pattern **1312** may only have one buffered time slot (the target slot) in buffer **1108**. The target slot may therefore only be combinable with the buffered time slots from candidate retransmission patterns **1304** and **1308,** but may not be combinable with any buffered time slots for candidate retransmission pattern **1312**.

Detector **1110** may then provide the buffered time slots to combiner **1112,** which may combine the buffered time slots for the applicable candidate retransmission patterns to obtain respective combined transmissions (e.g., one for each applicable candidate retransmission pattern that has multiple buffered time slots) in stage **1210**. Combiner **1112** may then provide each of the combined transmissions to decoder **1114** for decoding.

Decoder **1114** may then attempt to decode each of the combined transmissions (e.g., in sequence) in stage **1212.** For example, decoder **1114** may first attempt to decode the combined transmission for candidate retransmission pattern **1304** (e.g., the combination of the first- and third-occurring time slots). If the decode is successful and decoder **1114** determines that the payload was addressed to receiver **1100,** receiver **1100** may end the decoding procedure for the current retransmission frame window. If not, decoder **1114** may then attempt to decode the combined transmission for candidate retransmission pattern **1304** (e.g., the combination of the second- and third-occurring time slots). If the decode is successful and decoder **1114** determines that the payload was addressed to receiver **1100,** receiver **1100** may end the decoding procedure for the current retransmission frame window.

If not, detector **1110** may select the next-occurring time slot, namely the fourth-occurring time slot, as the target slot in stage **1206.** Detector **1110** may then identify the applicable candidate retransmission patterns for this target slot in stage **1208,** such as candidate retransmission patterns **1306, 1310,** and **1312** as shown in FIG. **13D.** As the fourth-occurring time slot is the final time slot in the current retransmission frame pattern, all of the applicable candidate retransmission patterns will have multiple buffered time slots (including the target slot). Detector **1110** may therefore provide the buffered time slots to combiner **1112,** which may combine the buffered time slots for each of the applicable candidate retransmission patterns to obtain respective combined transmissions in stage **1210.** Combiner **1112** may then provide the combined transmissions to decoder **1114,** which may then attempt to decode the combined transmissions in stage **1212.** As described above for the third-occurring time slot, decoder **1114** may attempt to decode the combined transmissions in sequence, and may end the decoding procedure for the current retransmission frame window if any of the combined transmissions are decoded successfully and are addressed to receiver **1100.**

Accordingly, receiver **1100** may progress through each of the time slots of the retransmission frame window, focus on a given time slot as the target slot, and combine the target slot with certain other buffered time slots according to the candidate set of retransmission patterns to obtain combined transmissions. Receiver **1100** may then attempt to decode the combined transmissions and determine whether any of the combined transmissions contains a payload addressed to receiver **1100.** As the transmitter randomly selected the retransmission pattern, receiver **1100** may not know which time slots (if any) actually contain the initial transmission and retransmissions transmitted by the transmitter to receiver **1100.** However, by attempting to decode the possible combinations of time slots, receiver **1100** may eventually be able to identify a combination of time slots that is decodable by decoder **1114.** This may therefore be a type of blind decoding, where receiver **1100** attempts to decode the various different combinations of time slots without knowing which combination is correct. Because there is only a limited number of candidate retransmission patterns, the decoding complexity may be reduced. In other words, receiver **1100** may not need to attempt every combination of time slots when decoding, but may instead limit its decode attempts to combinations of time slots that match the candidate set of retransmission patterns.

In the example described above for FIGs. **13A-13D,** receiver **1100** performed online decoding, namely by attempting to decode the buffered time slots while they are still being buffered by buffer **1108.** In other aspects, receiver **1100** may be configured to wait until all time slots of the current retransmission frame window are buffered in buffer **1108.** Detector **1110** may then identify the combinations of time slots that match the candidate retransmission patterns, and provide these time slots to combiner **1112** for combination. Combiner **1112** may then provide the resulting combined transmissions (e.g., one per applicable candidate retransmission pattern) to decoder **1114,** which may then attempt to decode the combined transmissions. If decoder **1114** successfully decodes a combined transmission and its payload is addressed to receiver **1100,** decoder **1114** may end the decoding procedure for the current retransmission frame window. Otherwise, decoder **1114** may continue until a decode is attempted on all combined transmissions for the current retransmission frame window.

Furthermore, the above example of FIGs. **13A-13D** described a case where decoder **1114** attempts to decode the combined transmissions from the applicable candidate retransmission patterns for the target slot. In some aspects, decoder **1114** may first attempt to decode the target slot, e.g., without combining the target slot with any other buffered time slots. If this decode is not successful, decoder **1114** may then attempt to decode the combined transmissions, which are the target slot combined with buffered time slots according to the applicable candidate retransmission patterns. As these combined transmissions may be a valid combination of retransmissions (e.g., may correspond to the retransmission pattern used by the transmitter), they may have a higher probability of a successful decode. However, as decoder **1114** may in some cases be able to decode transmissions from only a single time slot, this approach can reduce latency.

As previously indicated, in some aspects the transmitter may perform up to $R$ total transmissions of a given packet, such as an initial transmission followed by $R$ - 1 retransmissions. This total number of transmissions may take $\left\lceil \frac{R}{N} \right\rceil$ retransmission frame windows. In some aspects where $\left\lceil \frac{R}{N} \right\rceil > 1$ (e.g., the transmissions are spread across more than one retransmission frame window), receiver **1100** may repeat the same procedure of method **1100** for the next retransmission frame window. As the transmitter may either re-use the same retransmission pattern or select a new one, the same procedure may enable receiver **1100** to decode the retransmissions in the next retransmission frame window.

In some aspects, receiver **1100** may also use successive interference cancellation (SIC) as part of the decoding procedure for each retransmission frame window. For example, if decoder **1114** successfully decodes a payload from a combined transmission of the current retransmission frame window but determines that the payload is addressed to another wireless device, decoder **1114** may be configured to use the decoded payload as a first layer for SIC. Decoder **1114** may then recreate the payload as a transmission at the physical layer (e.g., by re-encoding the decoded payload and using a channel estimate to approximate the transmission at the physical layer). Decoder **1114** may then subtract the recreated transmission from the received signal, and repeat the decoding procedure from the resulting residue signal. If the residue signal contains a transmission (and payload) addressed to receiver **1100,** decoder **1114** may be able to decode the payload from the resulting residue signal. Decoder **1114** may therefore be able to cancel out interfering signals to recover payloads addressed to receiver **1100.**

As noted above, the retransmission frame window size *L,* the transmission count *N,* and the number *M* of candidate retransmission patterns (out of the $\binom{L}{N}$ overall retransmission patterns) can be scaled to various different integer values. These values can be preselected, such as by a designer, and/or can be adapted over time by the network. The retransmission frame window size *L* contributes to the number of overall transmission patterns and the latency observed by the transmitters and receivers. Specifically, since transmitters may be constrained to beginning transmissions at the start of each retransmission frame window, transmitters may have to wait an average of *L/2* time slots before initiating a transmission. As there is latency in the transmissions, receivers may similarly have to wait before receiving transmissions. Furthermore, as buffer **1108** may be configured to hold at least as an entire retransmission frame window, retransmission frame window size *L* will impact the size (e.g., storage capacity) of buffer **1108.** The transmission count *N,* which stipulates *N* - 1 allowed retransmissions, similarly influences the number of overall transmission patterns. The transmission count *N* also influences the number of retransmission frame windows $\left\lceil \frac{R}{N} \right\rceil$ that need to elapse for the maximum number of allows retransmissions *R* be reached.

For example, if the maximum number of permitted transmissions (including the initial transmission) is *R,* then it will take $\left\lceil \frac{R}{N} \right\rceil$ retransmission frame windows to reach the *R* retransmissions. The number *M* of candidate retransmission patterns impacts the receiver complexity as well as the probability that two or more transmitters will randomly select the same retransmission pattern for overlapping transmissions.

Various aspects described above assume that both the transmitters and receivers are configured with the same candidate set of retransmission patterns and use synchronized retransmission frame windows. As noted above, the candidate set of retransmission patterns and the synchronization of retransmission frame windows can be re-configured (e.g., by a central entity) and propagated across the network to the transmitters and receivers. In some aspects, the transmitters and receivers may also interact with legacy devices that are not configured to use the randomized retransmission scheme of this disclosure. However, when a randomized retransmission-enabled transmitter interacts with a legacy receiver, the legacy receiver may not be able to take advantage of the combining gains (e.g., as it may not be configured to properly search for and detect transmissions in the randomized retransmission scheme). Similarly, randomized retransmission-enabled receivers may only be able to take advantage of the combining gains when receiving from a randomized retransmission-enabled transmitter.

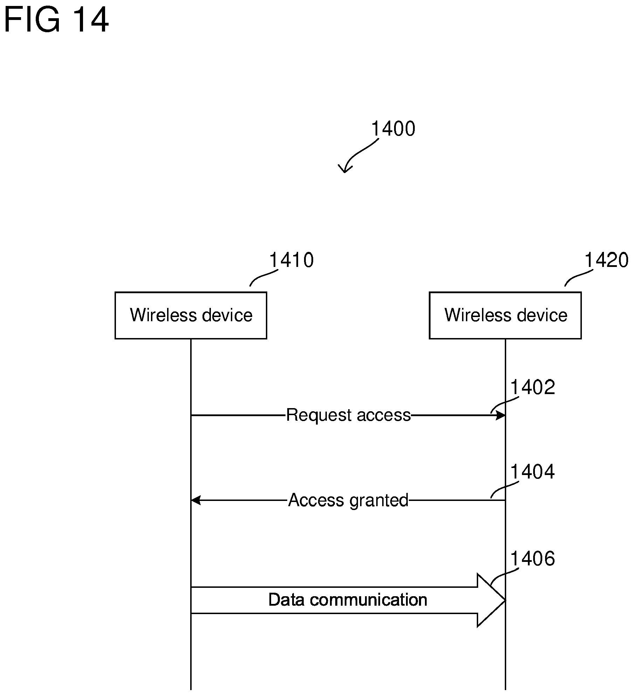

FIGs. **14-16** show several exemplary scenarios that can use the randomized retransmission scheme according to some aspects. Starting with FIG. **14,** FIG. **14** shows exemplary message sequence chart **1400** according to some aspects. As shown in FIG. **14,** wireless devices **1410** and **1420** may exchange several messages with each other. In some aspects, both wireless devices **1410** and **1420** may be configured with the subcomponents and functionality of both transmitter **900** and receiver **1100.** Accordingly, wireless devices **1410** and **1420** may both include an antenna system, RF transceiver, scheduler **908,** controller **910,** pattern memory **912,** buffer **1108,** detector **1110,** combiner **1112,** decoder **1114,** and pattern memory **1116** (which may be the same or separate from pattern memory **912**). In other words, wireless devices **1410** and **1420** may both be configured to use randomized retransmissions for both transmitting and receiving.

In the context of FIG. **14,** wireless device **1410** may wish to establish a communication session with wireless device **1420.** Accordingly, as shown in FIG. **14** wireless device **1410** may request access with wireless device **1420** in stage **1402,** such as by transmitting a message that requests access. Wireless device **1420** may receive the message and respond with a message that grants access to wireless device **1410** in stage **1404.** Wireless device **1410** may then receive this message and begin data communication with wireless device **1420** in stage **1406,** which can include unidirectional or bidirectional communication between wireless devices **1410** and **1420.** In this example, wireless devices **1410** and **1420** may use randomized retransmissions for some or all of the messages in stages **1402-1406.** For example, for the access request in stage **1402** wireless device **1410** may act as transmitter **900** to transmit the access request with randomized retransmissions (e.g., by randomly selecting and using a retransmission pattern as described above in method **1000**). Simultaneously, wireless device **1420** may act as receiver **1100** to receive the access request with randomized retransmissions (e.g., by using the candidate set of retransmission patterns to search for and detect the initial transmission and subsequent retransmissions). In some aspects, the access request may follow a random access scheme, such as where wireless device **1420** listens for access requests at various preconfigured random access occasions. Wireless device **1410** may therefore perform multiple transmissions of the access request according to the randomized retransmission scheme, where the preconfigured random access occasions of wireless device **1420** may form the time slots of a logical retransmission frame window. Wireless device **1410** may therefore selectively transmit the access request in certain of these random access occasions according to the transmission slots of the selected retransmission pattern. Wireless device **1420** may then search for these transmissions within the random access occasions using a candidate set of retransmission patterns to limit the random access occasions that are searched.

Wireless device **1420** may then act as transmitter **900** to transmit the access grant in stage **1404** while wireless device **1410** acts as receiver **1100** to receive the access granted message. Accordingly, wireless device **1420** may perform multiple transmissions of the access grant according to its own selected retransmission pattern. Wireless device **1410** may then search for and detect the transmissions according to the candidate set of retransmission patterns. In some aspects, wireless devices **1410** and **1420** may include the correspondence of a retransmission configuration frame between the first and second messages.

Similarly, wireless device **1410** may then again act as transmitter **900** to transmit data as part of the data communication in stage **1406** while wireless device **1420** acts as receiver **1100.** In some aspects, wireless devices **1410** and **1420** may perform the data communication in stage **1406** in conjunction with a Hybrid Automatic Repeat Request (HARQ) scheme, which can help to uncorrelated and/or randomize the interference.

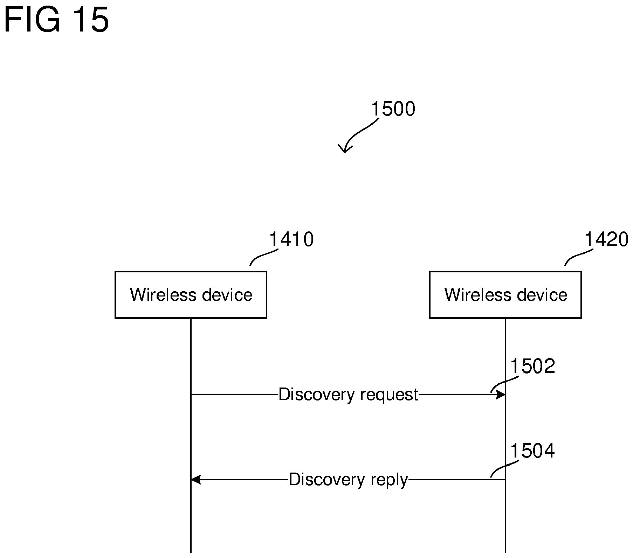

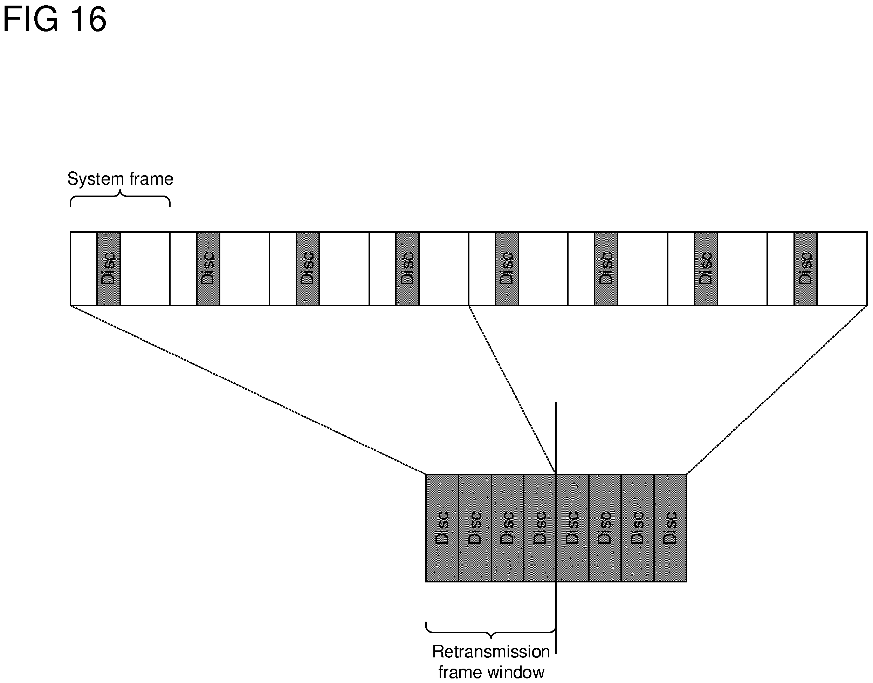

FIGs. **15** and **16** illustrate the randomized retransmission scheme as applied to a discovery procedure. FIG. **15** shows exemplary message sequence chart **1500** according to some aspects, which illustrates a discovery message exchange between wireless devices **1410** and **1420**. As introduced above regarding FIG. **14,** wireless devices **1410** and **1420** may be configured with the subcomponents and functionality of transmitter **900** and receiver **1100**. As shown in FIG. **15,** wireless device **1410** may transmit a discovery request to wireless device **1420** in stage **1502**. Wireless device **1420** may receive the discovery request and respond with a discovery reply in stage **1504**. As wireless device **1410** is initiating the discovery, wireless device **1410** can be considered the discovery initiator (DI). Likewise, as wireless device **1420** is replying to the discovery request, wireless device **1420** can be considered the discovery replier (DR). In some aspects, the payload of the discovery request may include the identity of the DI, such as a device identifier $ID_{DI}$ that identifies wireless device **1410**. The payload of the discovery reply may include the identity of the DR, such as a device identifier $ID_{DR}$ that identifies wireless device **1420.**

In some aspects, certain radio resources (e.g., time-frequency resources) may be allocated as discovery resources. Wireless devices may therefore use these discovery resources to transmit discovery requests, to listen for discovery requests from other wireless devices, and to respond to discovery requests with discovery replies. FIG. **16** shows one example where discovery resources are periodically allocated in time in system frames of the common schedule of transmitters and receivers. In some aspects, each discovery resource (each shaded block) may be multiple frequency subchannels, which are further divided into subchannels for discovery requests and subchannels for discovery replies. DIs and DRs may therefore use the appropriate subchannels in a given discovery resource.

As shown in FIG. **16,** the discovery resources may be logically allocated into logical retransmission frame windows. In this example, the retransmission frame window size is $L = 4$, and each discovery resource may be logically allocated as one time slot in the retransmission frame window where sequences of four discovery resources make up each retransmission frame window. Accordingly, time slots in the retransmission frame windows may not be immediately neighboring each other in time but may be logical neighbors within the retransmission frame window. The allocation of discovery resources into the time slots of specific retransmission frame windows may be collaborated between transmitters and receivers so that the various transmitters and receivers use the same retransmission frame windows.

Wireless devices **1410** and **1420** may therefore be configured to use the randomized retransmission scheme of this disclosure to transmit and receive the discovery request and/or discovery reply in stages **1502** and **1502.** In particular, wireless devices **1410** and **1420** may use the discovery resources allocated as time slots in the retransmission frame windows to perform transmissions according to a randomly selected retransmission pattern, and may likewise use the discovery resources allocated as time slots to search for and detect transmissions according to candidate retransmission patterns. In these cases, the retransmission frame windows are built on top of the existing system frames (e.g., by using discovery resources as time slots). Accordingly, the retransmission frame windows and time slots can have a configurable length.

There are numerous use cases in addition to access requests and discovery procedures for which randomized retransmission scheme can be applied, including standard data communications between wireless devices. The use cases described herein are therefore merely examples. In various cases, the randomized retransmission schemes discussed herein can provide combining gains that increase SINR, which can in turn improve decoder performance. Likewise, these randomized retransmission schemes may in some cases reduce the complexity of the reception and combination procedure, such as in comparison to a randomized retransmission scheme that does not limit the retransmissions to a candidate set of retransmission patterns.

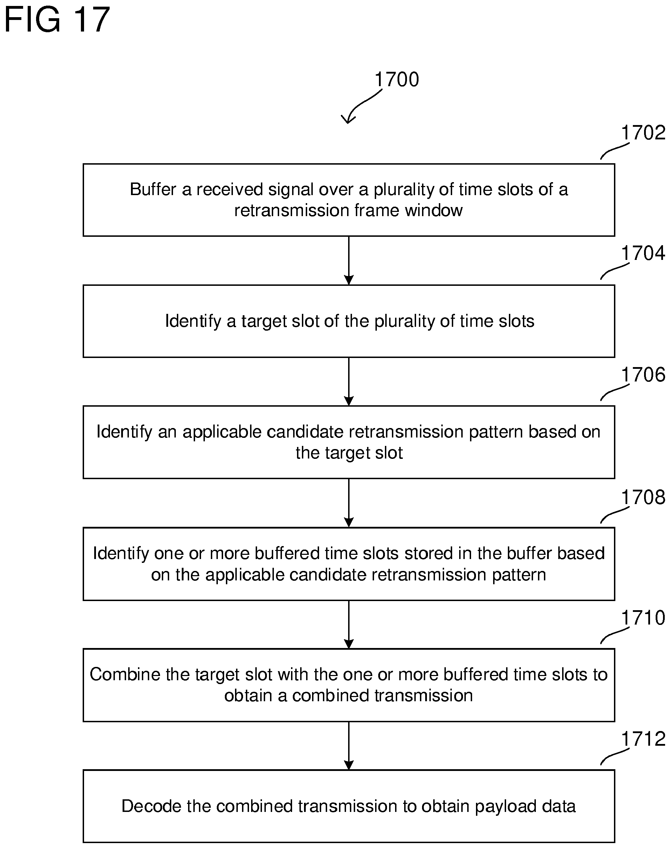

FIG. **17** shows exemplary method **1700** of receiving transmissions at a wireless device according to some aspects. As shown in FIG. **17,** method **1700** includes buffering a received signal over a plurality of time slots of a retransmission frame window (**1702**), identifying a target slot of the plurality of time slots (**1704**), identifying an applicable candidate retransmission pattern based on the target slot (**1706**), identifying one or more buffered time slots stored in the buffer based on the applicable candidate retransmission pattern (**1708**), combining the target slot with the one or more buffered time slots to obtain a combined transmission (**1710**), and decoding the combined transmission to obtain payload data (**1712**).

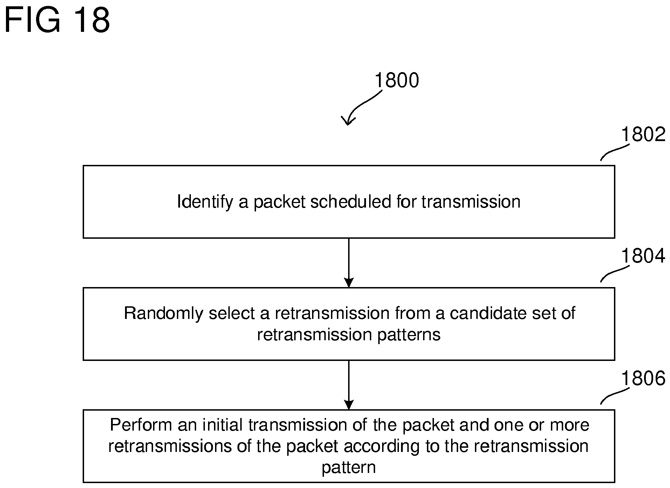

FIG. **18** shows exemplary method **1800** of performing transmissions at a wireless device according to some aspects. As shown in FIG. **18**, method **1800** includes identifying a packet scheduled for transmission (**1802**), randomly selecting a retransmission from a candidate set of retransmission patterns (**1804**), and performing an initial transmission of the packet and one or more retransmissions of the packet according to the retransmission pattern (**1806**).

Some aspects of this disclosure provide a wireless device including a buffer (e.g., buffer **1108**) configured to buffer a received signal over a plurality of time slots of a retransmission frame window, a detector (e.g., detector **1110**) configured to identify a target slot of the plurality of time slots, identify an applicable candidate retransmission pattern based on the target slot, and identify one or more buffered time slots stored in the buffer based on the applicable candidate retransmission pattern, a combiner (e.g., combiner **1112**) configured to combine the target slot with the one or more buffered time slots to obtain a combined transmission, and a decoder (e.g., decoder **1114**) configured to decode the combined transmission to obtain payload data.

Some aspects of this disclosure provide a wireless device including a scheduler (e.g., scheduler **908**) configured to identify a packet scheduled for transmission, and a controller (e.g., controller **910**) configured to randomly select a retransmission pattern from a candidate set of retransmission patterns, the scheduler further configured to perform an initial transmission of the packet and one or more retransmissions of the packet according to the retransmission pattern.

Security may be a key consideration in computationally- or energy-constrained devices such as sensors, actuators, wearables, and other devices used in various IoT and M2M applications. As these devices often process sensitive data (e.g., for safety, security, or privacy purposes), it can be important that these devices avoid both accepting false information from and leaking sensitive data to illegitimate entities. Authentication techniques between devices can therefore provide a crucial function in protecting sensitive data.

However, many of these authentication techniques are based on strong cryptography and require substantial communication overhead. Accordingly, it can be problematic to implement these techniques in applications with low bandwidth, low power, reduced processing resources, and/or real-time operational demands. Furthermore, some of these authentication techniques are designed to authenticate individual pairings of devices and are therefore inefficient for many-to-one authentication, such as where a large number of sensors all connect to a gateway device. Accordingly, these authentication techniques may not be optimal for many IoT and M2M applications.

Various aspects of this disclosure therefore provide mutual authentication techniques that are low power and low bandwidth while also providing for efficient many-to-one authentication. These authentication techniques may therefore be suitable for processing- and/or energy-constrained use cases that authenticate large numbers of devices. In particular, these techniques allow for two or more devices to mutually authenticate each other without disclosing any information that allows them to be identified or tracked. As described in detail below, these techniques allow the devices to achieve several important security and privacy objectives including entity authentication, message authentication, anonymity, and unlinkability. Starting first with entity authentication, entity authentication ensures that the devices can verify that the other device is a trusted device (e.g., a known, good entity). Message authentication ensures that a device can verify that a message payload originated from the trusted device that is purported to have sent it. Anonymity ensures that the confidentiality of each device's entity is protected and not revealed to any eavesdroppers. Lastly, unlinkability ensures that the devices cannot be tracked over time (e.g., cannot be linked to other messages) based on any exchanged data.

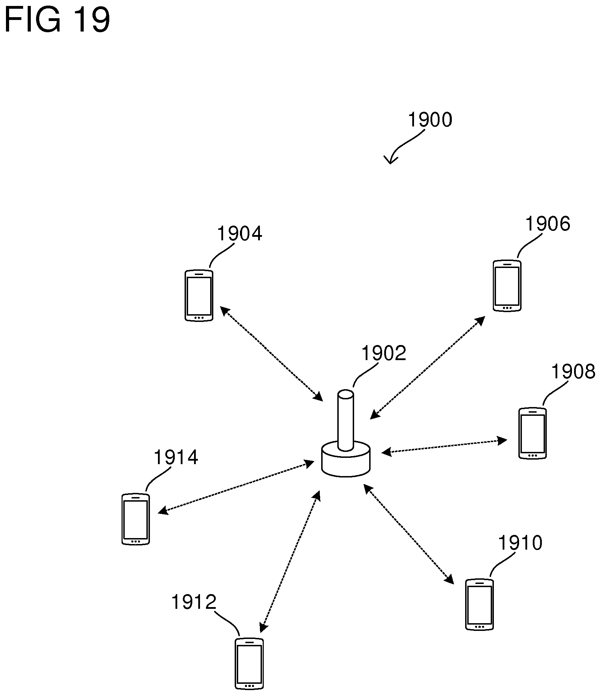

The authentication techniques described herein aim to achieve these objectives in a cryptographically secure way while still remaining suitable for low-bandwidth, low-power, and/or low processing resource use cases. FIG. **19** shows exemplary network **1900,** which is used herein to describe the authentication techniques according to some aspects. As shown in FIG. **19,** network **1900** may include initiating device **1902** and responding devices **1904-1914.** Responding devices **1904-1914** may not initially be connected to initiating device **1902** and may therefore perform a connection procedure through which responding devices **1904-1914** establish a connection with initiating device **1902.** This can occur all at once (e.g., where all of responding devices **1904-1914** connect to initiating device **1902** in an initial startup phase) or at different times (e.g., where responding devices **1904-1914** connect to initiating device **1902** at different points over an extended duration of time).

Initiating device **1902** and responding devices **1904-1914** may perform authentication as part of this connection procedure. Accordingly, in some aspects initiating device **1902** and responding devices **1904-1914** may perform many-to-one authentication, namely where each of responding devices **1904-1914** perform mutual authentication with initiating device **1902.** While various examples described herein may be based on many-to-one authentication, it is generally understood that these authentication techniques can also be used in any type of mutual authentication (including one-to-one authentication).

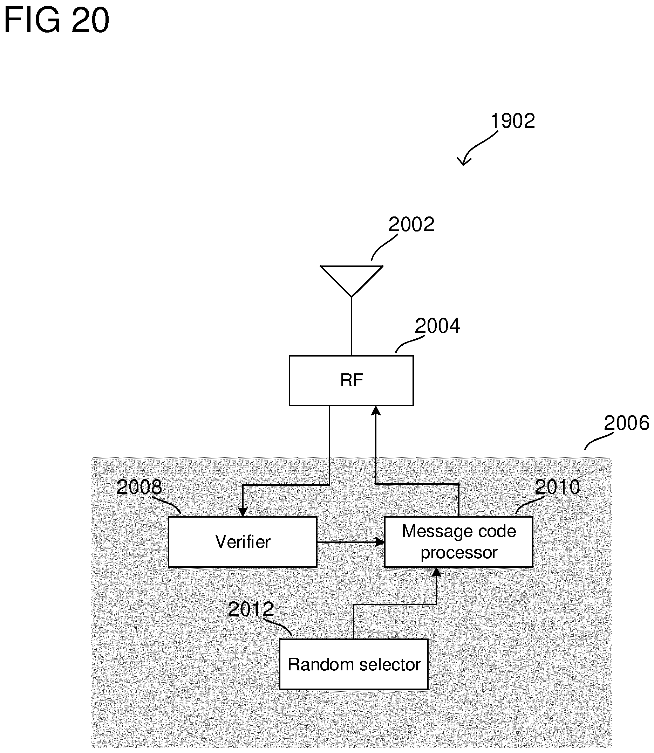

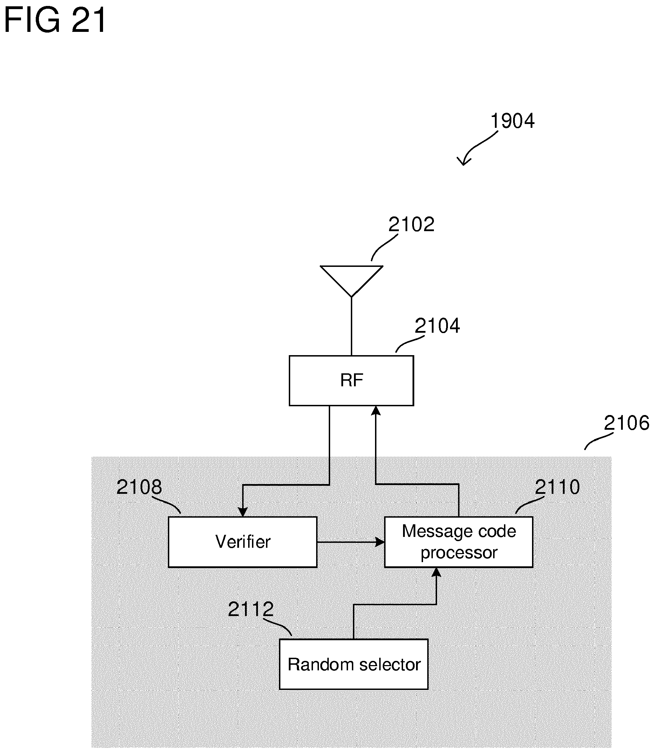

FIGs. **20** and **21** show exemplary internal configurations of initiating device **1902** and responding device **1904** according to some aspects. The configurations illustrated in FIGs. **20** and **21** are focused on the authentication features of initiating device **1902** and responding device **1904** and, for purposes of explanation, may not expressly depict other components of initiating device **1902** and responding device **1904** that are less directly related to authentication. It is thus understood that initiating device **1902** and/or responding device **1904** may include various other components in various aspects. While the internal components of initiating device **1902** and responding device **1902** are named similarly, these components may be configured to perform different operations according to the initiating and responding side of the authentication techniques described herein.

Starting with FIG. **20**, initiating device **1902** may include antenna system **2002**, RF transceiver **2004**, and baseband modem **2006**. In some aspects, antenna system **2002**, RF transceiver **2004**, and baseband modem **2006** may be configured as described above for antenna system **202**, RF transceiver **204**, and baseband modem **206** of terminal device **102**. Accordingly, initiating device **1902** may be configured to transmit and receive wireless signals via antenna system **2002** and RF transceiver **2004**. RF transceiver **2004** may therefore modulate and transmit baseband samples (provided by baseband modem **2006**) via antenna system **2002** in the transmit direction. RF transceiver **2004** may also receive and demodulate radio signals via antenna system **2002** and provide the resulting baseband samples to baseband modem **2006** in the receive direction.

FIG. **20** also depicts several internal components of baseband modem **2006**, including verifier **2008**, message code processor **2010**, and random selector **2012**. In some aspects, baseband modem **2006** may include a digital signal processor and a protocol controller. The internal components of baseband modem **2006** may therefore in some aspects be subcomponents of the digital signal processor (e.g., physical layer components) and/or subcomponents of the protocol controller (e.g., protocol stack components).

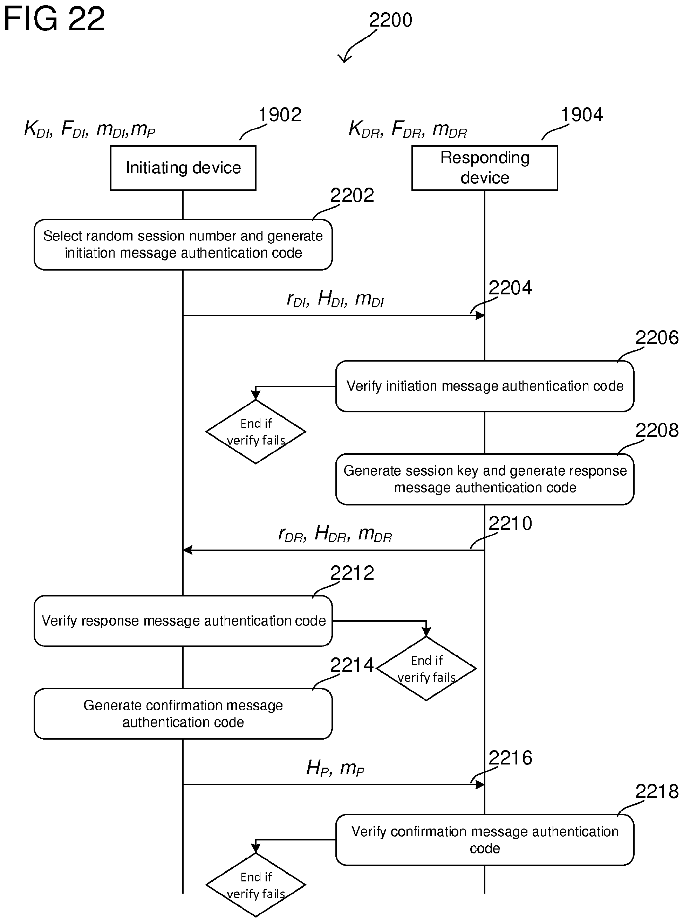

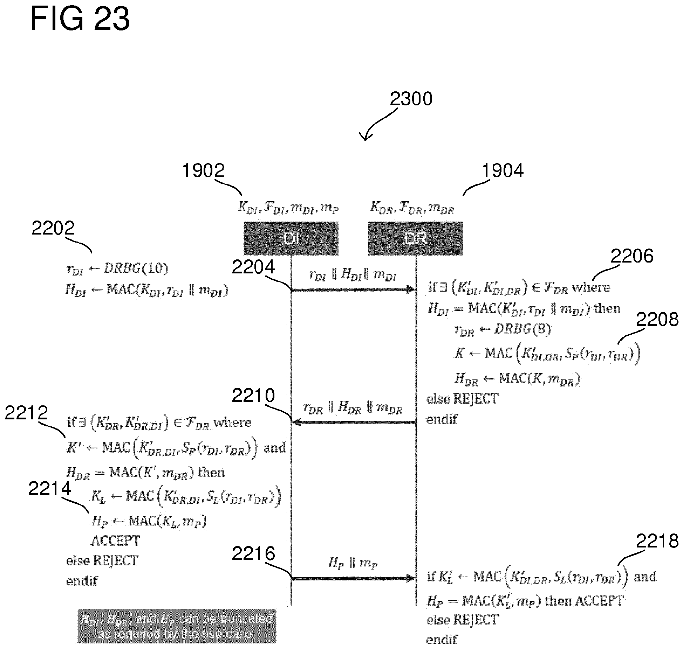

In various aspects, verifier **2008**, message code processor **2010**, and random selector **2012** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect, verifier **2008**, message code processor **2010**, and random selector **2012** may each be software, such as where verifier **2008**, message code processor **2010**, and random selector **2012** are implemented as one or more processors configured to execute instruction sets that define their respective functionality. This aspect is not limiting and verifier **2008**, message code processor **2010**, and random selector **2012** can also be implemented as hardware. The operation (e.g., algorithmic structure) of each of verifier **2008**, message code processor **2010**, and random selector **2012** is detailed in full in the below description related to FIGs. **22** and **23**.

Turning next to FIG. **21**, responding device **1904** may include antenna system **2102**, RF transceiver **2104**, and baseband modem **2106**. In some aspects, antenna system **2102**, RF transceiver **2104**, and baseband modem **2106** may be configured as described above for antenna system **202**, RF transceiver **204**, and baseband modem **206** of terminal device **102**. Accordingly, responding device **1904** may be configured to transmit and receive wireless signals via antenna system **2102** and RF transceiver **2104**. RF transceiver **2104** may therefore modulate and transmit baseband samples (provided by baseband modem **2106**) via antenna system **2102** in the transmit direction. RF transceiver **2104** may also receive and demodulate radio signals via antenna system **2102** and provide the resulting baseband samples to baseband modem **2106** in the receive direction. In some aspects, each of responding devices **1914** (e.g., multiple responding devices that interact with initiating device **1902**) may be configured in the manner described for responding device **1904).**

FIG. **21** also depicts several internal components of baseband modem **2106**, including verifier **2108**, message code processor **2110**, and random selector **2112**. In some aspects, baseband modem **2106** may include a digital signal processor and a protocol controller. The internal components of baseband modem **2106** may therefore in some aspects be subcomponents of the digital signal processor (e.g., physical layer components) and/or subcomponents of the protocol controller (e.g., protocol stack components).

In various aspects, verifier **2108**, message code processor **2110**, and random selector **2112** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect, verifier **2108**, message code processor **2110,** and random selector **2112** may each be software, such as where verifier **2108,** message code processor **2110,** and random selector **2112** are implemented as one or more processors configured to execute instruction sets that define their respective functionality. This aspect is not limiting and verifier **2108,** message code processor **2110,** and random selector **2112** can also be implemented as hardware. The hardware and/or algorithmic structure of each of verifier **2108,** message code processor **2110,** and random selector **2112** is detailed in full in the below description related to FIGs. **22** and **23.**

FIG. **22** shows exemplary message sequence chart **2200,** which describes an authentication procedure between initiating device **1902** and responding device **1904** according to some aspects. As shown in FIG. **22,** initiating device **1902** and responding device **1904** may mutually authenticate each other via exchange of several messages. Initiating device **1902** and responding device **1904** may start with several pieces of information relevant to the authentication procedure. As shown in FIG. **22,** initiating device **1902** may start with $K_{DI}$, $\mathcal{F}_{DI}$, $m_{DI}$, and $m_P$. $K_{DI}$ is the common secret identity of initiating device **1902** while $\mathcal{F}_{DI}$ is the trusted entity list (e.g., a set of trusted entities) stored at initiating device **1902.** Each entity may have its own common secret identity and trusted entity list, where the trusted entity list holds secret identities of the other trusted entities. The authentication procedure may use both common secret identities and pairwise secret identities. For example, all devices that consider initiating device **1902** a trusted entity may hold the common secret identity $K_{DI}$ of initiating device **1902** in their respective trusted entity list (e.g., trusted entity list $\mathcal{F}_{DR}$ of responding device **1904**). The common secret identity $K_{DI}$ of initiating device **1902** may then be paired in the trusted entity list with a pairwise secret identity (e.g., $K_{DR,DI}$ in the trusted entity list $\mathcal{F}_{DR}$ of responding device **1904**). These pairwise secret identities may be unique to each pairing of trusted entities, e.g., the pairwise secret identity between each responding device and initiating device **1902** may be different (for example, each responding device has a unique pairwise secret identity with initiating device **1902**). Accordingly, the trusted entity list $\mathcal{F}_{DR}$ of responding device **1904** and the trusted entity list $\mathcal{F}_{DR}$ of responding device **1906** may both hold the same common secret identity $K_{DI}$ of initiating device **1902.** However, the trusted entity list $\mathcal{F}_{DR}$ of responding device **1904** and the trusted entity list $\mathcal{F}_{DR}$ of responding device **1906** may hold different pairwise secret identities for initiating device **1902.** Accordingly, the pairwise secret identity $K_{DR,DI}$ between initiating device **1902** and responding device **1904** may be different from the pairwise secret identity $K_{DR,DI}$ between initiating device **1902** and responding device **1906.**

As further described below, initiating device **1902** may use its common secret identity $K_{DI}$ and the pairwise secret identities in its trusted entity list $\mathcal{F}_{DI}$ to generate message authentication codes (MACs). As $K_{DI}$ is assumed to be known only by trusted entities, responding devices that identify a MAC generated with $K_{DI}$ can assume that the MAC was generated by initiating device **1902** (e.g., a decide that possesses a valid $K_{DI}$). Furthermore, responding devices that identify MACs generated with the unique pairwise secret identity with initiating device **1902** can assume that the MAC was generated by initiating device **1902** specifically for the responding device. Initiating device **1902** may use its trusted entity list $\mathcal{F}_{DI}$ to verify whether received messages were validly generated by a given responding device. In some aspects, initiating device **1902** may be configured with its secret identity $K_{DI}$ and its trusted entity list $\mathcal{F}_{DI}$ at time of manufacture. In other aspects, initiating device **1902** may be configured with its secret identity $K_{DI}$ and its trusted entity list $\mathcal{F}_{DI}$ as part of a repeated update procedure, such as where initiating device **1902** periodically downloads or receives (e.g., from a central network or via D2D relaying) a new secret identity $K_{DI}$ and/or new trusted entity list $\mathcal{F}_{DI}$. In either case, initiating device **1902** may be preconfigured with its secret identity $K_{DI}$ and its trusted entity list $\mathcal{F}_{DI}$ prior to the start of message sequence chart **2200.** In some aspects, initiating device **1902** may store $K_{DI}$ and $\mathcal{F}_{DI}$ in a local memory that can be accessed by verifier **2008** and message code processor **2010.**

In addition to $K_{DI}$ and $\mathcal{F}_{DI}$, initiating device **1902** may also begin with message payloads $m_{DI}$ and $m_P$. Initiation message payload $m_{DI}$ may be the message payload for the initiation message that initiating device **1902** first transmits.

As further described below, initiating device **1902** may broadcast this initiation message to any responding devices in its vicinity. The initiation message payload $m_{DI}$ of this initiation message may therefore be a general message intended for any nearby responding device. In some aspects, the authentication procedure of message sequence chart **2200** may be part of a discovery procedure where initiating device **1902** broadcasts a discovery message out to any devices in its vicinity. These devices, e.g., responding devices **1904-1914,** may detect and read the discovery message to identify initiating device **1902** and to identify communication parameters for further communications with initiating device **1902.** Accordingly, in some aspects the initiation message payload $m_{DI}$ may be a discovery message payload including such information. In various other aspects, initiation message payload $m_{DI}$ may be any other type of information that initiating device **1902** wishes to transmit to other nearby devices.

The confirmation message payload $m_P$ may be the message payload for the confirmation message that initiating device **1902** sends to responding devices after initiating device **1902** has verified them. Accordingly, in contrast to the general nature of the initiation message payload $m_{DI}$, the confirmation message payload $m_P$ of the confirmation message may be specific to the verified responding device. In some aspects, confirmation message payload $m_p$ may include communication parameters that the verified responding device can use to continue communicating with initiating device **1902.**

Similarly to initiating device **1902,** responding device **1904** may begin message sequence chart **2200** with its own common secret identity $K_{DR}$, its own trusted entity list $\mathcal{F}_{DR}$, and response message payload $m_{DR}$. Common secret identity $K_{DR}$ may be the common secret identity of responding device **1904,** which trusted entities such as initiating device **1902** may include in their trusted entity list. These trusted entity lists of other devices may pair the common secret identity $K_{DR}$ of responding device **1904** with a respective pairwise secret identity that is unique to the pairing between the other device and responding device **1904.** The trusted entity list $\mathcal{F}_{DR}$ of responding device **1904** may contain entries for each trusted entity that include the common secret identity (e.g., $K_{DI}$ for initiating device **1902**) paired with the pairwise secret identity (e.g., $K_{DR,DI}$ for initiating device **1902**) between responding device **1904** and the trusted entity. Message payload $m_{DR}$ may be a payload for a response message, which responding device **1904** may transmit to initiating devices. Message payload $m_{DR}$ can contain any type of information, such as parameters relevant for a communication session between responding device **1904** and an initiating device. In some aspects, responding device **1902** may store $K_{DR}$ and $\mathcal{F}_{DR}$ in a local memory that can be accessed by verifier **2108,** and message code processor **2110.**

As shown in FIG. 22, message sequence chart **2200** may begin at initiating device **1902** in stage **2202.** In particular, initiating device **1902** may begin by selecting a first random session number $r_{DI}$ in stage **2202.** For example, random selector **2012** may randomly generate a number to use as $r_{DI}$ (e.g., using 10-bit random number generation). In the 10-bit example, this operation can be expressed as $r_{DI} \leftarrow DRBG(10)$; in other words, random selector **2012** may execute a 10-bit deterministic random bit generator (DRBG) to obtain the first random session number $r_{DI}$. This first random session number $r_{DI}$ may be used (along with a second random session number $r_{DR}$) as an anti-replay value (or 'nonce' value) to prevent replay of any of the messages by illegitimate entities. Because initiating device **1902** and responding device **1904** will use random session numbers to generate the exchanged messages, these messages will be tied to the random session numbers of this instance of the authentication procedure. Accordingly, the messages will only be valid for the current instance of the authentication procedure, and an illegitimate entity may thus not be able to validly capture and replay back the messages in another authentication procedure. Using larger random session numbers (e.g., more bits) may present a tradeoff between communication overhead and security; in particular, using more bits may make it more difficult for illegitimate entities to replay messages (as it is less likely that they will have captured a message in another authentication procedure with the same random session numbers) but may result in a larger number of transmitted bits.

After selecting the first random session number $r_{DI}$, random selector **2012** may provide $r_{DI}$ to message code processor **2010.** Message code processor **2010** may then continue stage **2202** by generating an initiation MAC $H_{DI}$ for initiation message payload $m_{DI}$. This initiation MAC $H_{DI}$ may be used by other devices, such as responding device **1904,** to verify that initiating device **1902** actually transmitted the initiation message payload $m_{DI}$. Accordingly, message code processor **2010** may use a MAC function to generate the MAC $H_{DI}$ based on initiation message payload $m_{DI}$, first random session number $r_{DI}$, and secret identity $K_{DI}$. This operation can be expressed as $H_{DI} \leftarrow MAC(K_{DI}, r_{DI} \| m_{DI})$. The specific MAC function $MAC(K, m)$ can be any of a number of different MAC functions that generate a cryptographic message authentication code based on a key $K$ and a message m. These MAC functions rely on secret identities that are known to trusted entities and differentiate from many public key-private key and/or digital signature techniques in that they do not use modular exponentiation. In one exemplary aspect, message code processor **2010** may be configured to use a Sip-Hash-4-8 function that takes initiation message payload $m_{DI}$, first random session number $r_{DI}$, and secret identity $K_{DI}$ as inputs and generates the MAC $H_{DI}$ as output. The MAC $H_{DI}$ therefore serves as a cryptographic authentication code. As this is a cryptographic procedure, it can generally be assumed that only an entity with all of initiation message payload $m_{DI}$, first random session number $r_{DI}$, and secret identity $K_{DI}$ could generate the given MAC $H_{DI}$ (e.g., unless another illegitimate device uses brute force or exposes a weakness in the MAC function).

After generating the MAC $H_{DI}$, initiating device **1902** may transmit $r_{DI}$, $H_{DI}$, and $m_{DI}$ as an initiation message in stage **2204**. In some aspects, message code processor **2010** may transmit the initiation message including $r_{DI}$, $H_{DI}$, and $m_{DI}$ via RF transceiver **2004** and antenna system **2002**, which may modulate and transmit the initiation message as a wireless signal. Although not expressly shown in FIG. **20**, in some aspects baseband modem **2006** may include one or more subcomponents between message code processor **2010** and RF transceiver **2004** that are configured to perform transmit direction processing on the initiation message. As previously indicated, message sequence chart **2200** may form part of a discovery procedure through which initiating device **1902** discovers and authenticates nearby responding devices. Accordingly, the initiation message transmitted in stage **2204** may be a discovery broadcast signal.

One or more nearby responding devices, including responding device **1904**, may receive the initiation message in stage **2204** and may identify $r_{DI}$, $H_{DI}$, and $m_{DI}$. For example, with reference to FIG. **21**, verifier **2108** of responding device **1904** may receive the initiation message via antenna system **2100** and RF transceiver **2104**. Although not expressly shown in FIG. **21**, in some aspects baseband modem **2106** may include one or more subcomponents between verifier **2108** and RF transceiver **2104** that are configured to perform receive direction processing on the initiation message.

Verifier **2108** may then use $r_{DI}$, $H_{DI}$, and $m_{DI}$ to verify the initiation message in stage **2206**. As indicated in FIG. **22**, responding device **1904** may begin message sequence chart **2200** with the common secret identity $K_{DR}$ of responding device **1904**, the trusted entity list $\mathcal{F}_{DR}$ of responding device **1904**, and a response message payload $m_{DR}$ of a response message. Similar to trusted entity list $\mathcal{F}_{DI}$ of initiating device **1902**, trusted entity list $\mathcal{F}_{DR}$ of responding device **1904** may include paired secret identities that match the common secret identity of a given trusted entity with a pairwise secret identity between responding device **1904** and the trusted entity. Accordingly, if initiating device **1902** is a trusted entity of responding device **1904**, trusted entity list $\mathcal{F}_{DR}$ will include an entry that pairs the common secret identity $K_{DI}$ with a pairwise secret identity $K_{DR,DI}$ (equivalent to $K_{DI,DR}$ but reversed here to reflect the direction of the relationship) that is unique to the pairing between responding device **1904** and initiating device **1902**. In some aspects, trusted entity list $\mathcal{F}_{DR}$ of responding device **1904** may be the only trusted entity list that includes the pairwise secret identity $K_{DR,DI}$ (e.g., each device will only have pairwise secret identities between itself and other devices and will not have pairwise secret identities that are unique to other pairs of other devices). Accordingly, even if responding device **1906** also includes an entry that matches the common secret identity $K_{DI}$ with a pairwise secret identity $K_{DR,DI}$, this pairwise secret identity $K_{DR,DI}$ at responding device **1906** may be different from the pairwise secret identity $K_{DR,DI}$ at responding device **1904**. In some aspects, this use of unique pairwise secret identities for each pair may help ensure that one trusted entity does not pretend to be another trusted entity. In other words, if responding device **1904** is the only trusted entity with from the pairwise secret identity $K_{DR,DI}$ with initiating device **1902**, even other trusted entities may not be able to pretend that they are responding device **1904**. Similar to as described above for the secret identities of initiating device **1902**, in some aspects responding device **1902** may be configured with its common secret identity $K_{DR}$ and/or trusted entity list $\mathcal{F}_{DR}$ at the time of manufacture. In other aspects, responding device **1902** may periodically update its common secret identity $K_{DR}$ and/or trusted entity list $\mathcal{F}_{DR}$ through a downloading or reception process. In either case, responding device **1902** may be preconfigured with its common secret identity $K_{DR}$ and trusted entity list $\mathcal{F}_{DR}$ at the start of message sequence chart **2200**.

Responding device **1904** may therefore verify MAC $H_{DI}$ using its trusted entity list $\mathcal{F}_{DR}$. For example, verifier **2108** may search through the entries (pairs of common secret identities and pairwise secret identities) and check whether any of the common secret identities $K'_{DI}$ could have generated the MAC $H_{DI}$. In one example, verifier **2108** may iterate through each common secret identity $K'_{DI}$, where $K'_{DI}$ is the candidate common secret identity in a given iteration, and compute a candidate MAC $H'_{DI}$ from the candidate common secret identity $K'_{DI}$, the first random session number $r_{DI}$, and the initiation message payload $m_{DI}$. In some aspects, verifier **2108** may generate the candidate MACs $H'_{DI}$ using the same MAC function $MAC(K, m)$ used by initiating device **1902** to initially generate the MAC $H_{DI}$ (e.g., by computing $H'_{DI} \leftarrow MAC(K'_{DI}, r_{DI} \| m_{DI})$ for a given $K'_{DI}$).

Verifier **2108** may then determine whether the candidate MAC $H'_{DI}$ (from a given iteration) matches the actual MAC $H_{DI}$ included in the initiation message. This can be expressed as determining if $\exists \left( K'_{DI}, K'_{DI,DR} \right) \in \mathcal{F}_{DR}$ where $H_{DI} = MAC(K'_{DI}, r_{DI} \| m_{DI})$, or in other words, determining if there exists an entry $(K'_{DI}, K'_{DI,DR})$ of $\mathcal{F}_{DR}$ that produces a candidate MAC $H'_{DI}$ that matches the actual MAC $H_{DI}$. If none of the candidate MACs $H'_{DI}$ for any of the common secret identities $K_{DI}$ in $\mathcal{F}_{DR}$ match $H_{DI}$, verifier **2108** may determine that initiating device **1902** is not a trusted entity. Verifier **2108** may then end the authentication procedure, and responding device **1904** may not send further messages to initiating device **1902.**

Conversely, if verifier **2108** determines that a given candidate MAC $H'_{DI}$ (from a given candidate common secret identity $K'_{DI}$ in $\mathcal{F}_{DR}$) matches the $H_{DI}$ from the initiation message, verifier **2108** may determine that candidate common secret identity $K'_{DI}$ and the candidate pairwise secret identity $K'_{DI,DR}$ is the common secret identity of initiating device **1902.** Accordingly, verifier **2108** may determine that initiating device **1902** is a trusted entity, and may continue with the authentication procedure. In some aspects, verifier **2108** may stop iterating through $\mathcal{F}_{DR}$ when a match is found; in other aspects, verifier **2108** may iterate through all entries of $\mathcal{F}_{DR}$ regardless of whether a match is found.

As shown in FIG. 22, if the verify is successful responding device **1904** may proceed to stage **2208,** where responding device **1904** may generate a session key $K$ and a response MAC $H_{DR}$. For example, verifier **2108** may provide the candidate common secret identity $K'_{DI}$ of initiating device **1902** to message code processor **2110** along with the candidate pairwise secret identity $K'_{DI,DR}$ and first random session number $r_{DI}$. In some aspects, verifier **2108** may pass initiation message payload $m_{DI}$ to another subcomponent of baseband modem **2106,** such as a protocol processor configured to use the communication parameters in $m_{DI}$ for subsequent communications with initiating device **1902** (e.g., after the authentication procedure is complete).

After receiving $K_{DI,DR}$ and $r_{DI}$, message code processor **2110** may generate the session key $K$ and MAC $H_{DR}$ based on $K'_{DI,DR}$ and $r_{DI}$. In particular, random selector **2112** may first generate a second random session number $r_{DR}$ and provide the second random session number $r_{DR}$ to message code processor **2110**. As discussed above regarding $r_{DI}$, these random session numbers may help prevent messages from being replayed by illegitimate entities in other instances of the authentication procedure; in other words, use of these random session numbers may tie the messages to this particular instance of the authentication procedure. In some aspects, random selector **2112** may generate $r_{DR}$ using a digital random bit generator $DRBG(n)$ (e.g., $r_{DR} \leftarrow DRBG\ (8)$ with an 8-bit DRBG).

Message code processor **2110** may then use the random session numbers $r_{DI}$ and $r_{DR}$ and pairwise secret identity $K'_{DI,DR}$ to determine a session key $K$. For example, message code processor **2110** may generate session key $K$ using a MAC function in the manner $K \leftarrow -MAC\ (K'_{DI,DR}, S_p(r_{DI}, r_{DR}))$, where $MAC(K, m)$ is a MAC function (e.g., the same MAC function as previously used for $H_{DI}$ or a different MAC function) and $S_p(r_{DI}, r_{DR})$ is function providing *Fixed Input Data* bytes according to, e.g., a NIST SP800-108 standard for key derivation using randomness as part of the *Context* data. This MAC generation is exemplary, and in various aspects message code processor **2110** may use any type of MAC generation function based on $K'_{DI,DR}$, $r_{DR}$, and $r_{DI}$. As this session key $K$ is based on $K'_{DI,DR}$, $r_{DR}$, and $r_{DI}$, it is considered unique to the current instance of the authentication procedure between initiating device **1902** and responding device **1904.**

After generating the session key $K$, message code processor **2110** may generate the response MAC $H_{DR}$. For example, message code processor **2110** may generate response MAC $H_{DR}$ based on $K$ and response message payload $m_{DR}$, namely by using the MAC function $H_{DR} \leftarrow MAC(K, m_{DR})$. The MAC $H_{DR}$ is therefore generated with pairwise secret identity $K'_{DI,DR}$ and random session numbers $r_{DR}$ and $r_{DI}$, the MAC $H_{DR}$ As previously indicated, the pairwise secret identity $K'_{DI,DR}$ is unique (assuming it is the correct pairwise secret identity $K_{DI,DR}$) to the pairing between initiating device **1902** and responding device **1904** (e.g., is not known to other devices such as responding device **1906-1914** and is different from their respective pairwise secret identities with initiating device **1902**). Initiating device **1902** and responding device **1904** may therefore be able to use the pairwise secret identity $K_{DI,DR}$ to communicate with each other in a verifiable manner. For example, initiating device **1902** and responding device **1902** may be able to verify whether messages were generated by another device that also possesses pairwise secret identity $K_{DI,DR}$ and, if so, can assume that the message was generated by the counterpart device of the pairwise secret identity. Accordingly, initiating device **1902** may be able to assume that a device that can provide a valid $H_{DR}$ for $m_R$ is in possession of the pairwise secret identity $K_{DI,DR}$.

Message code processor **2110** may then transmit $r_{DR}$, $H_{DR}$, and $m_{DR}$ as a response message in stage **2210**. For example, message code processor **2110** may transmit the response message via RF transceiver **2104** and antenna system **2102**.

Initiating device **1902** may then receive the response message, such as where verifier **2008** of initiating device **1902** receives the response message via antennas system **2002** and RF transceiver **2004**. Verifier **2008** may then verify the response MAC $H_{DR}$ in stage **2212**. In particular, verifier **2008** may use its trusted entity list $\mathcal{F}_{DI}$ to determine whether there is a trusted entity having a pairwise secret identity $K'_{DR,DI}$ (between the trusted entity and initiating device **1902)** that could validly generate $H_{DR}$ from $m_{DR}$. Similar to as described above for verifier **2108** in stage **2206,** verifier **2008** may therefore iterate through the entries (pairs of common secret identities $K_{DR}$ and pairwise secret identities $K_{DR,DI}$ of trusted entities) of $\mathcal{F}_{DR}$ to see if any trusted entity has a pairwise secret identity $K_{DR,DI}$ that could produce $H_{DR}$. For example, verifier **2008** may at each iteration take a candidate pairwise secret identity $K'_{DR<DI}$ and generate a candidate session key $K'$ based on the candidate pairwise secret identity $K'_{DR,DI}$ and the random session numbers $r_{DR}$ and $r_{DI}$, such as by determining $K' \leftarrow MAC(K'_{DR,DI}, S_p(r_{DI}, r_{DR}))$. Then, continuing with the iteration, verifier **2008** may determine a candidate response MAC $H'_{DR}$ based on the candidate session key $K'$ and $m_{DR}$, such as by determining $H'_{DR} = MAC(K', m_{DR})$. Verifier **2008** may then check whether the candidate response MAC $H'_{DR}$ matches the actual response MAC $H_{DR}$.

Verifier **2008** may continue to iterate through the entries of $\mathcal{F}_{DR}$ until a match is found or until all entries have been checked. If verifier **2008** does not find a match between any candidate $H'_{DR}$ and the actual $H_{DR}$, verifier **2008** may conclude that verification has failed and may assume that responding device **1904** is not a trusted entity. Initiating device **1902** may then terminate the authentication procedure without sending any further messages to responding device **1904.**

If responding device **1904** is a trusted entity and uses a valid pairwise secret identity $K_{DI,DR}$ to generate $H_{DR}$, verifier **2008** should detect a match for one of the entries in $\mathcal{F}_{DR}$ (e.g., during an iteration using a given candidate pairwise secret identity $K'_{DR,DI}$). This entry will have common secret identity $K_{DR}$ (identifying responding device **1904**) and a pairwise secret identity $K_{DR,DI}$ (which may be equal to $K_{DI,DR}$, although the notation is reversed here to reflect the perspective of initiating device **1902**). This iterative search process through $\mathcal{F}_{DR}$ can be expressed as determining whether $\exists \left( K'_{DR}, K'_{DR,DI} \right) \in \mathcal{F}_{DR}$ where $K' \leftarrow MAC(K'_{DR,DI}, S_P(r_{DI}, r_{DR}))$ and $H_{DR} = MAC(K', m_{DR})$, or in other words, whether there exists an entry (pair of $K'_{DR}$ and $K'_{DR,DI}$) in $\mathcal{F}_{DR}$ that produces a candidate response MAC $H_{DR}'$ (based on the candidate session key $K'$) that matches the actual MAC $H_{DR}$. If verifier **2008** detects a match, verifier **2008** may conclude that responding device **1904** is a trusted entity. Verifier **2008** may then provide the candidate pairwise secret identity $K'_{DR,DI}$ (that produced the match) and $r_{DR}$ to message code processor **2010**.

Message code processor **2008** may then generate a confirmation MAC $H_P$ stage **2214**. In particular, message code processor **2008** may determine a second session key $K_L$ based on the candidate pairwise secret identity $K'_{DR,DI}$ and the random session number $r_{DI}$ and $r_{DR}$. For example, message code processor **2008** may apply the MAC function to obtain $K_L$ as $K_L \leftarrow MAC(K'_{DR,DI}, S_L(r_{DI}, r_{DR}))$, where $S_L(r_{DI}, r_{DR})$ is a function providing *Fixed Input Data* bytes according to, e.g., a NIST SP800-108 standard for key derivation using randomness as part of the *Context* data. Message code processor **2008** may then determine the confirmation MAC $H_P$ based on the second session key $K_L$ and confirmation message payload $m_P$, where confirmation message payload $m_P$ is payload for a confirmation message to responding device **1904** (and may contain any relevant information). For example, message code processor **2008** may determine $H_P$ with the MAC function as $H_P \leftarrow MAC(K_L, m_P)$. In some aspects, the strings $S_p(\cdot)$ and $S_L(\cdot)$ may be formed as described in the NIST SP 800-108 standard for key derivation functions. In particular these strings may correspond to the Fixed Input Data string that is defined in this standard. This string consists of two parts that are called Context and Label. In some aspects, the Context string is composed of the concatenated random bit strings, while the Label string is a constant string (e.g. an ASCII string) that defines the usage of the key that is derived when this string is used as input to the key derivation function. Specifically, the constant Label part of $S_p(\cdot)$ says that the key derived using this string is to be used as Link ID and the constant Label part of $S_l(\cdot)$ says that the key derived using this string is to be used as temporary Link ID. This may help ensure that for each purpose a different key is derived even if the same key is used as input to the key derivation function.

Message code processor **2008** may then transmit $H_P$ and $m_P$ as a confirmation message in stage **2216.** Responding device **1904** may then receive the confirmation message, such as where verifier **2108** receives the confirmation message via antenna system **2102** and RF transceiver **2104.** Verifier **2108** may then verify the confirmation MAC in stage **2218.** This verification may prove to responding device **1904** that initiating device **1902** is in possession of a valid pairwise secret identity $K_{DR,DI}$ between responding device **1904** and initiating device **1902.** In particular, verifier **2108** may generate a candidate second session key $K'_L$ based on the candidate pairwise secret identity $K'_{DI,DR}$ (from the verification in stage **2206**) and the random session numbers $r_{DI}$ and $r_{DR}$. For example, verifier **2108** may generate $K'_L$ as $K'_L \leftarrow MAC(K'_{DI,DR}, S_L(r_{DI}, r_{DR}))$. Verifier **2108** may then determine a candidate confirmation MAC $H'_P$ based on $K'_L$ and confirmation message payload $m_P$ and check whether the $H'_P$ matches the actual confirmation MAC $H_P$ provided by initiating device **1902** in the confirmation message. In particular, verifier **2108** may determine $H'_P$ as $H'_P \leftarrow MAC(K'_L)$ and compare this $H'_P$ to $H_P$.

If verifier **2108** determines that candidate confirmation MAC $H'_P$ does not match the actual confirmation MAC $H_P$, verifier **2108** may determine that the verification has failed, or in other words, that initiating device **1902** is not a trusted entity. Verifier **2108** may then terminate the authentication procedure, and responding device **1904** may not send any further messages to initiating device **1902.**

Conversely, if verifier **2108** determines that the candidate confirmation MAC $H'_P$ matches the actual confirmation MAC $H_P$, verifier **2108** may conclude that initiating device **1902** is authorized. In other words, this may prove that initiating device **1902** has a valid $K_{DI}$ and $K_{DI,DR}$ from the trusted entity list $\mathcal{F}_{DR}$ at responding device **1904.** This may conclude the authentication procedure, as both initiating device **1902** and responding device **1904** have successfully authenticated each other. In various aspects, initiating device **1902** and responding device **1904** may use the authentication procedure of message sequence chart **2200** as part of a communication session establishment procedure. Accordingly, after authenticating each other initiating device **1902** and responding device **1904** may continue to exchange messages with each other as part of the communication session.

In some aspects, initiating device **1902** may perform the authentication procedure of message sequence chart **2200** with one or more additional responding devices. For example, one or more responding devices may respond with their own respective response messages to the same initiation message that initiating device **1902** transmits in stage **2204.** Initiating device **1902** may then verify these responding devices with the same procedure (e.g., stages **2210-2214**) used for responding device **1904** in message sequence chart **2200.**

FIG. **23** shows an exemplary pseudocode version of message sequence chart **2200** according to some aspects. The operations of stages **2202-2218** may be equivalent to that described above for FIG. **22;** however, the prose descriptions haves been replaced by pseudocode operations that describe the processing at each stage. The variables are defined as follows:

| | |
|---|---|
| $K_{i,j} \xleftarrow{\mathcal{R}} \{0,1\}^{128}$ | Temporary identifier of a pair of entities $i$ and $j$. Can be updated as applicable for the use case |
| $\mathcal{F}_i = \{(K_j, K_{i,j}) : j \in F\}$ | Set of temporary identifiers known to entity $i$, where $F$ is the set of entities in the trusted entity list of user $i$ and $K_{i,j} = K_{j,i}$ |
| $r \leftarrow DRBG(n)$ | Digital Random Bit Generator returns a string $r$ of $n$ pseudo-random bits |
| $MAC(K, m)$ | Lightweight keyed hash function, with key $K$ and message $m$; e.g., SipHash-4-8 |
| $m_{DI}, m_{DR}, m_P$ | Message payload data (optional) |
| $a \parallel b$ | Concatenation of bit strings $a$ and $b$ |
| $S_P(r_{DI}, r_{DR}), S_L(r_{DI}, r_{DR})$ | *Fixed Input Data* bytes according to the NIST SP800-198 standard for key derivation using the randomness as part of the *Context* data |

In some aspects, initiating device **1902** and/or responding device **1904** may reduce bandwidth usage by truncating the MACs. Unlike digital signatures, many MACs can be truncated, such as by dropping some of the bits of the MAC. Accordingly, initiating device **1902** and/or responding device **1904** may truncate any of the MACs (e.g., in stages **2204, 2210,** and/or **2216**). This reduction in bandwidth usage may be particularly beneficial when in scenarios where bandwidth is constrained.

In some aspects, the message payloads $m_{DI}$, $m_{DR}$, and $m_P$ may be optional (e.g., may not contain meaningful data). Accordingly, initiating device **1902** and responding device **1904** may use message sequence chart **2200** only to authenticate each other (and, for example, not to exchange parameters).

The various aspects of this authentication procedure described herein are considered applicable in any type of mutual authentication. These aspects may, for example, be particular useful in a use case with a narrow bandwidth channel that only allows for a limited number of bits to be exchanged for security and privacy purposes. Because many MAC schemes use smaller number of bits than digital signatures, the bandwidth usage may be reduced, especially if truncated MACs are used.

These aspects may also, for example, be useful in many-to-one authentication schemes. In some many-to-one authentication schemes, each responding device may perform a separate mutual authentication procedure with an initiating device. This could include a first discovery initiation signal by the initiating devices, followed by a separate exchange of verifiable authentication messages between responding devices and the initiating devices. However, aspects of this disclosure streamline this procedure, as initiating device **1902** broadcasts an initiation message with a MAC generated based on its common secret identity $K_{DI}$. Accordingly, responding devices may be able to immediately verify the MAC and decide whether or not to respond. Responding devices may therefore not waste resources responding to invalid initiation messages. In some aspects, the initiation message may be the first message that responding device **1904** receives from initiating device **1902** as part of the authentication procedure (e.g., responding device **1904** may not receive any prior discovery messages or other messages from responding device **1904** before the initiation message). This stands in contrast to other discovery procedures, such as where initiating device **1902** broadcasts a discovery signal (without a MAC generated from its common secret identity $K_{DI}$), one or more responding devices respond, and initiating device **1902** then performs mutual authentication on each of the one or more responding devices in a separate, one-to-one authentication procedures.

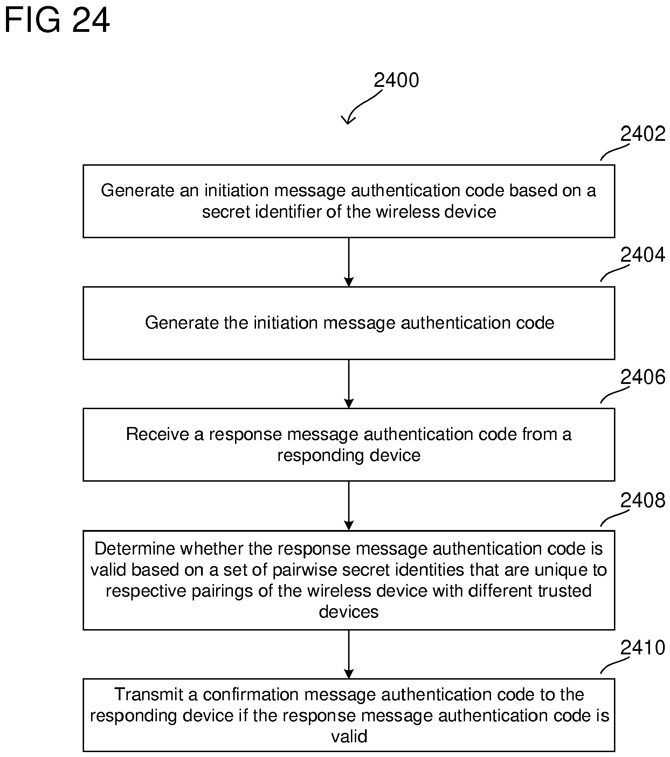

FIG. **24** shows exemplary method **2400** of performing authentication at a wireless device according to some aspects. As shown in FIG. **24**, method **2400** includes generating an initiation message authentication code based on a secret identifier of the wireless device **(2402)**, transmitting the initiation message authentication code **(2404)**, receiving a response message authentication code from a responding device **(2406)**, determining whether the response message authentication code is valid based on a set of pairwise secret identities that are unique to respective pairings of the wireless device with different trusted devices **(2408)**, and transmitting a confirmation message authentication code to the responding device if the response message authentication code is valid **(2410)**.

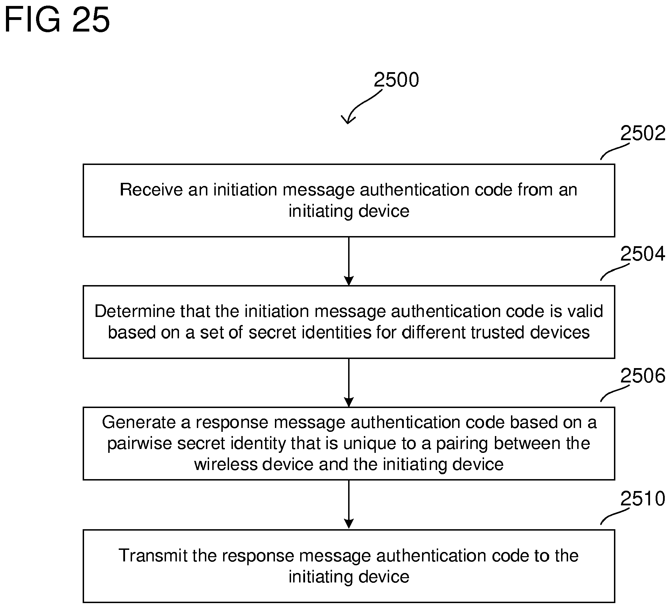

FIG. **25** shows exemplary method **2500** of performing authentication at a wireless device according to some aspects. As shown in FIG. **25**, method **2500** includes receiving an initiation message authentication code from an initiating device **(2502)**, determining that the initiation message authentication code is valid based on a set of secret identities for different trusted devices **(2504)**, generating a response message authentication code based on a pairwise secret identity that is unique to a pairing between the wireless device and the initiating device **(2506)**, and transmitting the response message authentication code to the initiating device **(2508)**.

In some aspects, initiating device **1902** may be characterized as a wireless device including a message code processor (e.g., message code processor **2010**) configured to generate an initiation message authentication code based on a secret identifier of the wireless device and to transmit the initiation message authentication code, and a verifier (e.g., verifier **2008**) configured to receive a response message authentication code from a responding device and to determine whether the response message authentication code is valid based on a set of pairwise secret identities that are unique to respective pairings of the wireless device with different trusted devices, the message code processor further configured to transmit a confirmation message authentication code to the responding device if the response message authentication code is valid.

In some aspects, responding device **1902** may be characterized as a wireless device including a verifier (e.g., verifier **2108**) configured to receive an initiation message authentication code from an initiating device, and to determine that the initiation message authentication code is valid based on a set of secret identities for different trusted devices, and a message code processor (e.g., message code processor **2110**) configured to generate a response message authentication code based on a pairwise secret identity that is unique to a pairing between the wireless device and the initiating device, and to transmit the response message authentication code to the initiating device.

As introduced in various aspects above, some D2D networks may use discovery procedures to help devices detect each other. For example, an initiating device (that initiates the discovery procedure) may broadcast a discovery initiation message. Nearby responding devices may receive this discovery initiation message, recognize that the initiating device is initiating discovery, and may then respond by transmitting respective discovery response messages to the initiating device. This type of discovery procedure can be characterized as a one-to-many discovery procedure, as a single device (the initiating device) performs discovery to detect multiple other devices (the responding devices).

In some scenarios, these D2D discovery procedures may experience problems with collisions. For example, if multiple responding devices transmit their respective discovery response messages on the same radio resources (e.g., the same time-frequency resources), these discovery response messages may collide with each other. The initiating device may not be able to successfully decode the colliding discovery response messages and may not be able to detect the corresponding responding devices. These types of collisions may be particularly problematic in D2D networks that operate without network coordination. As there is no centralized coordination from a network to help manage collisions, it is possible that many (or potentially even all) of the discovery response messages could collide. The initiating device may consequently not be able to discover all of the responding devices.

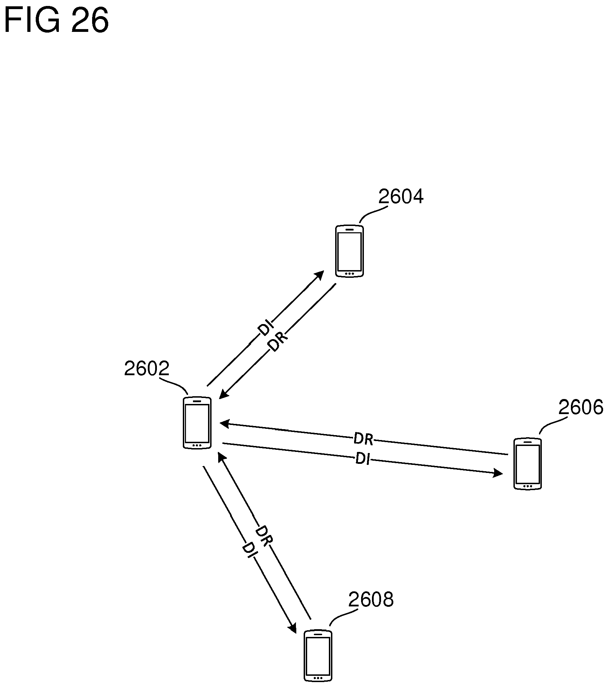

FIG. **26** shows an exemplary discovery procedure according to some aspects. As shown in FIG. **26,** initiating device **2602** may broadcast a discovery initiation message. Responding devices **2604-2608** may be located in the vicinity of initiating device **2602** (e.g., within wireless communication range) and may therefore receive the discovery initiation message. In some aspects, initiating device **2602** and responding devices **2604-2608** may be configured to follow a shared schedule that includes periodic discovery windows. For example, initiating device **2602** and responding devices **2604-2608** may follow a shared schedule composed of a sequence of frames that are each composed of multiple slots (e.g., a time-slotted schedule). One or more of the slots in each frame (or every one of a number of frames) may be allocated for discovery procedures, where these blocks of slots allocated for discovery procedures each form a discovery window. These frames, slots, and discovery windows can be any duration of time and are not limited to any particular radio access technology. Initiating device **2602** may be configured to broadcast the discovery initiation message in one of these discovery windows. As responding devices **2604-2608** are following the same shared schedule, responding devices **2604-2608** may be configured to listen for discovery initiation messages during the discovery windows. Responding devices **2604-2608** may therefore receive the discovery initiation message from initiating device **2602** in the discovery window in which initiating device **2602** transmits the discovery initiation message.

After receiving the discovery initiation message, responding devices **2604-2608** may determine that the discovery initiation message is part of a discovery procedure initiated by initiating device **2602**. Responding devices **2604-2608** may then decide to engage in the discovery procedure by responding to the discovery initiation message. In some cases, responding devices **2604-2608** may be configured to wait until a subsequent (e.g., the next scheduled in time) discovery window to respond to initiating device **2602.** For example, the shared schedule may allocate a plurality of channels (e.g., each channel composed of an individual subcarrier or a set of subcarriers or block of spectrum) in a given discovery window on which responding devices can transmit discovery response messages. Responding devices **2604-2608** may therefore be configured to select (e.g., randomly) a respective channel from the plurality of channels and to subsequently transmit a discovery response message on their respectively selected channels. These channels are also referred to herein as discovery channels, where the set of discovery channels allocated in a given discovery window are the discovery resources for that discovery window.

If responding devices **2604-2608** select different respective channels, then there may not be any collisions between the discovery response messages. Accordingly, initiating device **2602** may be able to successfully receive and decode each of the discovery response messages (unless noise or other errors cause a decode failure). However, if multiple of responding devices **2604-2608** select the same channel, their discovery response messages will collide with each other. This can result in substantial interference between the affected responding devices. Accordingly, initiating device **2602** may receive both of discovery response messages on the same radio resources, which may corrupt the discovery response messages and prevent initiating device **2602** from successfully decoding them. As a result, initiating device **2602** may not be able to detect all of responding devices **2604-2608** in the discovery procedure.

In some cases, initiating device **2602** may perform a retransmission of the discovery initiation message, such as by using the next (or any subsequent) scheduled discovery window after the discovery window in which responding devices **2604-2608** transmit their discovery response messages. In other words, initiating device **2602** may perform a retransmission of the initial discovery initiation message in the next scheduled discovery window. While this can help with collisions, it may nevertheless be a suboptimal solution. For example, in an exemplary scenario initiating device **2602** may transmit a discovery initiation message in a first discovery window. Responding devices **2604-2608** may then respond in a second discovery window, where responding devices **2604** and **2606** may select the same channel to respond while responding device **2608** may select a different channel. Initiating device **2602** may therefore be able to successfully decode the discovery response message from responding device **2608** but may not be able to successfully decode the discovery response messages from responding devices **2604** and **2606.** Continuing with the exemplary scenario, initiating device **2602** may then retransmit the discovery initiation message in a third discovery window (e.g., the next scheduled after the second discovery window). Responding devices **2604-2608** may receive this discovery initiation message and again respond by transmitting respective discovery response messages in a fourth discovery window. However, responding devices **2604** and **2608** may select the same channel to respond while responding device **2606** may select a different channel to respond. Initiating device **2602** may therefore be able to successfully decode the discovery response message from responding device **2606** but may not be able to successfully decode the discovery response message from responding devices **2604** and **2608.**

Accordingly, while initiating device **2602** may have successfully decoded discovery response messages from responding devices **2606** and **2608** (in the fourth and second discovery windows, respectively), initiating device **2602** may not have successfully decoded any discovery response messages from responding device **2604.** In other words, because responding device **2604** randomly selected the same channel as another responding device in for responding to both discovery initiation messages, both of its discovery response messages may have collided with other discovery response messages. Despite using multiple discovery procedures (e.g., retransmitting the discovery initiation message), initiating device **2602** may still not have successfully decoded discovery response messages from all of the responding devices. Consequently, initiating device **2602** may not have been able to discover all responding devices. While initiating device **2602** can in principle continue to perform retransmissions indefinitely until it is likely that all responding devices have been discovered (by successfully decoding a discovery response message), this may be inefficient. For example, if initiating device **2602** needs to perform a large number of retransmissions before detecting all responding devices, initiating device **2602** may not be able to discover all responding devices in a timely manner.

The probability that a given responding device transmits a colliding discovery response message with another responding device is the collision probability. This collision probability is governed by the number of devices in communication range of the initiating device (also known as the system load) as well as the number of available discovery resources (e.g., the discovery channels available for responding devices to respond on). When the collision probability is higher, the expected percentage of successful decodes of discovery response messages by the initiating device will be lower. Accordingly, higher collision probabilities can mean that it will take the initiating device longer to discover all responding devices in its vicinity. In other words, the discovery latency (the average time taken to discover a given responding device) may increase. Furthermore, the initiating device may also consume more power from repeatedly performing discovery over an extended period of time. In some cases, high system loads (e.g., in densely populated networks) can even lead to permanent collisions. It can therefore be advantageous to attempt to keep the collision probability below excessive levels.

Accordingly, various aspects of this disclosure provide a discovery procedure that can reduce collisions, such as in one-to-many discovery procedures. By reducing collisions, interference between wireless devices is also reduced. As further described herein, these discovery procedures may provide mechanisms for initiating devices and/or responding devices to help avoid collisions. These aspects can therefore improve the reliability of the discovery procedures, as the initiating device may be able to more reliably detect the responding devices. This can in turn lead to reduced discovery latency and reduced power consumption.

Various aspects of this disclosure can be characterized as initiator-controlled or responder-controlled. Initiator-controlled aspects may include techniques implemented by initiating devices to reduce collision probability while responder-controlled aspects may include techniques implemented by responding devices to reduce collision probability. The internal structure of initiating devices and responding devices will first be described, followed by a procedural explanation of the initiator-controlled and responder-controlled discovery techniques.

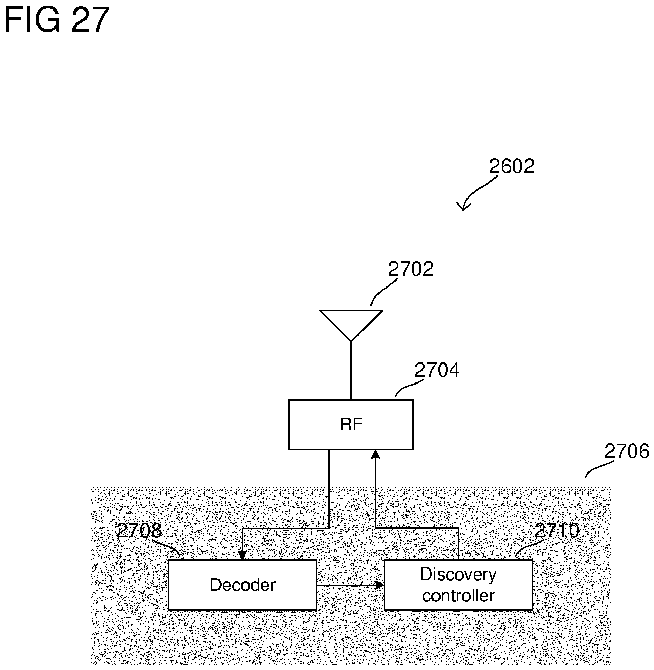

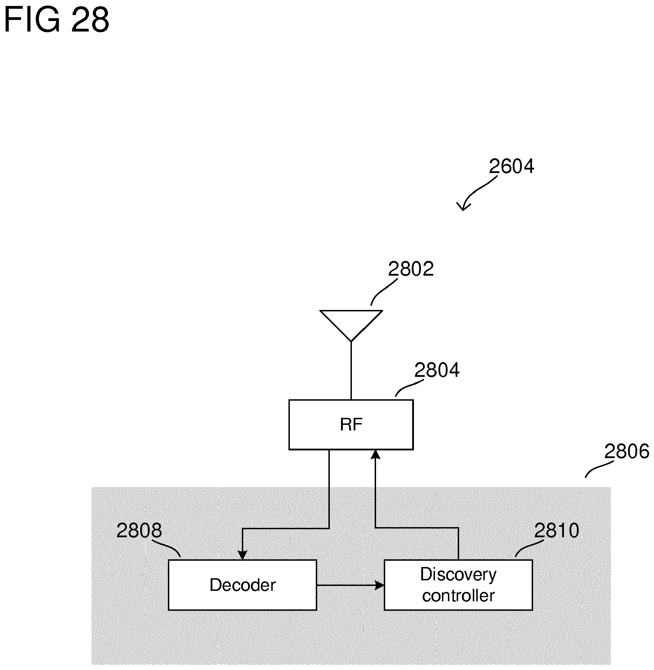

FIG. **27** shows an exemplary internal configuration of initiating device **2602** according to some aspects, while FIG. **28** shows an exemplary internal configuration of responding device **2604** according to some aspects. The designations "initiating" and "responding" are used herein to refer to their primary function in the discovery procedure; however, these designations are not limiting and some devices can be configured with the functionality and structure of both initiating and responding devices. The configurations shown in FIGs. **27** and **28** are focused on the discovery features of initiating device **2602** and responding device **2604** and may therefore not expressly depict other components of initiating device **2602** and responding device **2604** that are less directly related to discovery.

Starting first with FIG. **27,** initiating device **2602** may include antenna system **2702,** RF transceiver **2704,** and baseband modem **2706.** In some aspects, antenna system **2702,** RF transceiver **2704,** and baseband modem **2706** may be configured as described above for antenna system **202,** RF transceiver **204,** and baseband modem **206** of terminal device **102.** Accordingly, initiating device **2602** may be configured to transmit and receive wireless signals via antenna system **2702** and RF transceiver **2704.** RF transceiver **2704** may therefore modulate and transmit baseband samples (provided by baseband modem **2706**) via antenna system **2702** in the transmit direction. RF transceiver **2704** may also receive and demodulate radio signals via antenna system **2702** and provide the resulting baseband samples to baseband modem **2706** in the receive direction.

FIG. **27** also depicts several internal components of baseband modem **2706,** including decoder **2708** and discovery controller **2710.** In some aspects, baseband modem **2706** may include a digital signal processor and a protocol controller, e.g., similar to digital signal processor **208** and protocol controller **210** of terminal device **102** in FIG. **2.** In some aspects, the internal components of baseband modem **2706** may therefore be subcomponents of the digital signal processor (e.g., physical layer components) and/or subcomponents of the protocol controller (e.g., protocol stack components).

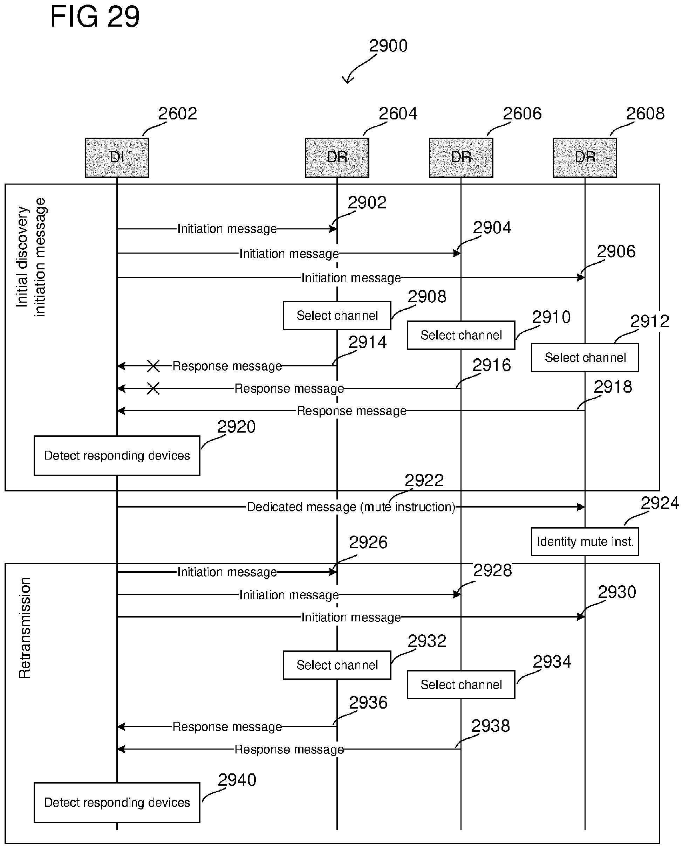

In various aspects, decoder **2708** and discovery controller **2710** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect, decoder **2708** may be a digital hardware decoder, such as a hardware circuit configured to perform decoding operations on packets. Discovery controller **2710** may be a processor configured to execute an instruction set that controls discovery operations of initiating device **2602,** which includes control over decoding by decoder **2708.** In another exemplary aspect, decoder **2708** and discovery controller **2710** may each be software, such as where decoder **2708** and discovery controller **2710** are implemented as one or more processors configured to execute instruction sets that define their respective functionality. Decoder **2708** may therefore be a processor configured to execute instruction sets that define its decoding operations while discovery controller **2710** may be a processor configured to execute an instruction set that controls discovery operations of initiating device **2602.** The hardware and/or algorithmic structure of decoder **2708** and discovery controller **2710** is fully detailed in the below description related to FIGs. **29-32.**

As shown in FIG. **28,** responding device **2604** may include antenna system **2802,** RF transceiver **2804,** and baseband modem **2806.** In some aspects, antenna system **2806,** RF transceiver **2804,** and baseband modem **2806** may be configured as described above for antenna system **202,** RF transceiver **204,** and baseband modem **206** of terminal device **102.** Accordingly, responding device **2604** may be configured to transmit and receive wireless signals via antenna system **2802** and RF transceiver **2804.** RF transceiver **2804** may therefore modulate and transmit baseband samples (provided by baseband modem **2806**) via antenna system **2802** in the transmit direction. RF transceiver **2804** may also receive and demodulate radio signals via antenna system **2802** and provide the resulting baseband samples to baseband modem **2806** in the receive direction.

FIG. **28** also depicts several internal components of baseband modem **2806,** including decoder **2808** and discovery controller **2810.** In some aspects, baseband modem **2806** may include a digital signal processor and a protocol controller, e.g., similar to digital signal processor **208** and protocol controller **210** of terminal device **102** in FIG. **2.** In some aspects, the internal components of baseband modem **2806** may therefore be subcomponents of the digital signal processor (e.g., physical layer components) and/or subcomponents of the protocol controller (e.g., protocol stack components).

In various aspects, decoder **2808** and discovery controller **2810** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. In one exemplary aspect, decoder **2708** may be a digital hardware decoder, such as a hardware circuit configured to perform decoding operations on packets. Discovery controller **2810** may be a processor configured to execute an instruction set that controls discovery operations of responding device **2604,** which includes control over decoding by decoder **2808.** In another exemplary aspect, decoder **2808** and discovery controller **2810** may each be software, such as where decoder **2808** and discovery controller **2810** are implemented as one or more processors configured to execute instruction sets that define their respective functionality. Decoder **2808** may therefore be a processor configured to execute instruction sets that define its decoding operations while discovery controller **2810** may be a processor configured to execute an instruction set that controls discovery operations of responding device **2604.** The hardware and/or algorithmic structure of decoder **2808** and discovery controller **2810** is detailed in full in the below description related to FIGs. **29-32.**

As previously introduced, some aspects of this disclosure relate to initiator-controlled discovery procedures. FIG. **29** shows exemplary message sequence chart **2900** according to some aspects, which shows an example of an initiator-controlled discovery procedure. In particular, initiating device **2602** may use dedicated messaging to provide a mute instruction to certain responding devices. These responding devices may then identify the mute instruction and refrain from responding to subsequent discovery initiation messages. This may reduce the number of responding devices that respond to these subsequent discovery initiation messages. As the number of responding devices are reduced, the collision probability can also be reduced.

As shown in FIG. **29,** the discovery procedure may involve initiating device **2602** and one or more responding devices, e.g., responding devices **2604-2608.** In some aspects, responding devices **2606** and **2608** may be configured in the manner of responding device **2604** described above in FIG. **28.** Initiating device **2602** may start message sequence chart **2900** by broadcasting a discovery initiation message in stages **2902-2906** (which may involve a single broadcast but is shown in separate stages to show that responding devices **2604-2608** receive the broadcast separately). For example, discovery controller **2710** of initiating device **2602** may broadcast the discovery initiation message as a wireless signal via RF transceiver **2704** and antenna system **2702.** As previously introduced, initiating device **2602** and responding devices **2604-2608** may be configured to follow a shared scheduled that includes periodic discovery windows (e.g., one or more slots every frame or every several frames). Accordingly, discovery controller **2710** may be configured to transmit the discovery initiation message in a first discovery window.

Responding devices **2604-2608** may then separately receive the discovery initiation message in stages **2902-2906.** Using responding device **2604** as an example, decoder **2808** may receive the discovery initiation message via antenna system **2802** and RF transceiver **2804.** Decoder **2808** may then decode the discovery initiation message and provide the decoded version of the discovery initiation message to discovery controller **2810.**

Responding devices **2604-2608** may then respond to the discovery initiation message by transmitting respective discovery response messages. As shown in FIG. **29,** responding devices **2604-2608** may select respective channels in stages **2908-2912.** Using responding device **2604** as an example, discovery controller **2810** may select a channel from a plurality of channels that are pre-allocated for discovery (e.g., the plurality of discovery channels) in a second discovery window. In some aspects, each of the plurality of channels may be a single subcarrier, while in other aspects each of the plurality of channels may be composed of multiple subcarriers or blocks of spectrum. In some aspects, the plurality of channels may remain constant over multiple discovery windows, while in other aspects the plurality of channels may change each or every several discovery windows. In either case, a given discovery window may have a plurality of channels available for discovery. In some aspects, discovery controller **2810** may select the channel by randomly selecting from the plurality of channels.

After selecting their respective channels, responding devices **2604-2606** may transmit respective discovery response messages in stages **2914-2918.** Continuing with the example of responding device **2604,** discovery controller **2810** may generate a discovery response message in response to the discovery initiation message. The discovery response message can include, for example, information that identifies responding device **2604** (e.g., a device identifier) and any other relevant communication parameters. Discovery controller **2810** may then transmit the discovery response message in the second discovery window, such as by transmitting the discovery response message via RF transceiver **2804** and antenna system **2802.**

Responding devices **2604-2608** may transmit their respective discovery response messages in the same second discovery window. However, in the example of FIG. **29,** responding devices **2604** and **2606** may have selected the same channel in stages **2908** and **2910.** Accordingly, responding devices **2604** and **2606** may transmit their discovery response messages on the same channel, and their discovery response messages may consequently collide.

Initiating device **2602** may receive the discovery response messages in the second discovery window and then detect responding devices in stage **2920.** For example, decoder **2708** may receive the signal data (e.g., baseband samples) for the second discovery window via antenna system **2702** and RF transceiver **2704** and then attempt to decode the signal data on each of the plurality of channels (that are pre-allocated for discovery in the second discovery window). Decoder **2708** may perform this decoding according to any type of decoding scheme, where the decoding scheme corresponds to an encoding scheme used by responding devices **2604-2608** to encode the discovery response messages.

If decoder **2708** successfully decodes a discovery response message from a given channel in the second discovery window (e.g., as indicated by an error-detecting code, such as a cyclic redundancy check (CRC)), decoder **2708** may provide the decoded version of the discovery response message to discovery controller **2710.** Discovery controller **2710** may then be able to identity which responding device transmitted the discovery response message, such as by identifying a device identifier of the responding device. Accordingly, discovery controller **2710** may discover the responding devices in stage **2920** pending the successful decode of their discovery response message.

In the example of FIG. **29,** decoder **2708** may successfully decode the discovery response message from responding device **2608** and discovery controller **2710** may therefore detect responding device **2608** in stage **2920.** However, as the discovery response messages from responding devices **2604** and **2606** collided, decoder **2708** may not be able to successfully decode these discovery response messages. For example, decoder **2708** may detect a decode error when attempting to decode the signal data on the channel that responding devices **2604** and **2606** both selected. As decoder **2708** is not able to successfully decode a discovery response message from responding device **2604** or **2606,** discovery controller **2710** may not detect either of responding device **2604** or **2606.**

Initiating device **2602** may then perform a retransmission of the discovery initiation message. However, instead of immediately sending out another discovery initiation message, initiating device **2602** may use dedicated messaging (e.g., individually addressed to a particular device or devices) to instruct certain responding devices to mute, or in other words, to refrain from transmitting a discovery response message. For example, discovery controller **2708** may have detected responding devices in stage **2920** (e.g., the responding devices whose discovery response messages successfully decoded by decoder **2708),** which includes responding device **2608** in this example. Discovery controller **2708** may then select one or more of the detected responding devices. Discovery controller **2708** may then generate a dedicated message for these one or more selected responding devices. These dedicated messages may be individually addressed to a particular responding device and may include an instruction to mute for a set number of discovery procedures (e.g., to refrain from responding to the next set number of discovery initiation messages).

Discover controller **2708** may then transmit the dedicated messages to the one or more selected responding devices in stage **2922,** such as by transmitting the dedicated messages via RF transceiver **2704** and antenna system **2702.** In the example of FIG. **29,** responding device **2608** may be the only detected responding device, and initiating device **2602** may therefore select responding device **2608** to transmit the dedicated message to. In other exemplary scenarios, there may be multiple detected responding devices, from which discovery controller **2710** may select the one or more selected responding devices to transmit the dedicated messages to.

As shown in FIG. **29,** responding device **2608** may then identify the dedicated message in stage **2924.** As previously indicated, responding device **2608** may be configured in the manner of responding device **2604** in FIG. **28** and may thus include a decoder **2808** and discovery controller **2810.** Decoder **2808** of responding device **2608** may decode the dedicated message and provide the decoded version of the dedicated message to discovery controller **2810.** Discovery controller **2810** may then determine that the dedicated message is an instruction to mute for a set number of upcoming discovery procedures, e.g., to refrain from responding from the next set number of discovery initiation messages.

Initiating device **2602** may then retransmit the discovery initiation message, namely by re-broadcasting the discovery initiation message in a third discovery window in stages **2926-2930.** The third discovery window can be any discovery window scheduled after the second discovery window. As shown in FIG. **29,** responding devices **2604-2608** may receive this discovery initiation message. Responding devices **2604** and **2606** may again select respective channels from the plurality of channels (allocated for discovery in the third discovery window) in stages **2932** and **2484.** Responding devices **2604** and **2606** may then transmit respective discovery response messages in stages **2936** and **2938** in a fourth discovery window.

By contrast, responding device **2608** may not select a channel and may not transmit a discovery response message in response to the discovery initiation message. Responding device **2608** may therefore follow the instruction in the dedicated message to mute for this discovery initiation message (optionally in addition to further discovery initiation messages depending on the set number specified in the dedicated message) and may thus refrain from transmitting a discovery response message.

As shown in FIG. **29,** initiating device **2602** may receive the discovery response messages from responding devices **2604** and **2606** in stages **2936** and **2938.** In this example, responding devices **2604** and **2606** may select different channels from the plurality of channels, and may therefore transmit their respective discovery response messages without collisions. Accordingly, when initiating device **2602** attempts to detect responding devices with decoder **2708** and discovery controller **2710** in stage **2940,** initiating device **2602** may be able to successfully decode the discovery response messages from both responding devices **2604** and **2606.** Initiating device **2602** may therefore be able to detect both responding devices **2604** and **2606.**

Because initiating device **2602** has instructed one or more of the detected responding devices to mute in stage **2922,** the collision probability may be reduced. In other words, as fewer responding devices will transmit discovery response messages, there may be a reduced probability that multiple responding devices will select the same channel on which to transmit their discovery response messages.

In the example of FIG. **29,** there was only one detected responding device (from the first discovery procedure) for discovery controller **2710** to instruct to mute. In other examples, there may be multiple detected responding devices. In these cases, discovery controller **2710** may be configured to select a number (or, equivalently, percentage) of the detected responding devices to instruct to mute. Discovery controller **2710** may then send respective dedicated messages to these selected responding devices that instruct them to mute for a set number of upcoming discovery initiation messages. In some aspects, discovery controller **2710** may be configured to select all of the detected responding devices to instruct to mute. As discovery controller **2710** may already have detected these devices after the initial transmission of the discovery initiation message, discovery controller **2710** may not need to receive another discovery response message from these devices in response to the next discovery initiation message.

In other aspects, discovery controller **2710** may select a reduced subset of the detected responding devices to instruct to mute. In some aspects, this can be based on a criteria, such as the number of discovery response messages that were successfully decoded in the first discovery procedure. For example, discovery controller **2710** may compare the number of detected responding devices (from stage **2920**) to a predefined threshold. If the number of detected responding devices is greater than the predefined threshold, discovery controller **2710** may select a first number of detected responding devices to instruct to mute. if the number of detected responding devices is less than the predefined threshold, discovery controller **2710** may select a second number of detected responding devices to instruct to mute, where the first number is greater than the second number. In other words, when there is a greater number of detected responding devices, discovery controller **2710** may select a greater number of these detected responding devices to instruct to mute. Because there are more detected responding devices, this can indicate that the collision probability will be higher. Accordingly, discovery controller **2710** may instruct more responding devices to mute to attempt to counter this higher collision probability. In various aspects, discovery controller **2710** may use multiple predefined thresholds of detected responding devices, where the predefined thresholds map to progressively higher numbers of detected responding devices as the predefined thresholds increase in value.

In some aspects, discovery controller **2710** may be configured to select a set number of discovery initiation messages that the selected responding devices are muted for. This set number refers to how many subsequent discovery initiation messages the selected responding devices will remain muted for. In particular, discovery controller **2710** may indicate the set number of discovery initiation messages to mute in the dedicated message. The selected responding devices may then identify the set number in the dedicated message and subsequently refrain from transmitting discovery response messages in the response to the set number of subsequent discovery initiation messages from the initiating device. In some aspects, discovery controller **2710** may use a predefined number as the set number, such as one (or any other number). In other words, discovery controller **2710** may instruct the selected responding devices to mute for the next scheduled discovery initiation message (or any other number of upcoming discovery initiation messages). In other aspects, discovery controller **2710** may dynamically select the set number, such as based on the number of detected responding devices. In this example, discovery controller **2710** may be configured to compare the number of detected responding devices to a predefined threshold. If the number of detected responding devices is greater than the predefined threshold, discovery controller **2710** may select a first number as the set number of discovery initiation messages to mute the selected responding devices for. If the number of detected responding devices is less than the predefined threshold, discovery controller **2710** may select a second number as the set number to mute, where the first number is greater than the second number. Accordingly, discovery controller **2710** may be configured to mute the selected responding devices for more discovery initiation messages (e.g., longer periods of time) when there are more detected responding devices.

In some aspects, initiating device **2602** may continue to retransmit the discovery initiation message over time. Accordingly, initiating device **2602** may broadcast a discovery initiation message and detect responding devices by successfully decoding discovery response messages. Initiating device **2602** may then select one or more of the detected responding devices and transmit dedicated messages to these selected responding devices that instruct them to mute for a set number of subsequent discovery initiation messages (e.g., retransmissions of the initial discovery initiation message). Initiating device **2602** may then broadcast another discovery initiation message and detect responding devices by successfully decoding discovery response messages. As the one or more selected responding devices are muted, the collision probability will be reduced, and initiating device **2602** may be able to detect responding devices whose discovery response messages underwent collisions when responding to the previous discovery initiation message. Initiating device **2602** may again select one or more of the detected responding devices to mute for a set number of upcoming discovery initiation messages, and may transmit dedicated messages to these selected responding devices that instruct them to mute. Initiating device **2602** may continue in this manner by repeatedly transmitting discovery initiation messages, detecting responding devices, and muting some of the detected responding devices.

In some aspects, the dedicated message transmitted by initiating device **2602** may be a unicast message, or in other words, initiating device **2602** may address and transmit the dedicated message to a single responding device. Accordingly, if initiating device **2602** selects multiple responding devices to mute, initiating device **2602** may transmit multiple dedicated messages, each of which is addressed to a single responding device that initiating device **2602** wants to mute.

In other aspects, initiating device **2602** may broadcast a single discovery confirmation message to the responding devices that identifies the selected responding devices (i.e., the responding devices that are instructed to mute). Responding devices may therefore receive the discovery confirmation message, check whether they are identified as selected responding devices, and, if so, refrain from responding to subsequent discovery initiation messages from initiating device **2602.**

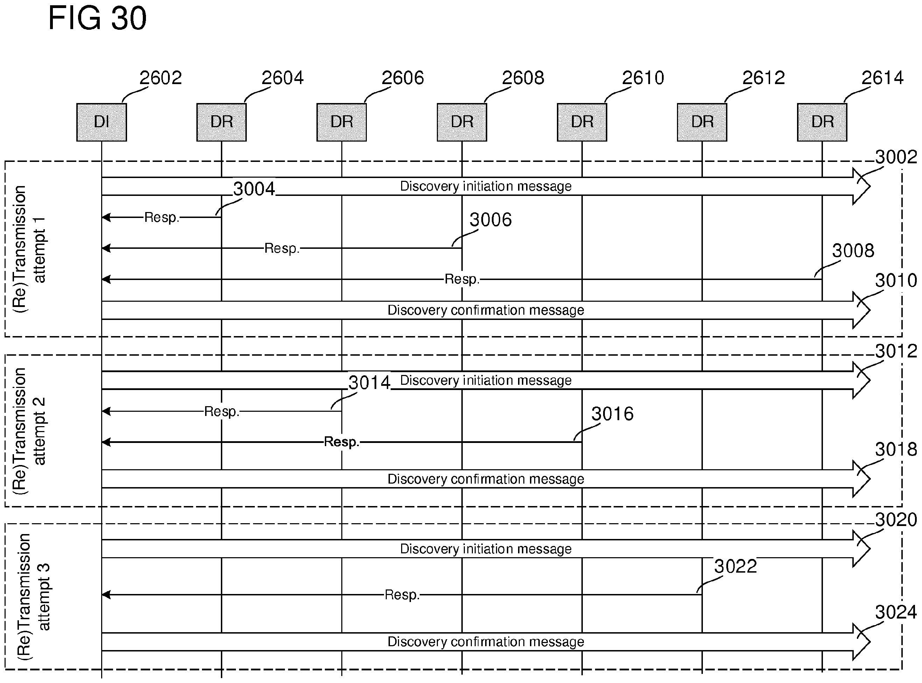

FIG. **30** shows exemplary message sequence chart **3000,** which illustrates the use of discovery confirmation messages according to some aspects. As shown in FIG. **30,** initiating device **2602** and responding devices **2604-2614** may be involved in the procedure of message sequence chart **3000.** Initiating device **2602** may start message sequence chart **3000** by transmitting a discovery initiation message in stage **3002.** Similar to the previous examples using discovery initiation messages, this may be a broadcast message on the discovery channel during a first discovery window. The discovery initiation message in stage **3002** is depicted as a single broadcast in FIG. **30** for purposes of simplicity, and the discovery initiation message may be received separately by responding devices **2604-2614** in the same manner as responding devices **2604-2608** in stages **2902-2906** of FIG. **29.**

As shown in FIG. **30,** responding devices **2604, 2608,** and **2614** may transmit discovery response messages in stages **3004-3008** that are received and successfully decoded by initiating device **2602.** Conversely, initiating device **2602** may not receive and successfully decode discovery response messages from responding devices **2606, 2610,** and **2612.** This can occur for any of a number of reasons. For example, one or more of responding devices **2606, 2610,** and **2612** may not receive and/or successfully decode the discovery initiation message in stage **3002,** and may therefore not be aware of the discovery initiation message. In another example, one or more of responding devices **2606, 2610,** and **2612** may receive and successfully decode the discovery initiation message in stage **3002** but may not transmit a discovery response message. In another example, one or more responding devices **2606, 2610,** and **2612** may transmit a discovery response message that initiating device **2602** is not able to successfully receive and decode (e.g., due to a collision in the discovery response messages). In any case, initiating device **2602** may only successfully receive and decode discovery response messages from responding devices **2604, 2608,** and **2614.**

Like the exemplary case in FIG. **29,** initiating device **2602** may transmit an additional message to one or more selected responding devices that instructs them to mute (e.g., to refrain from responding to subsequent discovery initiation messages). Instead of sending a separate dedicated message addressed to each of the one or more selected responding devices, initiating device **2602** may transmit a discovery confirmation message in stage **3010.** This discovery confirmation message may be a broadcast message (intended for all responding devices) and may identify the one or more selected responding devices that are instructed to mute.

For example, discovery controller **2710** may identify which responding devices transmitted discovery response messages that were successfully decoded by decoder **2708**. These responding devices are the detected responding devices, namely responding devices **2604, 2608,** and **2614** in the example of FIG. **30**. Discovery controller **2710** may then select some or all of the detected responding devices as the one or more selected responding devices. Discovery controller **2710** may then generate a discovery confirmation message that identifies the one or more selected responding devices, and may subsequently transmit the discovery confirmation message (via RF transceiver **2704** and antenna system **2702**). In the example of FIG. **30**, discovery controller **2710** may select all of the detected responding devices, namely responding devices **2604, 2608,** and **2614,** as the one or more selected responding devices.

As shown in FIG. **30**, responding devices **2604-2614** may receive the discovery confirmation message. Responding devices **2604-2614** may then determine whether the discovery confirmation message identifies them as one of the one or more selected responding devices. If so, responding devices **2604-2614** may determine that initiating device **2602** has already detected them and that they should refrain from responding to subsequent discovery initiation messages. In the example of FIG. **30**, responding devices **2604, 2608,** and **2614** may determine that they are identified as selected responding devices by the discovery confirmation message. Responding devices **2604, 2608,** and **2614** may therefore refrain from responding to discovery initiation messages from initiating device **2602**. In some aspects, the responding devices **2604, 2608,** and **2614** may be configured to refrain from responding to discovery initiation messages from initiating device **2602** for a predefined amount of time (e.g., several minutes) and/or a predefined number of discovery initiation messages. In other aspects, the discovery confirmation message may include a mute window that specifies an amount of time or number of discovery initiation messages during which the selected responding devices should mute.

Initiating device **2602** may then transmit another discovery initiation message in stage **3012**. This may be considered a retransmission of the discovery initiation message in stage **3002**. As responding devices **2604, 2608,** and **2612** determined that they were identified in the discovery confirmation message, they may not respond to the discovery initiation message. As shown in FIG. **30**, responding devices **2606** and **2610** may transmit discovery response messages in stages **3014** and **3016** that are successfully received and decoded by initiating device **2602**. Accordingly, initiating device **2602** may select responding devices **2606** and **2610** as selected responding devices and may generate a second discovery confirmation message that identifies responding devices **2606** and **2610**. As the discovery confirmation message of stage **3010** already identified responding devices **2604, 2608,** and **2614,** the second discovery confirmation message may not identify responding devices **2604, 2608,** and **2614.**

Initiating device **2602** may then transmit the second discovery confirmation message in stage **3018.** Responding devices **2606** and **2610** may receive the discovery confirmation message and determine that they are identified as selected responding devices.

Accordingly, when initiating device **2602** transmits a third discovery initiation message in stage **3020,** responding devices **2604, 2606, 2608, 2610,** and **2614** may refrain from responding. As shown in FIG. **30,** only responding device **2612** may respond to the discovery initiation message in stage **3022**. Initiating device **2602** may successfully receive and decode the discovery response message and may then select responding device **2612** as a selected responding device. Initiating device **2602** may then transmit a discovery confirmation message in stage **3024** that identifies responding device **2612** as a selected responding device. Responding device **2612** may therefore refrain from responding to subsequent discovery initiation messages.

In some aspects, initiating device **2602** and responding devices **2604-2614** may use discovery confirmation messages that explicitly identify the selected responding devices, such as by specifying a device ID of each selected responding device. The discovery controllers of responding devices **2604-2614** may therefore identify that they are instructed to refrain from responding by identifying their device IDs in the discovery confirmation message. In other aspects, initiating device **2602** and responding devices **2604-2614** may use a specific format of discovery confirmation messages that reduces the size of the discovery confirmation message. In one example, initiating device **2602** may generate the discovery confirmation to have a payload including a bit string *S* of length *L*, where bit string *S* identifies the selected responding devices. Initiating device **2602** may use a mechanism similar to a Bloom filter to determine the L bits in a manner that identifies the selected responding devices. As further described below, the basic principle is that initiating device **2602** will activate K distinct bits (e.g., set the bits to binary "1") in bit string *S* for each selected responding device. The specific K activated bits (in other words, the bit positions that are activated) for each selected responding device are derived from the device ID of the selected responding device.

In one example, initiating device **2602** may execute the following pseudocode to generate bit string *S*:

| Line Number | Code |
|---|---|
| 1 | **Input** $(L, K, N, \mathbf{ID_{DR}} = [ID_{DR,1}, \cdots, ID_{DR,N}])$ |
| 2 | **Output** ($S$) |
| 3 | Initialize the bit string $S$ with $L$ zeros, as $S \leftarrow \mathbf{0}_L$ |
| 4 | FOR $i: 1 \cdots N$ |
| 5 | Initialize the random generator $g$ with $ID_{DR,i}$, as $g(ID_{DR,i})$ |
| 6 | Extract $K$ uniform random integers within the $[2^0, 2^{32}]$ interval, as $\mathbf{U} = g(ID_{DR,i}, K)$ |
| 7 | Initialize bit selection vector $\mathbf{L}$, as $\mathbf{L} \leftarrow 1 \ldots L$ |
| 8 | FOR $j: 1 \cdots K$ |
| 9 | Select the j$^{th}$ index to be active in $S$, as $h_j = \mathbf{L}(mod(U(j), L + 1 - j))$ |
| 10 | Activate the j$^{th}$ index to be active in $S$, as $S(h_j) = 1$ |
| 11 | Exclude the j$^{th}$ selected index from $\mathbf{L}$, as $\mathbf{L} = \mathbf{L} \backslash \{h_j\}$ |
| 12 | END |
| 13 | END |

*Table 1: Pseudocode for generation of bit string S*

Discovery controller **2710** may be configured to execute the procedure of Table 1 to generate the discovery confirmation message. Discovery controller **2710** may be configured to begin execution of this procedure after identifying the selected responding devices (e.g., after selecting some or all of the detected responding devices as selected responding devices to instruct to mute). Like described above for FIGs. **19-25,** the wireless devices may be assigned device IDs, which are secret identities that can be periodically updated via download from a cloud server. Initiating device **2602** and responding devices **2604-2614** may therefore each be assigned a device ID. Each wireless device may also be configured (e.g., by the cloud server) with a trusted entity list that includes device IDs of trusted devices. When initiating device **2602** receives a discovery response message from a responding device, discovery controller **2710** may be configured to determine the device ID of the responding device (e.g., by determining which device ID in the trusted entity list can produce the same hash value as in the discovery response message).

Accordingly, as shown in Table 1, discovery controller **2710** may start with vector $ID_{DR}$ (the trusted entity list) containing the device IDs of all selected responding devices $ID_{DR,i}$, $i$ = 1, ..., N, where $N$ is the number of selected responding devices (e.g., selected from the overall set of detected responding devices). Discovery controller **2710** may also start with the bit string length $L$ and the number of bits $K$ to be activated for each selected responding device. The values for $L$ and $K$ may be predefined (e.g., by a designer during initial configuration of the devices) or may be adapted over time (e.g., to increase or decrease the size of $S$ or the number of activated bits in $K$ based on the number of responding devices). As shown in Table 1, discovery controller **2710** may first initialize the bit string $S$ as $L$ zeros, namely as $S \leftarrow \mathbf{0}_L$. Bit string $S$ is therefore indexed from 1 to $L$.

Discovery controller **2710** may then iterate through the N selected responding devices. For each $i$th selected responding device, discovery controller **2710** may hash its device ID $ID_{DR,i}$ $K$ times with an independent hash function. The output of these $K$ hash functions gives the bit index to be activated. Discovery controller **2710** may then activate these bit indices in $S$, thus obtaining an $S$ that has $K$ bit positions (given by the hash function) activated for each of the N selected responding devices.

In the example of Table 1, discovery controller **2710** may emulate the output of these $K$ hash functions using a random number generator. In particular, discovery controller **2710** may use $ID_{DR,i}$ to initialize the seed of a pseudorandom generator $g$ and may then extract $K$ random numbers from the random generator $g$, where the resulting $K$ random numbers therefore provide the $K$ hash outputs. As shown in Table 1, discovery controller **2710** may therefore extract $K$

uniform random integers within the $[2^\circ, 2^{32}]$ interval, expressed as $U = g(ID_{DR,i}, K)$ with $U$ being the vector of $K$ integers. In various aspects, discovery controller **2710** can use the full device ID $ID_{DR,i}$ or a reduced presentation (e.g., obtained by hashing $ID_{DR,i}$) as the seed of the random generator $g$.

Discovery controller **2710** may then identify the $K$ bits of $S$ to activate using the random integers $U$. To ensure that the number of activated bits is always $K$ (even in the case where the number of distinct integers is less than $K$), discovery controller **2710** may select the $K$ bits (using $U$) in an iterative manner and, after selection of each bit, may remove the selected bit from an available pool. This may prevent the same bit from being selected again in the next iteration. In other words, even if multiple integers in $U$ are the same, the fact that each bit is removed from the pool before selecting the next bit will prevent the same bit from being selected for activation multiple times. In particular, as shown in Table 1, discovery controller **2710** may initialize a bit selection vector $L$ as the integers $[1, ..., L]$. Discovery controller **2710** may then iterate through the $K$ bit selections. For each jth bit selection, discovery controller **2710** may select the jth bit to activate as $h_j = L(mod(U(j), L + 1 - j))$ (e.g., taking the modulus, base $L + 1 - j$, of the jth integer in $U$ and then using this value as the index to select a value from bit selection vector $L$). Discovery controller **2710** may then activate the jth index (with the bit index in $S$ given by $h_j$) in $S$, namely with $S(h_j)$ - 1. Discovery controller **2710** may then remove this jth index from bit selection vector $L$ via the operation $L = L\{h_j\}$. Discovery controller **2710** may iteratively complete this loop $K$ times, thus activating $K$ bits in $S$ for the ith selected responding device. Discovery controller **2710** may then repeat the iterative loop for all $N$ selected responding devices.

Discovery controller **2710** may then use the resulting bit string $S$ as the payload of the discovery confirmation message. Responding devices **2604-2614** may therefore receive this discovery confirmation message and evaluate the bit string $S$ to determine whether they are selected as selected responding devices (in other words, whether initiating device **2602** successfully received and decoded their discovery response messages and then selected them as selected responding devices). Responding devices **2604-2614** may perform this check by attempting to regenerate a local copy $S_{local}$ of the original bit string $S$, where the local copy $S_{local}$ has bits activated at the indices given by their respective device IDs.

In one example, responding devices **2604-2614** may use the following pseudocode for evaluating the bit string $S$ in the discovery confirmation message:

| Line Number | Code |
| --- | --- |
| 1 | **Input** $(L, K, ID_{DR,i}, S)$ |
| 2 | **Output** (Confirmation if the DR's MSG(2) was detected by the DI) |
| 3 | Initialize the bit string $S_{local}$ with $L$ zeros, as $S_{local} \leftarrow \mathbf{0}_L$ |
| 4 | Initialize the random generator $g$ with $ID_{DR,i}$, as $g(ID_{DR,i})$ |
| 5 | Extract $K$ uniform random integers within the $[2^0, 2^{32}]$ interval, as $U = g(ID_{DR,i}, K)$ |
| 6 | Initialize bit selection vector $L$, as $L \leftarrow 1 \dots L$ |
| 7 | FOR $j: 1 \cdots K$ |
| 8 | Select the jth index to be active in $S_{local}$, as $h_j = L(mod(U(j), L + 1 - j))$ |
| 9 | Activate the jth index to be active in $S_{local}$, as $S_{local}(h_j) = 1$ |
| 10 | Exclude the jth selected index from $L$, as $L = L\backslash\{h_j\}$ |
| 11 | END |
| 12 | Confirm that the DR's MSG(2) was detected by the DI, as $S \otimes S_{local} = S_{local}$ |

*Table 2: Pseudocode for evaluation of bit string S*

Responding devices **2604-2614** may be configured to execute the pseudocode of Table 2 at their respective discovery controllers. Using responding device **2604** as an example, decoder **2808** may receive and decode the discovery confirmation message before providing the discovery confirmation message to discovery controller **2810**. Discovery controller **2810** may then execute the pseudocode of Table 2 on the discovery confirmation message. As shown in Table 2, discovery controller **2810** may start with the bit string length *L*, number of bits *K* to be activated per selected responding device, device ID $ID_{DR,i}$ of responding device **2604,** and bit string *S* (from the payload of the discovery confirmation message). Discovery controller **2810** may then initialize the local bit string $S_{local}$ as a vector of *L* zeros, namely as $S_{local} \leftarrow \mathbf{0}_L$. Discovery controller **2810** may then initialize its own pseudo-random generator *g* with $ID_{DR,i}$ as the seed, or in other words, $g(ID_{DR,i})$. It is assumed that initiating device **2602** and responding devices **2604-2614** are configured with the same pseudo-random generators and, accordingly, will produce the same random integers when initialized with the same seed value.

Discovery controller **2810** may then generate *K* uniform random integers within the $[2°, 2^{32}]$ interval, which may produce vector $U = g(ID_{DR,i}, K)$. As pseudo-random generator *g* is assumed the same as the pseudo-random generator used by initiating device **2602,** this random integer vector *U* should be the same as a random integer vector *U* generated by initiating device **2602** if using the same seed. Accordingly, if initiating device **2602** selected responding device **2604** as a selected responding device, initiating device **2602** will have activated bits in *S* using the same random integer vector *U*. Responding device **2604** may therefore be able to generate local copy $S_{local}$ of the bit string and compare it to the original bit string *S* to see if the same bits are activated.

As shown in Table 2, discovery controller **2810** may initialize bit selection vector *L* as a vector of integers from [1, ..., *L*]. Discovery controller **2810** may then loop over the *K* bits to be activated and, during each *j*th iteration, activate a bit of local copy $S_{local}$ according to the *j*th integer of *U*. In doing so, discovery controller **2810** may attempt to activate the same bits of $S_{local}$ that initiating device **2602** would have activated if responding device **2604** was a selected responding device. Each iteration may therefore follow the same procedure used by initiating device **2602** in the size-*K* loop in the pseudocode of Table 1. In particular, discovery controller **2810** may select an index $h_j$ of $S_{local}$ to activate, where discovery controller **2810** determines $h_j$ using *U* as $h_j = L(mod(U(j), L + 1 - j))$. In other words, discovery controller **2810** may identify the *j*th integer in *U* and use the modulus, base *L* + 1 - *j*, of this integer to select an index of bit selection vector *L*. Discovery controller **2810** may then select *hj* as the integer positioned at this index in *L*. Discovery controller **2810** may then activate the bit at the $h_j$ th position in $S_{local}$, namely as $S_{local}(h_j) = 1$, and may subsequently exclude this index $h_j$ from *L* with the operation $L = L\{h_j\}$.

After performing this loop for all *K* bits to be activated, discovery controller **2810** may obtain local copy $S_{local}$ of the bit string. Discovery controller **2810** may then compare $S_{local}$ to the original bit string *S* to determine whether the same bits are activated. For example, discovery controller **2810** may calculate the XOR of *S* and $S_{local}$. If all activated bits of $S_{local}$ are also activated in *S*, the XOR product $S \otimes S_{local}$ will be equal to $S_{local}$ (as the XOR will produce "1"s at indices of *S* and $S_{local}$ that are both "1" while producing "0"s at all other indices). Discovery controller **2810** may therefore check if the XOR product $S \otimes S_{local}$ is the same as $S_{local}$. If so, discovery controller **2810** may determine that initiating device **2602** selected responding device **2604** as a selected responding device. Discovery controller **2810** may therefore refrain from responding to subsequent discovery procedures from initiating device **2602**. If the XOR product $S \otimes S_{local}$ is not the same as $S_{local}$, discovery controller **2810** may determine that initiating device **2602** did not select responding device **2604** as a selected responding device. Discovery controller **2810** may therefore respond to subsequent discovery procedures from initiating device **2602.**

Use of such bit strings may reduce the size of the discovery confirmation message. However, because there is no restriction preventing activation of the same two bits in *S* for two different selected responding devices, this type of encoding can lead to false positives in some csaes. For example, responding device **2606** may determine that its *K* bits are activated in *S* because initiating device **2602** activated these *K* bits for other selected responding devices. Responding device **2606** may therefore determine that it was selected as a selected responding device when initiating device **2602** did not actually detect responding device **2606** (e.g., did not successfully receive and decode its discovery response message). As a result, responding device **2606** may refrain from responding to subsequent discovery initiation messages from initiating device **2602,** and initiating device **2602** may not detect responding device **2606.** These failed detections can be reduced through proper selection of *K* and *L* given N. The probability of a false positive can be modeled as

$$P_{fp} = \left[1 - \left(1 - \frac{1}{L}\right)^{K \cdot N}\right]^K \approx \left(1 - e^{-\frac{K \cdot N}{L}}\right)^K \geq \left(\frac{1}{2}\right)^{\frac{L}{N}\ln 2}$$

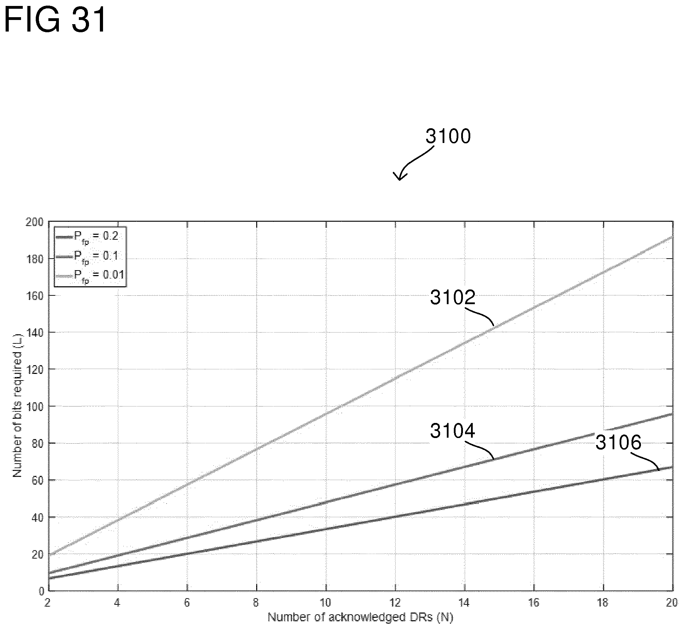

In some aspects, the parameter *L* can be selected based on a desired false positive probability $P_{fp}$. FIG. **31** shows exemplary chart **3100** depicting the required *L* to achieve different $P_{fp}$ targets given the number *N* of selected responding devices (which can be some or all of the detected responding devices). Curve **3102** gives the plot for $P_{fp}$ = 0.01, curve **3104** gives the plot for $P_{fp}$ = 0.1, and curve **3106** gives the plot for $P_{fp}$ = 0.2.

In some aspects, responding devices may be configured to reduce false positives by continuing to respond to discovery initiation messages from initiating device **2602** even after the responding devices determine they are identified in the discovery confirmation message. For example, responding devices **2604-2614** may be configured with a number R of allowed responses, where responding devices **2604-2614** may be configured to perform at least R responses to discovery initiation messages (e.g., transmit discovery response messages in response to at least R discovery initiation messages). This number R of allowed responses would therefore be a tradeoff between the final false positive probability

$$P_{fp,final} = P_{fp}^{R}$$ and the overall system degradation (caused by collisions) due to the R allowed replies.

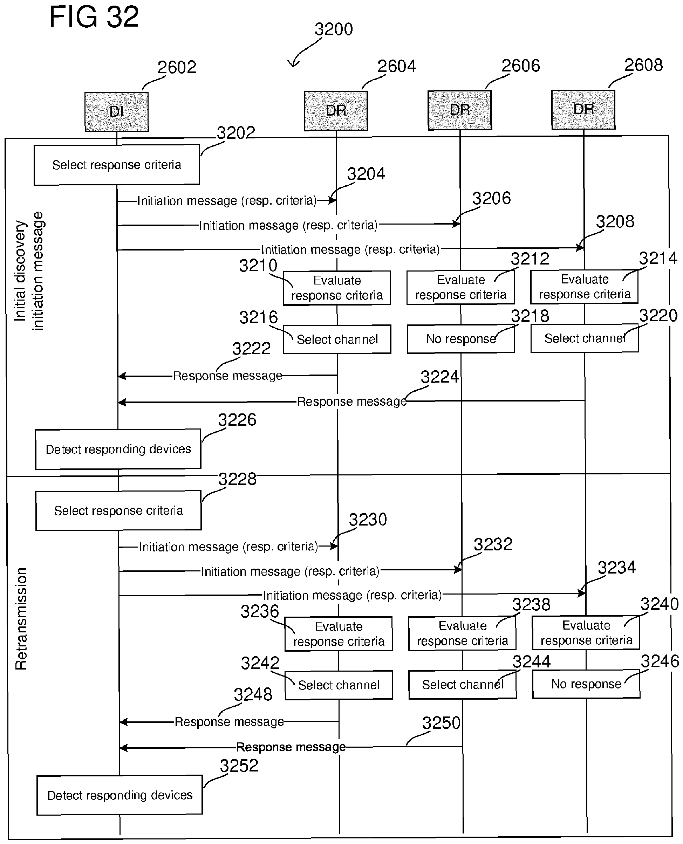

The aspects described above for FIGs. **29-31** relate to an initiator-controlled discovery procedure using dedicated messages and discovery confirmation messages. FIG. **32** shows exemplary message sequence chart **3200** according to some aspects, which illustrates an initiator-controlled discovery procedure using response criteria. Similar to the use of dedicated messages with mute instructions in FIG. **29,** initiating device **2602** may use response criteria to reduce collision probability.

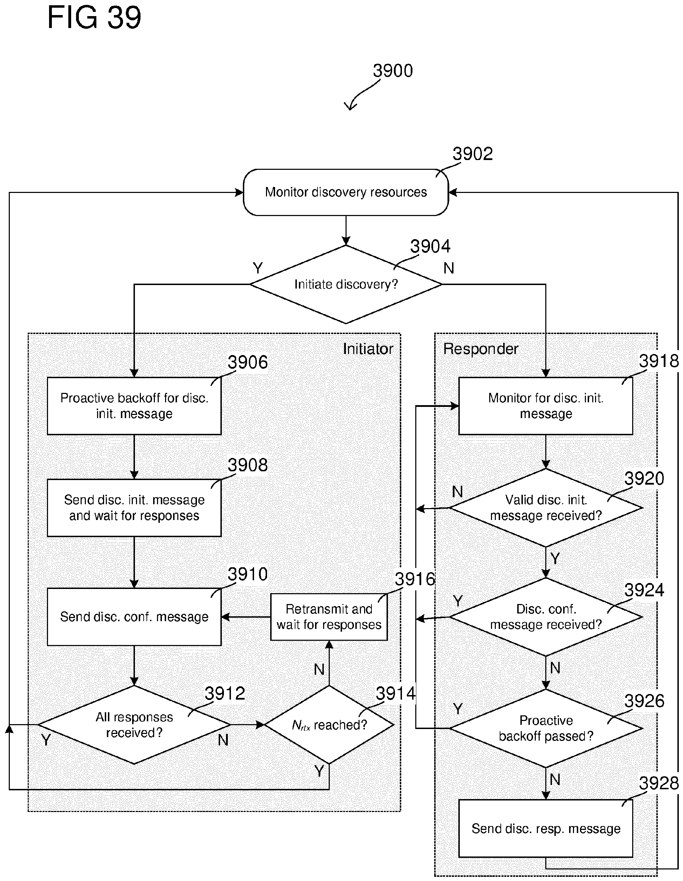

As shown in FIG. **32,** initiating device **2602** may first select a response criteria in stage **3202.** This response criteria may be used by responding devices to decide whether to respond to a discovery initiation message. Accordingly, the response criteria may impact the number of responding devices that respond to a discovery initiation message. In some aspects, initiating device **2602** may use a probability as the response criteria, such as a probability p where $0 < p \leq 1$. In other aspects, initiating device **2602** may use a subset identifier as the response criteria. This subset identifier may identify certain responding devices. As further described below for stages **3210-3214,** responding devices **2604-2608** may use the response criteria to decide whether to respond to a discovery initiation message. This use of probabilities as response criteria is also described in relation to traffic shaping in stages **3908** and **3926** in FIG. **39.**

After selecting the response criteria, initiating device **2602** may generate a discovery initiation message including the response criteria and broadcast the discovery initiation in stages **3204-3208** (which may involve a single broadcast but is shown in separate stages to show that responding devices **2604-2608** receive the broadcast separately). Responding devices **2604-2608** may then receive and decode the discovery initiation messages. Responding devices **2604-2608** may then evaluate the response criteria in the discovery initiation messages in stages **3210-3214** and decide whether to respond to the discovery initiation message.

Using responding device **2604** as an example, decoder **2808** may receive the discovery initiation message via antenna system **2802** and RF transceiver **2804** and then decode the discovery initiation message. Decoder **2808** may then provide the decoded version of the discovery initiation message to discovery controller **2810.** Discovery controller **2810** may then identify the response criteria (e.g., as a field of the discovery initiation message) and evaluate the response criteria in stage **3210.**

For example, as previously indicated the response criteria can be a probability p. Initiating device **2602** can select $p$ (in stage **3202**) depending on whether initiating device **2602** wants more or fewer responding devices to respond. For example, initiating device **2602** can set $p$ to a high value (e.g., $.75 < p \leq 1$) if initiating device **2602** wants more responding devices to respond. Conversely, initiating device **2602** can set $p$ to a low value (e.g., $0 < p \leq .25$) if initiating device **2602** wants fewer responding devices to respond. As lower values of p reduce the number of responding devices, lower values of $p$ can also reduce the collision probability. However, if $p$ is too low, it may take a large number of discovery procedures for a given responding device to respond. Accordingly, discovery latency can be high when $p$ is low.

Discovery controller **2810** of responding device **2604** may therefore identify the probability $p$ specified in the discovery initiation message and then evaluate $p$ in stage **3210** to decide whether to respond. For example, discovery controller **2810** may perform a random check that produces a positive result with a probability of $p$ (e.g., random selection of a number between zero and one that yields a positive result if $p$ is greater than the random number) in stage **3210.** If the random check yields a positive result, discovery controller **2810** may decide to respond to the discovery response message. Conversely, if the random check yields a negative result, discovery controller **2810** may decide not to respond (e.g., to refrain from transmitting a discovery response message in response to the discovery initiation message). Each of responding devices **2604-2608** may perform this random check in stages **3210** based on $p$ to decide whether to respond.

In other aspects, the response criteria may be a subset identifier, or in other words, a criteria that identifies a subset of the responding devices. In one example, the subset identifier may be a preconfigured device group number. For instance, responding devices may be preconfigured with respective device group numbers (e.g., assigned to device groups). When selecting the response criteria in stage **3202,** initiating device **2602** may therefore select a device group number (or multiple group numbers) that identify a set of responding devices. Using responding device **2604** as an example, discovery controller **2810** may evaluate the response criteria in stage **3212** by determining whether responding device **2604** is assigned the device group number (e.g., assigned to the device group identified by the device group number) specified as the response criteria. If so, discovery controller **2810** may decide to respond to the discovery initiation message. Conversely, if responding device **2604** is not assigned the device group number, discovery controller **2801** may decide not to respond to the discovery initiation message.

In another example, the subset identifier may be a device-dependent value (or values). For instance, in one example the device-dependent value may be a modulo operation of a device IP address (e.g., a network address), device ID, or other device information element. For example, when selecting the response criteria in stage **3202,** discovery controller **2710** may select one or more modulo device IP addresses (or modulo device IDs or modulo of another device information element). Discovery controller **2710** may then include these modulo device IP addresses as the response criteria in the discovery initiation message. Then, when discovery controller **2810** of responding device **2604** receives the discovery initiation message, discovery controller **2810** may identify the one or more modulo device IP addresses. In stage **3210,** discovery controller **2810** may then identify the device IP address of responding device **2604** and calculate the modulo (using the same base as used in the response criteria) of this device IP address. Discovery controller **2810** may then compare this modulo device IP address with the modulo IP address from the discovery initiation message. If the modulo device IP address of responding device **2604** matches the modulo IP address from the discovery initiation message, discovery controller **2810** may decide to respond to the discovery initiation message. Discovery controller **2810** may then proceed to select a channel in stage **3216** and transmit a discovery response message in stage **3222.** Otherwise, if the modulo device IP address of responding device **2604** does not match the modulo IP address from the discovery initiation message, discovery controller **2810** may decide not to respond to the discovery initiation message, and may refrain from transmitting a discovery response message. As the modulo device IP address in the discovery initiation message only corresponds to some of the responding devices, using a modulo device IP address as a response criteria may impact the number of responding devices that respond to a discovery initiation message.

Initiating device **2602** and responding devices **2604-2608** may similarly use a modulo device ID or a modulo of other device information elements as device-dependent values of the response criteria. Accordingly, responding devices **2604-2608** may calculate their own device-dependent value and compare it with the device-dependent value (or values) in the discovery initiation message. If the device-dependent value matches the device-dependent value (or any of the device-dependent values) in the discovery initiation message, responding devices **2604-2608** may respond to the discovery initiation message.

Similar to the use of a probability p as the response criteria, initiating device **2602** may be configured to select the subset identifier (device group number or device-dependent value) based on the number of responding devices that initiating device **2602** wants to respond. If there is a dense network scenario with high load and/or many responding devices in its vicinity, initiating device **2602** may select a subset identifier that corresponds to fewer devices, while if there is low load and/or few responding devices in its vicinity, initiating device **2602** may select a subset identifier that corresponds to more devices. This is further described below in stage **3228.**

In the example of FIG. **32,** responding devices **2604** and **2608** may decide to respond to the discovery initiation message while responding device **2606** may decide not to respond to the discovery initiation message. Continuing with the example of responding device **2604,** discovery controller **2810** may generate a discovery response message, select a channel from the plurality of channels pre-allocated for discovery in a second discovery window in stage **3216,** and then transmit the discovery response message on the channel in the second discovery window in stage **3222.** Responding device **2608** may similarly select a channel in stage **3220** and transmit its own discovery response message in stage **3224.** Responding device **2606** may decide not to respond (no response in stage **3218**) and may therefore refrain from transmitting a discovery response message.

Initiating device **2602** may then detect the discovery response messages from responding devices in stage **3226.** As previously described for FIG. **29,** decoder **2708** may decode the signal data for the plurality of channels in the second discovery window and may determine whether any of the plurality of channels contains a valid discovery response message. If so, decoder **2708** may provide the decoded version of the discovery response message to discovery controller **2710.** Discovery controller **2710** may then identity the responding devices that transmitted the discovery response messages (e.g., determine a device identifier included in the discovery response messages), or in other words, may identify responding devices **2604** and **2608.**

As shown in FIG. **32,** initiating device **2602** may then retransmit the discovery initiation message. For example, initiating device **2602** may again select a response criteria in stage **3228.** In some aspects, initiating device **2602** may dynamically select the response criteria based on the number of responding devices that responded to the previous discovery initiation message (or multiple previous discovery initiation messages). For example, discovery controller **2710** of initiating device **2602** may compare the number of responding devices that responded to the previous discovery initiation message to a predefined threshold. If more than the predefined threshold of responding devices responded to the previous discovery initiation message, discovery controller **2710** of initiating device **2602** may update the response criteria to a response criteria that corresponds to fewer responding devices. For example, discovery controller **2710** may reduce the probability p, select a device group number that is assigned to fewer responding devices, select a set of device group numbers that are assigned to fewer responding devices (e.g., if initiating device **2602** is using multiple device group numbers as the response criteria), select a device-dependent value that corresponds to fewer responding devices, or select a set of device-dependent values that correspond to fewer responding devices (e.g., if initiating device **2602** is using multiple device-dependent values as the response criteria). In other words, discovery controller **2710** may update the response criteria to reduce the number of responding devices when the number of responding devices for the previous discovery initiation message is greater than the predefined threshold. Conversely, if the number of responding devices to the previous discovery initiation message is less than the predefined threshold, discovery controller **2710** may update the response criteria to a response criteria that corresponds to more responding devices (or, alternatively, may keep the same response criteria). For example, discovery controller **2710** may increase the probability $p$, select a device group number that is assigned to more responding devices, select a set of device group numbers that are assigned to more responding devices (e.g., if initiating device **2602** is using multiple device group numbers as the response criteria), select a device-dependent value that corresponds to more responding devices, or select a set of device-dependent values that correspond to more responding devices (e.g., if initiating device **2602** is using multiple device-dependent values as the response criteria). In some aspects, discovery controller **2710** may observe the cumulative number of responding devices that respond to multiple previous discovery initiation messages, and may then compare this cumulative number to a threshold to determine how to update the response criteria.

Accordingly, discovery controller **2710** may be configured to dynamically adapt the response criteria in stage **3228** based on the number of responding devices that responded to one or more previous discovery initiation messages. Initiating device **2602** may therefore be able to adapt the response criteria to the collision probability. In other words, as there is a higher collision probability when more responding devices are responding at the same time, initiating device **2602** may reduce the collision probability by reducing the number of responding devices that respond to subsequent discovery initiation messages. Discovery controller **2710** may also be able to increase the number of responding devices when the number of responding devices is low. Although this may increase the collision probability, this may be acceptable as it may allow responding devices to be discovered more quickly (e.g., without having to wait for multiple subsequent discovery initiation messages before responding).

After updating the response criteria in stage **3228,** initiating device **2602** may generate a discovery initiation message including the response criteria and transmit the discovery initiation message in a third discovery window in stages **3230-3234.** Responding devices **2604-2608** may again receive and decode the discovery initiation message and then evaluate the response criteria in stages **3236-3240.** In the example of FIG. **32,** responding devices **2604** and **2606** may decide to respond while responding device **2608** may decide not to respond. Responding devices **2604** and **2606** may select respective channels to respond on and then transmit respective discovery response messages in stages **3248** and **3250.** Responding device **2608** may refrain from transmitting a discovery response message.

In the example of FIG. **32,** responding devices **2604** and **2606** may select different channels and may therefore transmit their respective discovery response messages without collision. Initiating device **2602** may receive these discovery response messages and successfully decode them to detect responding devices **2604** and **2606** in stage **3252.**

Because reducing the number of responding devices that respond to a given discovery initiation message can reduce the collision probability, initiating device **2602** may use the response criteria to avoid excessive collision probabilities. When there are too many responding devices responding to discovery response messages (e.g., more than a predefined threshold), initiating device **2602** may therefore update the response criteria to correspond to fewer responding devices. While it may take multiple retransmissions to detect every responding device, this can still avoid scenarios where there are persistent collisions.

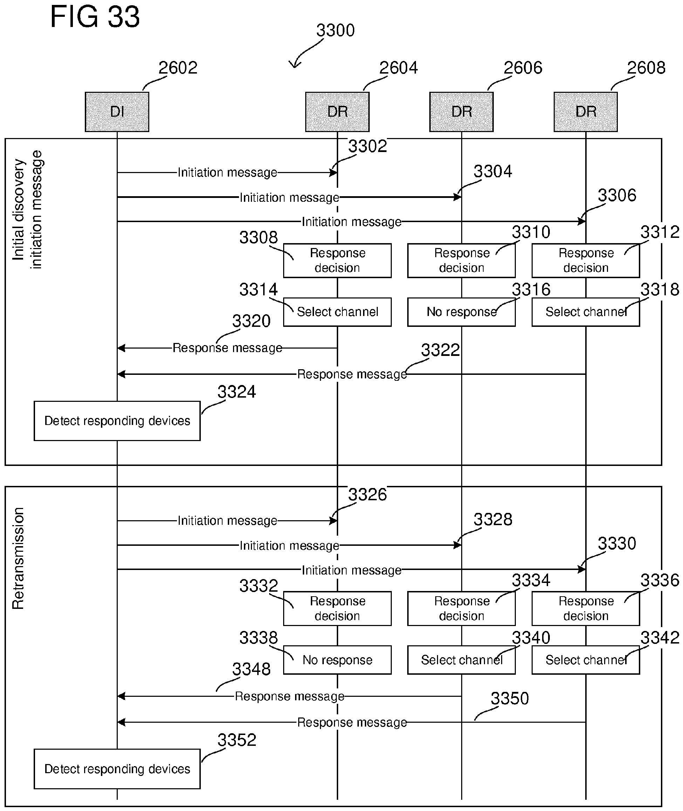

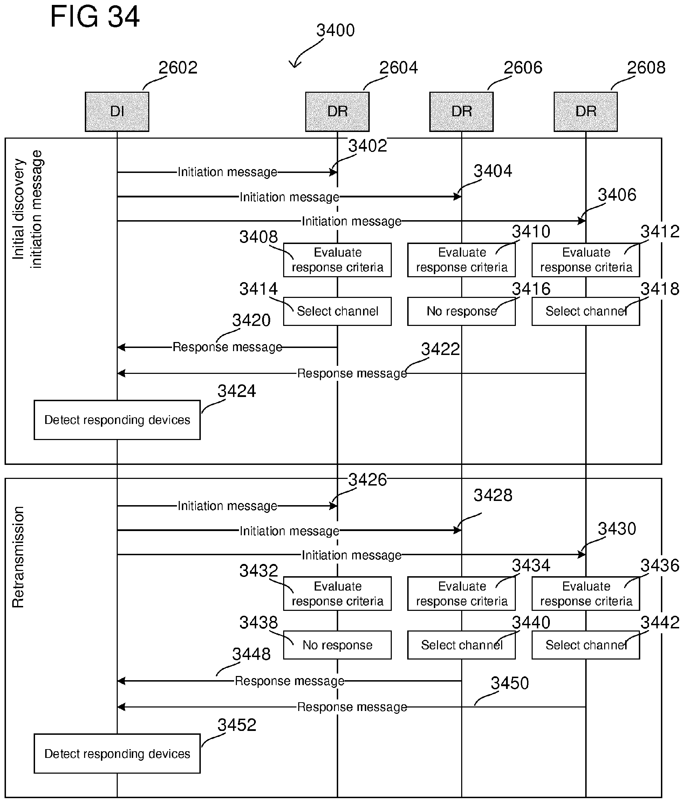

FIGs. **29-32** described exemplary initiator-controlled discovery procedures, namely where initiating device **2602** uses dedicated messages with mute instructions, discovery confirmation messages, or response criteria in discovery initiation messages to reduce the number of responding devices. FIGs. **33** and **34** show exemplary responder-controlled discovery procedures according to some aspects, namely where responding devices use preconfigured probabilities $p_{pre}$ or derived probabilities $p_{der}$ to decide whether or not to respond to a discovery initiation message.

FIG. **33** shows exemplary message sequence chart **3300** according to some aspects, which may be a responder-controlled discovery procedure using preconfigured probabilities $p_{pre}$. As shown in FIG. **33,** initiating device **2602** may broadcast a discovery initiation message in stages **3302-3306.** Responding devices **2604-2608** may then decide whether to respond to the discovery initiation message using their preconfigured probabilities $p_{pre}$ stages **3308-3312.** In some aspects, responding devices **2604-2608** may be configured with the same preconfigured probabilities $p_{pre}$, while in other aspects responding devices **2604-2608** may be configured with different preconfigured probabilities $p_{pre}$. In either case, responding devices **2604-2608** may have a preconfigured probability $p_{pre}$ (with $0 < p_{pre} \leq 1$). In some aspects, responding devices **2604-2608** may periodically update their preconfigured probabilities $p_{pre}$, such as by downloading updated values of $p_{pre}$ from a central network or through a decentralized update process using D2D. In some aspects, responding device **2604-2608** may store the preconfigured probability $p_{pre}$ in a memory accessible by the discovery controller, where the discovery controller may identify the preconfigured probability $p_{pre}$ by retrieving it from the memory when needed.

Using responding device **2604** as an example, discovery controller **2810** may perform a random check that produces a positive result with a probability of $p_{pre}$ (e.g., random selection of a number between zero and one with a positive result if the $p_{pre}$ is greater than the random number) in stage **3308.** If the random check yields a positive result, discovery controller **2810** may decide to respond to the discovery response message. Conversely, if the random check yields a negative result, discovery controller **2810** may decide not to respond (e.g., to refrain from transmitting a discovery response message in response to the discovery initiation message). Responding devices **2606** and **2608** may similarly decide whether to respond based on their preconfigured probabilities $p_{pre}$ in stages **3310** and **3312.**

In the example of FIG. **33,** responding devices **2604** and **2608** may decide to respond while responding device **2606** may decide not to respond. Responding devices **2604** and **2608** may therefore select channels to respond in stages **3314** and **3318.** Responding devices **2604** and **2608** may then generate discovery response messages and transmit the discovery response messages in a second discovery window in stages **3320** and **3322.** In the example of FIG. **33,** responding devices **2604** and **2608** may select different channels and therefore may transmit their discovery response messages without collisions. Initiating device **2602** may then detect responding devices **2604** and **2608** by receiving and successfully decoding their discovery response messages in stage **3324.**

Initiating device **2602** may then retransmit the discovery initiation message. As the preconfigured probabilities $p_{pre}$ are preconfigured, responding devices **2604-2608** may use the same preconfigured probabilities $p_{pre}$. As shown in FIG. **33,** initiating device **2602** may broadcast a discovery initiation message in a third discovery window in stages **3326-3330.** Responding devices **2604-2608** may receive the discovery response message and decide whether to respond based on the preconfigured probabilities $p_{pre}$ in stages **3332-3334.** In the example of FIG. **33,** responding devices **2606** and **2608** may decide to respond while responding device **2604** may decide not to respond. Accordingly, responding devices **2606** and **2608** may select channels in stages **3340** and **3342.** Responding devices **2606** and **2608** may then transmit their discovery response messages in a fourth discovery window in stages **3348** and **3350** while responding device **2604** may refrain from transmitting a discovery response message.

In the example of FIG. **33,** responding devices **2606** and **2608** may select different channels and may transmit their discovery response messages without collisions. Initiating device **2602** may then receive and successfully decode the discovery response messages in stage **3352,** and may consequently detect responding devices **2606** and **2608.**

This use of preconfigured probabilities $p_{pre}$ to control the response probability may help manage collision probabilities, namely by helping to keep the collision probability below excessive levels. Because some responding devices may decide not to respond, the collision probability may be reduced. In some aspects, initiating device **2602** may be configured to control the preconfigured probabilities $p_{pre}$ over time. For example, discovery controller **2710** may periodically update the preconfigured probability $p_{pre}$ and send the updated value of $p_{pre}$ to responding devices **2604-2608** using dedicated messages. Responding devices **2604-2608** may then use the updated value of $p_{pre}$ to decide whether to respond to subsequent discovery initiation messages. In some aspects, discovery controller **2710** may be configured to reduce the value of $p_{pre}$ when more than a predefined threshold of responding devices respond to a discovery initiation message (or multiple previous discovery initiation messages). As described above, this can help prevent the collision probability from reaching excessively high values.

FIG. **34** shows exemplary message sequence chart **3400** according to some aspects, which shows a responder-controlled discovery procedure using derived probabilities $p_{der}$. As opposed to using a preconfigured probability $p_{pre}$, responding devices **2604-2608** may be configured to derive a probability $p_{der}$ based on response criteria observed by responding devices **2604-2608.** Responding devices **2604-2608** may then use this derived probability $p_{der}$ to decide whether or not to respond to discovery initiation messages. Accordingly, the probability that responding devices **2604-2608** respond is based on observed response criteria.

As shown in FIG. **34,** initiating device **2602** may start by broadcasting a discovery initiation message in stages **3402-3406.** Responding devices **2604-2608** may receive the discovery initiation message and then decide whether to respond in stages **3408-3412.** Using responding device **2604** as an example, discovery controller **2810** may use response criteria to decide whether to respond. In various aspects, the response criteria can be received power measurements, the number of received discovery initiation messages in a specific time window, the average interval between received discovery initiation messages, or the frame number in which a discovery response message is scheduled for transmission. Discovery controller **2810** may determine a derived probability $p_{der}$ based on the response criteria and then decide whether to respond based on the derived probability $p_{der}$.

In some aspects where the response criteria is a received power measurement, a measurement engine of responding device **2604** may measure a received signal power (e.g., a received signal strength indicator (RSSI) or other signal power measurement) for initiating device **2602** (e.g., measuring the signal power of the discovery initiation message and/or measuring any other signal transmitted by initiating device **2602**) and provide the received power measurement to discovery controller **2810.** Discovery controller **2810** may then determine the derived probability $p_{der}$ based on the received power measurement. In some aspects, discovery controller **2810** may be configured to determine higher derived probabilities $p_{der}$ for lower received power measurements. As lower received power measurements may indicate that responding device **2604** is farther from initiating device **2602,** this can mean that there is a lower probability that initiating device **2602** successfully decodes a given discovery response message from responding device **2604.** Accordingly, it may be advantageous for responding device **2604** to transmit discovery response messages more frequently (e.g., in a high proportion of discovery procedures). This may in turn mean that responding device **2604** should use a higher derived probability $p_{der}$. In one example, discovery controller **2810** may be configured to compare the received power measurement to a predefined threshold. If the received power measurement is greater than the predefined threshold, discovery controller **2810** may select a first value for the derived probability $p_{der}$; conversely, if the received power measurement is less than the predefined threshold, discovery controller **2810** may select a second value for the derived probability where the second is greater than the first value. In other words, discovery controller **2810** may select a higher derived probability $p_{der}$ when the received power measurement is less than the predefined threshold than when the received power measurement is greater than the predefined threshold.

In another example, responding device **2604** may use the number of received discovery initiation messages in a specific time window as the response criteria. For example, discovery controller **2810** may use a time window of predefined length as the specific time window. Discovery controller **2810** may count the number of discovery initiation messages received from initiating device **2602** during the specific time window. When responding device **2604** is receiving many discovery initiation messages within the specific time window, it may not be as important for responding device **2604** to respond to all or almost all of them. Accordingly, when the number of received discovery initiation messages in the specific time window is high, discovery controller **2810** may be configured to use a lower derived probability $p_{der}$. For example, discovery controller **2810** may be configured to compare the number of received discovery initiation messages in the specific time window to a predefined threshold. When the number of received discovery initiation messages in the specific time window is greater than the predefined threshold, discovery controller **2810** may select a first value as the derived probability $p_{der}$; conversely, when the number of received discovery initiation messages in the specific time window is less than the predefined threshold, discovery controller **2810** may select a second value as the derived probability $p_{der}$, where the second value is greater than the first value. Consequently, discovery controller **2810** may be configured to select a higher value of the derived probability $p_{der}$ when the number of received discovery initiation messages in the specific time window is less than the predefined threshold than when the number of received discovery initiation messages in the specific time window is less than the predefined threshold. In some aspects, discovery controller **2810** may use a rolling time window as the specific time window, such as where discovery controller **2810** periodically checks to count the number of received discovery initiation messages in the last $X$ frames or $Y$ seconds.

In another example, discovery controller **2810** may be configured to use the average interval between received discovery initiation messages as the response criteria. For example, discovery controller **2810** may monitor the time between receipt of discovery initiation messages from initiating device **2602** and may calculate the average interval between received discovery initiation messages. Similar to the above case of number of received discovery initiation messages in a specific time window, when there is a shorter average interval between received discovery initiation messages, it may be less important for responding device **2604** to respond to all or almost all of the discovery initiation messages. Discovery controller **2810** may therefore determine lower derived probabilities $p_{der}$ when the average interval between received discovery initiation messages is shorter. For example, discovery controller **2810** may compare the average interval between received discovery initiation messages to a predefined threshold. When the average interval between received discovery initiation messages is greater than the predefined threshold, discovery controller **2810** may select a first value as the derived probability $p_{der}$; conversely, discovery controller **2810** may select a second value as the derived probability $p_{der}$ when the average interval between received discovery initiation messages is less than the derived probability $p_{der}$, where the second value is less than the first value. In other words, discovery controller **2810** may select a lower derived probability $p_{der}$ when the average interval between received discovery initiation messages is less than the predefined threshold than when the average interval between received discovery initiation messages is greater than the predefined threshold.

In some cases, the number of received discovery initiation messages in the specific time window and the average interval between received discovery initiation messages may also depend on the distance between responding device **2604** and initiating device **2602**. For example, when responding device **2604** is far from initiating device **2602**, responding device **2604** may not successfully detect all of the discovery initiation messages from initiating device **2602** (e.g., decoder **2808** may not successfully decode some discovery initiation messages). As responding device **2604** may not recognize all of the discovery initiation messages, the number of received discovery initiation messages in the specific time window may be lower and the average interval between received discovery initiation messages may be higher (e.g., compared to cases where responding device **2604** recognizes all of the discovery initiation messages). As discussed above, responding device **2604** may select higher derived probabilities $p_{der}$ in these cases.

In another example, responding device **2604** may be configured to use the frame number in which a given discovery response message is scheduled to be transmitted as the response criteria. For example, some responding devices may be configured to transmit discovery response messages only in certain frames while other responding devices are configured to transmit discovery only in other frames. Responding devices may be configured with this information in advance; for example, responding devices may know a preconfigured set of frames in which they are allowed to transmit discovery response messages. The preconfigured set of frames may be a subset of a cyclic schedule of frames that repeats over time. Accordingly, when a given responding device receives a discovery initiation message in a first discovery window, it may only be permitted to transmit a discovery response message in response if the next discovery window is in one of the preconfigured set of frames.

Continuing with responding device **2604** as an example, discovery controller **2810** may identify that the discovery initiation message from initiating device **2602** was received in a first discovery window. Discovery controller **2810** may then determine whether the second discovery window (e.g., the next scheduled discovery window after the first discovery window) is in one of the preconfigured set of frames for responding device **2604.** If so, discovery controller **2810** may decide to respond to the discovery initiation message. If the second discovery window is not one of the preconfigured set of frames, discovery controller **2810** may decide not to respond to the discovery initiation message.

Responding device **2604-2608** may therefore use any of these response criteria to determine whether to respond in stages **3408-3412.** In some aspects, responding devices **2604-2608** may use the same response criteria, while in other aspects responding devices **2604-2608** may use different response criteria. Responding device **2604-2608** may use the response criteria to determine respective response probabilities $p_{der}$ and then decide whether to respond based on their respective response probabilities $p_{der}$. For example, responding devices **2604-2608** may use a random check the produces a positive result with probability $p_{der}$ to decide whether to respond. In the example of FIG. 33, responding devices **2604** and **2608** may decide to respond while responding device **2606** may decide not to respond. Responding devices **2604** and **2608** may therefore select respective channels in stages **3414** and **3418** and transmit their respective discovery response messages in a second discovery window in stages **3420** and **3422.** Responding device **2606** may refrain from transmitting a discovery response message. As shown in FIG. **34,** initiating device **2602** may receive the discovery response messages from responding devices **2604** and **2608** and detect responding devices **2604** and **2608** in stage **3424.**

Initiating device **2602** may then retransmit the discovery initiation message. As shown in FIG. **34,** initiating device **2602** may broadcast a discovery initiation message in a third discovery window in stages **3426-3430.** Responding devices **2604-2608** may then evaluate their response criteria in stages **3432-3436** to decide whether to respond. In some cases, responding devices **2604-2608** may update their response criteria based on new observations. For example, responding devices **2604-2608** may use obtained updated received power measurements, update the number of received discovery initiation messages in a specific time window, update the average interval between received discovery initiation messages, or using a new frame number in which a discovery response message is scheduled for transmission (e.g., the fourth discovery window). Accordingly, the derived probabilities $p_{der}$ used by responding devices **2604-2608** in stages **3432 -3436** may be different from those used in stages **3408-3412.** Responding devices **2604-2608** may again perform a random check using the respective derived probabilities $p_{der}$ to decide whether to respond.

In the example of FIG. **34,** responding devices **2606** and **2608** may decide to respond to the discovery initiation message while responding device **2604** may decide not to respond to the discovery initiation message. Responding devices **2606** and **2608** may therefore select channels in stages **3440** and **3442** and transmit respective discovery response messages in a fourth discovery window in stages **3448** and **3450.** Responding device **2604** may refrain from transmitting a discovery response message. Initiating device **2602** may then receive and successfully decode the discovery response messages from responding devices **2606** and **2608** in stage **3452.**

The various initiator-controlled and responder-controlled discovery procedures described herein provide techniques for devices to reduce collision probabilities. In particular, these techniques may reduce the number of devices that respond to discovery initiation messages, which can in turn reduce the probability that multiple devices select the same channel on which to respond. This can be particularly helpful in scenarios where there is high system load, as the initiating and/or responding devices can adjust their behavior to avoid excessively high collision probabilities. As the likelihood of collisions can be reduced, the initiating and responding devices can decrease discovery latency and reduce power consumption.

D2D networks such as those described above may be uncoordinated, which can lead to stochastic behavior in terms of the number of devices attempting to simultaneously access the available discovery resources. In some scenarios, such as by chance or triggered by a certain event (e.g., a concert, sport event, or other large gathering of people), the number of wireless devices attempting to use discovery resources at a given time (e.g., the allocated discovery channels in a given discovery window) can significantly exceed the capacity of the network. This can lead to outages and denial of service in the affected geographic area. For example, considerable numbers of initiating devices may attempt to initiate discovery at the same time, which may lead to collisions (resulting in interference) between both the discovery initiation messages and the resulting discovery response message. As this can significantly degrade discovery performance, it can be beneficial for D2D networks to control, or shape, the radio resource access of the wireless devices. Through effective shaping of radio resource access, outages can be mitigated and/or avoided entirely.

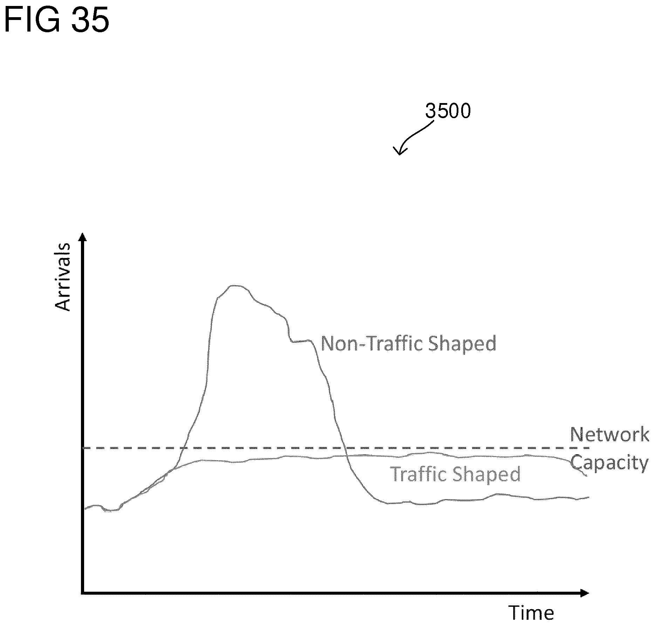

FIG. **35** shows exemplary chart **3500** according to some aspects, which plots an example of network load over time. As shown in FIG. **35,** when traffic is not shaped, there may be a large number of arrivals (e.g., received discovery initiation messages or discovery response messages) during a limited window of time. This may considerably exceed the network capacity and consequently lead to collisions. However, as depicted in FIG. **35,** traffic shaping may be able to control the resource access to remain below the network capacity.

Accordingly, various aspects of this disclosure may apply load estimation and traffic shaping, where the load estimation results are used as input to the traffic shaping mechanism. Wireless devices may therefore be able to dynamically approximate network load and apply traffic shaping measures. Some aspects may be closely related to the initiator-controlled and responder-controlled aspects described above, but may incorporate additional load estimation and traffic shaping techniques therein.

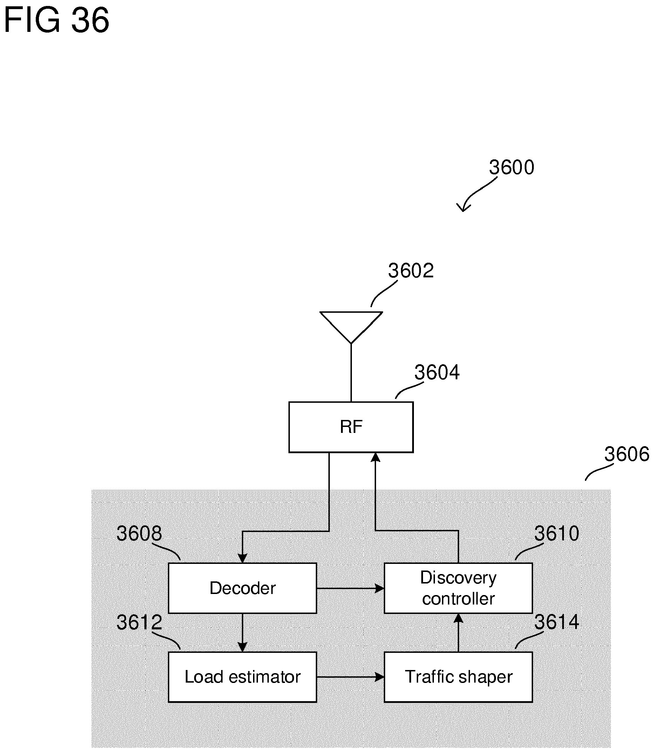

Load estimation will be discussed first, followed by a description of traffic shaping. FIG. **36** shows an exemplary internal configuration of wireless device **3600** according to some aspects, which may be configured to perform load estimation and/or traffic shaping. The configuration shown in FIG. **36** is focused on the load estimation and/or traffic shaping features of wireless device **3600** and therefore may not expressly depict other components of wireless device **3600** that are less directly related thereto. As shown in FIG. **36,** wireless device **3600** may include antenna system **3602,** RF transceiver **3604,** and baseband modem **3606.** In some aspects, antenna system **3602,** RF transceiver **3604,** and baseband modem **3606** may be configured as described above for antenna system **202,** RF transceiver **204,** and baseband modem **206** of terminal device **102.** Accordingly, wireless device **3600** may be configured to transmit and receive wireless signals via antenna system **3602** and RF transceiver **3604.** RF transceiver **3604** may therefore modulate and transmit baseband samples (provided by baseband modem **3606**) via antenna system **3602** in the transmit direction. RF transceiver **3604** may also receive and demodulate radio signals via antenna system **3602** and provide the resulting baseband samples to baseband modem **3606** in the receive direction.

FIG. **36** also depicts several internal components of baseband modem **3606,** including decoder **3608,** discovery controller **3610,** load estimator **3612,** and traffic shaper **3614.** In some aspects, baseband modem **3606** may include a digital signal processor and a protocol controller, e.g., similar to digital signal processor **208** and protocol controller **210** of terminal device **102** in FIG. **2.** In some aspects, the internal components of baseband modem **3606** may therefore be subcomponents of the digital signal processor (e.g., physical layer components) and/or subcomponents of the protocol controller (e.g., protocol stack components).

In some aspects, decoder **3608** and discovery controller **3610** may be configured in the manner described above for decoder **2708/2808** and discovery controller **2710/2810** of initiating device **2602**/responding device **2604.** Accordingly, decoder **3608** may be configured to receive baseband samples via antenna system **3602** and RF transceiver **3604** and to decode the baseband samples to obtain data. Decoder **3608** may then provide the baseband samples to discovery controller **3610,** which may then process and evaluate discovery initiation messages or discovery response messages represented by the data. Discovery controller **3610** may then transmit discovery initiation messages and/or discovery response messages via RF transceiver **3604** and antenna system **3602.**

Load estimator **3612** may be configured to estimate the load on discovery resources. In some aspects, load estimator **3612** may be a processor configured to execute instructions that define the load estimation techniques described below. As shown in FIG. **36,** load estimator **3612** may receive input from decoder **3608,** and may therefore perform load estimation using signal data provided by decoder **3608.** Load estimator **3612** may provide load estimates to traffic shaper **3614,** which may then provide input to discovery controller **3610** to control discovery traffic to or from wireless device **3600.** In some aspects, traffic shaper **3614** may be a processor configured to execute instructions that define the traffic shaping techniques described below.

Various aspects using load estimation can be classified as centralized estimation or decentralized estimation. In centralized estimation, a single wireless device may act as a coordinating device and may estimate the overall number of devices within its coverage area. The coordinating device may then provide this load estimate to other nearby devices. The coordinating device may also provide other services, such as propagating synchronization signals and other important network information (e.g., current frame number and other system information) to the nearby devices. In contrast to centralized estimation, for decentralized estimation individual wireless devices may monitor the occupancy of discovery resources and estimate the load based thereon.

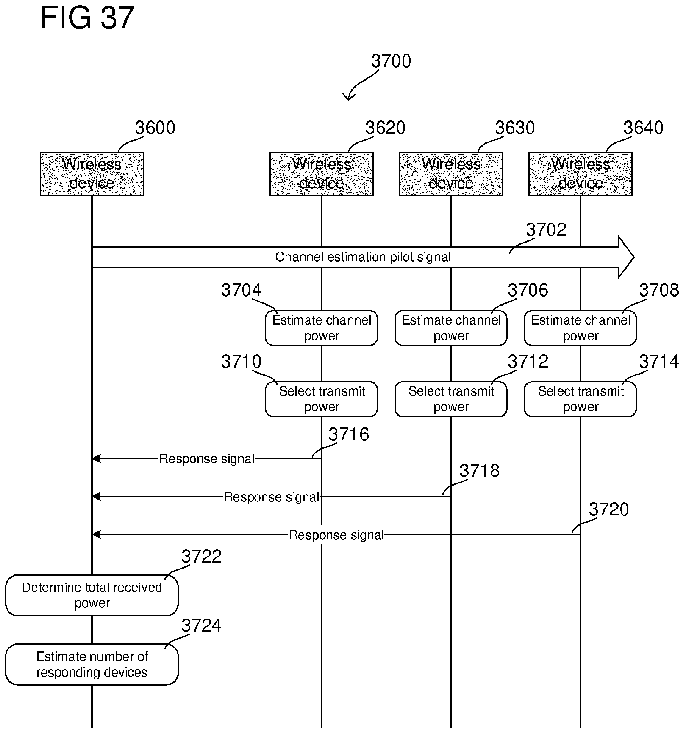

Wireless device **3600** will be used to describe exemplary aspects of both centralized estimation and decentralized estimation, starting first with centralized estimation. In centralized estimation, wireless device **3600** may estimate an upper bound on the number of potentially active devices (e.g., the overall number of proximate wireless devices). FIG. **37** shows exemplary message sequence chart **3700,** which describes centralized estimation according to some aspects. As shown in FIG. **37,** wireless device **3600** may interact with wireless devices **3620, 3630,** and **3640** as part of the centralized estimation. In some aspects, wireless devices **3620-3640** may be configured in the same manner as wireless device **3600** and may accordingly include an antenna system, RF transceiver, and baseband modem (including a decoder, discovery controller, load estimator, and traffic shaper).

Wireless device **3600** may perform centralized estimation by estimating the overall number of proximate wireless devices based on the received power of response signals transmitted by the nearby devices. As shown in FIG. **37,** wireless device **3600** may first transmit a channel estimation pilot signal in stage **3702.** For example, discovery controller **3610** may transmit a channel estimation pilot signal via RF transceiver **3604** and antenna system **3602.** The channel estimation pilot signal may be a predefined training sequence $p$

(e.g., a vector of complex samples) that wireless devices 3620-3640 are preconfigured with knowledge of. Various aspects can use any signal to form the training sequence $p$.

Wireless devices 3620-3640 may then receive the channel estimation pilot signal. Using wireless device 3620 as an example, the decoder of wireless device 3620 may receive the channel estimation pilot signal (via the antenna system and RF transceiver) and may provide the channel estimation pilot signal to the discovery controller. This received channel estimation pilot signal at the ith device can be expressed as

$$y = h_i \cdot \boldsymbol{p} + n$$

where $h_i$ is the channel between wireless device **3600** and the ith device and n is the noise (e.g., additive white Gaussian noise (AWGN).

After receiving the channel estimation pilot signal, wireless devices **3620-3640** may estimate the channel power in stages **3704-3708**. Continuing with the example of wireless device **3620,** the decoder of wireless device **3620** may provide the channel estimation pilot signal to the discovery controller. The discovery controller may then estimate the channel $h_i$ between wireless device **3600** and wireless device **3620** in stage **3704**. For example, the discovery controller may determine a channel estimate $\hat{h}_i$ by calculating

$$\hat{h}_i = y \cdot \boldsymbol{p}^*$$

where $\boldsymbol{p}^*$ is the complex conjugate of the channel estimation pilot signal $\boldsymbol{p}$ (namely, where $\boldsymbol{p} \cdot \boldsymbol{p}^* = 1$). As channel estimation pilot signal $\boldsymbol{p}$ is predefined, the discovery controller may be configured to store $\boldsymbol{p}^*$ (in its local memory) and retrieve $\boldsymbol{p}^*$ during the channel power estimation of stage **3704.**

The discovery controller may then estimate the channel power based on the channel estimate $\hat{h}_i$. For example, the discovery controller may determine the estimated channel power by calculating the magnitude squared of $\hat{h}_i$, namely $|\hat{h}_i|^2$.

After determining the estimated channel power, wireless devices **3620-3640** select transmit powers for response signals in stages **3710-3714**. In particular, the centralized estimation technique may be based on having the responding devices (e.g., wireless devices **3620-3640**) sending response signals that are intended to each be received at wireless device **3600** with a target received power $P_{rx}$. In other words, even though wireless devices **3620** and **3630** may be located at different distances (and have different propagation loss) from wireless device **3600,** wireless devices **3620** and **3640** may be configured to send response signals to wireless device **3600** that are both received by wireless device **3600** with a received power approximately equal to $P_{rx}$. Wireless devices **3620-3640** may therefore be configured to select their respective transmit powers in stages **3710-3714** based on the estimated channel powers $|\hat{h}_i|^2$ and the target received power $P_{rx}$ (e.g., the target received power at wireless device 3600). This is also known as channel inversion-based power control, which aims to control transmit power so the received power at a given receiver is approximately equal to a target received power. Using wireless device **3620** as an example, the discovery controller may select the

$$P_{tx,i} = \frac{P_{rx}}{|\hat{h}_i|^2},$$

transmit power or in other words, by dividing the target received power $P_{rx}$ by the estimated channel power $|\hat{h}_i|^2$. This channel inversion-based power control technique assumes both channel reciprocity (e.g., for Time Division Duplexing (TDD) and that the transmission (e.g., response signal) occurs within the coherence time of the channel (e.g., the time window during which the estimated channel $\hat{h}_i$ is valid). If the transmission occurs outside the coherence time of the channel, the estimated overall number of proximate wireless devices may be inaccurate. In some aspects, this can be addressed by more sophisticated estimation techniques that consider changes in the channels over time based on its channel statistics (e.g., channel variance, among others).

After selecting their respective transmit powers in stages **3710-3714,** wireless devices **3620-3640** may transmit response signals with their respective transmit powers in stages **3716-3720**. Continuing with the example of wireless device **3620,** the discovery controller may transmit a response signal with the selected transmit power $P_{tx,i}$ via the RF transceiver and the antenna system of wireless device **3620**. The response signal may be any type of signal sequence.

Wireless device **3600** may then receive the response signals and determine the total received power in stage **3722**. For example, decoder **3608** may obtain a received signal (via antenna system **3602** and RF transceiver **3604**) that includes all of response signals plus noise and interference. Decoder **3608** may provide this received signal to load estimator **3612,** which may then perform a signal power measurement on the received signal to obtain a total received power $P_{rx,total}$. Assuming that there are N responding device (e.g., $N = 3$ in the example of FIG. **37**) that each optimally select $P_{tx,i}$, the total received power $P_{rx,total}$ can be mathematically expressed as

$$P_{rx,total} = \sum_{i=1}^{N} P_{rx} + \sigma^2$$

where $\sigma^2$ is the noise power at wireless device **3600**. In practice, the responding devices may not optimally select $P_{tx,i}$ and the actual received power for each response signal may not be equal to the target received power $P_{rx}$.

Load estimator **3612** may then estimate the overall number of proximate wireless devices based on the total received power $P_{rx,total}$ in stage **3724**. For example, as the total received power $P_{rx,total}$ is a summation of the individual received powers of each response signal, load estimator **3612** may estimate the overall number of proximate wireless devices by dividing the total received power $P_{rx,total}$ by the target received power $P_{rx}$. Accordingly, load estimator **3612** may obtain an estimated overall number of proximate wireless devices $\hat{N}$ (which estimates $N$) by calculating

$$\widehat{N} = \frac{P_{rx,total}}{P_{rx}}$$

Wireless device **3600** may therefore determine an estimated overall number of proximate wireless devices $\hat{N}$ through execution of message sequence chart **3700**. This estimated overall number of proximate wireless devices $\hat{N}$ may provide a load estimate as it gives the approximate total number of proximate wireless devices around wireless device 3600 (e.g., within communication range). Accordingly, higher values of $\hat{N}$ may indicate higher discovery load (e.g., more collisions) while lower values of $\hat{N}$ may indicate lower discovery load (e.g., fewer collisions). This technique to estimate the overall number of proximate wireless devices is straightforward, and other aspects may use more elaborate estimators that consider side information about the variability of the channel, or in other words, may determine $\hat{N}$ based on the total received power, target received power, and channel variability metrics. This could be beneficial, for example, when channel conditions change quickly (e.g., when the coherence time of the channel is short).

Once load estimator **3612** determines $\hat{N}$, load estimator **3612** may transmit signaling to wireless devices **3620-3640** (the responding devices) that specifies $\hat{N}$. Wireless devices **3620-3640** may then use $\hat{N}$ for traffic shaping, as further described herein. Load estimator **3612** may also provide $\hat{N}$ to traffic shaper **3614,** which may use $\hat{N}$ for traffic shaping (as further described below) at wireless device **3600.**

In some aspects, the target received power $P_{rx}$ may be preconfigured at wireless devices **3620-3640** (e.g., known *a priori*). In other aspects, load estimator **3612** may be configured to adaptively update $P_{rx}$ over time and, after each update, may send the updated value of $P_{rx}$ to the other wireless devices. For example, wireless device **3600** may have an operating range of received signal power levels, which may be defined by a minimum received power $P_{rx,min}$ and a maximum received power $P_{rx,max}$. Wireless device **3600** may obtain accurate estimates of $\hat{N}$ when the total received power $P_{rx,total}$ is between $P_{rx,min}$ and $P_{rx,max}$, or in other words, when

$$P_{rx,min} \leq P_{rx,total} \leq P_{rx,max}$$

Load estimator **3612** may therefore be configured to adapt $P_{rx}$ when it is too low or too high in comparison to $N$. For example, if the total received power $P_{rx,total}$ is greater than the maximum received power $P_{rx,max}$, then there are

$$\widehat{N} = \frac{P_{rx,max}}{P_{rx}}$$

at least $\quad$ responding devices. Load estimator **3612** can therefore obtain more accurate estimates of $N$ by decreasing the target received power $P_{rx}$ (as this will in turn reduce $P_{rx,total}$ assuming $N$ remains constant). Similarly, if the total received power $P_{rx,total}$ is less than the minimum received power $P_{rx,min}$, then load estimator **3612** may not be able to detect any responding devices. Load estimator **3612** can therefore obtain more accurate estimates of $N$ by increasing the target received power $P_{rx}$. In some aspects, load estimator **3612** may increase $P_{rx}$ by a scaling factor $\alpha$ when the total received power $P_{rx,total}$ is less than the minimum received power $P_{rx,min}$ and may decrease $P_{rx}$ by a scaling factor $\alpha^1$ when the total received power $P_{rx,total}$ is greater than the maximum received power $P_{rx,max}$. In some aspects, load estimator **3612** may periodically adapt $P_{rx}$ in this manner, such as by repeatedly updating $P_{rx}$ according to a fixed adaptation period. The adaptation period can be based on the expected speed at which the overall number of proximate wireless devices $N$ changes over time. In some aspects, load estimator **3612** may be configured to execute the following pseudocode (e.g., as software) to update $P_{rx}$ for each adaptation period:

| Line Number | Code |
|---|---|
| | **Input** $(\hat{N}_{previous}, P_{RX,previous}, P_{Rx,min}, P_{Rx,max})$ |
| | **Output** $(\hat{N}, P_{Rx})$ |
| | IF $(\hat{N}_{previous}$ or $P_{RX,previous}$ are not defined) |
| | $\quad P_{Rx,set\_point} = P_{Rx,min} + (P_{Rx,max} - P_{Rx,min})/2$ |
| | $\quad P_{RX,previous} = P_{Rx,set\_point}/\hat{N}_{initial}$ |
| | $\quad \hat{N}_{previous} = \hat{N}_{initial}$ |
| | END |
| | Measure $P_{Rx,total}$ |
| | IF $P_{Rx,total} < P_{Rx,min}$ |
| | $\quad \hat{N} = \hat{N}_{previous}$ |
| | $\quad P_{Rx} = P_{RX,previous} \cdot \alpha$ |
| | ELSEIF $P_{Rx,total} > P_{Rx,max}$ |
| | $\quad \hat{N} = P_{Rx,max}/P_{RX,previous}$ |
| | $\quad P_{Rx} = P_{RX,previous} \cdot \alpha^{-1}$ |
| | ELSE |
| | $\quad \hat{N} = P_{Rx,total}/P_{RX,previous}$ |
| | $\quad P_{Rx} = P_{RX,previous}$ |
| | END |

***Table 3: Pseudocode for adapting*** $P_{Rx}$

In the pseudocode of Table 3, load estimator **3612** may start with the previous estimate $\hat{N}_{previous}$, the previous target received power $P_{rx,previous}$, and the maximum and minimum received powers $P_{rx,min}$ and $P_{rx,max}$. $\hat{N}_{initial}$ is an initialization constant and $\alpha$ is a scaling factor. If $\hat{N}_{previous}$ or $P_{rx,previous}$ are not defined, load estimator **3612** may use a middle setpoint (halfway between $P_{rx,min}$ and $P_{rx,max}$) as $P_{rx,set\_point}$ and may then initialize $\hat{N}_{previous}$ and $P_{rx,previous}$ based on the setpoint $P_{rx,set\_point}$. Load estimator **3612** may then measure the total received power $P_{rx,total}$ and compare $P_{rx,total}$ to $P_{rx,min}$ and $P_{rx,max}$. If $P_{rx,total}$ is less than $P_{rx,min}$, load estimator **3612** may set $\hat{N}$ (for the current estimate) equal to $\hat{N}_{previous}$ and increase the target received power by scaling $P_{rx,previous}$ with scale factor $\alpha$. If $P_{rx,total}$ is greater than $P_{rx,max}$, load estimator **3612** may determine $\hat{N}$ by dividing $P_{rx,max}$ by $P_{rx,previous}$ and may decrease the target received power by scaling $P_{rx,prevoius}$ with scale factor $\alpha^{1}$. If $P_{rx}$ is between $P_{rx,min}$ and $P_{rx,max}$, load estimator **3612** may determine $\hat{N}$ by dividing $P_{rx,max}$ by $P_{rx,previous}$ and may keep the target received power the same (e.g., set $P_{rx}$ equal to $P_{rx,previous}$).

Load estimator **3612** may therefore periodically determine $\hat{N}$ and update $P_{rx}$. After load estimator determines $\hat{N}$ and $P_{rx}$, load estimator **3612** may transmit signaling to the nearby wireless devices (e.g., wireless devices **3620-3640**) that specifies $\hat{N}$ and $P_{rx}$. The wireless devices may then use $\hat{N}$ for traffic shaping and may use $P_{rx}$ when transmitting response signals as part of the centralized estimation. In some aspects, wireless device **3600** may therefore act as a coordinating device for centralized estimation, meaning that wireless device **3600** may perform the load estimation (in determining $\hat{N}$) and provide load estimation results to the other wireless devices.

Wireless devices may also perform decentralized estimation. In decentralized estimation, individual wireless devices monitor the occupancy of the discovery channels and obtain load estimates based on the current discovery load. Accordingly, in contrast to centralized estimation being performed at one coordinating device, multiple (or each) wireless device may perform its own decentralized estimation.

Decentralized estimation will also be described with reference to wireless device **3600**. However, in some aspects the wireless devices that perform decentralized estimation may not perform centralized estimation, and may instead receive the centralized estimation results ($\hat{N}$) from the coordinating devices. For example, wireless devices **3620-3640** may each be configured to perform their own decentralized estimation and then use the centralized and decentralized estimation results to perform traffic shaping.

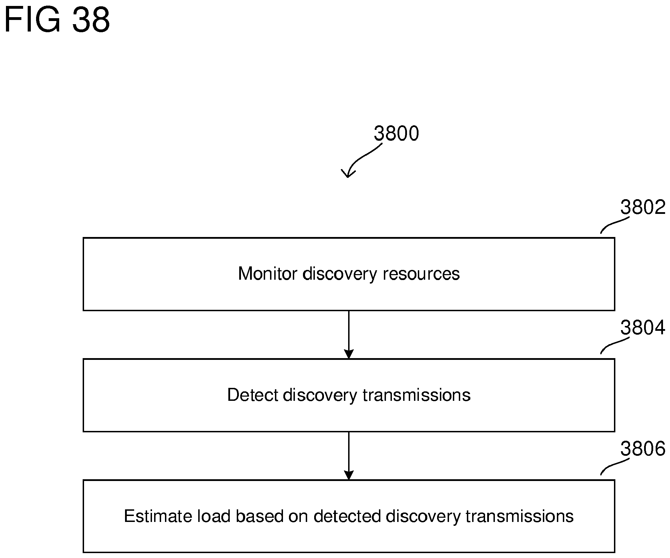

Wireless device **3600** may perform decentralized estimation by monitoring the occupancy of the discovery resources and gathering statistics on the discovery transmissions (e.g., discovery initiation messages and discovery response messages) on the discovery resources. As higher density of discovery transmissions generally means higher load, wireless device **3600** may be able to estimate the load based on the statistics of the discovery transmissions. FIG. **38** shows exemplary method **3800** according to some aspects, which wireless device **3600** may execute to perform load estimation. As shown in FIG. **38,** wireless device **3600** may monitor the discovery resources in stage **3802.** For example, decoder **3608** may tune to the discovery channel or channels allocated for discovery and decode signals on these discovery resources to obtain a bitstream. In aspects where the discovery resources are composed of multiple discovery channels (e.g., multiple subcarriers that each form their own channel), decoder **3608** may be configured to decode signals on each of the discovery channels.

Decoder **3608** may then detect discovery transmissions in the received signals in stage **3804.** In some aspects, decoder **3608** may be a simple receiver (e.g., a simple energy detector) that is only capable of detecting whether or not there is a discovery transmission on a given discovery channel. Accordingly, if there are multiple colliding discovery transmissions on the discovery channel, decoder **3608** may not be able to detect each discovery transmission and may instead only detect that there is at least one discovery transmission. In other aspects, decoder **3608** may be a more complex receiver that is capable of decoding multiple signals from the received signal (which may be a composite signal including multiple discovery transmissions on the discovery channel). For example, decoder **3608** may be a successive interference cancellation (SIC) decoder capable of performing M SIC rounds (and thus capable of detecting up to M discovery transmissions on a discovery channel). If the discovery resources are composed of multiple discovery channels, decoder **3608** may be able to detect up to $M$ discovery transmissions on each of the discovery channels.

Decoder **3608** may then specify the number of detected discovery transmissions to load estimator **3612**. If the discovery resources are composed of multiple discovery channels, decoder **3608** may specify the total number of detected discovery transmissions on all of the discovery channels. Load estimator **3612** may then estimate the load per discovery channel based on the number of detected discovery transmissions in stage **3806**. As each discovery transmission corresponds to a single active device (e.g., a wireless device either transmitting a discovery initiation message or a discovery response message), the number of detected discovery transmissions may directly correspond to the number of active devices. Accordingly, in some aspects load estimator **3612** may estimate the load by determining an estimated number of active devices $S_i$ (where wireless device **3600** is the $i$th device performing decentralized estimation) on each discovery channel. In some aspects, load estimator **3612** may determine $S_i$ by averaging the number of detected discovery transmissions over multiple discovery windows and over each of the multiple discovery channels. The estimated number of active devices $S_i$ may therefore be an average estimated number of active devices per discovery resource. In some aspects, load estimator **3612** may determine $S_i$ as the number (or average number) of detected discovery transmissions. In some aspects, load estimator **3612** may also estimate the number of initiating devices and/or the number of responding devices based on the number of discovery initiation messages and discovery response messages that it detects.

The accuracy of $S_i$ may depend on the aforementioned capabilities of decoder **3608**. For example, if decoder **3608** is a simple energy detector that can detect whether or not there is a discovery transmission, decoder **3608** may only be able to detect zero or one discovery transmissions on each discovery channel, even when there are multiple colliding discovery transmissions. The detected number of discovery transmissions will therefore be lower than the actual number of discovery transmissions. If decoder **3608** is a complex receiver capable of SIC decoding, decoder **3608** may be able to detect between zero to $M$ discovery transmissions on each discovery channel. Decoder **3608** may therefore be able to detect the actual number of discovery transmissions unless the actual number of discovery transmissions is greater than $M.$ The detected number of discovery transmissions, and likewise the estimated number of proximate wireless devices per discovery resource $S_i$, may therefore be more accurate when decoder **3608** is an SIC receiver capable of detecting a high number $M$ discovery transmissions.

In some aspects, load estimator **3612** may additionally or alternatively determine $S_i$ based on channel estimation pilot signals. For example, there may be multiple channel estimation pilot signals available, from which an initiating device can randomly select when transmitting its discovery initiation message. Wireless device **3600** may therefore determine $S_i$ by detecting the channel estimation pilot signals transmitted by wireless devices. For example, decoder **3608** may receive and detect the channel estimation pilot signals via antenna system **3602** and RF transceiver **3604**. Load estimator **3612** may then determine the number of channel estimation pilot signals and determine $S_i$ based thereon.

Wireless devices may use the load estimation results ($\hat{N}$ and $S_i$) to perform traffic shaping for discovery procedures. FIG. **39** shows exemplary state machine **3900,** which depicts the various stages of discovery including traffic shaping according to some aspects. The operations of state machine **3900** will be described with reference to wireless device **3600**. It is assumed that wireless device **3600** has the load estimation results $\hat{N}$ (e.g., obtained by wireless device **3600** or received from a coordinating device) and $S_i$ (e.g., obtained by load estimator **3612**), which traffic shaper **3614** may use to perform the traffic shaping. As further described below, wireless device **3600** may perform traffic shaping in any one or more of stages **3906, 3908, 3910, 3916, 3924,** and **3926**. While each of these stages will be described below in full, these stages are optional in some aspects. Accordingly, wireless device **3600** may perform some or all of the traffic shaping techniques described herein.

As shown in FIG. **39,** wireless device **3600** may first monitor the discovery resources (the discovery channels during scheduled discovery windows) in stage **3902**. Wireless device **3600** may then decide whether wireless device **3600** will initiate discovery or not in stage **3904**. If wireless device **3600** decides to initiate discovery, wireless device **3600** will assume the role of an initiating device and proceed to stage **3906**. Otherwise, wireless device **3600** may assume the role of a responding device and proceed to stage **3918**.

If initiating discovery, wireless device **3600** may perform proactive backoff for transmitting a discovery initiation message in stage **3906**. For example, instead of immediately transmitting a discovery initiation message in the next scheduled discovery window, discovery controller **3610** may first complete a proactive backoff procedure. In some aspects, discovery controller **3610** may first select a random backoff window (e.g., a duration of one or more discovery windows). This use of random backoff windows can help avoid cases where too many initiating devices attempt to transmit discovery initiation messages during the same discovery window (which can cause collisions). Discovery controller **3610** may then wait until the random backoff window expires and identify a first discovery window (e.g., the discovery window scheduled directly after the random backoff window is over).

Discovery controller **3610** may then perform a random check based on an activation probability $P_{DI,activation}$, where the random check has a success probability of $P_{DI,activation}$ and $0 < P_{DI,activation} < 1$. In one example, discovery controller **3610** may draw a random number between zero and one and determine that the random check is successful if $P_{DI,activation}$ is less than the random number.

If the random check is successful, discovery controller **3610** may proceed to stage **3908,** where discovery controller **3610** may transmit the discovery initiation message in the first discovery window. This is further described below. Conversely, if the random check is unsuccessful, discovery controller **3610** may refrain from transmitting the discovery initiation message in the first discovery window. Instead, discovery controller **3610** may identify a second discovery window scheduled after the first discovery window (e.g., the discovery window scheduled directly after the first discovery window). Discovery controller **3610** may then perform a second random check using $P_{DI,activation}$ to determine whether to transmit the discovery initiation message in the second discovery window. If the second random check is successful, discovery controller **3610** may decide to transmit the discovery initiation message in the second discovery window and may proceed to stage **3908.** If the second random check is unsuccessful, discovery controller **3610** may identify a third discovery window scheduled after the second discovery window. Discovery controller **3610** may then perform a third random check to determine whether to transmit the discovery initiation message in the third discovery window. Discovery controller **3610** may continue this process of random checks in subsequent discovery windows until the random check is successful, at which point discovery controller **3610** may proceed to stage **3908** to transmit the discovery initiation message.

In some aspects, traffic shaper **3614** may be configured to determine and update the activation probability $P_{DI,activation}$. For example, traffic shaper **3614** may determine $P_{DI,activation}$ based on the load estimation results $N$ and $S_i$. In one example, traffic shaper **3614** may determine $P_{DI,activation}$ based on $\hat{N}$, $S_i$, the maximum decoding capacity $\alpha$ of decoder **3608** (e.g., the maximum number $M$ of layers supported in SIC decoding), and/or the number of discovery channels available in the discovery resources $M_{init\_msg}$ (e.g., the number of discovery channels allocated in a discovery window). In some aspects, traffic shaper **3614** may be configured to execute the following pseudocode to determine $P_{DI,activation}$

| Line Number | Code |
|---|---|
| 1 | **Input** $(B_{i-1}, S_i, \widehat{N})$ |
| 2 | **Output** $(B_i, P_{DI,activation})$ |
| 3 | IF $S_i < \alpha$ |
| 4 | $B_i = B_{i-1} - \alpha$ |
| 5 | ELSE |
| 6 | $B_i = B_{i-1} + S_i \cdot \beta$ |
| 7 | END |
| 8 | $P_{DI,activation} = \dfrac{\alpha \cdot M_{init\_msg}}{\min(B_i, \widehat{N})}$ |

*Table 4: Pseudocode for determining $P_{DI,activation}$*

As shown in the pseudocode of Table 4, traffic shaper **3614** may compare $S_i$ to $\alpha$ (e.g., to the maximum number of layers $M$ that decoder **3608** can decode). If $S_i$ is less than $\alpha$, traffic shaper **3614** may set the number of backlogged devices $B_i$ (e.g., the average number of devices on a discovery channel that decoder **3608** cannot decode) equal to the difference between the previous number of backlogged devices $B_i$ (from the last execution of the pseudocode to determine $P_{DI,activation}$) and $\alpha$ (the maximum number of layers that decoder **3608** can decode). If $S_i$ is greater than $\alpha$, traffic shaper **3614** may set $B_i$ equal to $B_{i-1}$ plus the product of $S_i$ and $\beta$, where $\beta$ is an overestimation factor for the number of backlogged devices $B_i$. The parameter $\beta$ may therefore tune how aggressive the initial random backoff is. Traffic shaper **3614** may then determine the minimum of the number of backlogged devices $B_i$ and the estimated overall number of proximate wireless devices $\hat{N}$ (e.g., number of active wireless devices detected by the coordinating device during centralized estimation). Traffic shaper **3614** may then set $P_{DI,activation}$ equal to $\dfrac{\alpha \cdot M_{init\_msg}}{\min(B_i, \widehat{N})}$, and may provide $P_{DI,activation}$ to discovery controller **3610**. Discovery controller **3610** may then use this $P_{DI,activation}$ to perform the random checks in stage **3906**. In some aspects, traffic shaper **3614** may periodically update $P_{DI,activation}$, such as whenever an updated value for $\hat{N}$ or $S_i$ is obtained.

Use of this proactive backoff may help to spread discovery initiation messages over time, which can help prevent excessive numbers of initiating devices from transmitting discovery initiation messages. This can help reduce collisions and interference and avoid outages. The parameter $\beta$ can be used to influence this spreading over time. For example, larger values of $\beta$ can spread discovery access more over time but at the cost of higher access latency (e.g., initiating devices may need to wait longer to transmit a discovery initiation message). Furthermore, in some aspects traffic shaper **3614** may select $P_{DI,activation}$ to prioritize access to initiating devices with higher user priority. For example, traffic shaper **3614** may increase $P_{DI,activation}$ (e.g., relative to the initially obtained value) if wireless device **3600** has an emergency or low battery, including even setting $P_{DI,activation}$ equal to one. Wireless device **3600** may therefore be able to reduce the access latency.

After completing proactive backoff in stage **3906**, wireless device **3600** may send the discovery initiation message and wait for discovery response messages in stage **3908**. In some aspects, wireless device **3600** may employ traffic shaping as part of stage **3908**. This traffic shaping may be similar to the use of response criteria in discovery initiation messages as described above in FIG. **32**. For example, traffic shaper **3614** may be configured to determine an activation probability $P_{DR,activation}$ based on the load estimation and to provide this activation probability $P_{DR,activation}$ to discovery controller **3610**. Discovery controller **3610** may then include the activation probability $P_{DR,activation}$ as a response criteria in the discovery initiation message. As previously described for responding devices **2604-2608** in FIG. **32**, responding devices that receive the discovery initiation message may then use the activation probability to perform a random check to determine whether or not to respond with a discovery response message. This is also described below regarding stage **3926**.

Traffic shaper **3614** may base the activation probability $P_{DR,activation}$ on the load estimation results $\hat{N}$ and $S_i$. Accordingly, traffic shaper **3614** may be able to monitor the load on the discovery resources (at its location) and can control the amount of responding devices for each discovery initiation message. In doing so, traffic shaper **3614** may also control network load. In some aspects, traffic shaper **3614** may also use the number of devices that it wants to discover (presence discovery with friend list) to determine $P_{DR,activation}$, such as to improve the load estimation. in some aspects, traffic shaper **3614** may use the number of devices it wants to discover (e.g., a predefined value) instead of the load estimate $\hat{N}$.

In one example, traffic shaper **3614** may execute the following pseudocode to determine $P_{DR,activation}$

| **Line Number** | **Code** |
|---|---|
| 1 | **Input** $(B_{i-1}, S_i, \widehat{N})$ |
| 2 | **Output** $(B_i, P_{DR,activation})$ |
| 3 | IF $S_i < \alpha$ |
| 4 | $B_i = B_{i-1} - \alpha$ |
| 5 | ELSE |
| 6 | $B_i = B_{i-1} + S_i \cdot \beta$ |
| 7 | END |
| 8 | $P_{DR,activation} = \dfrac{\alpha \cdot M_{resp\_msg}}{\min(B_i, \widehat{N}) \cdot \widehat{N}_{DR}}$ |

***Table 5: Pseudocode for determining*** $P_{DR,activation}$

As shown in Table 5, traffic shaper **3614** may start with the previous number of backlogged devices $B_{i-1}$ and the load estimation results $S_i$ and $\hat{N}$. Traffic shaper **3614** may then compare $S_i$ to $\alpha$, which is the maximum decoding capacity of decoder **3608** (e.g., the maximum number of supported SIC layers $M$). If $S_i$ is less than $\alpha$ (e.g., there are more active devices than decoder **3608** can support), traffic shaper **3614** may set the number of backlogged devices $B_i$ to $B_{i-1}$ - $\alpha$. Otherwise, traffic shaper **3614** may set the number of backlogged devices $B_i$ to $B_{i-1}$ + $S_i \cdot \beta$, where $\beta$ is an overestimation factor that tunes how aggressive the initial random backoff is. Traffic shaper **3614** may then determine

the minimum of $B_i$ and $\hat{N}$ and set $P_{DR,activation}$ to $\dfrac{\alpha \cdot M_{resp\_msg}}{\min(B_i, \hat{N}) \cdot \hat{N}_{DR}}$, where $M_{resp\_msg}$ is the number of discovery channels allocated in a discovery window and $\hat{N}_{DR}$ is the estimated average number of DRs transmitting on each discovery channel (e.g., determined as part of decentralized estimation). Traffic shaper **3614** may therefore provide this $P_{DR,activation}$ to discovery controller **3610,** which may then include $P_{DR,activation}$ as the response criteria in the discovery initiation message.

After transmitting the discovery initiation message in stage **3908,** discovery controller **3610** may receive discovery response messages from responding devices (e.g., via antenna system **3602,** RF transceiver **3604,** and decoder **3608**). Discovery controller **3610** may therefore detect the responding devices from which discovery response messages are successfully received.

In some aspects, discovery controller **3610** may then identify one or more selected responding devices from the detected responding devices and subsequently transmit a discovery confirmation message (or, alternatively, dedicated messages with mute instructions) to the one or more selected responding devices in stage **3910.** This may follow the same procedure described above for FIGs. **30** and **31.** In some aspects, traffic shaper **3614** may determine a number of detected responding devices to select based on the load estimation results $S_i$ and $\hat{N}$, such as where traffic shaper **3614** selects a larger number when $S_i$ and $\hat{N}$ are above a certain threshold. Traffic shaper **3614** may provide this number to discovery controller **3610,** which may then identify the one or more selected responding devices based on the number. Traffic shaper **3614** may therefore perform traffic shaping by influencing the number of responding devices that are instructed to refrain from responding to subsequent discovery initiation messages.

Wireless device **3600** may then determine in stage **3912** whether a sufficient number of responding devices have been detected. For example, discovery controller **3610** may compare the number of detected responding devices to a threshold, and may determine that a sufficient number have been detected if the number of detected responding devices is greater than the threshold. If discovery controller **3610** determines that a sufficient number of responding devices were detected, discovery controller **3610** may end the current discovery procedure and return to stage **3902.** Otherwise, discovery controller **3610** may proceed to stage **3914.**

In some aspects, wireless device **3600** may be configured to perform a maximum number of retransmissions $N_{rtx}$. Wireless device **3600** may therefore repeatedly transmit the discovery initiation message up to $N_{rtx}$ times. Discovery controller **3610** may therefore determine in stage **3914** whether discovery controller **3610** has performed $N_{rtx}$ retransmissions (in the current discovery procedure). If so, discovery controller **3610** may end the current discovery procedure and return to stage **3902.** Otherwise, discovery controller **3610** may proceed to stage **3916** to perform the next retransmission of the discovery initiation message.

In some aspects, wireless device **3600** may perform traffic shaping with retransmissions in stage **3916.** For example, the stochastic nature of the wireless channel (e.g., occurrence of deep fading) coupled with the uncoordinated behavior of D2D networks (e.g., where devices transmit independently and are more likely to interfere with each other) can lead to unreliable reception and decoding of discovery initiation and response messages. Accordingly, discovery controller **3610** may perform retransmissions that are finite in number but also account for reception failures due to both interference and the occurrence of deep fades.

For example, discovery controller **3610** may perform a first set of retransmissions that address failures due to interference as well as a second set of retransmissions that address failures due to deep fades in the channel. The number of retransmissions in the first set is given as $N_{rtx,1}$ and the number of retransmissions in the second set is given as $N_{rtx,2}$, where $N_{rtx,1} + N_{rtx,2} = N_{rtx}$. In this example, discovery controller **3610** may perform the first set of retransmissions using random checks based on an activation probability $P_{rtx,activation}$. Similar to the activation probabilities discussed above, the activation probability $P_{rtx,activation}$ may influence the likelihood that discovery controller **3610** performs a retransmission in a given discovery window. For example, discovery controller **3610** may perform the initial transmission of the discovery initiation message in an initial discovery window (e.g., after performing a random backoff and completing a random check). Discovery controller **3610** may then begin performing the $N_{rtx,1}$ retransmissions in the first set of retransmissions. In particular, discovery controller may perform a first random check to determine whether to perform a first retransmission of the discovery initiation message in a first discovery window scheduled after the initial discovery window (e.g., the discovery window scheduled directly after the initial discovery window). In particular, discovery controller **3610** may perform a random check using $P_{rtx,activation}$ (e.g., having a probability of success equal to $P_{rtx,activation}$) and, if the random check is successful, may perform the retransmission in the first discovery window. If the random check is not successful, discovery controller **3610** may refrain from performing the retransmission in the first discovery window. Discovery controller **3610** may then identify a second discovery window scheduled after the first discovery window and perform a second random check to determine whether to perform the retransmission in the second discovery window. Discovery controller **3610** may continue to perform random checks to decide whether to perform a retransmission in a series of discovery windows until a random check is successful, after which discovery controller **3610** may perform the retransmission in the corresponding discovery window. After performing the first retransmission, discovery controller **3610** may perform the same procedure with a second retransmission in the first set of retransmissions. In other words, discovery controller **3610** may perform random checks to determine whether to perform the second retransmission in each of a sequence of scheduled discovery windows and may perform the second retransmission once a random check is successful for a given discovery window. Discovery controller **3610** may repeat this procedure until all of the first set of retransmissions are performed.

In some aspects, traffic shaper **3614** may determine activation probability $P_{rtx,activation}$ in the same manner as activation probability $P_{DI,activation}$. Optionally, $P_{rtx,activation}$ may be equal to $P_{DI,activation}$. Accordingly, traffic shaper **3614** may periodically update the value of both $P_{rtx,activation}$ may be equal to $P_{DI,activiation}$ with the same procedure, such as the one described above in the pseudocode of Table 5. After determining $P_{rtx,activation}$, traffic shaper **3614** may provide $P_{rtx,activation}$ to discovery controller **3610** for use in the traffic shaping of stage **3916.**

Once discovery controller **3610** performs all $N_{rtx,1}$ retransmissions in the first set of retransmissions, discovery controller **3610** may begin performing the $N_{rtx,2}$ retransmissions in the second set of retransmissions. While randomizing the retransmissions using a random check for each discovery window may be effective in countering interference, this may not be as effective for countering deep fading. Accordingly, discovery controller **3610** may use a different approach for the second set of retransmissions. For example, for each retransmission in the second set of retransmissions, discovery controller **3610** may select a random backoff window. The backoff windows may increase in duration for each retransmission, which may assist in addressing deep fading. In one example, discovery controller **3610** may select a random backoff window for a first retransmission of the second set of retransmissions. Discovery controller **3610** may then wait until the random backoff window is over, after which discovery controller **3610** may perform the first retransmission. Discovery controller **3610** may then select a random backoff window for a second retransmission of the second set of retransmissions, and may perform the second retransmission after the random backoff window is over. Discovery controller **3610** may continue in this manner until all $N_{rtx,2}$ retransmissions in the second retransmission are completed. The maximum backoff window may progressively increase for each retransmission, and discovery controller **3610** may therefore select, on average, larger random backoff windows as more retransmissions are done.

In one example, discovery controller **3610** may be configured to select the random backoff window by performing a uniform random selection of discovery windows within a maximum backoff window $W_{max,i}$ for the ith retransmission (out of $N_{rtx,2}$ total retransmissions). For example, assuming the previous retransmission occurred in a *g*th discovery window, discovery controller **3610** may select a random backoff window that expires prior to a *j*th discovery window, where discovery controller **3610** can perform the next retransmission in the *j*th discovery window. This can be expressed as

$$j = g + \left\lceil U(0,1) \cdot W_{max,i} \right\rceil$$

where $W_{max,i}$ is the maximum backoff window and $U(0,1)$ is a uniform random number between zero and one. The maximum backoff window $W_{max,i}$ is given as

$$W_{max,i} = W_{max,1} \cdot \gamma^{\eta(i-1)}$$

where $W_{max,1}$ is the initial backoff window and $\gamma$ and $\eta$ are parameters controlling how aggressive the backoff window increases between retransmissions. The parameter *i* gives the ongoing number of retransmissions performed in the second set of retransmisisons.

Discovery controller **3610** may therefore, for each of the second set of retransmissions, determine $W_{max,i}$ based on $W_{max,1}$, parameters $\gamma$ and $\eta$, and the number *i* of previous retransmissions in the second set of retransmissions. Discovery controller **3610** may then select a random backoff window based on $W_{max,i}$ that ends prior to a *g*th discovery window. Discovery controller **3610** may then wait until this random backoff window is over and perform the next retransmission in the *g*th discovery window.

In some aspects, traffic shaper **3614** may be configured to perform traffic shaping by determining $W_{max,1}$ and parameters $\gamma$ and $\eta$ based on how aggressive the backoff window size increases should be. For example, $\gamma = 2$ and $\eta = 1$ lead to a quadratic increase in the successive backoff windows. Discovery may therefore have higher latency (as the retransmissions are spaced further apart) but may be less susceptible to deep fading (as the deep fading may subside between retransmissions).

After each retransmission, wireless device **3600** may wait for responses and then return to stage **3910** to (optionally) send a discovery confirmation message to one or more selected responding devices. This functionality is described above for FIGs. **30** and **31**. Wireless device **3600** may then check whether a sufficient number of responses have been received in stage **3912** and, if not, proceed back to stage **3914**. Wireless device **3600** may continue performing retransmissions until all of the first and second sets of retransmissions are completed or until a sufficient number of responses are received. Wireless device **3600** may then end the current discovery procedure and return to stage **3902.**

As shown in FIG. **39,** wireless device **3600** may also be configured to perform traffic shaping when operating as a responding device. If operating as a responding device, wireless device **3600** may begin by monitoring for discovery initiation messages in stage **3918**. This includes monitoring the discovery resources (discovery channels during discovery windows), such as where decoder **3608** receives and decodes signals on the discovery resources and provides the resulting bitstream to discovery controller **3610**.

Discovery controller **3610** may evaluate the bitstream to identify discovery initiation messages in the discovery resources. When discovery controller **3610** identifies a discovery initiation message, discovery controller **3610** may evaluate the discovery initiation message in stage **3920** to determine whether the discovery initiation message is valid. For example, discovery controller **3610** may identify a hash value in the discovery initiation message that is based on the device ID of the initiating device. As previously described above for FIGs. **19-26,** discovery controller **3610** may then determine whether any device ID in its trusted entity list can produce a candidate hash value that matches the hash value in the discovery initiation message. If so, discovery controller **3610** may determine that the discovery initiation message is valid and then proceed to stage **3924**. If not, discovery controller **3610** may determine that the discovery initiation message is not valid and may return to stage **3918**.

In stage **3924,** discovery controller **3610** may (optionally) determine whether a discovery confirmation message (or, alternatively, a dedicated message with a mute instruction) was received that identified wireless device **3600** as a selected responding device. If so, discovery controller **3610** may determine that wireless device **3600** has already been detected by the initiating device, and should therefore refrain from responding to the discovery initiation message. Discovery controller **3610** may then return to stage **3918**. This may therefore be part of the traffic shaping, as wireless device **3600** may be following the traffic shaping decisions of the initiating device. If no discovery confirmation message identifying wireless device **3600** was received (and no dedicated message with a mute instruction was received), discovery controller **3610** may proceed to stage **3926**. In some aspects, discovery controller **3610** may be configured to perform a maximum number of allowed responses $R$, or in other words, may respond to $R$ retransmissions of the discovery initiation message. As previously described regarding FIG. **30,** this may help to prevent false positives that can occur due to special types of encoding used in the discovery confirmation messages.

In stage **3926,** discovery controller **3610** may (optionally) perform a proactive backoff based on an activation probability $P_{DR,activation}$ included as response criteria in the discovery initiation message. As described above for stage **3908** and Table 5, the initiating device may determine an activation probability $P_{DR,activation}$ based on the load estimation results and may include $P_{DR,activation}$ as a response criteria in the discovery initiation message. Discovery controller **3610** may therefore identify $P_{DR,activation}$ and perform a random check based on $P_{DR,activation}$ to determine whether to transmit a discovery response message in response to the discovery initiation message. In one example, discovery controller **3610** may perform a random check with a success probability equal to $P_{DR,activation}$, such as by selecting a random number between zero and one and determining a successful random check if $P_{DR,activation}$ is greater than the random number. If the random check is successful, discovery controller **3610** may decide to transmit a discovery response message in response to the discovery initiation message and may proceed to stage **3928**. If the random check is not successful, discovery controller **3610** may return to stage **3918**.

In stage **3928,** discovery controller **3610** may transmit a discovery response message to the initiating device. Discovery controller **3610** may then return to stage **3902**. If the initiating device retransmits the discovery initiation message, wireless device **3600** may receive and process the discovery initiation message according to stages **3918-3928**.

As previously indicated, wireless devices may use some or all of these traffic shaping features to help manage collisions and interference during discovery. These traffic shaping features may be based on load estimation, which can be performed by wireless devices in a centralized or decentralized manner.

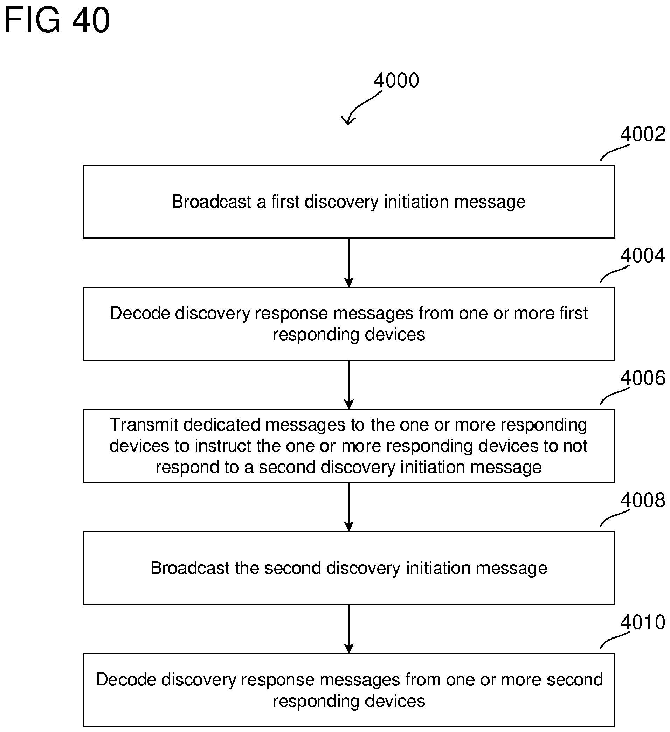

FIG. **40** shows exemplary method **4000** of performing discovery at a wireless device according to some aspects. As shown in FIG. **40,** method **4000** includes broadcasting a first discovery initiation message (**4002**), decoding discovery response messages from one or more first responding devices, transmitting dedicated messages to the one or more responding devices to instruct the one or more responding devices to not respond to a second discovery initiation message (**4004**), broadcasting the second discovery initiation message (**4006**), and decoding discovery response messages from one or more second responding devices (**4008**).

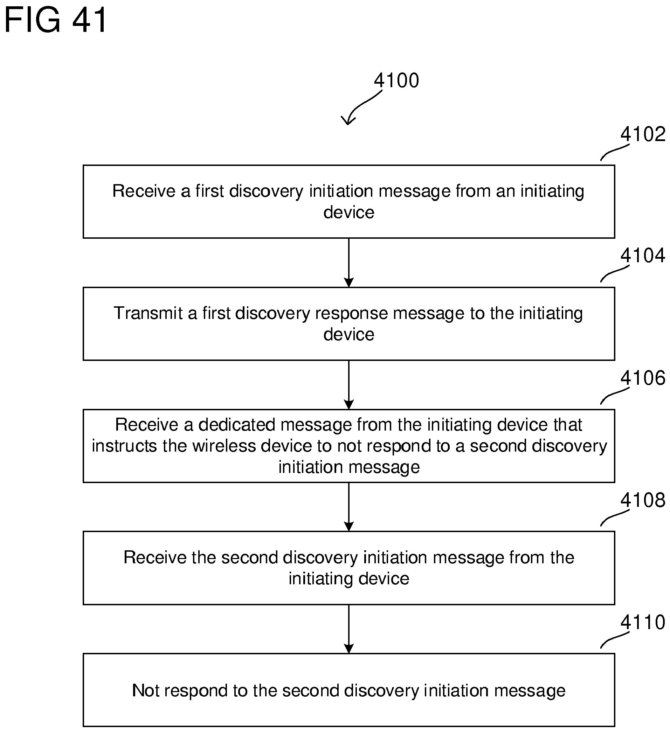

FIG. **41** shows exemplary method **4100** of performing discovery at a wireless device according to some aspects. As shown in FIG. **41,** method **4100** includes receiving a first discovery initiation message from an initiating device (**4102**), transmitting a first discovery response message to the initiating device (**4104**), receiving a dedicated message from the initiating device that instructs the wireless device to not respond to a second discovery initiation message (**4106**), receiving the second discovery initiation message from the initiating device (**4108**), and not responding to the second discovery initiation message (**4110**).

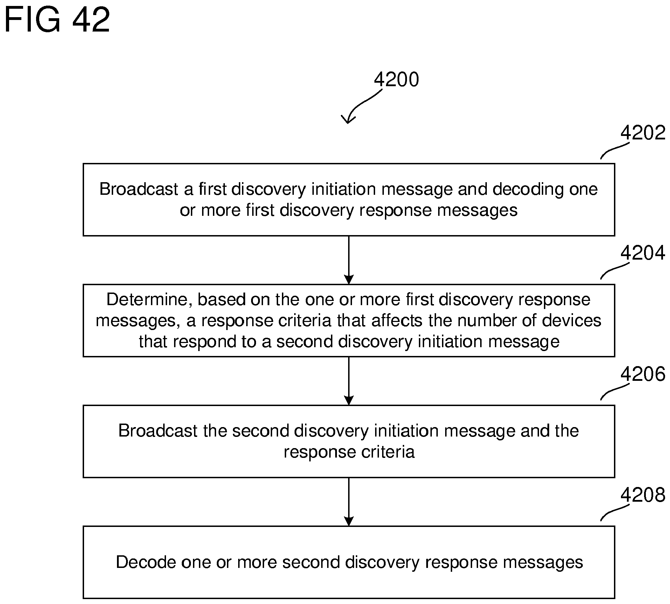

FIG. **42** shows exemplary method **4200** of performing discovery at a wireless device according to some aspects. As shown in FIG. **42,** method **4200** includes broadcasting a first discovery initiation message and decoding one or more first discovery response messages (**4202**), determining, based on the one or more first discovery response messages, a response criteria that affects the number of devices that respond to a second discovery initiation message (**4204**), broadcasting the second discovery initiation message and the response criteria (**4206**), and decoding one or more second discovery response messages (**4208**).

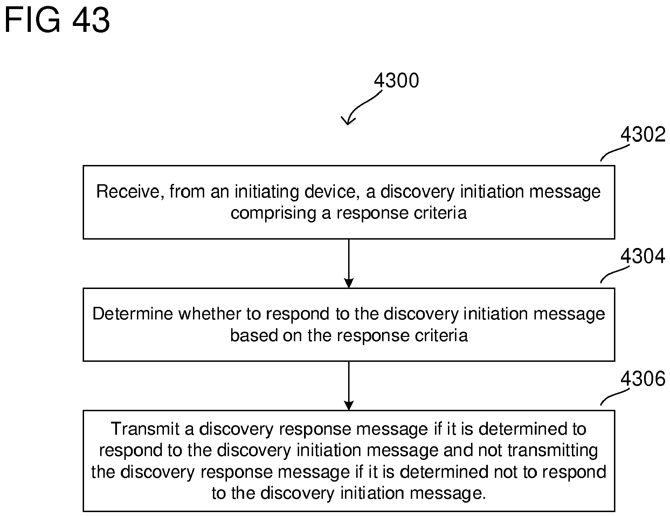

FIG. **43** shows exemplary method **4300** of performing discovery at a wireless device according to some aspects. As shown in FIG. **43,** method **4300** includes receiving, from an initiating device, a discovery initiation message including a response criteria (**4302**), determining whether to respond to the discovery initiation message based on the response criteria (**4304**), and transmitting a discovery response message if it is determined to respond to the discovery initiation message and not transmitting the discovery response message if it is determined not to respond to the discovery initiation message (**4306**).

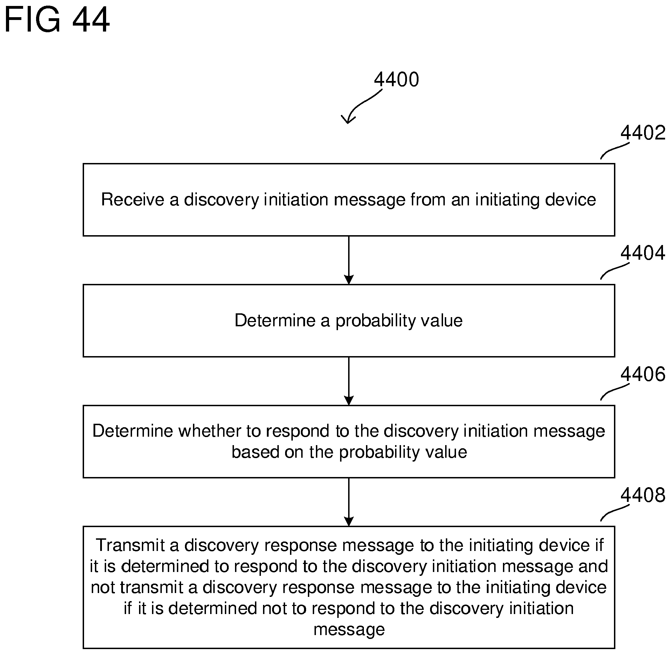

FIG. **44** shows exemplary method **4400** of performing discovery at a wireless device according to some aspects. As shown in FIG. **44,** method **4400** includes receiving a discovery initiation message from an initiating device (**4402**), determining a probability value (**4404**), determining whether to respond to the discovery initiation message based on the probability value (**4406**), and transmitting a discovery response message to the initiating device if it is determined to respond to the discovery initiation message, and not transmitting a discovery response message to the initiating device if it is determined not to respond to the discovery initiation message (**4408**).

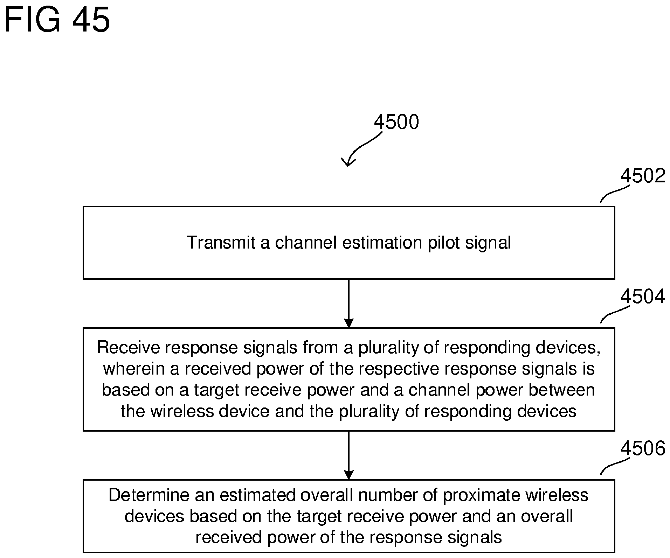

FIG. **45** shows exemplary method **4500** of performing wireless communications at a wireless device. As shown in FIG. **45,** method **4500** includes transmitting a channel estimation pilot signal (**4502**), receiving response signals from a plurality of responding devices (**4504**), wherein a received power of the respective response signals is based on a target receive power and a channel power between the wireless device and the plurality of responding devices, and determining an estimated overall number of proximate wireless devices based on the target receive power and an overall received power of the response signals (**4506**).

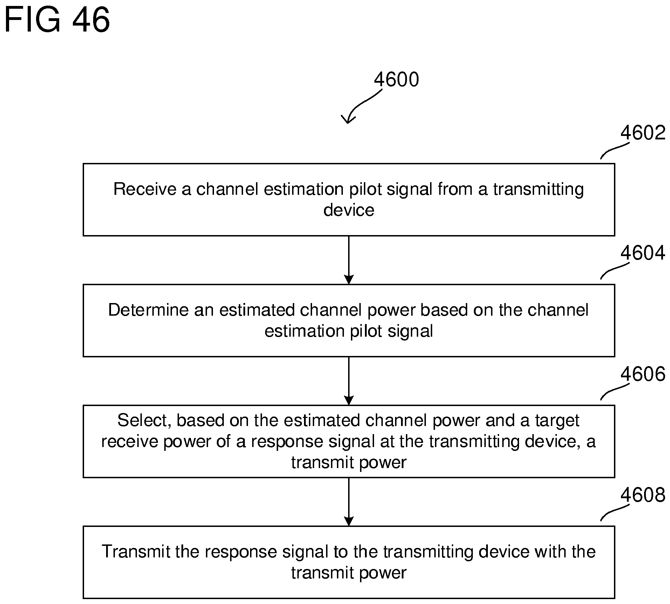

FIG. **46** shows exemplary method **4600** of performing wireless communications at a wireless device. As shown in FIG. **46,** method **4600** includes receiving a channel estimation pilot signal from a transmitting device (**4602**), determining an estimated channel power based on the channel estimation pilot signal (**4604**), selecting, based on the estimated channel power and a target receive power of a response signal at the transmitting device, a transmit power (**4606**), and transmitting the response signal to the transmitting device with the transmit power (**4608**).

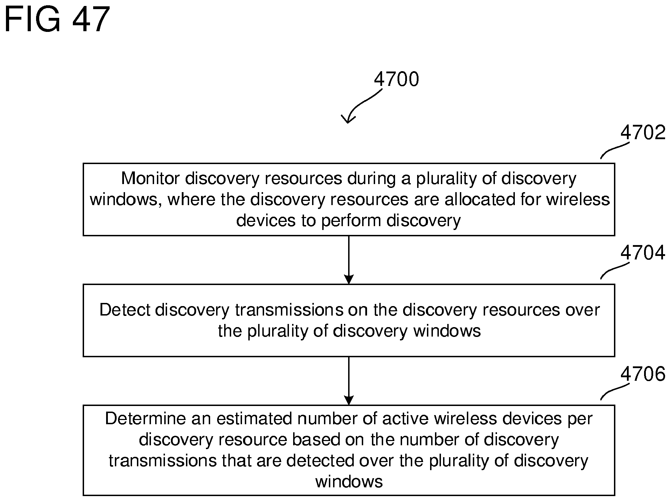

FIG. **47** shows exemplary method **4700** of performing wireless communications at a wireless device. As shown in FIG. **47,** method **4700** includes monitoring discovery resources during a plurality of discovery windows (**4702**), where the discovery resources are allocated for wireless devices to perform discovery, detecting discovery transmissions on the discovery resources over the plurality of discovery windows (**4704**), and determining an estimated number of active wireless devices per discovery resource based on the number of discovery transmissions that are detected over the plurality of discovery windows (**4706**).

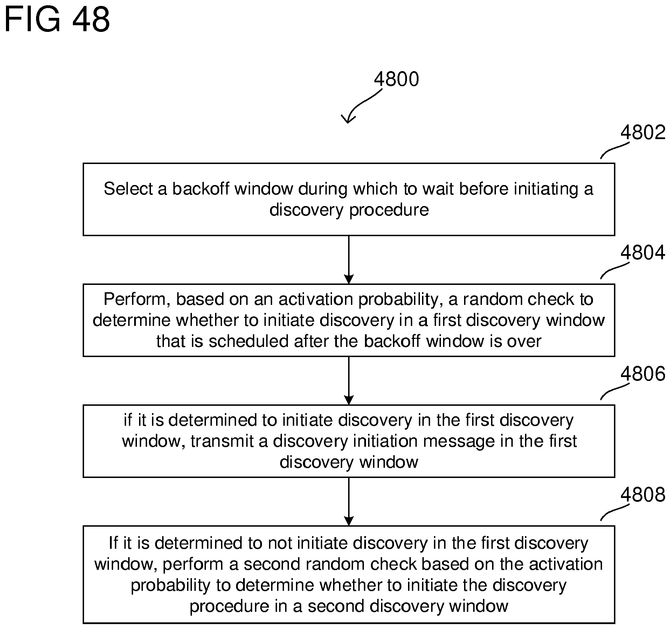

FIG. **48** shows exemplary method **4800** of performing wireless communications at a wireless device. As shown in FIG. **48,** method **4800** includes selecting a backoff window during which to wait before initiating a discovery procedure (**4802**), performing, based on an activation probability, a random check to determine whether to initiate discovery in a first discovery window that is scheduled after the backoff window is over (**4804**), if it is determined to initiate discovery in the first discovery window, transmitting a discovery initiation message in the first discovery window (**4806**), and if it is determined to not initiate discovery in the first discovery window, performing a second random check based on the activation probability to determine whether to initiate the discovery procedure in a second discovery window (**4808**).

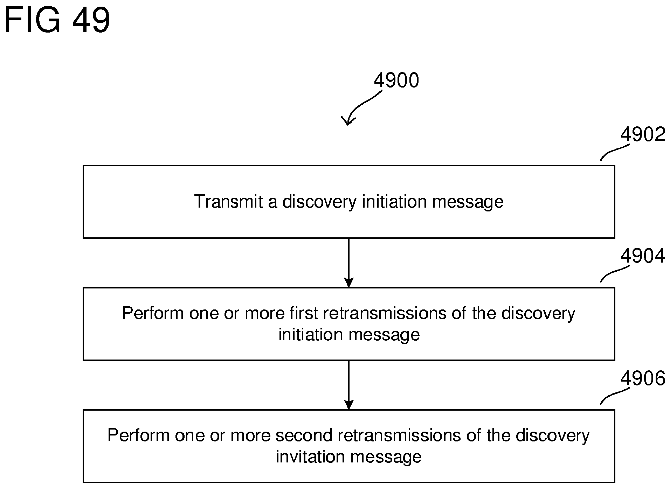

FIG. **49** shows exemplary method **4900** of performing wireless communications at a wireless device. As shown in FIG. **49,** method **4900** includes transmitting a discovery initiation message (**4902**), and performing one or more first retransmissions of the discovery initiation message (**4904**) by, for each respective retransmission of the one or more first retransmissions: performing a first random check to determine whether to perform the respective retransmission at a first discovery window and, if it is determined to not perform the respective retransmission, performing a second random check to determine whether to perform the respective retransmission at a second discovery window, the method further including performing one or more second retransmissions of the discovery invitation message (**4906**) by, for each respective retransmission of the one or more second retransmissions: selecting a random backoff window based on a number of retransmissions of the discovery initiation message prior to the respective retransmission, and performing the respective retransmission after the random backoff window is over.

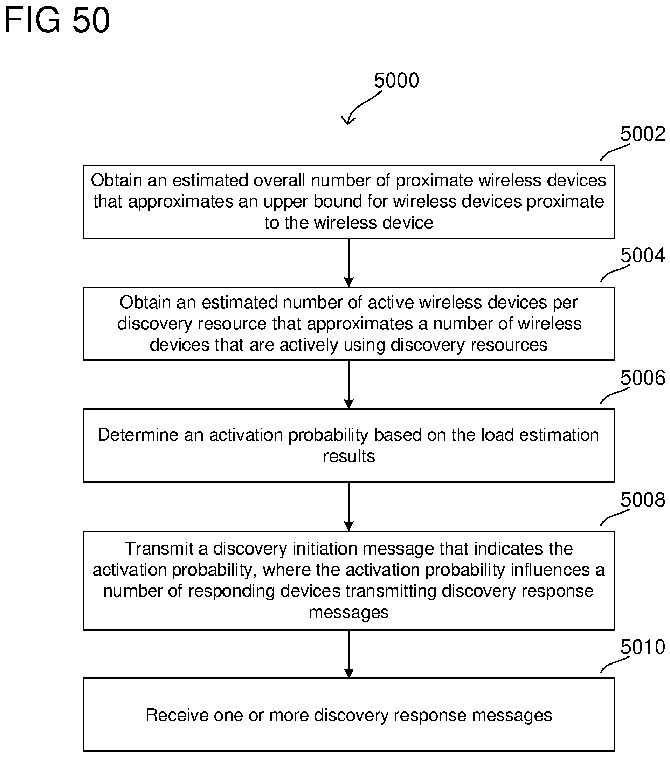

FIG. **50** shows exemplary method **5000** of performing wireless communications at a wireless device. As shown in FIG. **50,** method **5000** includes obtaining an estimated overall number of proximate wireless devices that approximates an upper bound for wireless devices proximate to the wireless device (**5002**), obtaining an estimated number of active wireless devices per discovery resource that approximates a number of wireless devices that are actively using discovery resources (**5004**), determining an activation probability based on the load estimation results (**5006**), transmitting a discovery initiation message that indicates the activation probability (**5008**), where the activation probability influences a number of responding devices transmitting discovery response messages, and receiving one or more discovery response messages (**5010**)

In some aspects, initiating device **2602** may be characterized as a wireless device including a discovery controller (e.g., discovery controller **2710**) configured to broadcast a first discovery initiation message, and a decoder (e.g., decoder **2708**) configured to decode discovery response messages from one or more first responding devices, the discovery controller further configured to transmit one or more dedicated messages to the one or more first responding devices to instruct the one or more first responding devices to refrain from responding to a second discovery initiation message, and to broadcast the second discovery initiation message, the decoder further configured to decode discovery response messages from the one or more second responding devices. In some aspects, initiating device **2602** may be characterized as a wireless device including a radio frequency transceiver (e.g., RF transceiver **2704**) and one or more antennas (e.g., antenna system **2702**), and one or more processors (e.g., decoder **2708** and discovery controller **2710**) configured to transmit and receive signals via the radio frequency transceiver and the one or more antennas, the one or more processors further configured to broadcast a first discovery initiation message, decode discovery response messages from one or more first responding devices, transmit dedicated messages to the one or more responding devices to instruct the one or more responding devices to refrain from responding to a second discovery initiation message, broadcast the second discovery initiation message, and decode discovery response messages from one or more second responding devices.

In some aspects, responding device **2604** may be characterized as a wireless device including a decoder (e.g., decoder **2808**) configured to receive a first discovery initiation message from an initiating device, and a discovery controller (e.g., discovery controller **2810**) configured to transmit a first discovery response message to the initiating device, the decoder further configured to receive a dedicated message from the initiating device that instructs the wireless device to refrain from responding to a second discovery initiation message, and further configured to receive the second discovery initiation message from the initiating device, and the discovery controller further configured to refrain from responding to the second discovery initiation message. In some aspects, responding device **2604** may be characterized as a wireless device including a radio frequency transceiver (e.g., RF transceiver **2804)** and one or more antennas (e.g., antenna system **2802**), and one or more processors (e.g., decoder **2808** and discovery controller **2810**) configured to transmit and receive signals via the radio frequency transceiver and the one or more antennas, the one or more processors further configured to receive a first discovery initiation message from an initiating device, transmit a first discovery response message to the initiating device, receive a dedicated message from the initiating device that instructs the wireless device to refrain from responding to a second discovery initiation message, receive the second discovery initiation message from the initiating device, and refrain from responding to the second discovery initiation message.

In some aspects, initiating device **2602** may be characterized as a wireless device including a discovery controller (e.g., discovery controller **2710**) configured to broadcast a first discovery initiation message, and a decoder (e.g., decoder **2708**) configured to decode one or more first discovery response messages, the discovery controller further configured to determine, based on the one or more first discovery response messages, a response criteria that impacts the number of responding devices that respond to a second discovery initiation message, and to broadcast the second discovery initiation message and the response criteria, the decoder further configured to decode one or more second discovery response messages. In some aspects, initiating device 2602 may be characterized as a wireless device including a radio frequency transceiver (e.g., RF transceiver 2704) and one or more antennas (e.g., antenna system 2702), and one or more processors (e.g., decoder 2708 and discovery controller **2710**) configured to transmit and receive signals via the radio frequency transceiver and the one or more antennas, the one or more processors further configured to broadcast a first discovery initiation message and decode one or more first discovery response messages, determine, based on the one or more first discovery response messages, a response criteria that impacts the number of devices that respond to a second discovery initiation message, broadcast the second discovery initiation message and the response criteria, and decode one or more second discovery response messages.

In some aspects, responding device **2604** may be characterized as a wireless device including a decoder (e.g., decoder **2808**) configured to receive, from an initiating device, a discovery initiation message including a response criteria, and a discovery controller (e.g., discovery controller **2810**) configured to determine whether to respond to the discovery initiation message based on the response criteria, transmit a discovery response message if it is determined to respond to the discovery initiation message, and refrain from transmitting the discovery response message if it is determined not to respond to the discovery initiation message. In some aspects, responding device **2604** may be characterized as a wireless device including a radio frequency transceiver (e.g., RF transceiver **2804**) and one or more antennas (e.g., antenna system **2802**), and one or more processors (e.g., decoder **2808** and discovery controller **2810**) configured to transmit and receive signals via the radio frequency transceiver and the one or more antennas, the one or more processors further configured to receive, from an initiating device, a discovery initiation message including a response criteria, determine whether to respond to the discovery initiation message based on the response criteria, and transmit a discovery response message if it is determined to respond to the discovery initiation message and refrain from transmitting the discovery response message if it is determined not to respond to the discovery initiation message.

In some aspects, responding device **2604** may be characterized as a wireless device including a decoder (e.g., decoder **2808**) configured to receive a discovery initiation message from an initiating device, and a discovery controller (e.g., discovery controller **2810**) configured to determine a probability value, determine whether to respond to the discovery initiation message based on the probability value, and transmit a discovery response message to the initiating device if it is determined to respond to the discovery initiation message, and refrain from transmitting a discovery response message to the initiating device if it is determined not to respond to the discovery initiation message. In some aspects, responding device **2604** may be characterized as a wireless device including a radio frequency transceiver (e.g., RF transceiver **2804)** and one or more antennas (e.g., antenna system **2802**), and one or more processors (e.g., decoder **2808** and discovery controller **2810**) configured to transmit and receive signals via the radio frequency transceiver and the one or more antennas, the one or more processors further configured to receive a discovery initiation message from an initiating device, determine a probability value, determine whether to respond to the discovery initiation message based on the probability value, and transmit a discovery response message to the initiating device if it is determined to respond to the discovery initiation message, and refrain from transmitting a discovery response message to the initiating device if it is determined not to respond to the discovery initiation message.

In some aspects, wireless device **3600** may be characterized as a wireless device including a discovery controller (e.g., discovery controller **3610**) configured to transmit a channel estimation pilot signal, a decoder (e.g., decoder **3608**) configured to receive response signals from a plurality of responding devices, wherein a received power of the respective response signals is based on a target receive power and a channel power between the wireless device and the plurality of responding devices, and a load estimator (e.g., load estimator 3612) configured to determine an estimated overall number of proximate wireless devices based on the target receive power and an overall received power of the response signals.

In some aspects, wireless device **3600** may be characterized as a wireless device including a decoder (e.g., decoder **3608**) configured to receive a channel estimation pilot signal from a transmitting device, a load estimator (e.g., load estimator **3612**) configured to determine an estimated channel power based on the channel estimation pilot signal, and to select, based on the estimated channel power and a target receive power of a response signal at the transmitting device, a transmit power, and a discovery controller (e.g., discovery controller **3610**) configured to transmit the response signal to the transmitting device with the transmit power.

In some aspects, wireless device **3600** may be characterized as a wireless device including a decoder (e.g., decoder **3608**) configured to monitor discovery resources during a plurality of discovery windows, where the discovery resources are allocated for wireless devices to perform discovery, and further configured to detect discovery transmissions on the discovery resources over the plurality of discovery windows, and a load estimator (e.g., load estimator **3612**) configured to determine an estimated number of active wireless devices per discovery resource based on the number of discovery transmissions that are detected over the plurality of discovery windows.

In some aspects, wireless device **3600** may be characterized as a wireless device including a discovery controller (e.g., discovery controller **3610**) configured to perform, based on an activation probability, a random check to determine whether to initiate discovery in a first discovery window that is scheduled after the backoff window is over, if it is determined to initiate discovery in the first discovery window, transmit a discovery initiation message in the first discovery window, and if it is determined to not initiate discovery in the first discovery window, perform a second random check based on the activation probability to determine whether to initiate the discovery procedure in a second discovery window.

In some aspects, wireless device **3600** may be characterized as a wireless device including a discovery controller (e.g., discovery controller **3610**) configured to transmit a discovery initiation message, and perform one or more first retransmissions of the discovery initiation message by, for each respective retransmission of the one or more first retransmissions performing a first random check to determine whether to perform the respective retransmission at a first discovery window and, if it is determined to not perform the respective retransmission, performing a second random check to determine whether to perform the respective retransmission at a second discovery window, the device controller further configured to perform one or more second retransmissions of the discovery invitation message by, for each respective retransmission of the one or more second retransmissions selecting a random backoff window based on a number of retransmissions of the discovery initiation message prior to the respective retransmission, and performing the respective retransmission after the random backoff window is over.

In some aspects, wireless device **3600** may be characterized as a wireless device including a traffic shaper (e.g., traffic shaper **3614**) configured to obtain an estimated overall number of proximate wireless devices that approximates an upper bound for wireless devices proximate to the wireless device, obtain an estimated number of active wireless devices per discovery resource that approximates a number of wireless devices that are actively using discovery resources, and determine an activation probability based on the load estimation results, a discovery controller (e.g., discovery controller **3610**) configured to transmit a discovery initiation message that indicates the activation probability, where the activation probability influences a number of responding devices transmitting discovery response messages, and a decoder (e.g., decoder **3608**) configured to receive one or more discovery response messages. In some aspects, wireless devices in a decentralized network (such as D2D) may provide an emergency message dissemination scheme. In such a scheme, wireless devices may broadcast and/or relay emergency messages to other wireless devices. This can include dissemination of emergency messages that originate locally from a wireless device (e.g., when a user activates an alarm or call for help) or emergency messages that originate from a cellular network (e.g., emergency messages for natural disasters). Wireless devices may therefore use D2D signaling to disseminate the emergency messages throughout a decentralized network of wireless devices.

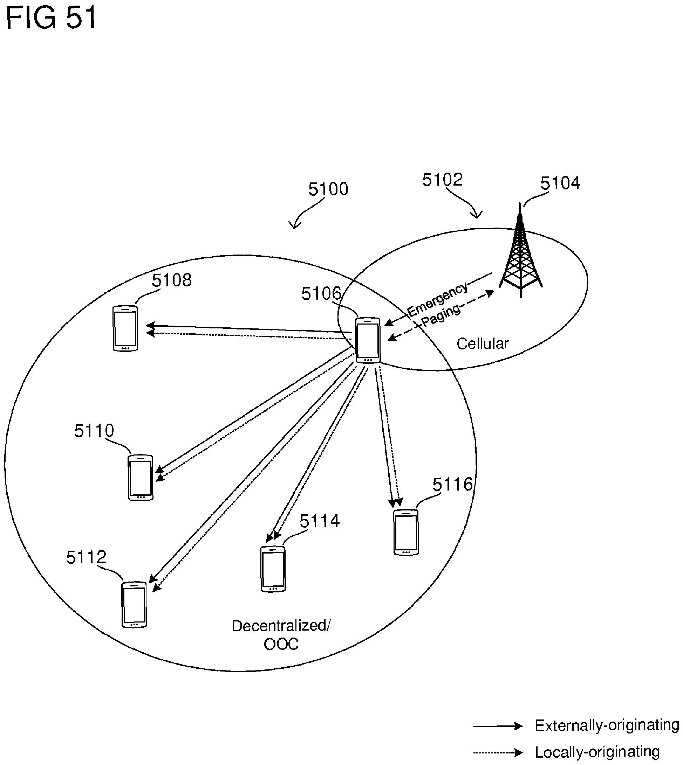

FIG. **51** shows an exemplary emergency message dissemination scheme according to some aspects. As shown in FIG. **51,** cellular network **5102** may include cell **5104** while decentralized network **5100** may include wireless devices **5106-5116**. In the example of FIG. **51,** wireless device **5106** may be within the coverage area of cellular network **5102,** namely in the coverage area of cell **5104.** Wireless devices **5108-5116** may be outside of the coverage of cellular network **5102** but may be within communication range of each other and within communication range of wireless device **5106.** Wireless devices **5106-5116** may therefore form decentralized network **5100** and may use D2D signaling (e.g., on D2D resources) to communicate with each other. As specified above, the term D2D refers to any type of direct signaling between devices and is not limited to any particular radio access technology.

In various aspects, wireless devices **5106-5116** may use an emergency message dissemination scheme to distribute emergency messages between each other. This can include both emergency messages that originate locally within decentralized network **5100** as well as emergency messages that originate outside of decentralized network **5100,** such as at cellular network **5102.** In one example using locally-originating emergency messages, an emergency message may originate at wireless device **5106.** For example, a user of wireless device **5106** may trigger an alert, such as a safety alarm or other type of triggered alert. Wireless device **5106** may then generate an emergency message based on the alert and broadcast out the emergency message using the emergency message dissemination scheme of various aspects of this disclosure. As shown in FIG. **51,** wireless device **5106** may broadcast the emergency message to wireless devices **5108-5116** using D2D signaling. As described in detail below, wireless devices **5106-5116** may use specific techniques of the emergency message dissemination scheme to distribute the emergency message.

In an example using externally-originating emergency messages, cellular network **5102** may originally generate an emergency message. For example, an entity in cellular network **5102** may trigger an alert for a natural disaster or other emergency. Cellular network **5102** may then generate an emergency message based on the alert. Cell **5104** may then broadcast the emergency message to wireless devices in its coverage area. As shown in FIG. **51,** wireless device **5106** may be located in the coverage area of cell **5104** and may maintain a signaling connection with cell **5104** (e.g., a paging connection). As part of the broadcast of the emergency message, cell **5104** may send the emergency message to wireless device **5106** over this signaling connection. Wireless device **5106** may then broadcast out the emergency message to wireless devices **5108-5116** using the emergency message dissemination scheme of various aspects of this disclosure. Similar to the locally-originating case, wireless device **5106** may broadcast the emergency message to wireless devices **5108-5116** using D2D signaling.

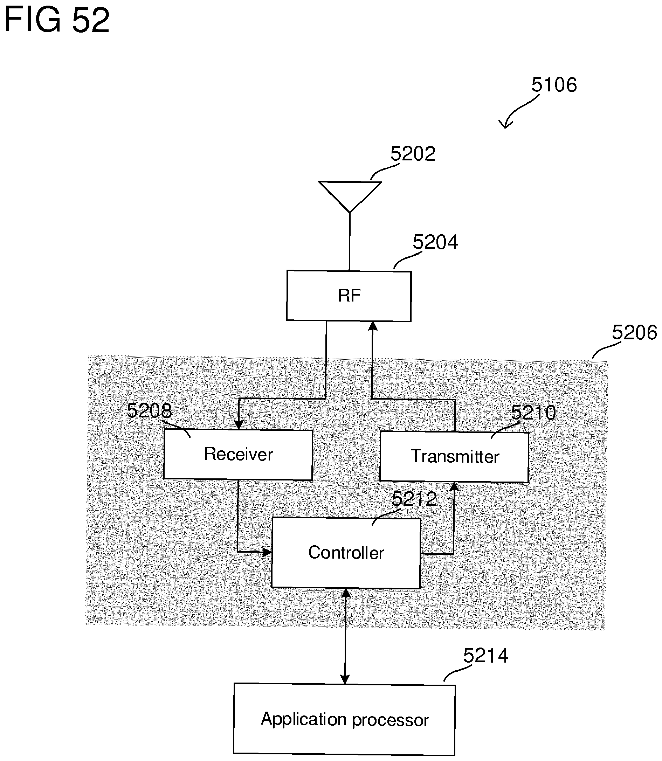

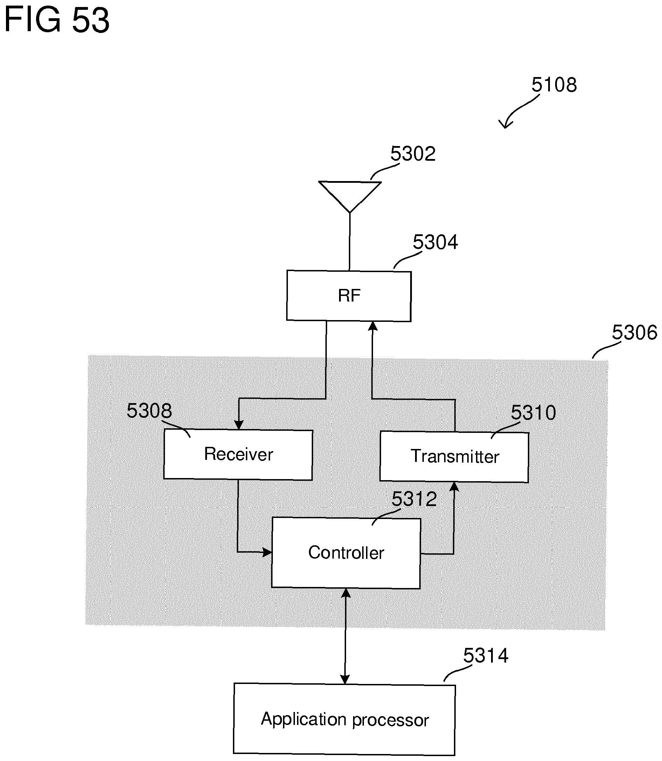

In various aspects, wireless devices **5106-5116** may therefore be structurally configured to perform the emergency message dissemination scheme. This structural configuration will first be introduced, followed by a procedural description of the emergency message dissemination scheme. FIGs. **52** and **53** show exemplary internal configurations of wireless devices **5106** and **5108** according to some aspects. The configurations shown in FIGs. **52** and **53** are focused on the emergency message dissemination features of wireless devices **5106** and **5108** and therefore may not expressly depict other components of wireless devices **5106** and **5108** that are less directly related to emergency message dissemination. Accordingly, in various aspects wireless device **5106** and/or wireless device **5108** may include various other components. Furthermore, while the following description may focus on wireless device **5106** in a transmitting role (e.g., transmitting emergency messages) and wireless device **5108** in a receiving role (e.g., receiving emergency messages), in some aspects wireless device **5106** may also be configured with the structure and functionality of wireless device **5108** and/or wireless device **5108** may be configured with the structure and functionality of wireless device **5106.** Wireless devices **5106** and **5108** may therefore be configured to both transmit and receive emergency messages.

Starting with FIG. **52,** wireless device **5106** may include antenna system **5202,** RF transceiver **5204,** baseband modem **5206,** and application processor **5214.** In some aspects, antenna system **5202,** RF transceiver **5204,** baseband modem **5206,** and application processor **5214** may be configured as described above for antenna system **202,** RF transceiver **204,** baseband modem **206,** and application processor **212** of terminal device **102.** Accordingly, wireless device **5106** may be configured to transmit and receive wireless signals via antenna system **5202** and RF transceiver **5204.** In the transmit direction, RF transceiver **5204** may therefore modulate and transmit baseband samples (provided by baseband modem **5206**) via antenna system **5202.** In the receive direction, RF transceiver **5204** may also receive and demodulate radio signals via antenna system **5202** and provide the resulting baseband samples to baseband modem **5206.** Application processor **5214** may provide user data to baseband modem **5206** for transmission while baseband modem **5206** may provide received user data to application processor **5214.**

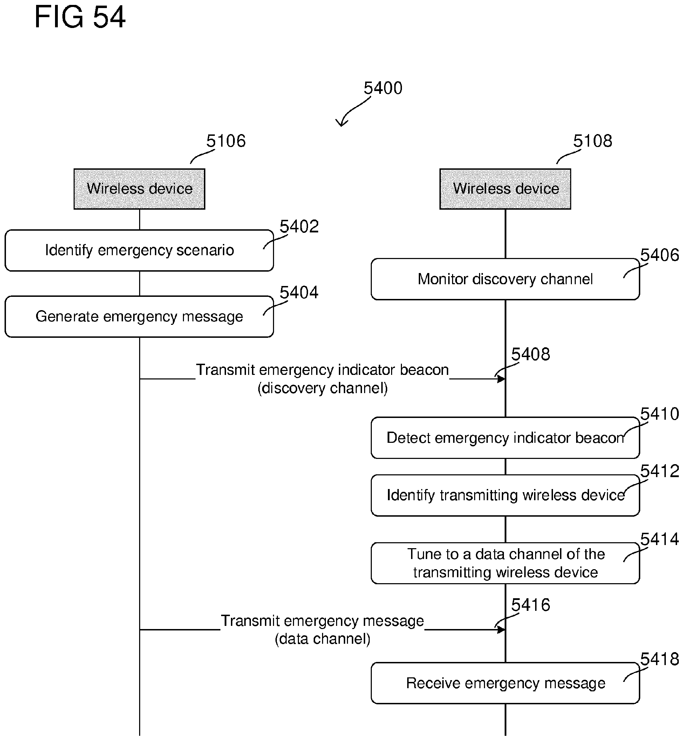

FIG. **52** also depicts several internal components of baseband modem **5206,** including receiver **5208,** transmitter **5210,** and controller **5212.** In some aspects, baseband modem **5206** may include a digital signal processor and a protocol controller. Receiver **5208,** transmitter **5210,** and controller **5212** may therefore be subcomponents of the digital signal processor (e.g., physical layer components) and/or subcomponents of the protocol controller (e.g., protocol stack components). In some aspects, receiver **5208** may be the physical layer receive chain while transmitter **5210** may be the physical layer transmit chain. For example, receiver **5208** may include a demodulator, demapper (e.g., constellation demapper), de-interleaver, decoder, and/or descrambler. Receiver **5208** may receive wireless signals in the form of baseband samples via antenna system **5202** and RF transceiver **5204.** Receiver **5208** may then sequentially process these baseband samples with the demodulator, demapper (e.g., constellation demapper), de-interleaver, decoder, and/or descrambler to produce a bitstream, which recover **5208** may provide to controller **5212** (e.g., to protocol stack layers of controller **5212**). Transmitter **5210** may include a scrambler, encoder, interleaver, mapper (e.g., constellation mapper), and/or a modulator, which may sequentially process a bitstream (e.g., provided by protocol stack layers of controller **5212**) to produce baseband samples (e.g., complex IQ symbols). Transmitter **5210** may then transmit these baseband samples as wireless signals via RF transceiver **5204** and antenna system **5202**. Controller **5212** may include one or more processors configured to execute the protocol stack layers as software. This may include generating messages for transmitter **5210** to transmit (e.g., messages including user or control data) and/or recovering messages from bitstreams provided by receiver **5208**. The detailed functionality of receiver **5208**, transmitter **5210**, and controller **5212** is further described below in FIGs. **54-56.**

As shown in FIG. **53,** wireless device **5108** may be structurally configured in a similar manner to wireless device **5106.** In particular, wireless device **5108** may include antenna system **5302,** RF transceiver **5304,** baseband modem **5306,** and application processor **5314.** In some aspects, antenna system **5302,** RF transceiver **5304,** baseband modem **5306,** and application processor **5314** may be configured as described above for antenna system **202,** RF transceiver **204,** baseband modem **206,** and application processor **212** of terminal device **102.** Accordingly, wireless device **5108** may be configured to transmit and receive wireless signals via antenna system **5302** and RF transceiver **5304.** In the transmit direction, RF transceiver **5304** may therefore modulate and transmit baseband samples (provided by baseband modem **5306**) via antenna system **5302.** In the receive direction, RF transceiver **5304** may also receive and demodulate radio signals via antenna system **5302** and provide the resulting baseband samples to baseband modem **5306.** Application processor **5214** may provide user data to baseband modem **5206** for transmission while baseband modem **5206** may provide received user data to application processor **5214.**

FIG. **53** also depicts several internal components of baseband modem **5306,** including receiver **5308,** transmitter **5310,** and controller **5312.** In some aspects, baseband modem **5306** may include a digital signal processor and a protocol controller. Receiver **5308,** transmitter **5310,** and controller **5312** may therefore be subcomponents of the digital signal processor (e.g., physical layer components) and/or subcomponents of the protocol controller (e.g., protocol stack components). In some aspects, receiver **5308** may be the physical layer receive chain while transmitter **5310** may be the physical layer transmit chain. For example, receiver **5308** may include a demodulator, demapper (e.g., constellation demapper), de-interleaver, decoder, and/or descrambler. Receiver **5308** may receive wireless signals in the form of baseband samples via antenna system **5302** and RF transceiver **5304.** Receiver **5308** may then sequentially process these baseband samples with the demodulator, demapper (e.g., constellation demapper), de-interleaver, decoder, and/or descrambler to produce a bitstream, which recover **5308** may provide to controller **5312** (e.g., to protocol stack layers of controller **5312**). Transmitter **5310** may include a scrambler, encoder, interleaver, mapper (e.g., constellation mapper), and/or a modulator, which may sequentially process a bitstream (e.g., provided by protocol stack layers of controller **5312**) to produce baseband samples (e.g., complex IQ symbols). Transmitter **5310** may then transmit these baseband samples as wireless signals via RF transceiver **5304** and antenna system **5302.** Controller **5312** may include one or more processors configured to execute the protocol stack layers as software. This may include generating messages for transmitter **5310** to transmit (e.g., messages including user or control data) and/or recovering messages from bitstreams provided by receiver **5308.** The detailed functionality of receiver **5308**, transmitter **5310**, and controller **5312** is further described below in FIGs. **54-56.** In some aspects, wireless devices **5110-5116** may configured in the same manner as wireless device **5108** shown in FIG. 53.

FIG. **54** shows exemplary message sequence chart **5400,** which describes the emergency message dissemination scheme according to some aspects. In various aspects, wireless devices may use the procedure of message sequence chart **5400** to transmit and receive emergency messages with each other. FIG. **54** shows an exemplary case of this procedure between wireless devices **5106** and **5108.** As shown in FIG. **54,** wireless device **5106** may first identify an emergency in stage **5402.** In some aspects, the emergency may originate at wireless device **5106.** In one example where the emergency originates at wireless device **5106,** a user of wireless device **5106** may trigger the emergency. For example, the user may use an input interface of wireless device **5106** to trigger an emergency, such as where the user is in a dangerous or potentially harmful scenario and triggers an alert. An application layer running at application processor **5214** of wireless device **5106** may receive the emergency trigger via the input interface and may notify controller **5212** of the emergency. In some aspects, application processor **5214** may provide emergency information about the emergency, such as a location (e.g., GPS coordinates), information about the type of emergency, and any other relevant information about the emergency.

In other aspects, the emergency may originate external to wireless device **5106,** such as at cellular network **5102.** In one example, a network entity of cellular network **5102** (e.g., in the core network) may trigger the emergency. For instance, there may be a natural disaster or other large-scale emergency that triggers an emergency. A network entity in cellular network **5102** may then generate an emergency network broadcast and distribute it to the cells of cellular network **5102.** The emergency network broadcast may include emergency information about the emergency, such as a location (e.g., GPS coordinates), information about the type of emergency, and any other relevant information about the emergency.

The cells may then broadcast the emergency network broadcast into their respective coverage areas. In the example shown in FIG. **51,** cell **5104** may broadcast the emergency network broadcast on a paging channel to wireless device **5106.** This is exemplary and any type of broadcast or channel can alternatively be used. Wireless device **5106** may then identify the emergency by receiving and processing the emergency network broadcast. For example, receiver **5208** may receive the emergency network broadcast via antenna system **5202** and RF transceiver **5204** and decode and demodulate the emergency network broadcast. Receiver **5208** may then provide the emergency network broadcast to controller **5212,** which may read the emergency network broadcast and identify the emergency from the emergency network broadcast.

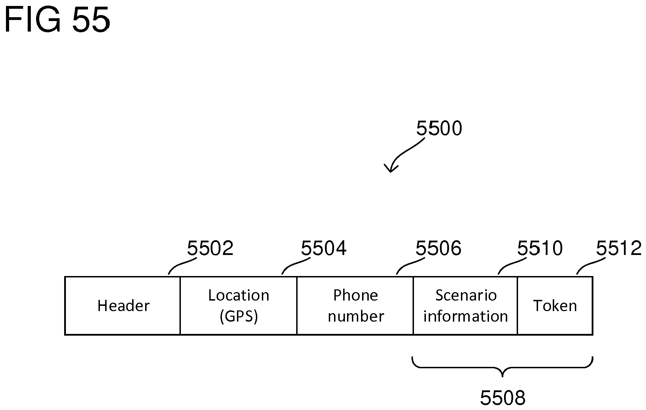

Accordingly, in either case wireless device **5106** may identify the emergency in stage **5402.** After identifying the emergency, wireless device **5106** may generate an emergency message in stage **5404.** For example, controller **5212** may be configured to generate an emergency message that includes emergency information about the emergency. Controller **5212** may be configured to generate the emergency message according to a predefined format, such as a predefined emergency message format that wireless devices **5106-5116** are preconfigured to understand and use. FIG. **55** shows exemplary emergency message **5500** according to some aspects, which serves as an example of one possible predefined emergency message format. As shown in FIG. **55,** emergency message **5500** may include header **5502,** location **5504,** phone number **5506,** and payload **5508.** Header **5502** may be a header that specifies that emergency message **5500** is an emergency message. Location **5504** may be a field that includes location information, such as GPS coordinates that identify the location or area of the emergency. Phone number **5506** may be the phone number of the initiator of the emergency. Payload **5508** may be a message payload including scenario information **5510** and register token **5512.**

Using emergency message **5500** as an example, controller **5212** may be configured to obtain and/or generate the data for the various fields as part of stage **5404.** In some aspects where the emergency originates at wireless device **5106,** application processor **5214** may obtain GPS coordinates of wireless device **5106** with a GPS receiver and controller **5212** may generate location **5504** with the GPS coordinates. In some aspects where the emergency originates at cellular network **5102,** controller **5212** may obtain location **5504** from the emergency network broadcast, which may specify the location as one of its fields. In some aspects where the emergency originates at wireless device **5106,** controller **5212** may use the phone number of wireless device **5106** as phone number **5506.** In some aspects where the emergency originates at wireless device **5106,** controller **5212** may generate scenario information **5510** locally, and may include information such as a timestamp, emergency type, or any other relevant information in scenario information **5510.** In some aspects, controller **5212** may include a text message in scenario information **5510** that specifies information about the emergency. In some aspects where the emergency originates at cellular network **5102,** controller **5212** may take information from the emergency network broadcast and include this information in scenario information **5510.**

Register token **5512** may help prevent abuse of the emergency message dissemination scheme. In particular, register token **5512** may be used to verify the authenticity of emergency message **5500** and/or to track which devices initiated and relayed the emergency message. If abuse occurs, such as where a device spams other devices with emergency messages, register token **5512** may help in determining which devices were acting inappropriately. In some aspects, register token **5512** may therefore be based on an initiating device ID that identifies the device that initiated distribution of emergency message **5500** within decentralized network **5100.** In some aspects, register token **5512** may also be based on a relaying device ID that identifies a device that relayed emergency message **5500.** The initiating device ID may therefore correspond to the wireless device that either triggered the emergency or received the emergency network broadcast from outside of decentralized network **5100** (as this is the device within decentralized network **5100** that initializes distribution of the emergency message). In the example of FIG. **51,** wireless device **5106** may therefore be the initiating device.

In some aspects, controller **5212** may be configured to generate register token **5512** as part of generating the emergency message in stage **5404.** Controller **5212** may use a device ID of wireless device **5106** as the initiating device ID. For example, wireless devices **5106-5116** may each be configured with a device ID and with a trusted entity list that includes the device IDs of all trusted wireless device. In the example of FIG. **51,** wireless devices **5106-5116** may all trust one another and may therefore include the device IDs of the rest of wireless devices **5106-5116** in their respective trusted entity lists. In some aspects, the device ID and the trusted entity list may be managed by a centralized server (e.g., a cloud server), where wireless devices **5106-5116** periodically download a new device ID and/or trusted entity list from a centralized server. Wireless devices **5106-5116** may then use these device IDs and trusted entity lists to communicate with each other. As wireless devices **5106-5116** have each other's device IDs in their respective trusted entity lists, wireless devices **5106-5116** may use the trusted entity lists to verify that they only communicate with other trusted devices. For example, wireless devices **5106-5116** may be configured to exchange messages by applying a hash function to a message payload, where the hash function uses their device ID as an input, and then sending both the message payload and hash value to another device. This other device may then use its trusted entity list to verify that one of its trusted devices sent the message, such as by iterating through the device IDs in the trusted entity list, determining a hash value for the message payload for each device ID, and checking if the hash value matches the hash value from the message. If so, the device can assume that the message payload was validly transmitted by one of its trusted devices.

In some aspects, wireless devices **5106-5116** may use a similar hashing technique based on their device IDs to generate the register tokens for emergency messages. For example, when wireless device **5106** generates the emergency message in stage **5404**, controller **5212** may generate a hash value using the device ID of wireless device **5106** (the initiating device ID) and may include this hash value as the register token. The register token therefore serves as a record of which devices were involved in propagation of the emergency message (e.g., initiating and/or relaying devices). If the emergency message is later determined to be spam or malicious, wireless device **5106** can be identified as the spamming or malicious device. This can be useful when investigating abuses.

In some aspects, the register token may also be based on a relaying device ID, such as where the relaying device ID is also used to generate a hash value and both hash values (from initiating device ID and relaying device ID) are included in the register token (e.g., by concatenating the hash value). This is further discussed below in the description of relaying features of wireless device **5108.**

In some aspects, wireless device **5106** may also determine a hash value based on its device ID and the payload of the emergency message and may include this hash value in the emergency message. This hash value may be separate from the register token, and may be used by other devices (such as wireless device **5108**) to identify the device that transmitted the emergency message. This is contrast to the register token, which serves as a more detailed record of the wireless devices that have propagated the emergency message.

As described immediately above, wireless device **5106** may therefore generate the emergency message in stage **5404** by obtaining and/or generating the data for each field of the emergency message. While FIG. **55** shows an exemplary emergency message format, this is only for illustrative purposes and various aspects may use emergency messages with many different formats (e.g., different fields). After generating the emergency message, wireless device **5106** may proceed to transmit an emergency indicator beacon in stage **5408**. This emergency indicator beacon may notify nearby wireless devices (e.g., wireless devices **5108-5116**) that wireless device **5106** is preparing to transmit an emergency message. Wireless device **5106** may use a discovery channel to transmit the emergency indicator beacon. For example, the wireless devices of decentralized network **5100** may be configured to monitor a discovery channel to listen for other wireless devices. The wireless devices may therefore use the discovery channel for initial detection before starting communication sessions with other devices. In some aspects, the discovery channel may be composed of certain slots in a shared schedule of wireless devices **5106-5116,** such as certain slots in each or every few frames of the shared schedule. These slots may form a discovery window. The discovery channel be a single subcarrier, set of subcarriers, or a block of spectrum.

As other wireless devices are configured to listen to the discovery channel, wireless device **5106** may use the discovery channel to transmit the emergency indicator beacon in stage **5408**. For example, controller **5212** may provide the emergency indicator beacon (e.g., as a bitstream) to transmitter **5210,** which may then transmit the emergency indicator beacon on the discovery channel via RF transceiver **5204** and antenna system **5202.** The emergency indicator beacon may have a predefined format that wireless devices **5108-5116** are configured to recognize. In one example, the emergency indicator beacon may have certain bits set to specific values (e.g., the Most Significant Bit (MSB) of the payload set to "1"), where wireless devices **5108-5116** are configured to detect emergency indicator beacons by identifying that these bits are set to the specific values. Controller **5212** may therefore generate the emergency indicator beacon with the bits set to the specific values. Controller **5212** may also generate a payload for the emergency indicator beacon. In some aspects, controller **5212** may include information about the emergency message, which wireless device **5106** will transmit after the emergency indicator beacon. For example, controller **5212** may specify identify information of wireless device **5106,** identify a data channel on which the emergency message will be transmitted, and/or identify a time when the emergency message will be transmitted. The emergency indicator beacon may therefore include information that wireless devices **5108-5116** can use to receive the emergency message.

In some aspects, the emergency indicator beacon may be scrambled with an emergency scrambling code. For example, transmitter **5210** may apply the emergency scrambling code to the emergency indicator beacon it processes the emergency indicator beacon (prior to transmission via RF transceiver **5204** and antenna system **5202**). The emergency scrambling may be predefined and known *a priori* at other wireless devices configured to use the emergency message dissemination scheme. These other wireless devices may therefore be able to revert the emergency scrambling code when they receive the emergency indicator beacon. Furthermore, some aspects may provide different scrambling codes. For example, there may be a public emergency scrambling code that is open to all wireless devices configured for the emergency message dissemination scheme as well as a private emergency scrambling code that is limited to specific subsets of 'friend' devices. If wireless device **5106** is broadcasting the emergency message to all proximate wireless devices, transmitter **5210** may apply the public emergency scrambling code to the emergency indicator beacon. Any wireless device configured for the emergency message dissemination scheme may therefore be able to revert the public emergency scrambling code and read the emergency indicator beacon. Conversely, if wireless device **5106** is only transmitting the emergency message to a specific subset of its friend devices (e.g., multicast), transmitter **5210** may apply the private emergency scrambling code (preconfigured for this specific subset) to the emergency indicator beacon. Only the wireless devices in the specific subset will therefore be able to revert the public emergency scrambling code and read the emergency indicator beacon. This use of emergency scrambling codes may limit dissemination to certain users and/or allow wireless devices to differentiate between standard discovery messages versus emergency indicator beacons.

As shown in FIG. **54,** wireless device **5108** may monitor the discovery channel in stage **5406.** This can be a continuous process, such as where wireless device **5108** periodically tunes to the discovery channel to listen for discovery messages and emergency indicator beacons. For example, receiver **5308** may receive signals during discovery windows via antenna system **5302** and RF transceiver **5304** and process the received signals to obtain a bitstream. If emergency scrambling codes are being used, receiver **5308** may process the bitstream to revert the emergency scrambling code (e.g., to revert the public or private emergency scrambling code, depending on which is being used). Controller **5312** may then evaluate the bitstream to determine whether the bitstream includes an emergency indicator beacon. For example, if the emergency indicator beacon is identifiable via certain bits being set to specific values, controller **5312** may detect the emergency indicator beacon by determining that these bits are set to the specific values. Controller **5312** may therefore identify the emergency indicator beacon based on a predefined format of emergency indicator beacons.

As shown in FIG. **54,** wireless device **5108** may also identify the transmitting wireless device, i.e., the device that transmitted the emergency indicator beacon. As introduced above, in some aspects wireless device **5106** may be configured to include its identity information as part of the payload of the emergency indicator beacon. Accordingly, controller **5312** of wireless device **5108** may be configured to identify wireless device **5106** as the transmitting wireless device by reading the identity information from the payload of the emergency indicator beacon.

Once wireless device **5108** has detected the emergency indicator and identified the transmitting wireless device, wireless device **5108** may be aware that the transmitting wireless device will transmit an emergency message on its data channel. Wireless device **5108** may therefore tune to the data channel of the transmitting wireless device in stage **5414.** For example, controller **5312** may instruct receiver **5308** to tune to the data channel of wireless device **5106** and begin receiving signals on the data channel. Receiver **5308** may then receive the signals via antenna system **5302** and RF transceiver **5304.** In some aspects, the data channel may be a subcarrier, set of subcarriers, or block of spectrum allocated to wireless device **5106** for transmission. Receiver **5308** may therefore tune to the data channel by receiving signals (via antenna system **5302** and RF transceiver) on the subcarrier, set of subcarriers, or block of spectrum. In other aspects, the data channel may be a frequency hopping pattern. Receiver **5308** may therefore tune to the data channel by hopping subcarriers according to the frequency hopping pattern and receiving signals on the appropriate subcarrier for each hop.

As previously indicated, in some aspects wireless device **5106** may explicitly specify the data channel in the payload of the emergency indicator beacon. Controller **5312** may therefore identify the data channel in the payload and specify the data channel to receiver **5308,** which may then tune to the data channel. Furthermore, in some aspects wireless device **5106** may also specify in the payload a time when wireless device **5106** will transmit the emergency message on the data channel. Controller **5312** may also identify this information and provide it to receiver **5308.** Receiver **5308** may then tune to the data channel at or immediately before the specified time.

In some aspects, wireless device **5106** may not explicitly specify the data channel in the emergency indicator beacon. Wireless device **5108** may use predefined information about the data channel of wireless device **5106** to identify and tune to the data channel. For example, wireless devices **5106-5116** may operate on predefined communication schedules, such as where wireless devices **5106-5116** are respectively assigned frequency hopping patterns to use. Similar to the device IDs and trusted entity list, these communication schedules can be managed by a centralized server, where wireless devices **5106-5116** periodically download updated communication schedules from the centralized server. In these cases, wireless device **5108** may be able to identify the data channel of wireless device **5106** based on its identity (identified in stage **5412**). For example, after controller **5312** obtains the device ID of wireless device **5106,** controller **5312** may reference the communication schedule using the device ID. Controller **5312** may then identify the data channel of wireless device **5106** from the communication schedule. Receiver **5308** may then tune to this data channel in stage **5414.**

In some aspects, wireless device **5108** may suspend other data reception when it tunes to the data channel of wireless device **5106** in stage **5414.** For example, if receiver **5308** is receiving data from another wireless device and controller **5312** detects the emergency indicator beacon, receiver **5308** may suspend reception of this data when it tunes to the data channel of wireless device **5106** in stage **5414.**

Wireless device **5106** may then transmit the emergency message on its data channel in stage **5416.** For example, controller **5404** may provide the emergency message to transmitter **5210,** which may then process and transmit the emergency message via RF transceiver **5204** and antenna system **5202.** In some aspects, transmitter **5210** may also apply an emergency scrambling code (e.g., public or private emergency scrambling code) to the emergency message. In some aspects where wireless device **5106** uses frequency hopping, transmitter **5210** may transmit the emergency message according to the frequency hopping pattern. Once transmitter **5210** has completed transmission of the emergency message (e.g., has sent all data packets of the emergency message), transmitter **5210** may notify the higher layers (e.g., protocol stack layers) that the emergency message has been transmitted.

Wireless device **5108** may then receive the emergency message in stage **5418**. For example, receiver **5308** may receive signals via antenna system **5302** and RF transceiver **5304** and process the signals to obtain the emergency message (e.g., as a bitstream). If emergency scrambling codes are being used, receiver **5308** may process the bitstream according to the emergency scrambling code (e.g., public or private emergency scrambling code) to revert the emergency scrambling code. Receiver **5308** may then provide the emergency message to controller **5312**. Controller **5312** may be preconfigured with the emergency message format and may therefore read the fields of the emergency message to obtain the emergency information included therein. In some aspects, controller **5312** may report the emergency information to application processor **5314,** which may then display the emergency information to a user of wireless device **5108.**

In some aspects, wireless devices using the emergency dissemination scheme may be concerned with distributing the emergency messages to as many devices as possible. Accordingly, controller **5312** may not be concerned with the authenticity of the emergency message (e.g., whether the register token corresponds to device IDs of trusted devices). In other aspects, controller **5312** may also verify the authenticity of the emergency message. For example, as previously introduced the emergency message may include a register token as one of its fields (e.g., register token **5512** of emergency message **5500** in FIG. **55**). During generation of the emergency message, wireless device **5106** may have generated the register token by generating a hash value using its device ID (the initiating device ID), where other wireless devices that trust wireless device **5106** may have the device ID of wireless device **5106** stored in their trusted entity lists. Accordingly, in an example where wireless device **5108** trusts wireless device **5106,** controller **5312** may verify whether the emergency message was initiated by a trusted device using its trusted entity list. For instance, controller **5312** of wireless device **5108** may access the trusted entity list (e.g., stored at a memory of controller **5312**) and may compute respective hash values using each device ID. Controller **5312** may then compare these hash values to the hash value in the register token and determine whether the hash value for any device ID in the trusted entity list matches the hash value in the trusted entity list. Because wireless device **5108** trusts wireless device **5106,** the hash value from the device ID of wireless device **5106** may produce a hash value that matches the hash value in the trusted entity list. Controller **5312** may therefore determine that wireless device **5106** was the initiating device of the emergency message. As wireless device **5106** is considered a trusted device, controller **5312** may determine that the emergency message is authentic and may proceed to use the contents of the emergency message as appropriate. If wireless device **5106** initiated the emergency message for an improper reason, such as to spam other wireless devices, the register token may allow the emergency message to be tracked back to wireless device **5106.** This may therefore be advantageous when investigating improper use of the emergency message distribution scheme. In another scenario, the initiating device is not a trusted device, controller **5312** may determine that none of the device IDs in the trusted entity list produce a hash value that matches hash value in the register token. Controller **5312** may therefore determine that the emergency message is not authentic and may decide to disregard the emergency message.

In some aspects, the emergency message may be too large for wireless device **5106** to transmit in a single block. In one example of this, the emergency message may be too large (e.g., due to a large payload) to fit into a single frame of the communication schedule used by wireless devices **5106-5116**. In some aspects, wireless device **5106** may repeat stages **5408** and **5416** to transmit the emergency message over multiple frames. For example, controller **5212** of wireless device **5106** may determine that the emergency message will take up a certain number of frames (e.g., two). Controller **5212** may then separate the emergency message into multiple sections equal to the certain number of frames. Controller **5212** may then transmit an emergency indicator beacon in stage **5408** and then transmit a first section of the emergency message in stage **5416**. Wireless device **5108** may detect the emergency indicator beacon, identify wireless device **5106,** tune to the data channel, and receive the first section of the emergency message in stages **5410, 5412, 5414,** and **5418**. Controller **5212** may then repeat stages **5408** and **5416** with a second section of the emergency message, namely by sending another emergency indicator beacon and then sending the second section of the emergency message. Wireless device **5108** may then receive the emergency indicator beacon and the second section of the emergency message. Wireless devices **5106** and **5108** may repeat this procedure until wireless device **5108** has received all sections of the emergency message. In some aspects, controller **5212** of wireless device **5106** may include an indicator in the emergency beacon indicator and/or in the payload of the first section of the emergency message that indicates that the emergency message is split into multiple sections. Controller **5212** may then mark the sections with a section number that identifies the section within the emergency message. Controller **5212** may also attach a final data block bit to the last section, which signifies that this section is the last section of the emergency message. When controller **5312** receives the emergency beacon indicator or first section, controller **5312** of wireless device **5108** may then determine, based on the indicator, that the emergency message is split into multiple sections. Controller **5312** may recombine the sections of the emergency messages based on their sequence numbers and the final data block bit to obtain the original version of the emergency message.

In some aspects, wireless device **5106** may be configured to repeatedly broadcast the emergency message, such as over an extended period of time. Accordingly, wireless device **5106** may periodically transmit an emergency indicator beacon followed by the emergency message. This can help to ensure that nearby devices receive the emergency message even if they miss an individual broadcast of the emergency message. As previously indicated, transmitter **5210** may notify controller **5212** when transmission of the emergency message has completed. Controller **5212** may then be configured to trigger repetitions of the emergency message, such as by instructing transmitter **5210** to transmit the emergency message again.

Furthermore, if the emergency message is split and wireless device **5108** begins receiving it after the first section (e.g., the earliest section received by wireless device **5108** is not the first section), controller **5312** may detect that the received section is not the first section (e.g., as it does not have the initial section number, such as "0"). Controller **5312** may then wait until wireless device **5106** repeats transmission of the emergency message and can start receiving the emergency message at its first section.

In some aspects, wireless device **5106** may be configured to transmit the emergency message in unacknowledged mode. Accordingly, after wireless device **5108** successfully receives and decodes the emergency message, controller **5312** may not send an acknowledgement to wireless device **5106** (and, likewise, may not send a non-acknowledgement if decode is unsuccessful).

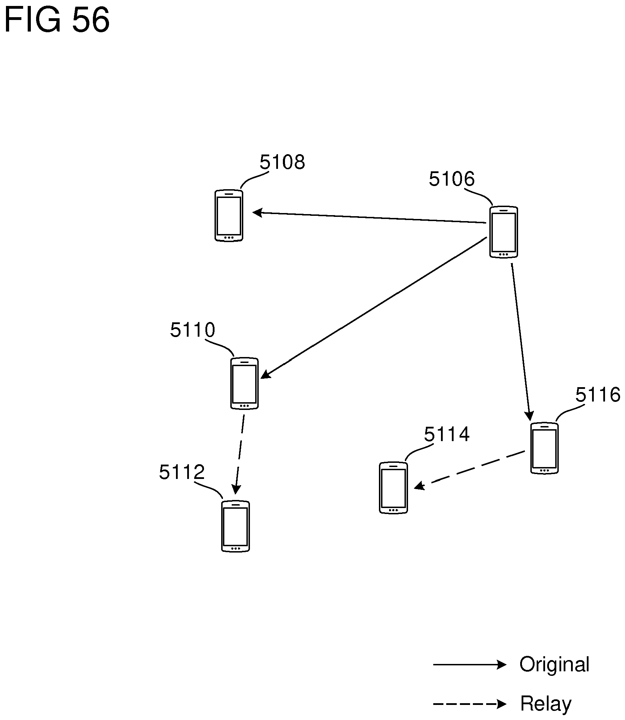

In some aspects, wireless devices in decentralized network **5100** may be configured to relay emergency messages as part of the emergency message dissemination scheme. FIG. **56** shows an example of this relaying according to some aspects. As shown in FIG. **56,** wireless device **5106** may again act as the initiating device in decentralized network **5100** (e.g., the wireless device that initializes distribution of the emergency message in decentralized network **5100,** where the emergency message is locally-originating or externally-originating). Wireless device **5106** may therefore broadcast the emergency message using the procedure of message sequence chart **5400,** namely by broadcasting an emergency indicator beacon on the discovery channel followed broadcast of the emergency message on its data channel. As denoted by the arrows in FIG. **56,** wireless devices **5108, 5110,** and **5116** may receive the emergency message from wireless device **5106.** This may include using the same procedure described for wireless device **5108** in message sequence chart **5400.** As this is the earliest distribution of the emergency message (not including transmissions of an emergency network broadcast related to the emergency message), this may be referred to as the original transmission. As shown in FIG. **56,** wireless devices **5112** and **5114** may not receive the original transmission of the emergency message. For example, wireless devices **5112** and **5114** may be out of communication range from wireless device **5106,** may miss reception of the emergency indicator beacon, or may have a decode error or other reception error.

The relaying functionality will be described using wireless device **5110** as an example, where wireless device **5110** is configured in the same manner as wireless device **5108** shown in FIG. **53.** After receiving the emergency message from wireless device **5106** at receiver **5308,** controller **5312** of wireless device **5110** may trigger relay of the emergency message. Accordingly, wireless device **5110** may re-use this emergency message to relay the emergency message. For example, controller **5312** may identify the fields of the original transmission of the emergency message and then use some or all of the fields as the payload of the relay transmission of the emergency message. In one example using the emergency message format of FIG. **55,** controller **5312** may re-use emergency system information **5510** from the original transmission as the emergency system information in the relay transmission. Controller **5312** may re-use location **5504** and/or phone number **5506** from the original transmission of the emergency message, or alternatively may use its own location and/or phone number in these fields of the relay transmission of the emergency message. Controller **5312** may generate a new header to use as the header of the relay transmission of the emergency message.

As previously discussed, in some aspects the emergency message may include a register token. In some aspects, the register token may include a hash value based on the initiating device ID but not the relaying device ID. Accordingly, controller **5312** may re-use the register token from the original transmission of the emergency message as the register token of the relay transmission of the emergency message. In other aspects, the register token may be based on both the initiating device ID and the relaying device ID. Accordingly, controller **5312** may generate a hash value based on the device ID of wireless device **5110,** which is the relaying device ID. Controller **5312** may then concatenate the hash value from the initiating device ID (from the original transmission of the emergency message) with the hash value from the relaying device ID, and use this concatenated hash string as the register token for the relay transmission of the emergency message.

The specific procedure for generating the relay transmission of the emergency message can vary depending on the fields of the emergency message. In various cases, controller **5312** may be configured to re-use some fields from the original transmission in the relay transmission, generate new fields for the relay transmission, and/or modify some fields from the original transmission to obtain the fields for the relay transmission. Controller **5312** may therefore generate the relay transmission of the emergency message.

After generating the relay transmission of the emergency transmission, controller **5312** may generate and transmit an emergency indicator beacon on the discovery channel. This may include the same procedure described above for stage **5408** in FIG. **54.** As the emergency indicator beacon is broadcasted on the discovery channel, other wireless devices including wireless device **5112** may be monitoring the discovery channel. In this example, wireless device **5112** may be configured in the manner of wireless device **5108** as shown in FIG. **53.** Wireless device **5112** may therefore perform the procedure of stages **5406, 5410, 5412,** and **5414** to monitor the discovery channel, detect the emergency indicator beacon, identify wireless device **5110** as the transmitting wireless device, and tune to the data channel of wireless device **5110.** Wireless device **5106** may then transmit the relay transmission of the emergency message on its data channel using the procedure of stage **5416.** Wireless device **5112** may then receive the emergency message on the data channel using the procedure of stage **5418.**

In some aspects, wireless device **5112** may identify that the emergency message is a relay transmission. In some aspects, a header field may identify that the emergency message is a relay transmission. Controller **5312** of wireless device **5112** may therefore determine that the emergency message is a relay transmission by evaluating the header field. In some aspects, controller **5312** may determine that the emergency message is a relay transmission by checking the register token of the emergency message. As previously indicated, in some aspects wireless device **5110** may include a hash value based on its device ID (the relaying device ID) in the register token. Controller **5312** may therefore identify that the emergency message is a relay transmission by identifying the presence of this hash value.

In some aspects, wireless device **5112** may also verify the authenticity of the relaying device of the emergency message. This may be similar to the procedure described above for verifying the initiating device of the emergency message using the register token. For instance, controller **5312** of wireless device **5112** may access the trusted entity list of wireless device **5112** (e.g., stored in a memory of controller **5312**). Controller **5312** may then calculate hash values for each device ID in the trusted entity list and compare these hash values to the hash value in the register token. If controller **5312** determines that the hash value from one of the device IDs matches the hash value in the register token, controller **5312** may determine that the relaying device is trusted and may treat the emergency message as valid (e.g., assuming the initiating device is also trusted). If controller **5312** does not find a device ID in the trusted entity list that can produce a hash value matching the hash value in the register token, controller **5312** may determine that the relaying device is not trusted. In some cases, controller **5312** may be configured to still use the emergency message if the initiating device is trusted, while in other cases controller **5312** may be configured to only use the emergency message if the initiating device and the relaying device are trusted.

In some aspects, wireless device **5112** may also decide to relay the emergency message. Accordingly, wireless device **5112** may be configured to perform the same procedure described for wireless device **5110** to relay the message to other wireless devices. In some aspects, wireless device **5112** may update the register token to include a hash value based on its own device ID. In some aspects, wireless device **5112** may update the register token to include a hash value from its own device ID, the hash value from the device ID of wireless device **5110** (the relaying device ID), and the hash value from the device ID of wireless device **5106**. In these cases, the register token may include a complete registry of all wireless devices through which the emergency message has passed. Other wireless devices may therefore be able to verify whether all of the involved wireless devices are trusted. In other aspects, wireless device **5112** may use the hash value based on its device ID to replace the hash value based on the device ID of wireless device **5110** (the relaying device ID). Accordingly, the resulting register token will include a hash value based on the device ID of the most recent relaying device (wireless device **5112**) and a hash value based on the initiating device ID (wireless device **5106**). Other wireless devices may be able to verify whether the initiating and the most recent relaying device are trusted.

Additionally, as shown in FIG. **56** wireless device **5116** may also relay the emergency message (received as an original transmission from wireless device **5106**) to wireless device **5114**. Wireless device **5108** may also attempt to relay the emergency message, but there may not be any other wireless devices within its communication range. In some cases, one or more of wireless devices **5106-5116** may be outside of cellular coverage. The emergency message dissemination scheme may therefore provide distribution of emergency messages outside of cellular coverage. This can be advantageous in increasing the distribution of the emergency message, as even out-of-coverage (OOC) devices in remote areas will be able to receive it.

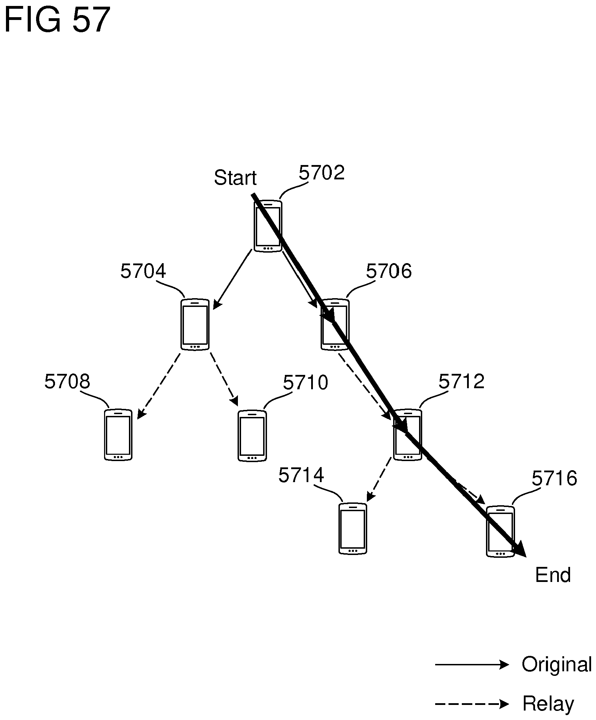

FIG. **57** shows an exemplary diagram illustrating register tokens according to some aspects. As shown in FIG. **57,** the example of FIG. **57** includes multiple relays. In particular, wireless device **5702** may be the initiating device, and may use the emergency message dissemination scheme to distribute an emergency message to all of wireless devices **5704-5716.** FIG. **57** explicitly plots out one propagation path from wireless device **5702** to wireless device **5706** to wireless device **5712** to wireless device **5716.** In this example, wireless device **5702** may generate and broadcast an emergency message, where wireless device **5702** is the initiating device. Wireless device **5702** may include a hash value from its device ID in the register token. Wireless device **5706** may receive the emergency register token and decide to relay it. As wireless device **5706** is therefore a relaying device, wireless device **5706** may generate a hash value based on its device ID and then combine this hash value with the existing register token to obtain an updated version of the register token. After wireless device **5706** broadcasts the emergency message (including the updated version of the register token), wireless device **5712** may receive the emergency message. Wireless device **5712** may also generate a hash value based on its device ID and combine this hash value with the register token to obtain another updated version of the register token. Wireless device **5712** may then broadcast the emergency message including this updated version of the register token. Wireless device **5716** may receive the emergency message including this updated version of the register token. As the register token was updated based on the device ID of each relaying device, register token may be a complete record of each device (including initiating and relaying) through which the emergency message has passed. In some aspects, relaying devices may concatenate their hash value with the register token to obtain the updated version of the register token, where the register token at any given time is the concatenation of the hash values of the initiating device and all relaying devices. In other aspects, relaying devices may XOR their hash value with the register token to obtain the updated version of the register token.

Other techniques for generating the register token can also be used in various other aspects. For example, in some aspects relaying devices may update the register token based on the hash value of the device that transmitted the emergency message to the relaying device. For example, wireless device **5702** may transmit the emergency message with an empty register token, and wireless device **5706** may generate the hash value based on the device ID of wireless device **5702** and include this hash value as the register token when wireless device **5706** relays the emergency message. Wireless device **5712** may then generate a hash value based on the device ID of wireless device **5706** and determine the updated version of the register token by combining this hash value with the previous version of the register token. In other aspects, each wireless device may generate a new register token based on the device IDs of all previous devices. For example, wireless device **5712** may use the device IDs of wireless devices **5702** and **5706** to generate hash values for the register token and may then use this register token when broadcasting the emergency message. If wireless device **5716** relays the register token, wireless device **5716** may use the device IDs of wireless devices **5702, 5706,** and **5712** to generate hash values for the register token and may then use this register token when broadcasting the emergency message. In some aspects, this may involve extra signaling so that each relaying device knows the device IDs of all previous devices through which the emergency message has passed.

In addition to the OOC distribution benefits, various aspects of the emergency message dissemination scheme may also provide increased security. As discussed above, the register token may allow devices to authenticate the initiating and/or relaying devices of the emergency message. Wireless devices can therefore choose to only react to emergency messages that come from trusted devices. Furthermore, if a device abuses the emergency message dissemination scheme, the register token may provide a record that can be used to determine which devices were responsible for the abuse.

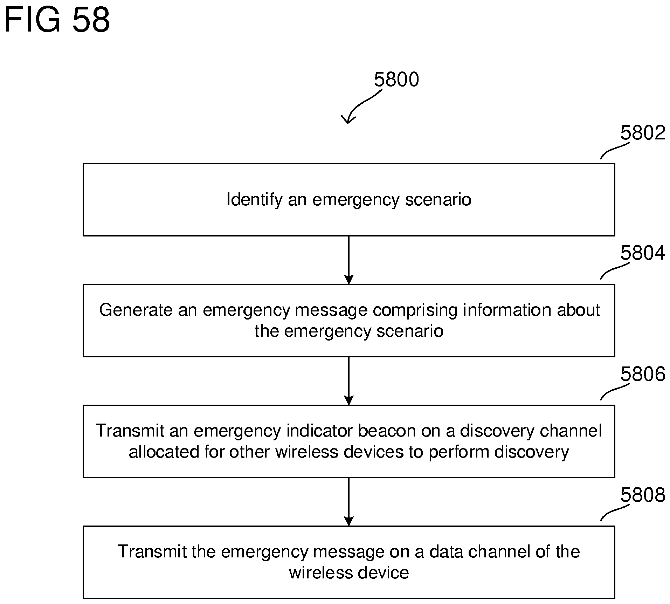

FIG. 58 shows exemplary method **5800** of performing wireless communications at a wireless device according to some aspects. As shown in FIG. **57,** method **5800** includes identifying an emergency (**5802**), generating an emergency message including information about the emergency (**5804**), transmitting an emergency indicator beacon on a discovery channel allocated for other wireless devices to perform discovery (**5806**), and transmitting the emergency message on a data channel of the wireless device (**5808**).

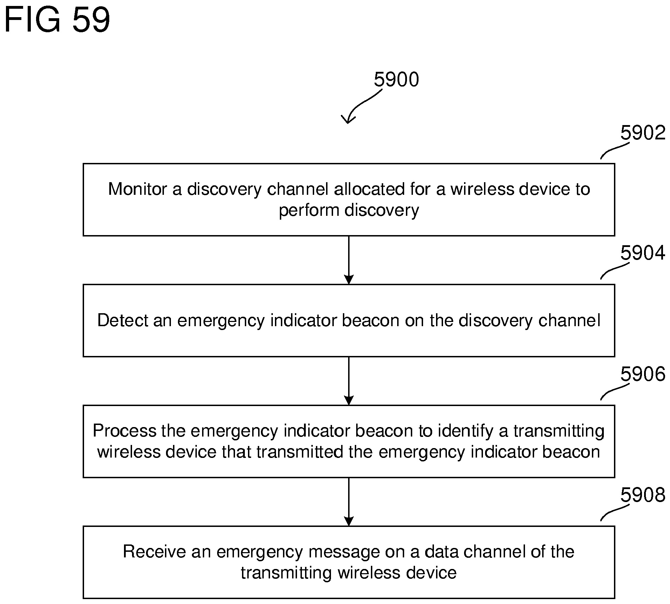

FIG. 59 shows exemplary method **5900** of performing wireless communications at a wireless device according to some aspects. As shown in FIG. **58,** method **5900** includes monitoring a discovery channel allocated for a wireless device to perform discovery (**5902**), detecting an emergency indicator beacon on the discovery channel (**5904**), processing the emergency indicator beacon to identify a transmitting wireless device that transmitted the emergency indicator beacon (**5906**), and receiving an emergency message on a data channel of the transmitting wireless device (**5908**).

In some aspects, wireless device **5106** may be characterized as a wireless device including a controller (e.g., controller **5212**) configured to identify an emergency and to generate an emergency message including information about the emergency, and a transmitter (e.g., transmitter **5210**) configured to transmit, on a discovery channel allocated for other wireless devices to perform discovery, an emergency indicator beacon that indicates an upcoming transmission of the emergency message, and to transmit the emergency message on a data channel of the wireless device.

In some aspects. wireless device **5108** may be characterized as a wireless device including a receiver (e.g., receiver **5308**) configured to monitor a discovery channel allocated for the wireless device to perform discovery, and a controller (e.g., controller **5312**) configured to obtain received data from the receiver and to detect, on the discovery channel, an emergency indicator beacon that indicates an upcoming transmission of an emergency device, and to process the emergency indicator beacon to identify a transmitting wireless device that transmitted the emergency indicator beacon, the receiver further configured to receive the emergency message on a data channel of the transmitting wireless device.

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

The following examples pertain to further aspects of this disclosure:

Example 1 is a wireless device including a buffer configured to buffer a received signal over a plurality of time slots of a retransmission frame window, a detector configured to identify a target slot of the plurality of time slots, identify an applicable candidate retransmission pattern based on the target slot, and identify one or more buffered time slots stored in the buffer based on the applicable candidate retransmission pattern, a combiner configured to combine the target slot with the one or more buffered time slots to obtain a combined transmission, and a decoder configured to decode the combined transmission to obtain payload data.

In Example 2, the subject matter of Example 1 can optionally further include a radio frequency (RF) transceiver and one or more antennas, wherein the buffer is configured to receive the received signal via the RF transceiver and the one or more antennas.

In Example 3, the subject matter of Example 1 or 2 can optionally include wherein the detector is further configured to identify a second target slot of the plurality of time slots, identify a second applicable candidate retransmission pattern based on the second target slot, and identify one or more second buffered time slots stored in the buffer based on the second applicable candidate retransmission pattern, wherein the combiner is configured to combine the second target slot with the one or more second buffered time slots to obtain a second combined transmission, and wherein the decoder is configured to decode the second combined transmission to obtain second payload data.

In Example 4, the subject matter of Example 1 or 2 can optionally include wherein the detector is configured to identify the applicable candidate retransmission pattern from a plurality of candidate retransmission patterns that are predefined to have transmission slots with transmissions and inactive transmission slots without transmissions.

In Example 5, the subject matter of Example 4 can optionally include wherein the detector is configured to identify the applicable candidate pattern by identifying, as the applicable candidate pattern, one of the plurality of candidate retransmission patterns that includes a transmission slot that is aligned with the target slot in the retransmission frame window.

In Example 6, the subject matter of Example 4 or 5 can optionally include wherein the plurality of candidate retransmission patterns are a lesser subset of an overall set of retransmission patterns that include each possible pattern of transmissions over the plurality of time slots of the retransmission frame window.

In Example 7, the subject matter of Example 6 can optionally include wherein the number of transmission slots is the same for each of the overall set of candidate retransmission patterns.

In Example 8, the subject matter of Example 4 or 5 can optionally include wherein the detector is configured to identify transmission slots of the applicable candidate retransmission pattern that occur before the target slot in the retransmission frame window as the one or more buffered time slots.

In Example 9, the subject matter of Example 1 or 2 can optionally include wherein the detector is configured to identify one or more additional applicable candidate retransmission patterns based on the target slot, and to identify one or more respective buffered time slots stored in the buffer for each of the one or more additional applicable candidate retransmission patterns, wherein the combiner is configured to combine the target slot with the one or more respective buffered time slots to obtain a respective combined transmission for each of the one or more additional applicable candidate retransmission patterns, and wherein the decoder is configured to decode the respective combined transmission to obtain respective payload data for each of the one or more additional applicable candidate retransmission patterns.

In Example 10, the subject matter of Example 9 can optionally include wherein the decoder is further configured to perform an error check on the payload data for the applicable candidate retransmission pattern and the respective payload data for the one or more additional applicable candidate retransmission patterns to determine whether any of the decodes are successful.

In Example 11, the subject matter of Example 10 can optionally include wherein the decoder is further configured to, if a first decode of a given combined transmission is successful, determine whether the payload data of the given combined transmission is addressed to the wireless device.

In Example 12, the subject matter of Example 1 or 2 can optionally include wherein the detector is configured to sequentially progress through the plurality of time slots to sequentially select each of the plurality of time slots as the target slot, and to, for each selection as the target slot identify one or more additional applicable candidate retransmission patterns based on the target slot, and to identify one or more respective buffered time slots stored in the buffer for each of the one or more additional applicable candidate retransmission patterns, wherein the combiner is configured to, for each selection as the target slot, combine the target slot with the one or more respective buffered time slots to obtain a respective combined transmission for each of the one or more additional applicable candidate retransmission patterns, and wherein the decoder is configured to, for each selection as the target slot, decode the combined transmission to obtain respective payload data for each of the one or more additional applicable candidate retransmission patterns.

In Example 13, the subject matter of Example 1 or 2 can optionally include wherein the decoder is further configured to perform an error check on the payload data to determine whether the decode is successful.

In Example 14, the subject matter of Example 13 can optionally include wherein the decoder is further configured to, if the decode is successful, determine whether the payload data of the combined transmission is addressed to the wireless device.

In Example 15, the subject matter of Example 14 can optionally include wherein the detector is configured to terminate decoding attempts for the retransmission frame window if the payload data of the combined transmission is addressed to the wireless device.

In Example 16, the subject matter of Example 15 can optionally include wherein, if the decode is not successful or if the payload data of the combined transmission is not addressed to the wireless device, the detector is further configured to identify a second target slot of the plurality of time slots, identify a second applicable candidate retransmission pattern based on the second target slot, and identify one or more second buffered time slots stored in the buffer based on the second applicable candidate retransmission pattern, and the combiner is configured to combine the second target slot with the one or more second buffered time slots to obtain a second combined transmission, and the decoder is configured to decode the second combined transmission to obtain second payload data.

In Example 17, the subject matter of Example 15 can optionally include wherein the buffer is configured to buffer the received signal over a second plurality of time slots in a second retransmission frame window occurring after the retransmission window, and wherein the detector, the combiner, and the decoder are configured to process the second plurality of time slots to obtain a second combined transmission and to obtain payload data from the second combined transmission.

In Example 18, the subject matter of any one of Examples 1 to 17 can optionally include wherein the retransmission frame window is synchronized with a transmitter that transmitted the transmission.

In Example 19, the subject matter of Example 18 can optionally include wherein the applicable candidate retransmission pattern is predefined to have transmission slots in some of the plurality of time slots of the retransmission frame window and predefined to have inactive slots in other time slots of the plurality of time slots of the retransmission window.

In Example 20, the subject matter of any one of Examples 1 to 19 can optionally further include a protocol processor configured to execute a protocol stack, wherein the decoder is further configured to, if the decode is successful, notify the protocol stack that the decode was successful, and wherein the protocol stack is configured to transmit an acknowledgement indicating that the decode was successful.

In Example 21, the subject matter of any one of Examples 1 to 20 can optionally include wherein the transmission is from a target transmitter from which the wireless device is expecting a transmission.

In Example 22, the subject matter of any one of Examples 1 to 21 can optionally include wherein the combiner is configured to combine the target slot with the one or more buffered time slots using chase combining.

Example 23 is a method of receiving transmissions at a wireless device, the method including buffering a received signal over a plurality of time slots of a retransmission frame window, identifying a target slot of the plurality of time slots, identifying an applicable candidate retransmission pattern based on the target slot, identifying one or more buffered time slots stored in the buffer based on the applicable candidate retransmission pattern, combining the target slot with the one or more buffered time slots to obtain a combined transmission, and decoding the combined transmission to obtain payload data.

In Example 24, the subject matter of Example 23 can optionally further include wirelessly receiving the received signal.

In Example 25, the subject matter of Example 23 or 24 can optionally further include identifying a second target slot of the plurality of time slots, identifying a second applicable candidate retransmission pattern based on the second target slot, identifying one or more second buffered time slots stored in the buffer based on the second applicable candidate retransmission pattern, combining the second target slot with the one or more second buffered time slots to obtain a second combined transmission, and decoding the second combined transmission to obtain second payload data.

In Example 26, the subject matter of Example 23 or 24 can optionally include wherein identifying the applicable candidate retransmission pattern includes identifying the applicable candidate retransmission pattern from a plurality of candidate retransmission patterns that are predefined to have transmission slots with transmissions and inactive slots without transmissions.

In Example 27, the subject matter of Example 26 can optionally include wherein identifying the applicable candidate pattern includes identifying, as the applicable candidate pattern, one of the plurality of candidate retransmission patterns that includes a transmission slot that is aligned with the target slot in the retransmission frame window.

In Example 28, the subject matter of Example 26 or 27 can optionally include wherein the plurality of candidate retransmission patterns are a lesser subset of an overall set of retransmission patterns that include each possible pattern of transmissions over the plurality of time slots of the retransmission frame window.

In Example 29, the subject matter of Example 28 can optionally include wherein the number of transmission slots is the same for each of the overall set of candidate retransmission patterns.

In Example 30, the subject matter of Example 26 or 27 can optionally include wherein identifying the one or more buffered time slots includes identifying transmission slots of the applicable candidate retransmission pattern that occur before the target slot in the retransmission frame window as the one or more buffered time slots.

In Example 31, the subject matter of Example 23 or 24 can optionally further include identifying one or more additional applicable candidate retransmission patterns based on the target slot, identifying one or more respective buffered time slots stored in the buffer for each of the one or more additional applicable candidate retransmission patterns, combining the target slot with the one or more respective buffered time slots to obtain a respective combined transmission for each of the one or more additional applicable candidate retransmission patterns, and decoding the respective combined transmission to obtain respective payload data for each of the one or more additional applicable candidate retransmission patterns.

In Example 32, the subject matter of Example 31 can optionally further include performing an error check on the payload data for the applicable candidate retransmission pattern and the respective payload data for the one or more additional applicable candidate retransmission patterns to determine whether any of the decodes are successful.

In Example 33, the subject matter of Example 32 can optionally further include if a first decode of a given combined transmission is successful, determining whether the payload data of the given combined transmission is addressed to the wireless device.

In Example 34, the subject matter of Example 23 or 24 can optionally further include sequentially progressing through the plurality of time slots to sequentially select each of the plurality of time slots as the target slot, where each selection as the target slot includes identifying one or more additional applicable candidate retransmission patterns based on the target slot, identifying one or more respective buffered time slots stored in the buffer for each of the one or more additional applicable candidate retransmission patterns, combining the target slot with the one or more respective buffered time slots to obtain a respective combined transmission for each of the one or more additional applicable candidate retransmission patterns, decoding the combined transmission to obtain respective payload data for each of the one or more additional applicable candidate retransmission patterns.

In Example 35, the subject matter of Example 23 or 24 can optionally further include performing an error check on the payload data to determine whether the decode is successful.

In Example 36, the subject matter of Example 35 can optionally further include if the decode is successful, determining whether the payload data of the combined transmission is addressed to the wireless device.

In Example 37, the subject matter of Example 35 can optionally further include terminating decoding attempts for the retransmission frame window if the payload data of the combined transmission is addressed to the wireless device.

In Example 38, the subject matter of Example 37 can optionally further include, if the decode is not successful or if the payload data of the combined transmission is not addressed to the wireless device identifying a second target slot of the plurality of time slots, identifying a second applicable candidate retransmission pattern based on the second target slot, identifying one or more second buffered time slots stored in the buffer based on the second applicable candidate retransmission pattern, combining the second target slot with the one or more second buffered time slots to obtain a second combined transmission, and decoding the second combined transmission to obtain second payload data.

In Example 39, the subject matter of Example 38 can optionally further include buffering the received signal over a second plurality of time slots in a second retransmission frame window occurring after the retransmission window, and processing the second plurality of time slots to obtain a second combined transmission and to obtain payload data from the second combined transmission.

In Example 40, the subject matter of any one of Examples 23 to 39 can optionally include wherein the retransmission frame window is synchronized with a transmitter that transmitted the transmission.

In Example 41, the subject matter of Example 40 can optionally include wherein the applicable candidate retransmission pattern is predefined to have transmission slots in some of the plurality of time slots of the retransmission frame window and predefined to have inactive slots in other time slots of the plurality of time slots of the retransmission window.

In Example 42, the subject matter of any one of Examples 23 to 41 can optionally further include if the decode is successful, transmitting an acknowledgement indicating that the decode was successful.

In Example 43, the subject matter of any one of Examples 23 to 42 can optionally include wherein the transmission is from a target transmitter from which the wireless device is expecting a transmission.

In Example 44, the subject matter of any one of Examples 23 to 43 can optionally include wherein combining the target slot with the one or more buffered time slots includes combining the target slot with the one or more buffered time slots using chase combining.

Example 45 is a wireless device including one or more antennas, a radio frequency (RF) transceiver configured to wirelessly receive a received signal via the one or more antennas, and a baseband modem including the buffer, the detector, the combiner, and the decoder of any one of Examples 1 to 22.

Example 47 is a wireless device including a scheduler configured to identify a packet scheduled for transmission, and a controller configured to randomly select a retransmission pattern from a candidate set of retransmission patterns, the scheduler further configured to perform an initial transmission of the packet and one or more retransmissions of the packet according to the retransmission pattern.

In Example 47, the subject matter of Example 46 can optionally further include a radio frequency (RF) transceiver and one or more antennas, wherein the scheduler is configured to perform the initial transmission and the one or more transmissions via the RF transceiver and the one or more antennas.

In Example 48, the subject matter of Example 46 or 47 can optionally include wherein the retransmission patterns in the candidate set of retransmission patterns are defined over a plurality of time slots of a retransmission frame window, and wherein the retransmission patterns in the candidate set of retransmission patterns are predefined to have transmission slots in some of the plurality of time slots of the retransmission frame window and predefined to have inactive slots in other time slots of the plurality of time slots of the retransmission window.

In Example 49, the subject matter of Example 48 can optionally include wherein the one or more candidate retransmission patterns are a lesser subset of an overall set of retransmission patterns that include each possible pattern of transmissions over the plurality of time slots of the retransmission frame window.

In Example 50, the subject matter of Example 48 or 49 can optionally include wherein the number of transmission slots is the same for each of the retransmission patterns of the candidate set of retransmission patterns.

Example 51 is a method of performing transmissions at a wireless device, the method including identifying a packet scheduled for transmission, randomly selecting a retransmission from a candidate set of retransmission patterns, and performing an initial transmission of the packet and one or more retransmissions of the packet according to the retransmission pattern.

In Example 52, the subject matter of Example 51 can optionally include wherein performing the initial transmission and the one or more retransmissions includes performing the initial transmission and the one or more retransmissions via an RF transceiver and one or more antennas.

In Example 53, the subject matter of Example 51 or 52 can optionally include wherein the retransmission patterns in the candidate set of retransmission patterns are defined over a plurality of time slots of a retransmission frame window, and wherein the retransmission patterns in the candidate set of retransmission patterns are predefined to have transmission slots in some of the plurality of time slots of the retransmission frame window and predefined to have inactive slots in other time slots of the plurality of time slots of the retransmission window.

In Example 54, the subject matter of Example 53 can optionally include wherein the one or more candidate retransmission patterns are a lesser subset of an overall set of retransmission patterns that include each possible pattern of transmissions over the plurality of time slots of the retransmission frame window.

In Example 55, the subject matter of Example 53 or 54 can optionally include wherein the number of transmission slots is the same for each of the retransmission patterns of the candidate set of retransmission patterns.

Example 56 is a non-transitory computer readable medium storing instructions that when executed by one or more processors cause the one or more processors to perform the method of any one of Examples 23 to 44 or 51 to 55.

Example 57 is a wireless device including one or more processors, and a memory storing instructions that when executed by the one or more processors cause the processors to perform the method of any one of Examples 23 to 44 or 51 to 55.

Example 58 is a wireless device including means for buffering a received signal over a plurality of time slots of a retransmission frame window, means for identifying a target slot of the plurality of time slots, means for identifying an applicable candidate retransmission pattern based on the target slot, means for identifying one or more buffered time slots stored in the buffer based on the applicable candidate retransmission pattern, means for combining the target slot with the one or more buffered time slots to obtain a combined transmission, and means for decoding the combined transmission to obtain payload data.

Example 59 is a wireless device including means for identifying a packet scheduled for transmission, means for randomly selecting a retransmission from a candidate set of retransmission patterns, means for performing an initial transmission of the packet and one or more retransmissions of the packet according to the retransmission pattern.

Example 60 is a method of performing authentication at a wireless device, the method including generating an initiation message authentication code based on a secret identifier of the wireless device, transmitting the initiation message authentication code, receiving a response message authentication code from a responding device, determining whether the response message authentication code is valid based on a set of pairwise secret identities that are unique to respective pairings of the wireless device with different trusted devices, and transmitting a confirmation message authentication code to the responding device if the response message authentication code is valid.

In Example 61, the subject matter of Example 60 can optionally include wherein the secret device identifier of the wireless device is a common secret device identifier known to a plurality of devices that consider the wireless device a trusted entity.

In Example 62, the subject matter of Example 60 can optionally include wherein determining whether the response message authentication code is valid based on the set of pairwise secret identities includes determining that a first secret identity in the set produces a candidate response message authentication code that matches the response message authentication code.

In Example 63, the subject matter of Example 60 can optionally include wherein generating the initiation message authentication code includes generating a first random session number, and determining the initiation message authentication code based on the first random session number and an initiation message payload.

In Example 64, the subject matter of Example 63 can optionally include wherein determining the initiation message authentication code is based on a hash function using the first random session number and the initiation message payload as inputs.

In Example 65, the subject matter of any one of Examples 60 to 64 can optionally include wherein transmitting the initiation message authentication code includes transmitting the initiation message authentication code via a radio frequency transceiver and one or more antennas.

In Example 66, the subject matter of any one of Examples 63 to 65 can optionally include wherein transmitting the initiation message authentication code includes transmitting the initiation message authentication code with the first random session number and the initiation message payload.

In Example 67, the subject matter of any one of Examples 63 to 66 can optionally further include receiving a second random session number from the responding device, wherein determining whether the response message authentication code is valid includes determining, based on the first and second random session numbers, respective candidate session keys for one or more of the pairwise secret identities in the set, determining, based on the respective candidate session keys, respective candidate response message authentication codes for the one or more of the pairwise secret identities in the set, determining whether any of the respective candidate response message authentication codes match the response message authentication code, and determining that the response message authentication code is valid if one of the respective candidate response message authentication codes matches the response message authentication code.

In Example 68, the subject matter of Example 67 can optionally further include determining that the response message authentication code is invalid if no respective candidate response message authentication codes match the response message authentication code.

In Example 69, the subject matter of Example 67 can optionally further include generating the confirmation message authentication code based on the respective candidate response message authentication code that matches the response message authentication code.

In Example 70, the subject matter of Example 67 can optionally further include identifying a pairwise secret identity from the set that corresponds to the respective candidate response message authentication code that matches the response message authentication code, and generating the confirmation message authentication code based on the pairwise secret identity.

In Example 71, the subject matter of Example 67 can optionally further include identifying a pairwise secret identity from the set that corresponds to the respective candidate response message authentication code that matches the response message authentication code, generating a second session key based on the pairwise secret identity, the first random session number, and the second random session number, and generating the confirmation message authentication code based on the second session key.

In Example 72, the subject matter of any one of Examples 67 to 71 can optionally include wherein determining the respective candidate response message authentication codes for the one or more of the pairwise secret identities in the set is based on the respective candidate session keys and a response message payload received with the response message authentication code.

In Example 73, the subject matter of any one of Examples 60 to 66 can optionally include wherein determining whether the response message authentication code is valid includes determining respective candidate response message authentication codes for one or more of the pairwise secret identities in the set, determining whether any of the respective candidate response message authentication codes match the response message authentication code, and determining that the response message authentication code is valid if one of the respective candidate response message authentication codes matches the response message authentication code.

In Example 74, the subject matter of Example 73 can optionally further include determining that the response message authentication code is invalid if no respective candidate response message authentication codes match the response message authentication code.

In Example 75, the subject matter of Example 73 can optionally further include generating the confirmation message authentication code based on the respective candidate message authentication code that matches the response message authentication code.

In Example 76, the subject matter of Example 73 can optionally further include identifying a pairwise secret identity from the set that corresponds to the respective candidate response message authentication code that matches the response message authentication code, and generating the confirmation message authentication code based on the pairwise secret identity.

In Example 77, the subject matter of any one of Examples 73 to 76 can optionally include wherein determining the respective candidate response message authentication code for one or more of the pairwise secret identities in the set is based on a response message payload received with the response message authentication code.

In Example 78, the subject matter of any one of Examples 60 to 77 can optionally further include generating the confirmation message authentication code based on a confirmation message payload and transmitting the confirmation message payload with the confirmation message authentication payload.

In Example 79, the subject matter of any one of Examples 60 to 78 can optionally include wherein the response message authentication code is received in response to the initiation message authentication code, the method further including receiving a second response message authentication code from a second responding device in response to the response message authentication code.

In Example 80, the subject matter of any one of Examples 60 to 79 can optionally further include not transmitting a confirmation message authentication code to the responding device if the response message authentication code is invalid.

Example 81 is a method of performing authentication at a wireless device, the method including receiving an initiation message authentication code from an initiating device, determining that the initiation message authentication code is valid based on a set of secret identities for different trusted devices, generating a response message authentication code based on a pairwise secret identity that is unique to a pairing between the wireless device and the initiating device, and transmitting the response message authentication code to the initiating device.

In Example 82, the subject matter of Example 81 can optionally include wherein the set of secret identities includes common secret identities of multiple trusted devices, where the common secret identities are paired with pairwise secret identities that are unique to respective pairings between the wireless device and the multiple trusted devices.

In Example 83, the subject matter of Example 82 can optionally include wherein determining that the initiation message authentication code is valid based on the set of secret identities includes determining that a first secret identity in the set produces a candidate initiation message authentication code that matches the initiation message authentication code.

In Example 84, the subject matter of Example 83 can optionally include wherein generating the response message authentication code based on the pairwise secret identity includes identifying, in the set of secret identities, a pairwise secret identity that is paired to the first secret identity, and generating the response message authentication code with the pairwise secret identity.

In Example 85, the subject matter of Example 83 can optionally include wherein determining that the first secret identity of the set produces the candidate initiation message authentication code that matches the initiation message authentication code includes determining respective candidate initiation message authentication codes for one or more secret identities in the set, comparing the respective candidate initiation message authentication codes to the initiation message authentication code, and determining that a respective candidate initiation message authentication code of the first secret identity matches the initiation message authentication code.

In Example 86, the subject matter of Example 85 can optionally further include receiving a first random session number with the initiation message authentication code, wherein determining the respective candidate initiation message authentication codes for the one or more secret identities in the set includes determining each respective candidate initiation message authentication code based on the first random session number and based on a respective one of the secret identities in the set.

In Example 87, the subject matter of Example 86 can optionally include wherein determining each respective candidate initiation message authentication code based on the first random session number and based on the respective one of the secret identities in the set includes determining each respective candidate initiation message authentication code with a hash function that takes the first random session number and the respective one of the secret identities in the set as inputs.

In Example 88, the subject matter of any one of Examples 81 to 85 can optionally further include receiving a first random session number with the initiation message authentication code and generating a second random session number, wherein generating the response message authentication code based on the pairwise secret identity includes generating a session key based on the pairwise secret identity, the first random session number, and the second random session number, and generating the response message authentication code based on the session key and a response message payload.

In Example 89, the subject matter of Example 88 can optionally further include transmitting the second random session number and the response message payload to the initiating device with the response message authentication code.

In Example 90, the subject matter of Example 88 or 89 can optionally further include receiving a confirmation message authentication code from the initiating device, generating a second session key based on the pairwise secret identity, the first random session number, and the second random session number, determining a candidate confirmation message authentication code based on the second session key and a confirmation message payload, and determining that the confirmation message authentication code is valid if the candidate confirmation message authentication code matches the confirmation message authentication code.

In Example 91, the subject matter of Example 81 can optionally further include receiving a first random session number with the initiation message authentication code, wherein determining that the initiation message authentication code is valid includes determining, based on the first random session number, respective candidate initiation message authentication codes for one or more secret identities in the set, comparing the respective candidate initiation message authentication codes to the initiation message authentication code, and determining that a respective candidate message authentication code for a first secret identity in the set matches the initiation message authentication code.

In Example 92, the subject matter of Example 91 can optionally further include receiving an initiation message payload with the initiation message authentication code, wherein determining the respective candidate initiation message authentication codes for the one or more secret identities in the set is based on the initiation message payload and on the first random session number.

In Example 93, the subject matter of any one of Examples 81 to 92 can optionally include wherein the set of secret identities are common secret identities of the different trusted devices that are known to other wireless devices.

In Example 94, the subject matter of Example 81 can optionally further include receiving a first random session number from the initiating device, wherein determining that the initiation message authentication code is valid includes determining, based on the first session random number, respective candidate initiation message authentication codes for one or more of the secret identities in the set, and determining that a first candidate initiation message authentication code for a first secret identity in the set matches the message authentication code.

In Example 95, the subject matter of Example 94 can optionally include wherein generating the response message authentication code based on the pairwise secret identity includes generating a second random session number, determining a session key based on the pairwise secret identity, the first random session number, and the second random session number, and determining the response message authentication code based on the session key.

In Example 96, the subject matter of Example 95 can optionally include wherein generating the response message authentication code is further based on a response message payload, the method further including transmitting the response message payload with the response message authentication code.

In Example 97, the subject matter of Example 95 or 96 can optionally further include transmitting the second random session number with the response message authentication code.

In Example 98, the subject matter of any one of Examples 95 to 97 can optionally further include receiving a confirmation message authentication code from the initiating device, determining a second session key based on the pairwise secret identity, the first random session number, and the second random session number, and determining whether the confirmation message authentication code is valid based on the second session key.

In Example 99, the subject matter of Example 98 can optionally include wherein determining whether the confirmation message authentication code is valid based on the second session key includes determining a candidate confirmation message authentication code based on the second session key and a confirmation message payload received with the confirmation message authentication code, and determining that the confirmation message authentication code is valid if the confirmation message authentication code matches the candidate confirmation message authentication code.

Example 100 is a wireless device including a message code processor configured to generate an initiation message authentication code based on a secret identifier of the wireless device and to transmit the initiation message authentication code, and a verifier configured to receive a response message authentication code from a responding device and to determine whether the response message authentication code is valid based on a set of pairwise secret identities that are unique to respective pairings of the wireless device with different trusted devices, the message code processor further configured to transmit a confirmation message authentication code to the responding device if the response message authentication code is valid.

In Example 101, the subject matter of Example 100 can optionally further include a radio frequency (RF) transceiver and one or more antennas, wherein the message code processor is configured to transmit signals via the RF transceiver and the one or more antennas and wherein the verifier is configured to receive signals via the RF transceiver and the one or more antennas.

In Example 102, the subject matter of Example 100 or 101 can optionally include wherein the secret device identifier of the wireless device is a common secret device identifier known to a plurality of devices that consider the wireless device a trusted entity.

In Example 103, the subject matter of Example 100 can optionally include wherein the verifier is configured to determine whether the response message authentication code is valid based on the set of pairwise secret identities by determining that a first secret identity in the set produces a candidate response message authentication code that matches the response message authentication code.

In Example 104, the subject matter of Example 100 can optionally further include a random selector configured to generate a first random session number, wherein the message code processor is configured to generate the initiation message authentication code by determining the initiation message authentication code based on the first random session number and an initiation message payload.

In Example 105, the subject matter of Example 104 can optionally include wherein the message code processor is configured to determine the initiation message authentication code based on a hash function using the first random session number and the initiation message payload as inputs.

In Example 106, the subject matter of Example 104 or 105 can optionally include wherein the message code processor is configured to transmit the initiation message authentication code by transmitting the initiation message authentication code with the first random session number and the initiation message payload.

In Example 107, the subject matter of any one of Examples 104 to 106 can optionally include wherein the verifier is further configured to receive a second random session number from the responding device, and wherein the verifier is configured to whether the response message authentication code is valid by determining, based on the first and second random session numbers, respective candidate session keys for one or more of the pairwise secret identities in the set, determining, based on the respective candidate session keys, respective candidate response message authentication codes for the one or more of the pairwise secret identities in the set, determining whether any of the respective candidate response message authentication codes match the response message authentication code, and determining that the response message authentication code is valid if one of the respective candidate response message authentication codes matches the response message authentication code.

In Example 108, the subject matter of Example 107 can optionally include wherein the verifier is further configured to determine that the response message authentication code is invalid if no respective candidate response message authentication codes match the response message authentication code.

In Example 109, the subject matter of Example 107 can optionally include wherein the message code processor is further configured to generate the confirmation message authentication code based on the respective candidate message authentication code that matches the response message authentication code.

In Example 110, the subject matter of Example 107 can optionally include wherein the verifier is further configured to identify a pairwise secret identity from the set that corresponds to the respective candidate response message authentication code that matches the response message authentication code, wherein the message code processor is configured to generate the confirmation message authentication code based on the pairwise secret identity.

In Example 111, the subject matter of Example 107 can optionally include wherein the verifier is configured to identify a pairwise secret identity from the set that corresponds to the respective candidate response message authentication code that matches the response message authentication code, and wherein the message code processor is further configured to generate a second session key based on the pairwise secret identity, the first random session number, and the second random session number, and to generate the confirmation message authentication code based on the second session key.

In Example 112, the subject matter of any one of Examples 107 to 111 can optionally include wherein the verifier is configured to determine the respective candidate response message authentication codes for the one or more of the pairwise secret identities in the set based on the respective candidate session keys and a response message payload received with the response message authentication code.

In Example 113, the subject matter of any one of Examples 100 to 106 can optionally include wherein the verifier is configured to determine whether the response message authentication code is valid by determining respective candidate response message authentication codes for one or more of the pairwise secret identities in the set, determining whether any of the respective candidate response message authentication codes match the response message authentication code, and determining that the response message authentication code is valid if one of the respective candidate response message authentication codes matches the response message authentication code.

In Example 114, the subject matter of Example 113 can optionally include wherein the verifier is configured to determine that the response message authentication code is invalid if no respective candidate response message authentication codes match the response message authentication code.

In Example 115, the subject matter of Example 113 can optionally include wherein the message code processor is further configured to generate the confirmation message authentication code based on the respective candidate message authentication code that matches the response message authentication code.

In Example 116, the subject matter of Example 113 can optionally include wherein the verifier is further configured to identify a pairwise secret identity from the set that corresponds to the respective candidate response message authentication code that matches the response message authentication code, and wherein the message code processor is configured to generate the confirmation message authentication code based on the pairwise secret identity.

In Example 117, the subject matter of any one of Examples 113 to 116 can optionally include wherein the verifier is configured to determine the respective candidate response message authentication code for one or more of the pairwise secret identities in the set based on a response message payload received with the response message authentication code.

In Example 118, the subject matter of any one of Examples 100 to 117 can optionally include wherein the message code processor is further configured generate the confirmation message authentication based on a confirmation message payload and to transmit the confirmation message payload with the confirmation message authentication payload.

In Example 119, the subject matter of any one of Examples 100 to 118 can optionally include wherein the verifier is configured to receive the response message authentication code in response to the initiation message authentication code, the verifier further configured to receive a second response message authentication code from a second responding device in response to the response message authentication code.

In Example 120, the subject matter of any one of Examples 100 to 119 can optionally include wherein the message code processor is further configured to not transmit a confirmation message authentication code to the responding device if the response message authentication code is invalid.

Example 121 is a wireless device including a verifier configured to receive an initiation message authentication code from an initiating device, and to determine that the initiation message authentication code is valid based on a set of secret identities for different trusted devices, and a message code processor configured to generate a response message authentication code based on a pairwise secret identity that is unique to a pairing between the wireless device and the initiating device, and to transmit the response message authentication code to the initiating device.

In Example 122, the subject matter of Example 121 can optionally further include a radio frequency (RF) transceiver and one or more antennas, wherein the verifier is configured to receive signals via the RF transceiver and the one or more antennas and wherein the message code processor is configured to transmit signals via the RF transceiver and the one or more antennas.

In Example 123, the subject matter of Example 121 can optionally include wherein the set of secret identities includes common secret identities of multiple trusted devices, where the common secret identities are paired with pairwise secret identities that are unique to respective pairings between the wireless device and the multiple trusted devices.

In Example 124, the subject matter of Example 123 can optionally include wherein the verifier is configured to determine that the initiation message authentication code is valid based on the set of secret identities by determining that a first secret identity in the set produces a candidate initiation message authentication code that matches the initiation message authentication code.

In Example 125, the subject matter of Example 124 can optionally include wherein the verifier is further configured to identify, in the set of secret identities, a pairwise secret identity that is paired to the first secret identity, and wherein the message code processor is configured to generate the response message authentication code based on the pairwise secret identity by generating the response message authentication code with the pairwise secret identity.

In Example 126, the subject matter of Example 124 can optionally include wherein the verifier is configured to determine that the first secret identity of the set produces the candidate initiation message authentication code that matches the initiation message authentication code by determining respective candidate initiation message authentication codes for one or more secret identities in the set, comparing the respective candidate initiation message authentication codes to the initiation message authentication code, and determining that a respective candidate initiation message authentication code of the first secret identity matches the initiation message authentication code.

In Example 127, the subject matter of Example 126 can optionally include wherein the verifier is further configured to receive a first random session number with the initiation message authentication code, and is configured to determine the respective candidate initiation message authentication codes for the one or more secret identities in the set by determining each respective candidate initiation message authentication code based on the first random session number and based on a respective one of the secret identities in the set.

In Example 128, the subject matter of Example 127 can optionally include wherein the verifier is configured to determine each respective candidate initiation message authentication code based on the first random session number and based on the respective one of the secret identities in the set by determining each respective candidate initiation message authentication code with a hash function that takes the first random session number and the respective one of the secret identities in the set as inputs.

In Example 129, the subject matter of any one of Examples 121 to 128 can optionally include wherein the verifier is further configured to receive a first random session number with the initiation message authentication code, the wireless device further including a random selector configured to generate a second random session number, and wherein the message code processor is configured to generate the response message authentication code based on the pairwise secret identity by generating a session key based on the pairwise secret identity, the first random session number, and the second random session number, and generating the response message authentication code based on the session key and a response message payload.

In Example 130, the subject matter of Example 129 can optionally include wherein the message code processor is further configured to transmit the second random session number and the response message payload to the initiating device with the response message authentication code.

In Example 131, the subject matter of Example 129 or 130 can optionally include wherein the verifier is further configured to receive a confirmation message authentication code from the initiating device, and wherein the message code processor is further configured to generate a second session key based on the pairwise secret identity, the first random session number, and the second random session number, determine a candidate confirmation message authentication code based on the second session key and a confirmation message payload, and determine that the confirmation message authentication code is valid if the candidate confirmation message authentication code matches the confirmation message authentication code.

In Example 132, the subject matter of Example 121 can optionally include wherein the verifier is further configured to receive a first session number with the initiation message authentication code, and wherein the message code processor is configured to determine that the initiation message authentication code is valid by determining, based on the first random session number, respective candidate initiation message authentication codes for one or more secret identities in the set, comparing the respective candidate initiation message authentication codes to the initiation message authentication code, and determining that a respective candidate message authentication code for a first secret identity in the set matches the initiating message authentication code.

In Example 133, the subject matter of Example 132 can optionally include wherein the verifier is further configured to receive an initiation message payload with the initiation message, and wherein the verifier is configured to determine the respective candidate initiation message authentication codes for the one or more secret identities in the set based on the initiation message payload and on the first random session number.

In Example 134, the subject matter of any one of Examples 121 to 133 can optionally include wherein the set of secret identities are common secret identities of the different trusted devices that are known to other wireless devices.

In Example 135, the subject matter of Example 121 can optionally include wherein the verifier is further configured to receive a first random session number from the initiating device, and wherein the verifier is configured to determine that the initiation message authentication code is valid by determining, based on the first random session number, respective candidate initiation message authentication codes for one or more of the secret identities in the set, and determining that a first candidate initiation message authentication code for a first secret identity in the set matches the message authentication code.

In Example 136, the subject matter of Example 135 can optionally further include a random selector configured to generate a second random session number, wherein the message code processor is configured to generate the response message the response message authentication code based on the pairwise secret identity by determining a session key based on the pairwise secret identity, the first random session number, and the second random session number, and determining the response message authentication code based on the session key.

In Example 137, the subject matter of Example 136 can optionally include wherein the message code processor is configured to generate the response message authentication code further based on a response message payload, and is further configured to transmit the response message payload with the response message authentication code.

In Example 138, the subject matter of Example 136 or 137 can optionally include wherein the message code processor is further configured to transmit the second random session number with the response message authentication code.

In Example 139, the subject matter of any one of Examples 136 to 138 can optionally include wherein the verifier is further configured to receive a confirmation message authentication code from the initiating device, determine a second session key based on the pairwise secret identity, the first random session number, and the second random session number, and determine whether the confirmation message authentication code is valid based on the second session key.

In Example 140, the subject matter of Example 139 can optionally include wherein the verifier is configured to determine whether the confirmation message authentication code is valid based on the second session key by determining a candidate confirmation message authentication code based on the second session key and a confirmation message payload received with the confirmation message authentication code, and determining that the confirmation message authentication code is valid if the confirmation message authentication code matches the candidate confirmation message authentication code.

Example 141 is a wireless device including a radio frequency transceiver and one or more antennas, one or more processors configured to transmit and receive wireless signals via the radio frequency transceiver and the one or more antennas, the one or more processors further configured to generate an initiation message authentication code based on a secret identifier of the wireless device transmit the initiation message authentication code, receive a response message authentication code from a responding device, determine whether the response message authentication code is valid based on a set of pairwise secret identities that are unique to respective pairings of the wireless device with different trusted devices, and transmit a confirmation message authentication code to the responding device if the response message authentication code is valid.

Example 142 is a wireless device including a radio frequency transceiver and one or more antennas, one or more processors configured to transmit and receive wireless signals via the radio frequency transceiver and the one or more antennas, the one or more processors further configured to receive an initiation message authentication code from an initiating device, determine that the initiation message authentication code is valid based on a set of secret identities for different trusted devices, generate a response message authentication code based on a pairwise secret identity that is unique to a pairing between the wireless device and the initiating device, and transmit the response message authentication code to the initiating device.

Example 143 is a wireless device including means for generating an initiation message authentication code based on a secret identifier of the wireless device means for transmitting the initiation message authentication code, means for receiving a response message authentication code from a responding device, means for determining whether the response message authentication code is valid based on a set of pairwise secret identities that are unique to respective pairings of the wireless device with different trusted devices, and means for transmitting a confirmation message authentication code to the responding device if the response message authentication code is valid.

Example 144 is a wireless device including means for receiving an initiation message authentication code from an initiating device, means for determining that the initiation message authentication code is valid based on a set of secret identities for different trusted devices, means for generating a response message authentication code based on a pairwise secret identity that is unique to a pairing between the wireless device and the initiating device, and means for transmitting the response message authentication code to the initiating device.

Example 145 is a non-transitory computer readable medium storing instructions that when executed by one or more processors cause the one or more processors to perform the method of any one of Examples 60 to 99.

Example 146 is a wireless device including a discovery controller configured to broadcast a first discovery initiation message, and a decoder configured to decode discovery response messages from one or more first responding devices, the discovery controller further configured to transmit one or more messages to the one or more first responding devices to instruct the one or more first responding devices to not respond to a second discovery initiation message, and to broadcast the second discovery initiation message, the decoder further configured to decode discovery response messages from one or more second responding devices.

In Example 147, the subject matter of Example 146 can optionally include wherein the decoder is configured to receive the discovery response messages via a radio frequency transceiver and one or more antennas, and wherein the discovery controller is configured to transmit the first discovery initiation message, the second discovery initiation message, and the or more messages via the radio frequency transceiver and the one or more antennas.

In Example 148, the subject matter of Example 146 or 147 can optionally further include the radio frequency transceiver and the one or more antennas.

In Example 149, the subject matter of any one of Examples 146 to 148 can optionally include wherein the decoder is configured to decode the discovery response messages from the one or more first responding devices by receiving signal data from a plurality of channels allocated for discovery in a first discovery window, decode the signal data from the plurality of channels, and determine that the discovery response messages were successfully decoded from the signal data.

In Example 150, the subject matter of any one of Examples 146 to 149 can optionally include wherein the decoder is configured to decode the discovery response messages from the one or more first responding devices by decoding discovery response messages from a plurality of responding devices that include the one or more first responding devices, and wherein the discovery controller is configured to select the one or more first responding devices from the plurality of responding devices.

In Example 151, the subject matter of Example 150 can optionally include wherein the discovery controller is configured to select the one or more first responding devices from the plurality of responding devices based on a number of responding devices that responded to a previous discovery initiation message transmitted before the first discovery initiation message.

In Example 152, the subject matter of any one of Examples 146 to 151 can optionally include wherein the discovery controller is configured to individually address the one or more messages to the one or more first responding devices.

In Example 153, the subject matter of any one of Examples 146 to 152 can optionally include wherein the discovery controller is configured to specify, in the messages, a set number of subsequent discovery initiation messages for which the one or more first responding devices are instructed to not respond.

In Example 154, the subject matter of any one of Examples 146 to 150 can optionally include wherein the one or more messages are a discovery confirmation message, and wherein the discovery controller is further configured to generate the discovery confirmation message by identifying a device ID of a first responding device of the one or more first responding devices, generating a plurality of random integers based on the device ID, and activating bits in a bit string of the discovery confirmation message based on the plurality of random integers.

In Example 155, the subject matter of Example 154 can optionally include wherein the discovery controller is configured to generate the plurality of random integers based on the device ID by using the device ID as a seed to initialize a pseudo-random number generator and generating the plurality of random integers with the pseudo-random number generator.

In Example 156, the subject matter of Example 154 or 155 can optionally include wherein the discovery controller is configured to activate the bits in the bit string of the discovery confirmation message based on the plurality of random integers by using the plurality of random integers to identify indices of the bit string and activating the bits at the indices of the bit string.

Example 157 is a wireless device including a radio frequency transceiver and one or more antennas, and one or more processors configured to transmit and receive signals via the radio frequency transceiver and the one or more antennas, the one or more processors further configured to broadcast a first discovery initiation message, decode discovery response messages from one or more first responding devices, transmit messages to the one or more responding devices to instruct the one or more responding devices to not respond to a second discovery initiation message, broadcast the second discovery initiation message, and decode discovery response messages from one or more second responding devices.

Example 158 is a method of performing discovery at a wireless device, the method including broadcasting a first discovery initiation message, decoding discovery response messages from one or more first responding devices, transmitting messages to the one or more responding devices to instruct the one or more responding devices to not respond to a second discovery initiation message, broadcasting the second discovery initiation message, and decoding discovery response messages from one or more second responding devices.

In Example 159, the subject matter of Example 158 can optionally further include wirelessly receiving the discovery response messages.

In Example 160, the subject matter of Example 158 or 159 can optionally include wherein decoding the discovery response messages from the one or more first responding devices includes receiving signal data from a plurality of channels allocated for discovery in a first discovery window, decoding the signal data from the plurality of channels, and determining that the discovery response messages were successfully decoded from the signal data.

In Example 161, the subject matter of any one of Examples 158 to 160 can optionally include wherein decoding the discovery response messages from the one or more first responding devices includes decoding discovery response messages from a plurality of responding devices that include the one or more first responding devices, the method further including selecting the one or more first responding devices from the plurality of responding devices.

In Example 162, the subject matter of Example 161 can optionally include wherein selecting the one or more first responding devices from the plurality of responding devices includes selecting the one or more first responding devices from the plurality of responding devices based on a number of responding devices that responded to a previous discovery initiation message transmitted before the first discovery initiation message.

In Example 163, the subject matter of any one of Examples 158 to 162 can optionally further include generating the messages, wherein the messages are individually addressed to the one or more or more first responding devices.

In Example 164, the subject matter of any one of Examples 158 to 163 can optionally further include generating the messages, wherein the messages specify a set number of subsequent discovery initiation messages for which the one or more first responding devices are instructed to not respond.

In Example 165, the subject matter of any one of Examples 158 to 162 can optionally include wherein the one or more messages are a discovery confirmation message, the method further including generating the discovery confirmation message by identifying a device ID of a first responding device of the one or more first responding devices, generating a plurality of random integers based on the device ID, and activating bits in a bit string of the discovery confirmation message based on the plurality of random integers.

In Example 166, the subject matter of Example 165 can optionally include wherein generating the plurality of random integers based on the device ID includes using the device ID as a seed to initialize a pseudo-random number generator and generating the plurality of random integers with the pseudo-random number generator.

In Example 167, the subject matter of Example 165 or 166 can optionally include wherein activating the bits in the bit string of the discovery confirmation message based on the plurality of random integers includes using the plurality of random integers to identify indices of the bit string and activating the bits at the indices of the bit string.

Example 168 is a wireless device including a decoder configured to receive a first discovery initiation message from an initiating device, and a discovery controller configured to transmit a first discovery response message to the initiating device, the decoder further configured to receive a message from the initiating device that instructs the wireless device to not respond to a second discovery initiation message, and further configured to receive the second discovery initiation message from the initiating device, and the discovery controller further configured to not respond to the second discovery initiation message.

In Example 169, the subject matter of Example 168 can optionally include wherein the decoder is configured to receive the first discovery initiation message, the second discovery initiation message, and the message via a radio frequency transceiver and one or more antennas, and wherein the discovery controller is configured to transmit the first discovery response message to the initiating device via the radio frequency transceiver and the one or more antennas.

In Example 170, the subject matter of Example 169 can optionally further include the radio frequency transceiver and the one or more antennas.

In Example 171, the subject matter of any one of Examples 168 to 170 can optionally include wherein the message is individually addressed to the wireless device.

In Example 172, the subject matter of any one of Examples 168 to 171 can optionally include wherein the message indicates a set number of subsequent discovery initiation messages to not respond to, and wherein the discovery controller is configured to not respond for the set number of subsequent discovery initiation messages.

In Example 173, the subject matter of any one of Examples 168 to 172 can optionally include wherein the discovery controller is configured to transmit the first discovery response message by selecting a channel from a plurality of channels allocated for discovery, and transmitting the first discovery response message on the channel.

In Example 174, the subject matter of any one of Examples 168 to 173 can optionally include wherein the discovery controller is further configured to evaluate a bit string in the message by generating, based on a device ID of the wireless device, a local copy of a bit string, and comparing the local copy of the bit string to the bit string in the message, and determining that the wireless device is instructed to not respond if the local copy of the bit string matches the bit string in the message.

In Example 175, the subject matter of Example 174 can optionally include wherein the discovery controller is configured to generate the local copy of the bit string by generating a plurality of random integers based on the device ID, and activating bits in the local copy of the bit string of the discovery confirmation message based on the plurality of random integers.

In Example 176, the subject matter of Example 175 can optionally include wherein the discovery controller is configured to activate the bits in the local copy of the bit string by using the plurality of random integers to identify indices of the local copy bit string and activating the bits at the indices of the local copy of the bit string.

Example 177 is a wireless device including a radio frequency transceiver and one or more antennas, one or more processors configured to transmit and receive signals via the radio frequency transceiver and the one or more antennas, the one or more processors further configured to receive a first discovery initiation message from an initiating device, transmit a first discovery response message to the initiating device, receive a message from the initiating device that instructs the wireless device to not respond to a second discovery initiation message, receive the second discovery initiation message from the initiating device, and not respond to the second discovery initiation message.

Example 178 is a method of performing discovery at a wireless device, the method including receiving a first discovery initiation message from an initiating device, transmitting a first discovery response message to the initiating device, receiving a message from the initiating device that instructs the wireless device to not respond to a second discovery initiation message, receiving the second discovery initiation message from the initiating device, and not respond to the second discovery initiation message.

In Example 179, the subject matter of Example 178 can optionally include wherein receiving the first discovery initiation message, the message, and the second discovery initiation message includes wirelessly receiving the first discovery initiation message, the message, and the second discovery initiation message via a radio frequency transceiver and one or more antennas, and wherein transmitting the first discovery response message includes wirelessly transmitting the first discovery response message via the radio frequency transceiver and the one or more antennas.

In Example 180, the subject matter of Example 178 or 179 can optionally include wherein the message is individually addressed to the wireless device.

In Example 181, the subject matter of any one of Examples 178 to 180 can optionally include wherein the message indicates a set number of subsequent discovery initiation messages to not respond to, the method further including not responding for the set number of subsequent discovery initiation messages.

In Example 182, the subject matter of any one of Examples 178 to 181 can optionally include wherein transmitting the first discovery response message includes selecting a channel from a plurality of channels allocated for discovery, and transmitting the first discovery response message on the channel.

In Example 183, the subject matter of any one of Examples 178 to 182 can optionally further include evaluating a bit string in the message by generating, based on a device ID of the wireless device, a local copy of a bit string, comparing the local copy of the bit string to the bit string in the message, and determining that the wireless device is instructed to not respond if the local copy of the bit string matches the bit string in the message.

In Example 184, the subject matter of Example 183 can optionally include wherein generating the local copy of the bit string includes generating a plurality of random integers based on the device ID, and activating bits in the local copy of the bit string of the discovery confirmation message based on the plurality of random integers.

In Example 185, the subject matter of Example 184 can optionally include wherein activating the bits in the local copy of the bit string includes using the plurality of random integers to identify indices of the local copy bit string and activating the bits at the indices of the local copy of the bit string.

Example 186 is a wireless device including a discovery controller configured to broadcast a first discovery initiation message, and a decoder configured to decode one or more first discovery response messages, the discovery controller further configured to determine, based on the one or more first discovery response messages, a response criteria that affects the number of responding devices that respond to a second discovery initiation message, and to broadcast the second discovery initiation message and the response criteria, the decoder further configured to decode one or more second discovery response messages.

In Example 187, the subject matter of Example 186 can optionally include wherein the discovery controller is configured to transmit the first discovery initiation message and the second discovery initiation message via a radio frequency transceiver and one or more antennas, and wherein the decoder is configured to receive the one or more first discovery response messages and the one or more second discovery response messages via the radio frequency transceiver and the one or more antennas.

In Example 188, the subject matter of Example 187 can optionally further include the radio frequency transceiver and the one or more antennas.

In Example 189, the subject matter of any one of Examples 186 to 188 can optionally include wherein the decoder is configured to decode the one or more first discovery response messages by receiving signal data from a plurality of channels allocated for discovery in a first discovery window, decoding the signal data from the plurality of channels, and determining that the discovery response messages were successfully decoded from the signal data.

In Example 190, the subject matter of any one of Examples 186 to 189 can optionally include wherein the response criteria is a probability value that determines the probability that a responding device responds to the second discovery initiation message.

In Example 191, the subject matter of Example 190 can optionally include wherein the discovery controller is configured to determine the probability value based on the number of responding devices that responded to a previous discovery initiation message transmitted before the first discovery initiation message.

In Example 192, the subject matter of Example 191 can optionally include wherein the discovery controller is configured to determine the probability value by selecting a first value as the probability value if the number of responding devices that responded to the previous discovery initiation message is more than a predefined threshold, and selecting a second value greater than the first value as the probability value if the number of responding devices that responded to the previous discovery initiation message is less than the predefined threshold.

In Example 193, the subject matter of any one of Examples 186 to 189 can optionally include wherein the response criteria is one or more subset identifiers that identify a subset of responding devices.

In Example 194, the subject matter of Example 193 can optionally include wherein one or more subset identifiers are one or more device group numbers that respectively identify a group of responding devices that are pre-assigned to the device group number.

In Example 195, the subject matter of Example 193 can optionally include wherein the one or more subset identifiers are device-dependent values that respectively identify a subset of responding devices based on a device network address or device identifier.

In Example 196, the subject matter of any one of Examples 193 to 195 can optionally include wherein the discovery controller is configured to determine the one or more subset identifiers by determining the number of responding devices that responded to a previous discovery initiation message transmitted before the first discovery initiation message, and selecting, as the response criteria, one or more subset identifiers that identify a first number of responding devices if the number of responding devices is greater than a predefined threshold, and selecting, as the response criteria, one or more subset identifiers that identify a second number of responding devices if the number of responding devices is less than the predefined threshold, where the second number is greater than the first number.

Example 197 is a wireless device including a radio frequency transceiver and one or more antennas, and one or more processors configured to transmit and receive signals via the radio frequency transceiver and the one or more antennas, the one or more processors further configured to broadcast a first discovery initiation message and decode one or more first discovery response messages, determine, based on the one or more first discovery response messages, a response criteria that affects the number of devices that respond to a second discovery initiation message, broadcast the second discovery initiation message and the response criteria, and decode one or more second discovery response messages.

Example 198 is a method of performing discovery at a wireless device, the method including broadcasting a first discovery initiation message and decoding one or more first discovery response messages, determining, based on the one or more first discovery response messages, a response criteria that affects the number of devices that respond to a second discovery initiation message, broadcasting the second discovery initiation message and the response criteria, and decoding one or more second discovery response messages.

In Example 199, the subject matter of Example 198 can optionally further include receiving the one or more first discovery response messages and the one or more second discovery response messages via a radio frequency transceiver and one or more antennas, and wherein broadcasting the first discovery initiation message and the second discovery initiation message includes transmitting the first discovery initiation message and the second discovery initiation message via the radio frequency transceiver and the one or more antennas.

In Example 200, the subject matter of Example 198 or 199 can optionally include wherein decoding the one or more first discovery response messages includes receiving signal data from a plurality of channels allocated for discovery in a first discovery window, decoding the signal data from the plurality of channels, and determining that the discovery response messages were successfully decoded from the signal data.

In Example 201, the subject matter of any one of Examples 198 to 200 can optionally include wherein the response criteria is a probability value that determines the probability that a responding device responds to the second discovery initiation message.

In Example 202, the subject matter of Example 201 can optionally include wherein determining the response criteria includes determining the probability value based on the number of responding devices that responded to a previous discovery initiation message transmitted before the first discovery initiation message.

In Example 203, the subject matter of Example 202 can optionally include wherein determining the probability value includes selecting a first value as the probability value if the number of responding devices that responded to the previous discovery initiation message is more than a predefined threshold, and selecting a second value greater than the first value as the probability value if the number of responding devices that responded to the previous discovery initiation message is less than the predefined threshold.

In Example 204, the subject matter of any one of Examples 198 to 200 can optionally include wherein the response criteria is one or more subset identifiers that identify a subset of responding devices.

In Example 205, the subject matter of Example 204 can optionally include wherein one or more subset identifiers are one or more device group numbers that respectively identify a group of responding devices that are pre-assigned to the device group number.

In Example 206, the subject matter of Example 204 can optionally include wherein the one or more subset identifiers are device-dependent values that respectively identify a subset of responding devices based on a device network address or device identifier.

In Example 207, the subject matter of any one of Examples 204 to 206 can optionally further include determining the one or more subset identifiers by determining the number of responding devices that responded to a previous discovery initiation message transmitted before the first discovery initiation message, selecting, as the response criteria, one or more subset identifiers that identify a first number of responding devices if the number of responding devices is greater than a predefined threshold, and selecting, as the response criteria, one or more subset identifiers that identify a second number of responding devices if the number of responding devices is less than the predefined threshold, where the second number is greater than the first number.

Example 208 is a method of performing discovery at a wireless device, the method including receiving, from an initiating device, a discovery initiation message including a response criteria, determining whether to respond to the discovery initiation message based on the response criteria, and transmitting a discovery response message if it is determined to respond to the discovery initiation message and not transmitting the discovery response message if it is determined not to respond to the discovery initiation message.

In Example 209, the subject matter of Example 208 can optionally include wherein receiving the discovery initiation message includes receiving the discovery initiation message via a radio frequency transceiver and one or more antennas, and wherein transmitting the discovery response message includes transmitting the discovery response message via the radio frequency transceiver and the one or more antennas.

In Example 210, the subject matter of Example 208 or 209 can optionally include wherein the response criteria is a probability value, and wherein determining whether to respond to the discovery initiation message includes executing a random check that generates a positive result with a probability of the probability value, and responding to the discovery initiation message if the random check generates a positive result.

In Example 211, the subject matter of Example 208 or 209 can optionally include wherein the response criteria is one or more device group numbers that are preassigned to respective groups of wireless devices, and wherein determining whether to respond to the discovery initiation message includes determining whether the wireless device is preassigned to any of the one or more device group numbers, and responding to the discovery initiation message if the wireless device is preassigned to any of the one or more device group numbers.

In Example 212, the subject matter of Example 208 or 209 can optionally include wherein the response criteria is one or more device-dependent values that depend on a network address or device identity, and wherein determining whether to respond to the discovery initiation message includes determining a device-dependent value of the wireless device based on a network address or a device identity of the wireless device, determining whether the device-dependent value of the wireless device matches any of the one or more device-dependent values of the response criteria, and responding to the discovery initiation message if the device-dependent value of the wireless device matches any of the one or more device-dependent values of the response criteria.

In Example 213, the subject matter of any one of Examples 208 to 212 can optionally include wherein transmitting the discovery response message includes selecting a channel from a plurality of channels allocated for discovery, and transmitting the discovery response message on the channel.

Example 214 is a wireless device including a decoder configured to receive, from an initiating device, a discovery initiation message including a response criteria, and a discovery controller configured to determine whether to respond to the discovery initiation message based on the response criteria, transmit a discovery response message if it is determined to respond to the discovery initiation message, and not transmitting the discovery response message if it is determined not to respond to the discovery initiation message.

In Example 215, the subject matter of Example 214 can optionally include wherein the decoder is configured to receive the discovery initiation message via a radio frequency transceiver and one or more antennas, and wherein the discovery controller is configured to transmit the discovery response message via the one or more antennas.

In Example 216, the subject matter of Example 215 can optionally further include the radio frequency transceiver and the one or more antennas.

In Example 217, the subject matter of any one of Examples 214 to 216 can optionally include wherein the response criteria is a probability value, and wherein the discovery controller is configured to determine whether to respond to the discovery initiation message by executing a random check that generates a positive result with a probability of the probability value, and responding to the discovery initiation message if the random check generates a positive result.

In Example 218, the subject matter of any one of Examples 214 to 216 can optionally include wherein the response criteria is one or more device group numbers that are preassigned to respective groups of wireless devices, and wherein the device controller is configured to determine whether to respond to the discovery

initiation message by determining whether the wireless device is preassigned to any of the one or more device group numbers, and responding to the discovery initiation message if the wireless device is preassigned to any of the one or more device group numbers.

In Example 219, the subject matter of any one of Examples 214 to 216 can optionally include wherein the response criteria is one or more device-dependent values that depend on a network address or device identity, and wherein the discovery controller is configured to determine whether to respond to the discovery initiation message by determining a device-dependent value of the wireless device based on a network address or a device identity of the wireless device, determining whether the device-dependent value of the wireless device matches any of the one or more device-dependent values of the response criteria, and responding to the discovery initiation message if the device-dependent value of the wireless device matches any of the one or more device-dependent values of the response criteria.

In Example 220, the subject matter of any one of Examples 214 to 219 can optionally include wherein the discovery controller is configured to transmit the discovery response message by selecting a channel from a plurality of channels allocated for discovery, and transmitting the discovery response message on the channel.

Example 221 is a wireless device including a radio frequency transceiver and one or more antennas, and one or more processors configured to transmit and receive signals via the radio frequency transceiver and the one or more antennas, the one or more processors further configured to receive, from an initiating device, a discovery initiation message including a response criteria, determine whether to respond to the discovery initiation message based on the response criteria, and transmit a discovery response message if it is determined to respond to the discovery initiation message and not transmitting the discovery response message if it is determined not to respond to the discovery initiation message.

Example 222 is a method of performing discovery at a wireless device, the method including receiving a discovery initiation message from an initiating device, determining a probability value, determining whether to respond to the discovery initiation message based on the probability value, and transmitting a discovery response message to the initiating device if it is determined to respond to the discovery initiation message, and not transmitting a discovery response message to the initiating device if it is determined not to respond to the discovery initiation message.

In Example 223, the subject matter of Example 222 can optionally include wherein receiving the discovery initiation message includes receiving the discovery initiation message via a radio frequency transceiver and one or more antennas, and wherein transmitting the discovery response message includes transmitting the discovery response message via the radio frequency transceiver and the one or more antennas.

In Example 224, the subject matter of Example 222 or 223 can optionally include wherein the probability value is a preconfigured probability value, and wherein determining the probability value includes retrieving the probability value from a memory.

In Example 225, the subject matter of Example 222 or 223 can optionally include wherein determining the probability value includes selecting a first value as the probability value if a received power measurement of the initiating device is greater than a predefined threshold, and selecting a second value as the probability value if the received power measurement is less than the predefined threshold, where the second value is greater than the first value.

In Example 226, the subject matter of Example 222 or 223 can optionally include wherein determining the probability value includes selecting, as the probability value, a first value if a number of received discovery initiation messages from the initiating device in a specific time window is greater than a predefined threshold, and selecting, as the probability value, a second value if the number of received discovery initiation messages from the initiating device in the specific time window is less than the predefined threshold, where the second value is greater than the first value.

In Example 227, the subject matter of Example 222 or 223 can optionally include wherein determining the probability value includes selecting, as the probability value, a first value if an average interval between received discovery initiation messages from the initiating device is greater than a predefined threshold, and selecting, as the probability value, a second value if the average interval between received discovery initiation messages from the initiating device is less than the predefined threshold, where the second value is less than the first value.

In Example 228, the subject matter of any one of Examples 222 to 227 can optionally include wherein determining whether to respond to the discovery initiation message based on the probability value includes executing a random check that generates a positive result with a probability of the probability value, and responding to the discovery initiation message if the random check generates a positive result.

In Example 229, the subject matter of any one of Examples 222 to 228 can optionally include wherein transmitting the discovery response message to the initiating device includes selecting a channel from a plurality of channels allocated for discovery, and transmitting the discovery response message on the channel.

Example 230 is a wireless device including a decoder configured to receive a discovery initiation message from an initiating device, and a discovery controller configured to determine a probability value, determine whether to respond to the discovery initiation message based on the probability value, and transmit a discovery response message to the initiating device if it is determined to respond to the discovery initiation message, and not transmit a discovery response message to the initiating device if it is determined not to respond to the discovery initiation message.

In Example 231, the subject matter of Example 230 can optionally include wherein the decoder is configured to receive the discovery initiation message from the initiating device via a radio frequency transceiver and one or more antennas, and wherein the discovery controller is configured to transmit the discovery response message via the radio frequency transceiver and the one or more antennas.

In Example 232, the subject matter of Example 231 can optionally further include the radio frequency transceiver and the one or more antennas.

In Example 233, the subject matter of any one of Examples 230 to 232 can optionally include wherein the probability value is a preconfigured probability value of the wireless device, and wherein the discovery controller is configured to determine the probability value by retrieving it from a memory.

In Example 234, the subject matter of any one of Examples 230 to 233 can optionally include wherein the discovery controller is configured to determine the probability value by selecting a first value as the probability value if a received power measurement of the initiating device is greater than a predefined threshold, and selecting a second value as the probability value if the received power measurement is less than the predefined threshold, where the second value is greater than the first value.

In Example 235, the subject matter of any one of Examples 230 to 233 can optionally include wherein the discovery controller is configured to determine the probability value by selecting, as the probability value, a first value if a number of received discovery initiation messages from the initiating device in a specific time window is greater than a predefined threshold, and selecting, as the probability value, a second value if the number of received discovery initiation messages from the initiating device in the specific time window is less than the predefined threshold, where the second value is greater than the first value.

In Example 236, the subject matter of any one of Examples 230 to 233 can optionally include wherein the discovery controller is configured to determine the probability value by selecting, as the probability value, a first value if an average interval between received discovery initiation messages from the initiating device is greater than a predefined threshold, and selecting, as the probability value, a second value if the average interval between received discovery initiation messages from the initiating device is less than the predefined threshold, where the second value is less than the first value.

In Example 237, the subject matter of any one of Examples 230 to 236 can optionally include wherein the discovery controller is configured to determine whether to respond to the discovery initiation message based on the probability value by executing a random check that generates a positive result with a probability of the probability value, and responding to the discovery initiation message if the random check generates a positive result.

In Example 238, the subject matter of any one of Examples 230 to 237 can optionally include wherein the discovery controller is configured to transmit the discovery response message to the initiating device by selecting a channel from a plurality of channels allocated for discovery, and transmitting the discovery response message on the channel.

Example 239 is a wireless device including a radio frequency transceiver and one or more antennas, and one or more processors configured to transmit and receive signals via the radio frequency transceiver and the one or more antennas, the one or more processors further configured to receive a discovery initiation message from an initiating device, determine a probability value, determine whether to respond to the discovery initiation message based on the probability value, and transmit a discovery response message to the initiating device if it is determined to respond to the discovery initiation message, and not transmitting a discovery response message to the initiating device if it is determined not to respond to the discovery initiation message.

Example 240 is a method of performing wireless communications at a wireless device, the method including transmitting a channel estimation pilot signal, receiving response signals from a plurality of responding devices, wherein a received power of the respective response signals is based on a target receive power and a channel power between the wireless device and the plurality of responding devices, and determining an estimated overall number of proximate wireless devices based on the target receive power and an overall received power of the response signals.

In Example 241, the subject matter of Example 240 can optionally include wherein transmitting the channel estimation pilot signal includes transmitting the channel estimation pilot signal via a radio frequency transceiver and one or more antennas, and wherein receiving the response signals includes receiving the response signals via the radio frequency transceiver and the one or more antennas.

In Example 242, the subject matter of Example 240 or 241 can optionally include wherein determining the estimated overall number of proximate wireless devices includes dividing the overall received power of the response signals by the target received power to obtain the estimated overall number of proximate wireless devices.

In Example 243, the subject matter of Example 242 can optionally further include broadcasting signaling that indicates the estimated overall number of proximate wireless devices.

In Example 244, the subject matter of any one of Examples 240 to 243 can optionally further include performing a signal power measurement to determine the overall power of the response signals.

In Example 245, the subject matter of any one of Examples 240 to 244 can optionally further include comparing the overall received power of the response signals to a minimum received power and a maximum received power of a range of operation of the wireless device, and determining an updated value for the target receive power based on the comparing.

In Example 246, the subject matter of Example 245 can optionally further include transmitting signaling to the plurality of responding devices that indicates the updated value of the target receive power, receiving second response signals, and determining an updated value of the estimated overall number of proximate wireless devices based on the updated value of the target receive power and an overall received power of the second response signals.

In Example 247, the subject matter of Example 245 or 246 can optionally include wherein determining the updated value for the target receive power based on the comparing includes reducing the target receive power by a scaling factor if the overall received power is greater than the maximum received power, and increasing the target receive power if the overall received power is less than the minimum received power.

In Example 248, the subject matter of any one of Examples 240 to 247 can optionally further include performing traffic shaping for discovery procedures based on the estimated overall number of proximate wireless devices.

In Example 249, the subject matter of any one of Examples 240 to 248 can optionally further include determining an activation probability based on the estimated overall number of proximate wireless devices, and deciding whether to transmit a discovery initiation message based on the activation probability.

In Example 250, the subject matter of any one of Examples 240 to 248 can optionally further include determining an activation probability based on the estimated overall number of proximate wireless devices and including the activation probability in a discovery initiation message, wherein the activation probability affects a number of responding devices that respond to the discovery initiation message.

Example 251 is a wireless device including a discovery controller configured to transmit a channel estimation pilot signal, a decoder configured to receive response signals from a plurality of responding devices, wherein a received power of the respective response signals is based on a target receive power and a channel power between the wireless device and the plurality of responding devices, and a load estimator configured to determine an estimated overall number of proximate wireless devices based on the target receive power and an overall received power of the response signals.

In Example 252, the subject matter of Example 251 can optionally include wherein the discovery controller is configured to transmit the channel estimation pilot signal via a radio frequency transceiver and one or more antennas.

In Example 254, the subject matter of Example 252 can optionally further include the radio frequency transceiver and the one or more antennas.

In Example 254, the subject matter of any one of Examples 251 to 253 can optionally include wherein the load estimator is configured to determine the estimated overall number of proximate wireless devices by dividing the overall received power of the response signals by the target received power to obtain the estimated overall number of proximate wireless devices.

In Example 255, the subject matter of Example 254 can optionally include wherein the discovery controller is further configured to broadcast signaling that indicates the estimated overall number of proximate wireless devices.

In Example 256, the subject matter of any one of Examples 251 to 255 can optionally include wherein the load estimator is further configured to perform a signal power measurement to determine the overall power of the response signals.

In Example 257, the subject matter of any one of Examples 251 to 256 can optionally include wherein the load estimator is further configured to compare the overall received power of the response signals to a minimum received power and a maximum received power of a range of operation of the wireless device, and to determine an updated value for the target receive power based on the comparing.

In Example 258, the subject matter of Example 257 can optionally include wherein the discovery controller is further configured to transmit signaling to the plurality of responding devices that indicates the updated value of the target receive power, the decoder is further configured to receive second response signals, and the load estimator is further configured to determine an updated value of the estimated overall number of proximate wireless devices based on the updated value of the target receive power and an overall received power of the second response signals.

In Example 259, the subject matter of Example 257 or 258 can optionally include wherein the load estimator is configured to determining the updated value for the target receive power based on the comparing by reducing the target receive power by a scaling factor if the overall received power is greater than the maximum received power, and increasing the target receive power if the overall received power is less than the minimum received power.

In Example 260, the subject matter of any one of Examples 251 to 259 can optionally further include a traffic shaper configured to perform traffic shaping for discovery procedures based on the estimated overall number of proximate wireless devices.

In Example 261, the subject matter of any one of Examples 251 to 259 can optionally further include a traffic shaper configured to determine an activation probability based on the estimated overall number of proximate wireless devices, wherein the discovery controller is configured to decide whether to transmit a discovery initiation message based on the activation probability.

In Example 262, the subject matter of any one of Examples 251 to 259 can optionally further include a traffic shaper configured to determine an activation probability based on the estimated overall number of proximate wireless devices, wherein the discovery controller is further configured including the activation probability in a discovery initiation message, wherein the activation probability affects a number of responding devices that respond to the discovery initiation message.

Example 263 is a method of performing wireless communications at a wireless device, the method including receiving a channel estimation pilot signal from a transmitting device, determining an estimated channel power based on the channel estimation pilot signal, selecting, based on the estimated channel power and a target receive power of a response signal at the transmitting device, a transmit power, and transmitting the response signal to the transmitting device with the transmit power.

In Example 264, the subject matter of Example 263 can optionally include wherein receiving the channel estimation pilot signal includes receiving the channel estimation pilot signal via one or more antennas and a radio frequency transceiver, and wherein transmitting the response signal includes transmitting the response signal with the transmit power via the radio transceiver and the one or more antennas.

In Example 265, the subject matter of Example 263 or 264 can optionally include wherein determining the estimated channel power based on the channel estimation pilot signal includes determining, based on the channel estimation pilot signal, an estimated channel between the transmitting device and the wireless device, and determining the estimated channel power based on the estimated channel.

In Example 266, the subject matter of any one of Examples 263 to 265 can optionally include wherein selecting the transmit power includes dividing the target receive power by the estimated channel power to obtain the transmit power.

In Example 267, the subject matter of any one of Examples 263 to 265 can optionally include wherein selecting the transmit power includes performing channel inversion with the estimated channel power to obtain a transmit power for the response signal to arrive at the transmitting device with approximately the target receive power.

In Example 268, the subject matter of any one of Examples 263 to 267 can optionally further include receiving, prior to selecting the transmit power, signaling from the transmitting device that indicates the target receive power.

In Example 269, the subject matter of Example 268 can optionally further include receiving signaling from the transmitting device that indicates an updated value of the target receive power.

In Example 270, the subject matter of any one of Examples 263 to 269 can optionally further include receiving signaling that indicates an estimated overall number of proximate wireless devices from the transmitting device, and performing traffic shaping of discovery procedures based on the estimated overall number of proximate wireless devices.

In Example 271, the subject matter of any one of Examples 263 to 269 can optionally further include receiving signaling that indicates an estimated overall number of proximate wireless devices from the transmitting device, and determining an activation probability based on the estimated overall number of proximate wireless devices, and deciding whether to transmit a discovery initiation message based on the activation probability.

In Example 272, the subject matter of any one of Examples 263 to 269 can optionally further include receiving signaling that indicates an estimated overall number of proximate wireless devices from the transmitting device, and determining an activation probability based on the estimated overall number of proximate wireless devices and including the activation probability in a discovery initiation message, wherein the activation probability affects a number of responding devices that respond to the discovery initiation message.

Example 273 is a wireless device including a decoder configured to receive a channel estimation pilot signal from a transmitting device, a load estimator configured to determine an estimated channel power based on the channel estimation pilot signal, and to select, based on the estimated channel power and a target receive power of a response signal at the transmitting device, a transmit power, and a discovery controller configured to transmit the response signal to the transmitting device with the transmit power.

In Example 274, the subject matter of Example 273 can optionally include wherein the decoder is configured to receive the channel estimation pilot signal via one or more antennas and a radio frequency transceiver, and wherein the discovery controller is configured to transmit the response signal with the transmit power via the radio transceiver and the one or more antennas.

In Example 275, the subject matter of Example 273 or 274 can optionally include wherein the load estimator is configured to determine the estimated channel power based on the channel estimation pilot signal by determining, based on the channel estimation pilot signal, an estimated channel between the transmitting device and the wireless device, and determining the estimated channel power based on the estimated channel.

In Example 276, the subject matter of any one of Examples 273 to 275 can optionally include wherein the load estimator is configured to select the transmit power by dividing the target receive power by the estimated channel power to obtain the transmit power.

In Example 277, the subject matter of any one of Examples 273 to 275 can optionally include wherein the load estimator is configured to select the transmit power by performing channel inversion with the estimated channel power to obtain a transmit power for the response signal to arrive at the transmitting device with approximately the target receive power.

In Example 278, the subject matter of any one of Examples 273 to 277 can optionally include wherein the decoder is further configured to, before selecting the transmit power, receive signaling from the transmitting device that indicates the target receive power.

In Example 279, the subject matter of Example 278 can optionally include wherein the decoder is further configured to receive signaling from the transmitting device that indicates an updated value of the target receive power.

In Example 280, the subject matter of any one of Examples 273 to 279 can optionally include wherein the decoder is further configured to receive signaling that indicates an estimated overall number of proximate wireless devices from the transmitting device, and wherein the discovery controller is further configured to perform traffic shaping of discovery procedures based on the estimated overall number of proximate wireless devices.

In Example 281, the subject matter of any one of Examples 273 to 279 can optionally include wherein the decoder is further configured to receive signaling that indicates an estimated overall number of proximate wireless devices from the transmitting device, the wireless device further including a traffic shaper configured to determine an activation probability based on the estimated overall number of proximate wireless devices, and wherein the discovery controller is configured to decide whether to transmit a discovery initiation message based on the activation probability.

In Example 282, the subject matter of any one of Examples 273 to 279 can optionally include wherein the decoder is further configured to receive signaling that indicates an estimated overall number of proximate wireless devices from the transmitting device, the wireless device further including a traffic shaper configured to determine an activation probability based on the estimated overall number of proximate wireless devices, and wherein the discovery controller is configured to include the activation probability in a discovery initiation message, where activation probability affects a number of responding devices that respond to the discovery initiation message.

Example 283 is a method of performing wireless communications at a wireless device, the method including monitoring discovery resources during a plurality of discovery windows, where the discovery resources are allocated for wireless devices to perform discovery, detecting discovery transmissions on the discovery resources over the plurality of discovery windows, and determining an estimated number of active wireless devices per discovery resource based on the number of discovery transmissions that are detected over the plurality of discovery windows.

In Example 284, the subject matter of Example 283 can optionally include wherein monitoring the discovery resources during the plurality of discovery windows includes receiving signals on the discovery resources during plurality of discovery windows via one or more antennas and a radio frequency transceiver.

In Example 285, the subject matter of Example 283 or 284 can optionally include wherein the discovery resources include a discovery channel, and wherein detecting discovery transmissions on the discovery resources in a first discovery window of the plurality of discovery windows includes detecting whether or not a discovery transmission is on the discovery channel during the first discovery window.

In Example 286, the subject matter of Example 283 or 284 can optionally include wherein the discovery resources include a discovery channel, and wherein detecting discovery transmissions on the discovery resources in a first discovery window of the plurality of discovery windows includes detecting multiple discovery transmissions on the discovery channel during the first discovery window.

In Example 286, the subject matter of Example 286 can optionally include wherein detecting the multiple discovery transmissions includes performing successive interference cancelation on a composite signal received during the first discovery window and decoding the multiple discovery transmissions based on the successive interference cancelation.

In Example 288, the subject matter of any one of Examples 283 to 287 can optionally include wherein the estimated number of active wireless devices per discovery resource is an estimated average number of active wireless devices per discovery channel of the discovery resources.

In Example 289, the subject matter of any one of Examples 283 to 288 can optionally include wherein detecting the discovery transmissions on the discovery resources over the plurality of discovery windows includes detecting discovery initiation messages and discovery response messages on the discovery resources over the plurality of discovery windows.

In Example 290, the subject matter of any one of Examples 283 to 289 can optionally further include performing traffic shaping of discovery procedures based on the estimated number of active wireless devices per discovery resource.

In Example 291, the subject matter of any one of Examples 283 to 289 can optionally further include determining an activation probability based on the estimated number of active wireless devices per discovery resource, and deciding whether to transmit a discovery initiation message based on the activation probability.

In Example 292, the subject matter of any one of Examples 283 to 289 can optionally further include determining an activation probability based on the estimated number of active wireless devices per discovery resource and including the activation probability in a discovery initiation message, wherein the activation probability affects a number of responding devices that respond to the discovery initiation message.

Example 293 is a wireless device including a decoder configured to monitor discovery resources during a plurality of discovery windows, where the discovery resources are allocated for wireless devices to perform discovery, and further configured to detect discovery transmissions on the discovery resources over the plurality of discovery windows, and a load estimator configured to determine an estimated number of active wireless devices per discovery resource based on the number of discovery transmissions that are detected over the plurality of discovery windows.

In Example 294, the subject matter of Example 293 can optionally include wherein the decoder is configured to monitor the discovery resources during the plurality of discovery windows by receiving signals via one or more antennas and a radio frequency transceiver.

In Example 295, the subject matter of Example 294 can optionally further include the one or more antennas and the radio frequency transceiver.

In Example 296, the subject matter of any one of Examples 293 to 295 can optionally include wherein the discovery resources include a discovery channel, and wherein the decoder is configured to detect the discovery transmissions on the discovery resources in a first discovery window of the plurality of discovery windows by detecting whether or not a discovery transmission is on the discovery channel during the first discovery window.

In Example 297, the subject matter of any one of Examples 293 to 295 can optionally include wherein the discovery resources include a discovery channel, and wherein the decoder is configured to the detect discovery transmissions on the discovery resources in a first discovery window of the plurality of discovery windows by detecting multiple discovery transmissions on the discovery channel during the first discovery window.

In Example 298, the subject matter of Example 297 can optionally include wherein the decoder is configured to detect the multiple discovery transmissions by performing successive interference cancelation on a composite signal received during the first discovery window and decoding the multiple discovery transmissions based on the successive interference cancelation.

In Example 299, the subject matter of any one of Examples 293 to 298 can optionally include wherein the estimated number of active wireless devices per discovery resource is an estimated average number of active wireless devices per discovery channel of the discovery resources.

In Example 300, the subject matter of any one of Examples 293 to 299 can optionally include wherein decoder is configured to detect the discovery transmissions on the discovery resources over the plurality of discovery windows by detecting discovery initiation messages and discovery response messages on the discovery resources over the plurality of discovery windows.

In Example 301, the subject matter of any one of Examples 293 to 300 can optionally further include a traffic shaper configured to perform traffic shaping of discovery procedures based on the estimated number of active wireless devices per discovery resource.

In Example 302, the subject matter of any one of Examples 293 to 300 can optionally further include a traffic shaper configured to determine an activation probability based on the estimated number of active wireless devices per discovery resource, wherein the discovery controller is further configured to decide whether to transmit a discovery initiation message based on the activation probability.

In Example 303, the subject matter of any one of Examples 293 to 300 can optionally further include a traffic shaper configured to determine an activation probability based on the estimated number of active wireless devices per discovery resource, wherein the discovery controller is further configured to include the activation probability in a discovery initiation message, wherein the activation probability affects a number of responding devices that respond to the discovery initiation message.

Example 304 is a method of performing wireless communications at a wireless device, the method including selecting a backoff window during which to wait before initiating a discovery procedure, performing, based on an activation probability, a random check to determine whether to initiate discovery in a first discovery window that is scheduled after the backoff window is over, if it is determined to initiate discovery in the first discovery window, transmitting a discovery initiation message in the first discovery window, and if it is determined to not initiate discovery in the first discovery window, performing a second random check based on the activation probability to determine whether to initiate the discovery procedure in a second discovery window.

In Example 305, the subject matter of Example 304 can optionally include wherein transmitting the discovery initiation message in the first discovery window includes transmitting the discovery initiation message via a radio frequency transceiver and one or more antennas.

In Example 306, the subject matter of Example 304 or 305 can optionally further include determining the activation probability based on an estimated number of active wireless devices per discovery resource and an estimated overall number of proximate wireless devices.

In Example 307, the subject matter of Example 305 can optionally include wherein determining the activation probability is further based on a maximum decoding capacity of the wireless device.

In Example 308, the subject matter of Example 306 or 307 can optionally further include determining an updated value of the activation probability based on an updated value for the estimated number of active wireless devices per discovery resource and an updated value for the estimated overall number of proximate wireless devices, selecting a second backoff window during which to wait before initiating a second discovery procedure, and performing, based on the updated value of the activation probability, a random check to determine whether to initiate discovery in a third discovery window that is scheduled after the second backoff window is over.

In Example 309, the subject matter of any one of Examples 306 to 308 can optionally further include receiving signaling that indicates the estimated overall number of proximate wireless devices.

In Example 310, the subject matter of any one of Examples 306 to 309 can optionally further include determining the estimated number of active devices per discovery resource by monitoring discovery resources for discovery transmissions over a plurality of discovery windows.

In Example 311, the subject matter of any one of Examples 304 to 310 can optionally further include if it is determined to not initiate discovery in the second discovery window, performing random checks for one or more further discovery windows until a random check for a given discovery window is successful, and transmitting the discovery initiation message in the given discovery window.

In Example 312, the subject matter of any one of Examples 304 to 311 can optionally include wherein performing, based on the activation probability, the random check to determine whether to initiate discovery in the first discovery window includes selecting a random number in a predefined interval, comparing the random number to the activation probability, and determining to initiate discovery in the first discovery window if the activation probability is greater than the random number.

Example 313 is a wireless device including a discovery controller configured to perform, based on an activation probability, a random check to determine whether to initiate discovery in a first discovery window that is scheduled after the backoff window is over, if it is determined to initiate discovery in the first discovery window, transmit a discovery initiation message in the first discovery window, and if it is determined to not initiate discovery in the first discovery window, perform a second random check based on the activation probability to determine whether to initiate the discovery procedure in a second discovery window.

In Example 314, the subject matter of Example 313 can optionally include wherein the discovery controller is configured to transmit the discovery initiation message in the first discovery window by transmitting the discovery initiation message via a radio frequency transceiver and one or more antennas.

In Example 315, the subject matter of Example 314 can optionally further include the radio frequency transceiver and the one or more antennas.

In Example 316, the subject matter of any one of Examples 313 to 315 can optionally further include a traffic shaper configured to determine the activation probability based on an estimated number of active wireless devices per discovery resource and an estimated overall number of proximate wireless devices.

In Example 317, the subject matter of Example 316 can optionally include wherein the traffic shaper is configured to determine the activation probability further based on a maximum decoding capacity of the wireless device.

In Example 318, the subject matter of Example 316 or 317 can optionally include wherein the traffic shaper is further configured to determine an updated value of the activation probability based on an updated value for the estimated number of active wireless devices per discovery resource and an updated value for the estimated overall number of proximate wireless devices, and wherein the discovery controller is further configured to select a second backoff window during which to wait before initiating a second discovery procedure, and performing, based on the updated value of the activation probability, a random check to determine whether to initiate discovery in a third discovery window that is scheduled after the second backoff window is over.

In Example 319, the subject matter of any one of Examples 316 to 318 can optionally further include a decoder configured to receive signaling that indicates the estimated overall number of proximate wireless devices.

In Example 320, the subject matter of any one of Examples 316 to 319 can optionally further include a load estimator configured to determine the estimated number of active devices per discovery resource by monitoring discovery resources for discovery transmissions over a plurality of discovery windows.

In Example 321, the subject matter of any one of Examples 313 to 320 can optionally include wherein the discovery controller is further configured to if it is determined to not initiate discovery in the second discovery window, perform random checks for one or more further discovery windows until a random check for a given discovery window is successful, and to transmit the discovery initiation message in the given discovery window

In Example 322, the subject matter of any one of Examples 313 to 321 can optionally include wherein the discovery controller is configured to perform, based on the activation probability, the random check to determine whether to initiate discovery in the first discovery window by selecting a random number in a predefined interval, comparing the random number to the activation probability, and determining to initiate discovery in the first discovery window if the activation probability is greater than the random number.

Example 323 is a method of performing wireless communications at a wireless device, the method including transmitting a discovery initiation message, and performing one or more first retransmissions of the discovery initiation message by, for each respective retransmission of the one or more first retransmissions performing a first random check to determine whether to perform the respective retransmission at a first discovery window and, if it is determined to not perform the respective retransmission, performing a second random check to determine whether to perform the respective retransmission at a second discovery window, the method further including performing one or more second retransmissions of the discovery invitation message by, for each respective retransmission of the one or more second retransmissions selecting a random backoff window based on a number of retransmissions of the discovery initiation message prior to the respective retransmission, and performing the respective retransmission after the random backoff window is over.

In Example 324, the subject matter of Example 323 can optionally include wherein transmitting the discovery initiation message and performing the one or more first and second retransmissions of the discovery initiation message includes transmitting signals via a radio frequency transceiver and one or more antennas.

In Example 325, the subject matter of Example 323 or 324 can optionally include wherein selecting the random backoff window based on the number of retransmissions of the discovery initiation message prior to the respective retransmission includes selecting the random backoff window based on a maximum backoff window that increases in size as more retransmissions of the discovery initiation message occur.

In Example 326, the subject matter of Example 325 can optionally include wherein selecting the random backoff window based on the number of retransmissions of the discovery initiation message prior to the respective retransmission includes selecting the random backoff window in an interval with an upper bound defined by a maximum backoff window, wherein the size of the maximum backoff window is proportional to the number of retransmissions of the discovery initiation message prior to the respective retransmission.

In Example 327, the subject matter of any one of Examples 323 to 326 can optionally include wherein performing the first random check to determine whether to perform the respective retransmission at the first discovery window includes selecting a random number in a predefined interval, comparing the random number to the activation probability, and determining to perform the respective retransmission in the first discovery window if the activation probability is greater than the random number.

In Example 328, the subject matter of any one of Examples 323 to 327 can optionally include wherein performing each respective retransmission of the one or more first retransmissions further includes if it is determined to not perform the respective retransmission in the second discovery window, performing random checks for one or more further discovery windows until a random check for a given discovery window is successful, and performing the respective retransmission in the given discovery window.

In Example 329, the subject matter of any one of Examples 323 to 328 can optionally further include determining the activation probability based on an estimated number of active wireless devices per discovery resource and an estimated overall number of proximate wireless devices.

In Example 330, the subject matter of Example 329 can optionally include wherein determining the activation probability is further based on a maximum decoding capacity of the wireless device.

In Example 331, the subject matter of Example 329 or 330 can optionally further include receiving signaling that indicates the estimated overall number of proximate wireless devices.

In Example 332, the subject matter of any one of Examples 329 to 331 can optionally further include determining the estimated number of active devices per discovery resource by monitoring discovery resources for discovery transmissions over a plurality of discovery windows.

Example 333 is a wireless device including a discovery controller configured to transmit a discovery initiation message, and perform one or more first retransmissions of the discovery initiation message by, for each respective retransmission of the one or more first retransmissions performing a first random check to determine whether to perform the respective retransmission at a first discovery window and, if it is determined to not perform the respective retransmission, performing a second random check to determine whether to perform the respective retransmission at a second discovery window, the device controller further configured to perform one or more second retransmissions of the discovery invitation message by, for each respective retransmission of the one or more second retransmissions selecting a random backoff window based on a number of retransmissions of the discovery initiation message prior to the respective retransmission, and performing the respective retransmission after the random backoff window is over.

In Example 334, the subject matter of Example 333 can optionally include wherein the discovery controller is configured to transmit the discovery initiation message and perform the one or more first and second retransmissions of the discovery initiation message by transmitting signals via a radio frequency transceiver and one or more antennas.

In Example 335, the subject matter of Example 334 can optionally further include the radio frequency transceiver and one or more antennas.

In Example 336, the subject matter of any one of Examples 333 to 335 can optionally include wherein the discovery controller is configured to select the random backoff window based on the number of retransmissions of the discovery initiation message prior to the respective retransmission by selecting the random backoff window based on a maximum backoff window that increases in size as more retransmissions of the discovery initiation message occur.

In Example 337, the subject matter of Example 336 can optionally include wherein the discovery controller is configured to select the random backoff window based on the number of retransmissions of the discovery initiation message prior to the respective retransmission by selecting the random backoff window in an interval with an upper bound defined by a maximum backoff window, wherein the size of the maximum backoff window is proportional to the number of retransmissions of the discovery initiation message prior to the respective retransmission.

In Example 338, the subject matter of any one of Examples 333 to 337 can optionally include wherein the discovery controller is configured to perform the first random check to determine whether to perform the respective retransmission at the first discovery window by selecting a random number in a predefined interval, comparing the random number to the activation probability, and determining to perform the respective retransmission in the first discovery window if the activation probability is greater than the random number.

In Example 339, the subject matter of any one of Examples 333 to 338 can optionally include wherein the discovery controller is configured to perform each respective retransmission of the one or more first retransmissions by additionally if it is determined to not perform the respective retransmission in the second discovery window, performing random checks for one or more further discovery windows until a random check for a given discovery window is successful, and performing the respective retransmission in the given discovery window.

In Example 340, the subject matter of any one of Examples 333 to 339 can optionally further include a traffic shaper configured to determine the activation probability based on an estimated number of active wireless devices per discovery resource and an estimated overall number of proximate wireless devices.

In Example 341, the subject matter of Example 340 can optionally include wherein the traffic shaper is configured to determine the activation probability further based on a maximum decoding capacity of the wireless device.

In Example 342, the subject matter of Example 340 or 341 can optionally further include a decoder configured to receive signaling that indicates the estimated overall number of proximate wireless devices.

In Example 343, the subject matter of any one of Examples 340 to 342 can optionally further include a load estimator configured to determine the estimated number of active devices per discovery resource by monitoring discovery resources for discovery transmissions over a plurality of discovery windows.

Example 344 is a method of performing wireless communications at a wireless device, the method including obtaining an estimated overall number of proximate wireless devices that approximates an upper bound for wireless devices proximate to the wireless device, obtaining an estimated number of active wireless devices per discovery resource that approximates a number of wireless devices that are actively using discovery resources, determining an activation probability based on the load estimation results, transmitting a discovery initiation message that indicates the activation probability, wherein the activation probability affects a number of responding devices transmitting discovery response messages, and receiving one or more discovery response messages.

In Example 345, the subject matter of Example 344 can optionally include wherein transmitting the discovery initiation message includes transmitting the discovery initiation message via a radio frequency transceiver and one or more antennas, and wherein receiving the one or more discovery response messages includes receiving the one or more discovery response messages via the one or more antennas and the radio frequency transceiver.

In Example 346, the subject matter of Example 344 or 345 can optionally further include receiving signaling that indicates the estimated overall number of proximate wireless devices.

In Example 347, the subject matter of any one of Examples 344 to 346 can optionally further include determining the estimated number of active wireless devices per discovery resource by monitoring discovery transmissions on the discovery resources during a plurality of discovery windows.

In Example 348, the subject matter of Example 347 can optionally include wherein the estimated number of active wireless devices per discovery resource is an average number of detected discovery transmissions per discovery resource per discovery window.

In Example 349, the subject matter of any one of Examples 344 to 348 can optionally further include obtaining an updated value of the estimated overall number of proximate wireless devices and an updated value of estimated overall number of proximate wireless devices, determining an updated value of the activation probability, and transmitting a discovery initiation message that indicates the updated value of the activation probability.

In Example 350, the subject matter of any one of Examples 344 to 349 can optionally include wherein determining the activation probability based on the load estimation results includes determining the activation probability based on the estimated overall number of proximate wireless devices, the estimated overall number of proximate wireless devices, and a maximum decoding capacity of the wireless device.

Example 351 is a wireless device including a traffic shaper configured to obtain an estimated overall number of proximate wireless devices that approximates an upper bound for wireless devices proximate to the wireless device, obtain an estimated number of active wireless devices per discovery resource that approximates a number of wireless devices that are actively using discovery resources, and determine an activation probability based on the load estimation results, a discovery controller configured to transmit a discovery initiation message that indicates the activation probability, wherein the activation probability affects a number of responding devices transmitting discovery response messages, and a decoder configured to receive one or more discovery response messages.

In Example 352, the subject matter of Example 351 can optionally include wherein the discovery controller is configured to transmit via a radio frequency transceiver and one or more antennas, and wherein the decoder is configured to receive the one or more discovery response messages via the one or more antennas and the radio frequency transceiver.

In Example 353, the subject matter of Example 352 can optionally further include the radio frequency transceiver and the one or more antennas.

In Example 354, the subject matter of any one of Examples 351 to 353 can optionally include wherein the decoder is configured to receive signaling that indicates the estimated overall number of proximate wireless devices and to provide the estimated overall number of proximate wireless devices to the traffic shaper.

In Example 355, the subject matter of any one of Examples 351 to 354 can optionally further include a load estimator configured to determine the estimated number of active wireless devices per discovery resource by monitoring discovery transmissions on the discovery resources during a plurality of discovery windows, and to provide the estimated number of active wireless devices per discovery resource to the traffic shaper.

In Example 356, the subject matter of Example 355 can optionally include wherein the estimated number of active wireless devices per discovery resource is an average number of detected discovery transmissions per discovery resource per discovery window.

In Example 357, the subject matter of any one of Examples 351 to 356 can optionally include wherein the traffic shaper is further configured to obtain an updated value of the estimated overall number of proximate wireless devices and an updated value of estimated overall number of proximate wireless devices, and to determine an updated value of the activation probability, and wherein the discovery controller is further configured to transmit a discovery initiation message that indicates the updated value of the activation probability.

In Example 358, the subject matter of any one of Examples 351 to 357 can optionally include wherein the traffic shaper is configured to determine the activation probability based on the estimated overall number of proximate wireless devices, the estimated overall number of proximate wireless devices, and a maximum decoding capacity of the wireless device.

Example 359 is a wireless device including means for broadcasting a first discovery initiation message, means for decoding discovery response messages from one or more first responding devices, means for transmitting messages to the one or more responding devices to instruct the one or more responding devices to wait before responding to a second discovery initiation message, means for broadcasting the second discovery initiation message, and means for decoding discovery response messages from one or more second responding devices.

Example 360 is a wireless device including means for receiving a first discovery initiation message from an initiating device, means for transmitting a first discovery response message to the initiating device, means for receiving a message from the initiating device that instructs the wireless device to wait before responding to a second discovery initiation message, means for receiving the second discovery initiation message from the initiating device, and means for refraining from responding to the second discovery initiation message.

Example 361 is a wireless device including means for broadcasting a first discovery initiation message and decoding one or more first discovery response messages, means for determining, based on the one or more first discovery response messages, a response criteria that affects the number of devices that respond to a second discovery initiation message, means for broadcasting the second discovery initiation message and the response criteria, and means for decoding one or more second discovery response messages.

Example 362 is a wireless device including means for receiving, from an initiating device, a discovery initiation message including a response criteria, means for determining whether to respond to the discovery initiation message based on the response criteria, and means for transmitting a discovery response message if it is determined to respond to the discovery initiation message and not transmitting the discovery response message if it is determined not to respond to the discovery initiation message.

Example 363 is a wireless device including means for receiving a discovery initiation message from an initiating device, means for determining a probability value, means for determining whether to respond to the discovery initiation message based on the probability value, and means for transmitting a discovery response message to the initiating device if it is determined to respond to the discovery initiation message and not transmitting a discovery response message to the initiating device if it is determined not to respond to the discovery initiation message.

Example 364 is a wireless device including means for transmitting a channel estimation pilot signal, means for receiving response signals from a plurality of responding devices, wherein a received power of the respective response signals is based on a target receive power and a channel power between the wireless device and the plurality of responding devices, and means for determining an estimated number of responding devices based on the target receive power and an overall received power of the response signals.

Example 365 is a wireless device including means for receiving a channel estimation pilot signal from a transmitting device, means for determining an estimated channel power based on the channel estimation pilot signal, means for selecting, based on the estimated channel power and a target receive power of a response signal at the transmitting device, a transmit power, and means for transmitting the response signal to the transmitting device with the transmit power.

Example 366 is a wireless device including means for monitoring discovery resources during a plurality of discovery windows, where the discovery resources are allocated for wireless devices to perform discovery, means for detecting discovery transmissions on the discovery resources over the plurality of discovery windows, and means for determining an estimated number of active wireless devices per discovery resource based on the number of discovery transmissions that are detected over the plurality of discovery windows.

Example 367 is a wireless device including means for selecting a backoff window during which to not initiate a discovery procedure, means for performing, based on an activation probability, a random check to determine whether to initiate discovery in a first discovery window that is scheduled after the backoff window is over, means for, if it is determined to initiate discovery in the first discovery window, transmitting a discovery initiation message in the first discovery window, and means for, if it is determined to not initiate discovery in the first discovery window, performing a second random check based on the activation probability to determine whether to initiate the discovery procedure in a second discovery window.

Example 368 is a wireless device including means for transmitting a discovery initiation message, and means for performing one or more first retransmissions of the discovery initiation message by, for each respective retransmission of the one or more first retransmissions performing a first random check to determine whether to perform the respective retransmission at a first discovery window and, if it is determined to not perform the respective retransmission, performing a second random check to determine whether to perform the respective retransmission at a second discovery window, means for performing one or more second retransmissions of the discovery invitation message by, for each respective retransmission of the one or more second retransmissions selecting a random backoff window based on a number of retransmissions of the discovery initiation message prior to the respective retransmission, and performing the respective retransmission after the random backoff window is over.

Example 369 is a wireless device including means for obtaining an estimated overall number of proximate wireless devices that approximates an upper bound for wireless devices proximate to the wireless device, means for obtaining an estimated number of active wireless devices per discovery resource that approximates a number of wireless devices that are actively using discovery resources, means for determining an activation probability based on the load estimation results, and means for transmitting a discovery initiation message that indicates the activation probability, wherein the activation probability affects a number of responding devices transmitting discovery response messages, and means for receiving one or more discovery response messages.

Example 370 is a non-transitory computer readable medium storing instructions that, when executed by one or more processors, cause the one or more processors to perform the method of any one of Examples 158 to 164, 198 to 213, 222 to 229, 240 to 250, 263 to 272, 283 to 292, 304 to 312, 323 to 332, and 344 to 350

Example 371 is a wireless device including one or more processors, and a memory storing instructions that, when executed by the one or more processors, cause the wireless device to perform the method of any one of Examples 158 to 164, 198 to 213, 222 to 229, 240 to 250, 263 to 272, 283 to 292, 304 to 312, 323 to 332, and 344 to 350.

Example 372 is a wireless device including a controller configured to identify an emergency and to generate an emergency message including information on the emergency, and a transmitter configured to transmit, on a discovery channel allocated for other wireless devices to perform discovery, an emergency indicator beacon for an upcoming transmission of the emergency message, and to transmit the emergency message on a data channel of the wireless device.

In Example 373, the subject matter of Example 372 can optionally include wherein the controller and the transmitter are components of a baseband modem of the wireless device.

In Example 374, the subject matter of Example 372 or 373 can optionally further include a radio frequency transceiver and one or more antennas, wherein the transmitter is configured to transmit the emergency indicator beacon and the emergency message via the radio frequency transceiver and the one or more antennas.

In Example 375, the subject matter of any one of Examples 372 to 374 can optionally further include a receiver configured to receive an emergency network broadcast from an external network, wherein the controller is configured to identify the emergency from the emergency network broadcast.

In Example 376, the subject matter of Example 375 can optionally include wherein the controller is configured to generate the emergency message by identifying the information on the emergency in the emergency network broadcast, and including the information on the emergency in one or more fields of the emergency message.

In Example 377, the subject matter of Example 375 or 376 can optionally include wherein the external network is a cellular network, and wherein the receiver is configured to receive the emergency network broadcast from a cell of the cellular network.

In Example 378, the subject matter of any one of Examples 372 to 374 can optionally include wherein the controller is configured to identify the emergency from a user input that indicates the emergency.

In Example 379, the subject matter of Example 378 can optionally further include an application processor configured to receive the user input indicating the emergency and to notify the controller of the user input.

In Example 380, the subject matter of Example 378 or 379 can optionally include wherein the controller is configured to generate the emergency message by generating the information on the emergency from the user input and including the information on the emergency in one or more fields of the emergency message.

In Example 381, the subject matter of any one of Examples 372 to 380 can optionally include wherein the controller is configured to generate the emergency message by generating a header, generating the information on the emergency, and including the header and the information on the emergency as fields of the emergency message.

In Example 382, the subject matter of any one of Examples 372 to 380 can optionally include wherein the controller is configured generate the emergency message by determining, based on a device ID of the wireless device, a hash value, and including the hash value in a register token of the emergency message.

In Example 383, the subject matter of any one of Examples 372 to 382 can optionally include wherein the transmitter is configured to apply an emergency scrambling code to the emergency indicator beacon before transmitting the emergency indicator beacon.

Example 384 is a wireless device including a receiver configured to monitor a discovery channel allocated for the wireless device to perform discovery, and a controller configured to obtain received data from the receiver and to detect, on the discovery channel, an emergency indicator beacon for an upcoming transmission of an emergency device, and to process the emergency indicator beacon to identify a transmitting wireless device that transmitted the emergency indicator beacon, the receiver further configured to receive the emergency message on a data channel of the transmitting wireless device.

In Example 385, the subject matter of Example 384 can optionally include wherein the controller and the transmitter are components of a baseband modem of the wireless device.

In Example 386, the subject matter of Example 384 or 385 can optionally further include a radio frequency transceiver and one or more antennas, wherein the receiver is configured to receive data on the discovery channel via the radio frequency transceiver and the one or more antennas.

In Example 387, the subject matter of any one of Examples 384 to 386 can optionally include wherein the controller is configured to detect the emergency indicator beacon based on a predefined format of emergency indicator beacons.

In Example 388, the subject matter of any one of Examples 384 to 387 can optionally include wherein the controller is configured to identify the transmitting wireless device by reading a payload of the emergency indicator beacon that identifies the transmitting wireless device.

In Example 389, the subject matter of any one of Examples 384 to 387 can optionally include wherein the receiver is configured to descramble the emergency indicator beacon according to an emergency scrambling code.

In Example 390, the subject matter of any one of Examples 384 to 389 can optionally include wherein the controller is further configured to identify the data channel of the transmitting wireless device.

In Example 391, the subject matter of Example 390 can optionally include wherein the transmitting wireless device is preassigned the data channel, and wherein the controller is configured to identify the data channel by identifying a device ID of the transmitting wireless device and identifying, as the data channel, a data channel preassigned to the device ID of the transmitting device.

In Example 392, the subject matter of any one of Examples 384 to 391 can optionally include wherein the controller is further configured to receive the emergency message from the receiver, and to verify the authenticity of the emergency message by determining hash values for one or more device IDs in a trusted entity list of the wireless device, comparing the hash values for the one or more device IDs to a hash value in a register token of the emergency message, and verifying that the emergency message is authentic if one of the hash values for the one or more device IDs matches the hash value in the register token.

In Example 393, the subject matter of any one of Examples 384 to 391 can optionally include wherein the controller is further configured to receive the emergency message from the receiver, and to verify the authenticity of the emergency message by determining hash values for one or more device IDs in a trusted entity list of the wireless device, comparing the hash values for the one or more device IDs to hash values in a register token of the emergency message, and verifying that the emergency message is authentic based on whether the hash values for the one or more device IDs match the hash values in the register token.

In Example 394, the subject matter of Example 393 can optionally include wherein the hash values in the register token include a first hash value for an originating wireless device of the emergency message and a second hash value for a relaying wireless device of the emergency message, and wherein the controller is configured to verify that the emergency message is authentic if at least one of the hash values for the one or more device IDs matches the first hash value and at least one of the hash values for the one or more device IDs matches the second hash value.

In Example 395, the subject matter of any one of Examples 384 to 394 can optionally include wherein the controller is further configured to generate a relay transmission of the emergency message, the wireless device further including a transmitter configured to transmit the relay transmission of the emergency message.

In Example 396, the subject matter of Example 395 can optionally include wherein the transmitter is configured to transmit the relay transmission of the emergency message by transmitting, on the discovery channel, an emergency indicator beacon for an upcoming transmission of the emergency message, and transmitting the relay transmission of the emergency message on a data channel of the wireless device.

In Example 397, the subject matter of Example 395 can optionally include wherein the controller is configured to generate the relay transmission of the emergency message by determining, based on a device ID of the wireless device, a first hash value, and including the first hash value in a register token of the relay transmission of the emergency message.

In Example 398, the subject matter of Example 397 can optionally include wherein the emergency message includes a first hash value based on a device ID of an originating device of the emergency message, wherein the controller is configured to include the first hash value and the second hash value in the register token of the emergency message.

In Example 399, the subject matter of any one of Examples 384 to 398 can optionally further include an application processor, wherein the controller is configured to provide information on the emergency from the emergency message to the application processor and where the application processor is configured to display the information on the emergency to a user of the wireless device.

Example 400 is a method of performing wireless communications at a wireless device, the method including identifying an emergency, generating an emergency message including information on the emergency, transmitting an emergency indicator beacon on a discovery channel allocated for other wireless devices to perform discovery, and transmitting the emergency message on a data channel of the wireless device.

In Example 401, the subject matter of Example 400 can optionally include wherein transmitting the emergency indicator beacon and the emergency message includes transmitting the emergency indicator beacon and the emergency message via a radio frequency transceiver and one or more antennas.

In Example 402, the subject matter of Example 400 or 401 can optionally include wherein identifying the emergency includes receiving an emergency network broadcast from an external network that indicates the emergency.

In Example 403, the subject matter of Example 402 can optionally include wherein generating the emergency message includes identifying the information on the emergency in the emergency network broadcast, and including the information on the emergency in one or more fields of the emergency message.

In Example 404, the subject matter of Example 402 or 403 can optionally include wherein the external network is a cellular network, and wherein receiving the emergency network broadcast includes receiving the emergency network broadcast from a cell of the cellular network.

In Example 405, the subject matter of Example 400 or 401 can optionally include wherein identifying the emergency includes identifying the emergency from a user input that indicates the emergency.

In Example 406, the subject matter of Example 405 can optionally include wherein generating the emergency message includes generating the information on the emergency from the user input and including the information on the emergency in one or more fields of the emergency message.

In Example 407, the subject matter of any one of Examples 400 to 406 can optionally include wherein generating the emergency message includes generating a header, generating the information on the emergency, and including the header and the information on the emergency as fields of the emergency message.

In Example 408, the subject matter of any one of Examples 400 to 406 can optionally include wherein generating the emergency message includes determining, based on a device ID of the wireless device, a hash value, and including the hash value in a register token of the emergency message.

In Example 409, the subject matter of any one of Examples 400 to 408 can optionally further include applying an emergency scrambling code to the emergency indicator beacon before transmitting the emergency indicator beacon.

Example 410 is a method of performing wireless communications at a wireless device, the method including monitoring a discovery channel allocated for a wireless device to perform discovery, detecting an emergency indicator beacon on the discovery channel, processing the emergency indicator beacon to identify a transmitting wireless device that transmitted the emergency indicator beacon, and receiving an emergency message on a data channel of the transmitting wireless device.

In Example 411, the subject matter of Example 410 can optionally include wherein monitoring the discovery channel includes receiving data on the discovery channel via a radio frequency transceiver and one or more antennas, and wherein receiving the emergency message on the data channel includes receiving the emergency message via the radio frequency transceiver and the one or more antennas.

In Example 412, the subject matter of Example 410 or 411 can optionally include wherein detecting the emergency indicator beacon includes detecting the emergency indicator beacon based on a predefined format of emergency indicator beacons.

In Example 413, the subject matter of any one of Examples 410 to 412 can optionally include wherein identifying the transmitting wireless device includes reading a payload of the emergency indicator beacon that identifies the transmitting wireless device.

In Example 414, the subject matter of any one of Examples 410 to 412 can optionally include wherein further including descrambling the emergency indicator beacon according to an emergency scrambling code.

In Example 415, the subject matter of any one of Examples 410 to 414 can optionally further include identifying the data channel of the transmitting wireless device.

In Example 416, the subject matter of Example 415 can optionally include wherein the transmitting wireless device is preassigned the data channel, and wherein identifying the data channel includes identifying a device ID of the transmitting wireless device and identifying, as the data channel, a data channel preassigned to the device ID of the transmitting device.

In Example 417, the subject matter of any one of Examples 410 to 416 can optionally further include verifying the authenticity of the emergency message by determining hash values for one or more device IDs in a trusted entity list of the wireless device, comparing the hash values for the one or more device IDs to a hash value in a register token of the emergency message, and verifying that the emergency message is authentic if one of the hash values for the one or more device IDs matches the hash value in the register token.

In Example 418, the subject matter of any one of Examples 410 to 416 can optionally further include verifying the authenticity of the emergency message by determining hash values for one or more device IDs in a trusted entity list of the wireless device, comparing the hash values for the one or more device IDs to hash values in a register token of the emergency message, and verifying that the emergency message is authentic based on whether the hash values for the one or more device IDs match the hash values in the register token.

In Example 419, the subject matter of Example 418 can optionally include wherein the hash values in the register token include a first hash value for an originating wireless device of the emergency message and a second hash value for a relaying wireless device of the emergency message, and wherein verifying that the emergency message is authentic includes verifying that the emergency message is authentic if at least one of the hash values for the one or more device IDs matches the first hash value and at least one of the hash values for the one or more device IDs matches the second hash value.

In Example 420, the subject matter of any one of Examples 410 to 419 can optionally further include generating a relay transmission of the emergency message and transmitting the relay transmission of the emergency message.

In Example 421, the subject matter of Example 420 can optionally include wherein transmitting the relay transmission of the emergency message includes transmitting, on the discovery channel, an emergency indicator beacon for an upcoming transmission of the emergency message, and transmitting the relay transmission of the emergency message on a data channel of the wireless device.

In Example 422, the subject matter of Example 420 can optionally include wherein generating the relay transmission of the emergency message includes determining, based on a device ID of the wireless device, a first hash value, and including the first hash value in a register token of the relay transmission of the emergency message.

In Example 423, the subject matter of Example 422 can optionally include wherein the emergency message includes a first hash value based on a device ID of an originating device of the emergency message, wherein generating the emergency message further includes including the first hash value and the second hash value in the register token of the emergency message.

In Example 424, the subject matter of any one of Examples 410 to 423 can optionally further include displaying information on the emergency to a user of the wireless device.

Example 425 is a non-transitory computer readable medium storing instructions that when executed by one or more processors of a wireless device cause the wireless device to perform the method of any one of Examples 400 to 424.

Example 426 is a wireless device including means for identifying an emergency, means for generating an emergency message including information on the emergency, means for transmitting an emergency indicator beacon on a discovery channel allocated for other wireless devices to perform discovery, and means for transmitting the emergency message on a data channel of the wireless device.

Example 427 is a wireless device including means for monitoring a discovery channel allocated for a wireless device to perform discovery, means for detecting an emergency indicator beacon on the discovery channel, means for processing the emergency indicator beacon to identify a transmitting wireless device that transmitted the emergency indicator beacon, and means for receiving an emergency message on a data channel of the transmitting wireless device.

Example 428 is a wireless device including one or more processors, a memory storing instructions that, when executed by the one or more processors, cause the wireless device to perform the method of any one of Examples 400 to 424.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. A wireless device comprising:

   a buffer configured to buffer a received signal over a plurality of time slots of a retransmission frame window;
   a detector configured to identify a target slot of the plurality of time slots, identify an applicable candidate retransmission pattern based on the target slot, and identify one or more buffered time slots stored in the buffer based on the applicable candidate retransmission pattern;
   a combiner configured to combine the target slot with the one or more buffered time slots to obtain a combined transmission; and
   a decoder configured to decode the combined transmission to obtain payload data.

2. The wireless device of claim 1, further comprising a radio frequency (RF) transceiver and one or more antennas, wherein the buffer is configured to receive the received signal via the RF transceiver and the one or more antennas.

3. The wireless device of claim 1 or 2, wherein the detector is further configured to identify a second target slot of the plurality of time slots, identify a second applicable candidate retransmission pattern based on the second target slot, and identify one or more second buffered time slots stored in the buffer based on the second applicable candidate retransmission pattern,
   wherein the combiner is configured to combine the second target slot with the one or more second buffered time slots to obtain a second combined transmission,
   and wherein the decoder is configured to decode the second combined transmission to obtain second payload data.

4. The wireless device of claim 1 or 2, wherein the detector is configured to identify the applicable candidate retransmission pattern from a plurality of candidate retransmission patterns that are predefined to have transmission slots with transmissions and inactive transmission slots without transmissions.

5. The wireless device of claim 4, wherein the detector is configured to identify the applicable candidate pattern by identifying, as the applicable candidate pattern, one of the plurality of candidate retransmission patterns that comprises a transmission slot that is aligned with the target slot in the retransmission frame window.

6. The wireless device of claim 1 or 2, wherein the detector is configured to identify one or more additional applicable candidate retransmission patterns based on the target slot, and to identify one or more respective buffered time slots stored in the buffer for each of the one or more additional applicable candidate retransmission patterns,
   wherein the combiner is configured to combine the target slot with the one or more respective buffered time slots to obtain a respective combined transmission for each of the one or more additional applicable candidate retransmission patterns,
   and wherein the decoder is configured to decode the respective combined transmission to obtain respective payload data for each of the one or more additional applicable candidate retransmission patterns.

7. The wireless device of claim 6, wherein the decoder is further configured to perform an error check on the payload data for the applicable candidate retransmission pattern and the respective payload data for the one or more additional applicable candidate retransmission patterns to determine whether any of the decodes are successful.

8. The wireless device of claim 7, wherein the decoder is further configured to, if a first decode of a given combined transmission is successful, determine whether the payload data of the given combined transmission is addressed to the wireless device.

9. The wireless device of claim 1 or 2, wherein the decoder is further configured to perform an error check on the payload data to determine whether the decode is successful.

10. The wireless device of claim 9, wherein the decoder is further configured to, if the decode is successful, determine whether the payload data of the combined transmission is addressed to the wireless device.

11. The wireless device of claim 10, wherein the detector is configured to terminate decoding attempts for the retransmission frame window if the payload data of the combined transmission is addressed to the wireless device.

12. The wireless device of claim 13, wherein, if the decode is not successful or if the payload data of the combined transmission is not addressed to the wireless device, the detector is further configured to:

identify a second target slot of the plurality of time slots, identify a second applicable candidate retransmission pattern based on the second target slot, and identify one or more second buffered time slots stored in the buffer based on the second applicable candidate retransmission pattern,
and the combiner is configured to combine the second target slot with the one or more second buffered time slots to obtain a second combined transmission,
and the decoder is configured to decode the second combined transmission to obtain second payload data.

13. The wireless device of claim 10, wherein the detector is configured to terminate decoding attempts for the retransmission frame window if the payload data of the combined transmission is addressed to the wireless device.

14. A method of receiving transmissions at a wireless device, the method comprising:

buffering a received signal over a plurality of time slots of a retransmission frame window;
identifying a target slot of the plurality of time slots;
identifying an applicable candidate retransmission pattern based on the target slot;
identifying one or more buffered time slots stored in the buffer based on the applicable candidate retransmission pattern;
combining the target slot with the one or more buffered time slots to obtain a combined transmission; and
decoding the combined transmission to obtain payload data.

15. A non-transitory computer readable medium storing instructions that when executed by one or more processors cause the one or more processors to perform the method of claim 14.

FIG 1

# FIG 2

# FIG 3

# FIG 4

Interfered time slots

# FIG 5

302

Int.

304

Int.

306

308

310

312

Interfered time slots

# FIG 6

600

| Retransmission frame window *n-1* | Retransmission frame window *n* | Retransmission frame window *n+1* |
|---|---|---|

602     604     606

| Time slot 1 | Time slot 2 | Time slot 3 | Time slot 4 |
|---|---|---|---|

# FIG 7

702

| 1 | 2 | 3 | 4 |

704

| 1 | 2 | 3 | 4 |

706

| 1 | 2 | 3 | 4 |

708

| 1 | 2 | 3 | 4 |

710

| 1 | 2 | 3 | 4 |

712

| 1 | 2 | 3 | 4 |

Transmission slot

Inactive slot

# FIG 8A

# FIG 8B

# FIG 9

900

902

904

RF

906

908

Scheduler

Packet

910

Controller

912

Pattern
memory

# FIG 10

1000

1002

| Identify scheduled packet |
| --- |

1004

| Select retransmission pattern from candidate set of retransmission patterns |
| --- |

1006

| Transmit initial transmission and subsequent retransmissions according to the selected retransmission pattern |
| --- |

# FIG 11

1100

1102

1104

RF

1106

1108

Buffer

1110

Detector ←----→ Pattern memory

1116

1112

Combiner

1114

Decoder

Payload

# FIG 12

1200

1202

Identify target transmitter

1204

Receive and buffer received signal over sequence of time slots

1206

Identify target slot

1208

Identify applicable candidate retransmission patterns based on the target slot

1210

Combine any buffered time slots of the applicable candidate retransmission patterns to obtain combined transmissions

1212

Attempt to decode the combined transmissions to obtain payload

1214

Determine whether any of the combined transmissions are addressed to receiver

# FIG 13A

Target slot

Slot to combine

Slot to ignore

Inactive slot

# FIG 13B

Target slot

Slot to combine

Slot to ignore

Inactive slot

# FIG 13C

1302

| 1 | 2 | 3 | 4 |

1304

| 1 | 2 | 3 | 4 |

1306

| 1 | 2 | 3 | 4 |

1308

| 1 | 2 | 3 | 4 |

1310

| 1 | 2 | 3 | 4 |

1312

| 1 | 2 | 3 | 4 |

↑
Target slot

■ Slot to combine

▨ Slot to ignore

□ Inactive slot

# FIG 13D

1302

| 1 | 2 | 3 | 4 |

1304

| 1 | 2 | 3 | 4 |

1306

| 1 | 2 | 3 | 4 |

1308

| 1 | 2 | 3 | 4 |

1310

| 1 | 2 | 3 | 4 |

1312

| 1 | 2 | 3 | 4 |

↑
Target slot

■ Slot to combine

▨ Slot to ignore

□ Inactive slot

# FIG 14

1400

1410

1420

| Wireless device | Wireless device |
|---|---|

1402

Request access

1404

Access granted

1406

Data communication

# FIG 15

1500

1410

1420

Wireless device

Wireless device

1502

Discovery request

1504

Discovery reply

# FIG 16

System frame

Disc

Retransmission
frame window

# FIG 17

1700

1702

Buffer a received signal over a plurality of time slots of a retransmission frame window

1704

Identify a target slot of the plurality of time slots

1706

Identify an applicable candidate retransmission pattern based on the target slot

1708

Identify one or more buffered time slots stored in the buffer based on the applicable candidate retransmission pattern

1710

Combine the target slot with the one or more buffered time slots to obtain a combined transmission

1712

Decode the combined transmission to obtain payload data

# FIG 18

1800

1802

Identify a packet scheduled for transmission

1804

Randomly select a retransmission from a candidate set of retransmission patterns

1806

Perform an initial transmission of the packet and one or more retransmissions of the packet according to the retransmission pattern

# FIG 19

# FIG 20

1902

2002

2004

RF

2006

2008

Verifier

2010

Message code processor

2012

Random selector

# FIG 21

1904

2102

2104

RF

2106

2108

Verifier

2110

Message code processor

2112

Random selector

# FIG 22

2200

$K_{DI}$, $F_{DI}$, $m_{DI}$, $m_P$

1902

### Initiating device

$K_{DR}$, $F_{DR}$, $m_{DR}$

1904

### Responding device

2202

Select random session number and generate initiation message authentication code

$r_{DI}$, $H_{DI}$, $m_{DI}$

2204

2206

Verify initiation message authentication code

End if verify fails

2208

Generate session key and generate response message authentication code

$r_{DR}$, $H_{DR}$, $m_{DR}$

2210

2212

Verify response message authentication code

2214

End if verify fails

Generate confirmation message authentication code

$H_P$, $m_P$

2216

2218

Verify confirmation message authentication code

End if verify fails

# FIG 23

2300

1902     1904

$K_{DI}, \mathcal{F}_{DI}, m_{DI}, m_P$    $K_{DR}, \mathcal{F}_{DR}, m_{DR}$

2202

| DI | DR |

2206

$r_{DI} \leftarrow DRBG(10)$    2204    $r_{DI} \parallel H_{DI} \parallel m_{DI}$

$H_{DI} \leftarrow \mathrm{MAC}(K_{DI}, r_{DI} \parallel m_{DI})$

if $\exists \left( K'_{DI}, K'_{DI,DR} \right) \in \mathcal{F}_{DR}$ where

$H_{DI} = \mathrm{MAC}(K'_{DI}, r_{DI} \parallel m_{DI})$ then    2208

$r_{DR} \leftarrow DRBG(8)$

$K \leftarrow \mathrm{MAC}\left( K'_{DI,DR}, S_P(r_{DI}, r_{DR}) \right)$

$H_{DR} \leftarrow \mathrm{MAC}(K, m_{DR})$

2210    $r_{DR} \parallel H_{DR} \parallel m_{DR}$    else REJECT

2212    if $\exists \left( K'_{DR}, K'_{DR,DI} \right) \in \mathcal{F}_{DR}$ where    endif

$K' \leftarrow \mathrm{MAC}\left( K'_{DR,DI}, S_P(r_{DI}, r_{DR}) \right)$ and

$H_{DR} = \mathrm{MAC}(K', m_{DR})$ then

2214    $K_L \leftarrow \mathrm{MAC}\left( K'_{DR,DI}, S_L(r_{DI}, r_{DR}) \right)$

$H_P \leftarrow \mathrm{MAC}(K_L, m_P)$

ACCEPT

else REJECT    2216    $H_P \parallel m_P$

endif    if $K'_L \leftarrow \mathrm{MAC}\left( K'_{DI,DR}, S_L(r_{DI}, r_{DR}) \right)$ and

$H_P = \mathrm{MAC}(K'_L, m_P)$ then ACCEPT

else REJECT

endif

$H_{DI}, H_{DR},$ and $H_P$ can be truncated
as required by the use case

2218

# FIG 24

_2400_

_2402_

Generate an initiation message authentication code based on a secret identifier of the wireless device

_2404_

Generate the initiation message authentication code

_2406_

Receive a response message authentication code from a responding device

_2408_

Determine whether the response message authentication code is valid based on a set of pairwise secret identities that are unique to respective pairings of the wireless device with different trusted devices

_2410_

Transmit a confirmation message authentication code to the responding device if the response message authentication code is valid

FIG 25

2500

2502

```
Receive an initiation message authentication code from an
initiating device
```

2504

```
Determine that the initiation message authentication code is valid
based on a set of secret identities for different trusted devices
```

2506

```
Generate a response message authentication code based on a
pairwise secret identity that is unique to a pairing between the
wireless device and the initiating device
```

2510

```
Transmit the response message authentication code to the
initiating device
```

# FIG 26

# FIG 27

2602

2702

2704

RF

2706

2708

Decoder

2710

Discovery controller

# FIG 28

2604

2802

2804

RF

2806

2808

Decoder

2810

Discovery
controller

## FIG 29

2900

2602    2604    2606    2608

DI    DR    DR    DR

Initial discovery initiation message

2902
—Initiation message—→

2904
—Initiation message—→

2906
—Initiation message—→

2908
| Select channel |

2910
| Select channel |

2912
| Select channel |

2914
←—✕—Response message—

2916
←—✕——Response message—

2918
←—Response message—

2920
| Detect responding devices |

2922
—Dedicated message (mute instruction)—→

2924
| Identity mute inst. |

Retransmission

2926
—Initiation message—→

2928
—Initiation message—→

2930
—Initiation message—→

2932
| Select channel |

2934
| Select channel |

2936
←—Response message—

2938
←—Response message—

2940
| Detect responding devices |

# FIG 30

EP 3 629 507 A1

# FIG 31

# FIG 32

3200

2602  2604  2606  2608

DI  DR  DR  DR

**Initial discovery initiation message**

3202
Select response criteria

3204
—Initiation message (resp. criteria)→

3206
—Initiation message (resp. criteria)——————→

3208
——Initiation message (resp. criteria)——————————→

3210 | 3212 | 3214
Evaluate response criteria | Evaluate response criteria | Evaluate response criteria

3216 | 3218 | 3220
Select channel | No response | Select channel

3222
←———Response message———

3224
←————————Response message————

3226
Detect responding devices

**Retransmission**

3228
Select response criteria

3230
—Initiation message (resp. criteria)→

3232
——Initiation message (resp. criteria)——————→

3234
———Initiation message (resp. criteria)——————————→

3236 | 3238 | 3240
Evaluate response criteria | Evaluate response criteria | Evaluate response criteria

3242 | 3244 | 3246
Select channel | Select channel | No response

3248
←———Response message———

3250
←————Response message————

3252
Detect responding devices

# FIG 33

# FIG 34

3400

2602　　　　2604　　　　2606　　　　2608

| DI | DR | DR | DR |

**Initial discovery initiation message**

3402
────Initiation message────▶

3404
────Initiation message────────▶

3406
────Initiation message────────────▶

3408 | Evaluate response criteria | 3410 Evaluate response criteria | 3412 Evaluate response criteria |

3414 | Select channel | 3416 No response | 3418 Select channel |

3420
◀────Response message────

3422
◀────Response message────────

3424
| Detect responding devices |

**Retransmission**

3426
────Initiation message────▶

3428
────Initiation message────────▶

3430
────Initiation message────────────▶

3432 | Evaluate response criteria | 3434 Evaluate response criteria | 3436 Evaluate response criteria |

3438 | No response | 3440 Select channel | 3442 Select channel |

3448
◀────Response message────

3450
◀────Response message────────

3452
| Detect responding devices |

# FIG 35

3500

Arrivals

Non-Traffic Shaped

Network Capacity

Traffic Shaped

Time

# FIG 36

3600

3602

3604

RF

3606

3608

Decoder

3610

Discovery controller

3612

Load estimator

3614

Traffic shaper

# FIG 37

3700

3600 3620 3630 3640

| Wireless device | Wireless device | Wireless device | Wireless device |

3702

Channel estimation pilot signal

3704 3706 3708

| Estimate channel power | Estimate channel power | Estimate channel power |

3710 3712 3714

| Select transmit power | Select transmit power | Select transmit power |

3716

Response signal

3718

Response signal

3720

Response signal

3722

Determine total received power

3724

Estimate number of responding devices

FIG 38

3800

Monitor discovery resources 3802

Detect discovery transmissions 3804

Estimate load based on detected discovery transmissions 3806

# FIG 39

3900

**Monitor discovery resources** — 3902

**Initiate discovery?** — 3904

Y / N

**Initiator**

**Proactive backoff for disc. init. message** — 3906

**Send disc. init. message and wait for responses** — 3908

**Send disc. conf. message** — 3910

**All responses received?** — 3912

Y / N

**$N_{rtx}$ reached?** — 3914

N / Y

**Retransmit and wait for responses** — 3916

**Responder**

**Monitor for disc. init. message** — 3918

**Valid disc. init. message received?** — 3920

N / Y

**Disc. conf. message received?** — 3924

Y / N

**Proactive backoff passed?** — 3926

Y / N

**Send disc. resp. message** — 3928

FIG 40

4000

4002

Broadcast a first discovery initiation message

4004

Decode discovery response messages from one or more first responding devices

4006

Transmit dedicated messages to the one or more responding devices to instruct the one or more responding devices to not respond to a second discovery initiation message

4008

Broadcast the second discovery initiation message

4010

Decode discovery response messages from one or more second responding devices

# FIG 41

4100

4102

Receive a first discovery initiation message from an initiating device

4104

Transmit a first discovery response message to the initiating device

4106

Receive a dedicated message from the initiating device that instructs the wireless device to not respond to a second discovery initiation message

4108

Receive the second discovery initiation message from the initiating device

4110

Not respond to the second discovery initiation message

# FIG 42

4200

4202

Broadcast a first discovery initiation message and decoding one or more first discovery response messages

4204

Determine, based on the one or more first discovery response messages, a response criteria that affects the number of devices that respond to a second discovery initiation message

4206

Broadcast the second discovery initiation message and the response criteria

4208

Decode one or more second discovery response messages

# FIG 43

4300

**4302**

Receive, from an initiating device, a discovery initiation message comprising a response criteria

**4304**

Determine whether to respond to the discovery initiation message based on the response criteria

**4306**

Transmit a discovery response message if it is determined to respond to the discovery initiation message and not transmitting the discovery response message if it is determined not to respond to the discovery initiation message.

# FIG 44

4400

4402

Receive a discovery initiation message from an initiating device

4404

Determine a probability value

4406

Determine whether to respond to the discovery initiation message based on the probability value

4408

Transmit a discovery response message to the initiating device if it is determined to respond to the discovery initiation message and not transmit a discovery response message to the initiating device if it is determined not to respond to the discovery initiation message

# FIG 45

4500

4502

Transmit a channel estimation pilot signal

4504

Receive response signals from a plurality of responding devices, wherein a received power of the respective response signals is based on a target receive power and a channel power between the wireless device and the plurality of responding devices

4506

Determine an estimated overall number of proximate wireless devices based on the target receive power and an overall received power of the response signals

# FIG 46

4600

4602

Receive a channel estimation pilot signal from a transmitting device

4604

Determine an estimated channel power based on the channel estimation pilot signal

4606

Select, based on the estimated channel power and a target receive power of a response signal at the transmitting device, a transmit power

4608

Transmit the response signal to the transmitting device with the transmit power

# FIG 47

4700

4702

Monitor discovery resources during a plurality of discovery windows, where the discovery resources are allocated for wireless devices to perform discovery

4704

Detect discovery transmissions on the discovery resources over the plurality of discovery windows

4706

Determine an estimated number of active wireless devices per discovery resource based on the number of discovery transmissions that are detected over the plurality of discovery windows

# FIG 48

4800

4802

Select a backoff window during which to wait before initiating a discovery procedure

4804

Perform, based on an activation probability, a random check to determine whether to initiate discovery in a first discovery window that is scheduled after the backoff window is over

4806

if it is determined to initiate discovery in the first discovery window, transmit a discovery initiation message in the first discovery window

4808

If it is determined to not initiate discovery in the first discovery window, perform a second random check based on the activation probability to determine whether to initiate the discovery procedure in a second discovery window

# FIG 49

4900

4902

Transmit a discovery initiation message

4904

Perform one or more first retransmissions of the discovery initiation message

4906

Perform one or more second retransmissions of the discovery invitation message

# FIG 50

5000

5002

Obtain an estimated overall number of proximate wireless devices that approximates an upper bound for wireless devices proximate to the wireless device

5004

Obtain an estimated number of active wireless devices per discovery resource that approximates a number of wireless devices that are actively using discovery resources

5006

Determine an activation probability based on the load estimation results

5008

Transmit a discovery initiation message that indicates the activation probability, where the activation probability influences a number of responding devices transmitting discovery response messages

5010

Receive one or more discovery response messages

# FIG 51

Externally-originating

Locally-originating

# FIG 52

5106

5202

5204

RF

5206

5208

Receiver

5210

Transmitter

5212

Controller

5214

Application processor

# FIG 53

5108

5302

5304

RF

5306

5308

Receiver

5310

Transmitter

5312

Controller

5314

Application processor

# FIG 54

5400

**5106**
Wireless device

**5108**
Wireless device

Identify emergency scenario — 5402

Generate emergency message — 5404

Monitor discovery channel — 5406

Transmit emergency indicator beacon
(discovery channel) — 5408

Detect emergency indicator beacon — 5410

Identify transmitting wireless device — 5412

Tune to a data channel of the
transmitting wireless device — 5414

Transmit emergency message
(data channel) — 5416

Receive emergency message — 5418

FIG 55

5500

5502　5504　5506　5510　5512

| Header | Location (GPS) | Phone number | Scenario information | Token |
|--------|----------------|--------------|---------------------|-------|

5508

# FIG 56

# FIG 57

Start 5702

5704 5706

5708 5710 5712

5714 5716

End

→ Original

- - -→ Relay

# FIG 58

5800

5802

| Identify an emergency scenario |

5804

| Generate an emergency message comprising information about the emergency scenario |

5806

| Transmit an emergency indicator beacon on a discovery channel allocated for other wireless devices to perform discovery |

5808

| Transmit the emergency message on a data channel of the wireless device |

# FIG 59

5900

5902

Monitor a discovery channel allocated for a wireless device to perform discovery

5904

Detect an emergency indicator beacon on the discovery channel

5906

Process the emergency indicator beacon to identify a transmitting wireless device that transmitted the emergency indicator beacon

5908

Receive an emergency message on a data channel of the transmitting wireless device

Europäisches
Patentamt

European
Patent Office

Office européen
des brevets

# EUROPEAN SEARCH REPORT

**Application Number**

EP 18 19 7566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/271840 A1 (TAVILDAR SAURABHA RANGRAO [US] ET AL) 24 September 2015 (2015-09-24) | 1-3,6-15 | INV. H04L1/18 |
| A | * figure 2 * * paragraphs [0005] - [0006], [0026] * * paragraphs [0055] - [0056] * * paragraphs [0066] - [0069], [0099] * | 4,5 | |
| X | WO 2017/167198 A1 (HUAWEI TECH CO LTD [CN]) 5 October 2017 (2017-10-05) | 1-3,6-15 | |
| A | * page 38, line 13 - page 39, line 26 * | 4,5 | |
| A | US 2006/002484 A1 (MIYAZAKI SHUNJI [JP] ET AL) 5 January 2006 (2006-01-05) * figure 1 * * paragraphs [0016], [0036], [0081] * | 1-15 | |
| A | US 2015/103787 A1 (CHAPMAN THOMAS MALCOLM [GB] ET AL) 16 April 2015 (2015-04-16) * paragraphs [0005] - [0008], [0026] * | 1-15 | |

**TECHNICAL FIELDS SEARCHED (IPC)**

H04L

The present search report has been drawn up for all claims

| Place of search | Date of completion of the search | Examiner |
|---|---|---|
| The Hague | 25 March 2019 | Fintoiu, Ioana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 629 507 A1

## ANNEX TO THE EUROPEAN SEARCH REPORT
## ON EUROPEAN PATENT APPLICATION NO.

EP 18 19 7566

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2019

| Patent document cited in search report | | | Publication date | Patent family member(s) | | | Publication date |
|---|---|---|---|---|---|---|---|
| US 2015271840 | A1 | | 24-09-2015 | CN | 106134276 | A | 16-11-2016 |
| | | | | EP | 3120646 | A1 | 25-01-2017 |
| | | | | ES | 2678044 | T3 | 08-08-2018 |
| | | | | HU | E038318 | T2 | 29-10-2018 |
| | | | | JP | 2017513350 | A | 25-05-2017 |
| | | | | KR | 20160138460 | A | 05-12-2016 |
| | | | | TW | 201540111 | A | 16-10-2015 |
| | | | | US | 2015271840 | A1 | 24-09-2015 |
| | | | | WO | 2015142429 | A1 | 24-09-2015 |
| WO 2017167198 | A1 | | 05-10-2017 | AU | 2017243398 | A1 | 01-11-2018 |
| | | | | BR | 112018070211 | A2 | 29-01-2019 |
| | | | | CA | 3019611 | A1 | 05-10-2017 |
| | | | | CN | 109314910 | A | 05-02-2019 |
| | | | | EP | 3430838 | A1 | 23-01-2019 |
| | | | | KR | 20180127465 | A | 28-11-2018 |
| | | | | WO | 2017167198 | A1 | 05-10-2017 |
| US 2006002484 | A1 | | 05-01-2006 | EP | 1612983 | A2 | 04-01-2006 |
| | | | | EP | 2012456 | A1 | 07-01-2009 |
| | | | | JP | 4488810 | B2 | 23-06-2010 |
| | | | | JP | 2006019782 | A | 19-01-2006 |
| | | | | US | 2006002484 | A1 | 05-01-2006 |
| US 2015103787 | A1 | | 16-04-2015 | AT | 456209 | T | 15-02-2010 |
| | | | | BR | PI0610250 | A2 | 08-06-2010 |
| | | | | CN | 101164272 | A | 16-04-2008 |
| | | | | EP | 1878154 | A1 | 16-01-2008 |
| | | | | ES | 2339876 | T3 | 26-05-2010 |
| | | | | GB | 2425693 | A | 01-11-2006 |
| | | | | US | 2010050033 | A1 | 25-02-2010 |
| | | | | US | 2015103787 | A1 | 16-04-2015 |
| | | | | WO | 2006114568 | A1 | 02-11-2006 |

EPO FORM P0459

For more details about this annex : see Official Journal of the European Patent Office, No. 12/82